(19) Europäisches Patentamt

European Patent Office

Office européen des brevets

(11) EP 1 684 311 A2

(12) **EUROPEAN PATENT APPLICATION**

(43) Date of publication:
26.07.2006 Bulletin 2006/30

(51) Int Cl.:
*G21B 1/00* (2006.01)

(21) Application number: 06009966.0

(22) Date of filing: 01.03.1994

(84) Designated Contracting States:
AT BE CH DE DK ES FR GB GR IE IT LI LU MC NL PT SE

(30) Priority: 11.06.1993 US 75102
16.08.1993 US 107357

(62) Document number(s) of the earlier application(s) in accordance with Art. 76 EPC:
94920641.1 / 0 741 903

(71) Applicant: HYDROCATALYSIS POWER CORPORATION
Lancaster, PA 17605 (US)

(72) Inventor: Mills, Randell L.
Yardley
Pennsylvania 19067 (US)

(74) Representative: UEXKÜLL & STOLBERG
Patentanwälte
Beselerstrasse 4
22607 Hamburg (DE)

Remarks:
This application was filed on 15 - 05 - 2006 as a divisional application to the application mentioned under INID code 62.

(54) **Energy/matter conversion methods and structure**

(57) Methods and apparatus for releasing energy from hydrogen atoms (molecules) by stimulating their electrons to relax to quantized lower energy levels And smaller radii (smaller semimajor and semiminor axes) than the "ground state" by providing energy sinks or means to remove energy resonant with the hydrogen energy released to stimulate these transitions. An energy sink, energy hole, is provided by the transfer of at least one electron between participating species including atoms, ions, molecules, and ionic and molecular compounds. In one embodiment, the energy hole comprises the transfer of t electrons from one or more donating species to one or more accepting species whereby the sum of the ionization energies and/or electron affinities of the electron donating species minus the sum of the ionization energies and/or electron affinities of the electron accepting species equals approximately $m \times 27.21$ eV ($m \times 48.6$) for atomic (molecular) hydrogen below "ground state" transitions where m and t are integers. The present invention further comprises methods and structures to conform the energies of the source, hydrogen, and the sink, energy hole, to enhance the transition rate. The energy reactor includes one of an electrolytic cell, a pressurized hydrogen gas cell, and a hydrogen gas discharge cell.

*Fig. 1*

**Description**

This application is a continuation-in-part of the co-pending application of Randell Lee Mills, entitled "Energy/ Matter Conversion Methods and Structures", filed on June 11, 1993, which is a continuation-in part of the subject matter published June 25, 1992 in WO 90/10838 and November 01, 1990 in WO 90/13126.

BACKGROUND OF THE INVENTION

1: Field of the Invention:

This invention relates to methods and apparatus for releasing energy from hydrogen atoms (molecules) as their electrons are stimulated to relax to lower energy levels and smaller radii (smaller semimajor and semiminor axes) than the "ground state" by providing energy sinks or means to remove energy resonant with the electronic energy released to stimulate these transitions according to a novel atomic model. Each of such reactions is hereafter referred to as a shrinkage reaction; each transition is hereafter referred to as a shrinkage transition; each energy sink or means to remove energy resonant with the hydrogen electronic energy released to effect each transition is hereafter referred to as an energy hole, and the electronic energy removed by the energy hole to effect or stimulate the shrinkage transition is hereafter referred to as the resonance shrinkage energy. The present invention further comprises methods and structures for repeating this shrinkage reaction to produce shrunken atoms (molecules) to provide new materials with novel properties such as high thermal stability.

2. Description of the Related Art

As a result of the erroneous assumptions and incomplete or erroneous models and theories, the development of useful or functional systems and structures requiring an accurate understanding of atomic structure and energy transfer has been inhibited. The Schrodinger equation, for example, does not explain the phenomenon of anomalous heat release from hydrogen in certain electrolytic cells having a potassium carbonate electrolyte with the production of lower-energy hydrogen atoms and molecules, which is part of the present invention. Thus, advances in materials and energy/matter conversion have been largely limited to laboratory discoveries having limited or sub-optimal commercial application.

SUMMARY OF THE INVENTION

A novel atomic theory is disclosed in The Unification of Spacetime, the Forces, Matter, and Energy, Mills, R., Technomics Publishing Com pany, Lancaster, PA, U.S.A. (1992); The Grand Unified Theory, Mills, R. and Farrell, J., Science Press, Ephrata, PA, (1990); Mills, R., Kneizys, S., Fusion Technology., 210, (1991), pp. 65-81, and in my previous U.S. patent applications entitled "Energy/Matter Conversion Methods and Structures", whose subject matter was published June 25, 1992 in WO 90/10838 and November 01, 1990 in WO 90/13126. The present invention comprises methods and apparatuses for releasing heat energy from hydrogen atoms (molecules) by stimulating their electrons to relax to quantized potential energy levels below that of the "ground state" via electron transfer reactions of reactants including electrochemical reactant(s) (electrocatalytic couple(s)) which remove energy from the hydrogen atoms (molecules) to stimulate these transitions. In addition, this application includes methods and apparatuses to enhance the power output by enhancing the reaction rate- the rate of the formation of the lower-energy hydrogen. The present invention further comprises methods and apparatuses for repeating a shrinkage reaction according to the present invention to cause energy release and to provide shrunken atoms and molecules with novel properties such as high thermal stability, and low reactivity. The lower-energy state atoms and molecules are useful for heat transfer, cryogenic applications, as a buoyant gas, as a medium in an engine such as a Sterling engine or a turbine, as a. general replacement for helium, and as a refrigerant by absorbing energy including heat energy as the electrons are excited back to a higher energy level.

Below "Ground State" Transitions of Hydrogen Atoms

According to a novel model of the electron derived from first principles (Unification of Spacetime, the Forces, Matter, and Energy, Mills, R., Technomics Publishing Company, Lancaster, PA, (1992)), bound electrons are described by a charge-density (mass-density) function which is the product of a radial delta function ($f(r) = \delta(r\text{-}r_n)$), two angular functions (spherical harmonic functions), and a time harmonic function. Thus, an electron is a spinning, two-dimensional spherical surface, called an electron orbitsphere, that can exist in a bound state at only specified distances from the nucleus where each point on the shell follows a great circle orbit about the central nucleus. For the "ground state", the electric field is a radial central field inside the spherical shell and zero outside, where the radius of the shell is the Bohr

radius, $a_0$. At this radius, the electron is nonradiative, and a force balance exists between the central field of the proton and the electron.

Photon Induced States of the One Electron Atom

Excited states of hydrogen arise from the capture of a photon(s) of discrete resonant frequencies. The bound electron can trap photons of discrete frequencies inside this spherical shell, a spherical resonator cavity.. For the excited modes, the electric field is the sum of the "ground state" field and a time harmonic solution of the Laplacian in spherical coordinates. The electric field is nonzero inside of an expanded resonator cavity where the radius at which nonradiation and force balance is achieved is an integer multiple of the Bohr radius. The photons which excite these niodes have energy

$$E = -13.6 \text{ eV} \left[ \frac{1}{n_f^2} - \frac{1}{n_i^2} \right] \qquad n = 1,2,3,... \quad (1)$$

$$n_f > n_i$$

For a spherical resonator cavity, the relationship between an allowed radius, r, and the photon standing wave wavelength, $\lambda$, is:

$$2\pi r = n\lambda \qquad (2)$$

where n is an integer. The relationship between an allowed radius and the electron wavelength is

$$2\pi(nr_1) = 2\pi r_n = n\lambda_1 = \lambda_n \qquad (3)$$

where n = 1
n=2,3,4,...

$$n = \frac{1}{2}, \frac{1}{3}, \frac{1}{4}, ...$$

$\lambda_1$ is the allowed wavelength for n = 1

$r_1$ is the allowed radius for n = 1

Higher and lower energy states are equally valid. The photon standing wave in both cases is given as a solution of the Laplacian in spherical coordinates.

Excited State Photon

$$\mathcal{E}\backslash O(i,\backslash S\backslash UP4(^\wedge))r \text{ photon } n,l,m = \backslash F(e(na_0)^{\ell},4\pi\varepsilon_0) \ \backslash F(1,r^{(\ell+2)})$$
$$\backslash B\backslash BC\backslash((-1 + \backslash B\backslash BC\backslash((-1 + \backslash F(1,n) \ Re\backslash B\backslash BC\backslash[( i$$
$$[Y_\ell^m (\phi,\theta) + Y_s^{m_s} (\phi,\theta)])) \ (4)$$

For n = 2, 3, 4, ...
l = 1, 2, ..., n - 1
m = - l, - l + 1, ..., 0, ..., + l

Below "Ground State" Photon

$$\hat{\mathcal{E}i}_{r\ photon\ n,l,m} = \frac{e}{4\pi\varepsilon_0}\frac{\left(\frac{a_0}{n}\right)^{\mathscr{l}}}{r^{(\mathscr{l}+2)}}\left(-1 + n\left[\ Y_{\mathscr{l}}^{m}(\phi,\theta) + Y_{s}^{m\ s}\right]\right)\quad(5)$$

For n = 2, 3, 4, ...
l = 1, 2, ..., n - 1
m = -l, -l + 1, ..., 0, ..., +l

According to Eq. (5), the magnitude of the central field corresponding to below "ground state" transitions is an integer, and the energy of below "ground state" transitions are given by

$$E = 13.6\ eV\left[\frac{1}{n_f^2} - \frac{1}{n_i^2}\right]\qquad n = \frac{1}{2},\ \frac{1}{3},\ \frac{1}{4},\ ...\quad(6)$$
$$n_f < n_i$$

From energy conservation, the resonance energy hole of a hydrogen atom which excites resonator modes of radial dimensions $\frac{a_0}{m+1}$ is

$$m\ x\ 27.2\ eV\qquad\qquad(7)$$

where m = 1, 2, 3, 4, ....

After resonant absorption of the hole, the radius of the orbitsphere, $a_0$, shrinks to $\frac{a_0}{m+1}$ and after p cycles of resonant shrinkage, the radius is $\frac{a_0}{mp+1}$.

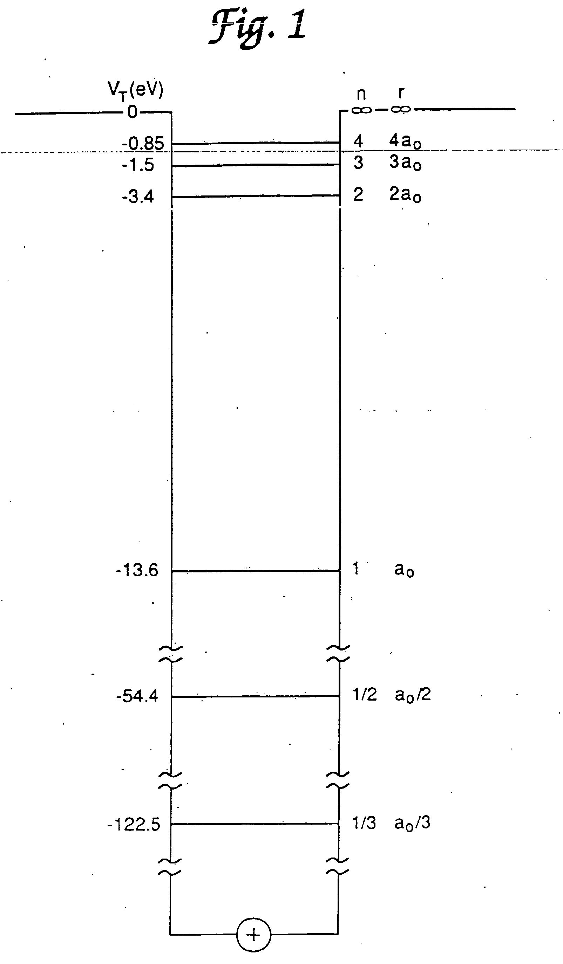

In other words, the radial "ground state" field can be considered as the superposition of Fourier components. The removal of negative Fourier components of energy m x 27.2 eV, where m is an integer increases the positive electric field inside the spherical shell by m times the charge of a proton. The resultant electric field is a time harmonic solution of the Laplacian in spherical coordinates. In this case, the radius at which force balance and nonradiation are achieved is $\frac{a_0}{m+1}$ where m is an integer. In decaying to this radius from the "ground state", a total energy of $[(m + 1)^2 - 1^2]$ x 13.6 eV is released. The total energy well of the hydrogen atom is shown in FIGURE 1. The exothermic reaction involving transitions from one potential energy level to a lower level is hereafter referred to as HECTER (Hydrogen Emission by Catalytic Thermal Electronic Relaxation).

A hydrogen atom with its electron in a lower than "ground state" energy level corresponding to a fractional quantum number is hereafter referred to as a hydrino atom. The designation for a hydrino atom of radius $\frac{a_0}{p}$ where p is an integer is $H\left[\frac{a_0}{p}\right]$.

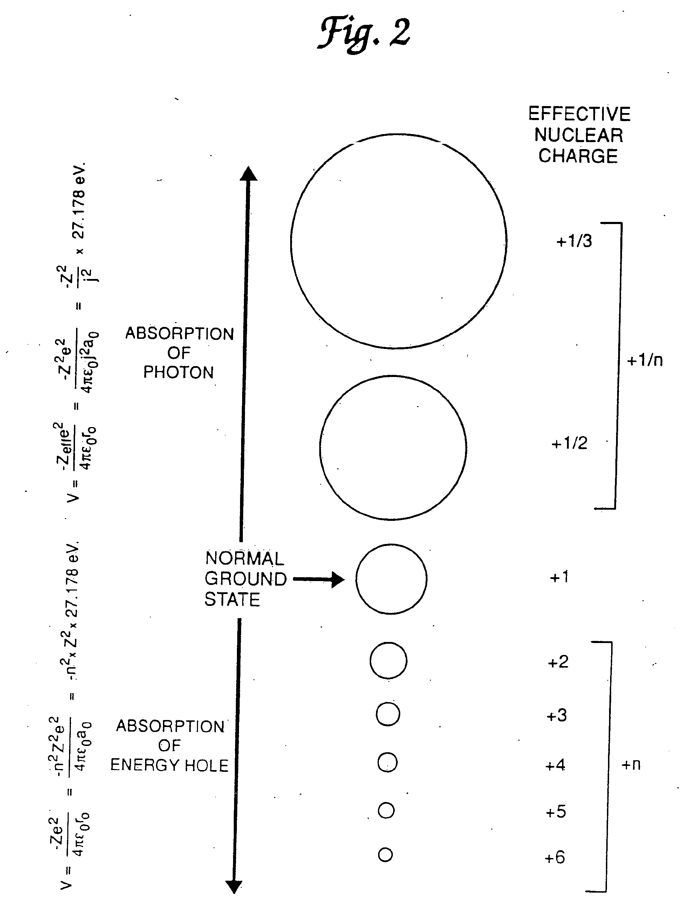

The size of the electron orbitsphere as a function of potential energy is given in FIGURE 2.

Energy Hole (Atomic Hydrogen)

In a preferred embodiment, energy holes, each of approximately 27.21 eV, are provided by electron transfer

4

reactions of reactants including electrochemical reactant(s) (electrocatalytic couple(s)) which cause heat to be released from hydrogen atoms as their electrons are stimulated to relax to quantized potential energy levels below that of the "ground state". The energy removed by an electron transfer reaction, energy hole, is resonant with the hydrogen energy released to stimulate this transition. The source of hydrogen atoms is the production on the surface of a cathode during electrolysis of water in the case of an electrolytic energy reactor and hydrogen gas or a hydride in the case of a pressurized gas energy reactor or gas discharge energy reactor.

Below "Ground State" Transitions of Hydrogen-Type Molecules and Molecular Ions

Two hydrogen atoms react to form a diatomic molecule, the hydrogen molecule.

$$2\,H\big[a_o\big] \quad \rightarrow \quad H_2\Big[2c' = \sqrt{2}\,a_o\Big] \tag{8}$$

where 2c' is the internuclear distance. Also, two hydrino atoms react to form a diatomic molecule, a dihydrino molecule.

$$2\,H\left[\frac{a_o}{p}\right] \quad \rightarrow \quad H^*_2\left[2c' = \frac{\sqrt{2}\,a_o}{p}\right] \tag{9}$$

where p is an integer.

The central force equation for hydrogen-type molecules has orbital solutions which are circular, elliptic, parabolic, or hyperbolic. The former two types of solutions are associated with atomic and molecular orbitals. These solutions are nonradiative if the boundary condition for nonradiation given in the One Electron Atom Section of The Unification of Spacetime, the Forces, Matter, and Energy, Mills, R., Technomics Publishing Company, Lancaster, PA, (1992), is met. The mathematical formulation for zero radiation is that the function that describes the motion of the electron must not possess space-time Fourier components that are synchronous with waves travelling at the speed of light. The boundary condition for the orbitsphere is met when the angular frequencies are

$$\omega_n = \frac{\hbar}{m_e r_n^2} \tag{10}$$

As demonstrated in the One Electron Atom Section of The Unification of Spacetime, the Forces, Matter, and Energy, Mills, R., Technomics Publishing Company, Lancaster, PA, (1992), this condition is met for the product function of a radial Dirac delta function and a time harmonic function where the angular frequency, $\omega$, is constant and given by Eq. (10).

$$\omega_n = \frac{\hbar}{m_e r_n^2} = \frac{\frac{\pi L}{m_e}}{A} \tag{11}$$

where L is the angular momentum and A is the area of the closed geodesic orbit. Consider the solution of the central force equation comprising the product of a two dimensional ellipsoid and a time harmonic function. The spatial part of the product function is the convolution of a radial Dirac delta function with the equation of an ellipsoid. The Fourier transform of the convolution of two functions is the product of the individual Fourier transforms of the functions; thus, the boundary condition is met for an ellipsoidal-time harmonic function when

$$\omega_n = \frac{\pi \hbar}{m_e A} = \frac{\hbar}{m_e a b} \tag{12}$$

where the area of an ellipse is

$$A = \pi ab \qquad (13)$$

where 2b is the length of the semiminor axis and 2a is the length of the semimajor axis. The geometry of molecular hydrogen is elliptic with the internuclear axis as the principle axis; thus, the electron orbital is a two dimensional ellipsoidal-time harmonic function. The mass follows geodesics time harmonically as determined by the central field of the protons at the foci. Rotational symmetry about the internuclear axis further determines that the orbital is a prolate spheroid. In general, ellipsoidal orbits of molecular bonding, hereafter referred to as ellipsoidal molecular orbitals (M. O. 's), have the general equation

$$\frac{x^2}{a^2} + \frac{y^2}{b^2} + \frac{z^2}{c^2} = 1 \qquad (14)$$

The semiprinciple axes of the ellipsoid are a, b, c.

In ellipsoidal coordinates, the Laplacian is

$$(\eta - \zeta)R_\xi \frac{\delta}{\delta\xi}(R_\xi \frac{\delta\phi}{\delta\xi}) + (\zeta - \xi)R_\eta \frac{\delta}{\delta\eta}(R_\eta \frac{\delta\phi}{\delta\eta}) + (\xi - \eta)R_\zeta \frac{\delta}{\delta\zeta}(R_\zeta \frac{\delta\phi}{\delta\zeta}) = 0 \qquad (15)$$

An ellipsoidal M. O. is equivalent to a charged conductor whose surface is given by Eq. (14). It carries a total charge q, and it's potential is a solution of the Laplacian in ellipsoidal coordinates, Eq. (15).

Excited states of orbitspheres are discussed in the Excited States of the One Electron Atom (Quantization) Section of The Unification of Spacetime, the Forces, Matter, and Energy, Mills, R., Technomics Publishing Company, Lancaster, PA, (1992). In the case of ellipsoidal M. O. 's, excited electronic states are created when photons of discrete frequencies are trapped in the ellipsoidal resonator cavity of the M. O. The photon changes the effective charge at the M. O. surface where the central field is ellipsoidal. Force balance is achieved at a series of ellipsoidal equipotential two dimensional surfaces confocal with the ground state ellipsoid. The trapped photons are solutions of the Laplacian in ellipsoidal coordinates, Eq. (15).

As is the case with the orbitsphere, higher and lower energy states are equally valid. The photon standing wave in both cases is a solution of the Laplacian in ellipsoidal coordinates. For an ellipsoidal resonator cavity, the relationship between an allowed circumference, 4aE, and the photon standing wavelength, 1, is

$$4aE = n\lambda \qquad (16)$$

where n is an integer and where

$$k = \frac{\sqrt{a^2 - b^2}}{a} \qquad (17)$$

is used in the elliptic integral E of Eq. (16). Applying Eqs. (16) and (17), the relationship between an allowed angular frequency given by Eq. (12) and the photon standing wave angular frequency, $\omega$, is:

$$\frac{\pi\hbar}{m_e A} = \frac{\hbar}{m_e n a_1 n b_1} = \frac{\hbar}{m_e a_n b_n} = \frac{1}{n^2}\omega_1 = \omega_n \qquad (18)$$

where n = 1, 2, 3, 4, ...

$$n = \frac{1}{2}, \frac{1}{3}, \frac{1}{4}, \cdots$$

$\omega_1$ is the allowed angular frequency for n = 1

$a_1$ and $b_1$ are the allowed semimajor and semiminor axes for n = 1

From Eq. (18), the magnitude of the elliptic field corresponding to a below "ground state" transition of the hydrogen molecule is an integer. The potential energy equations of hydrogen-type molecules are

$$V_e = \frac{-p\ 2e^2}{8\pi\varepsilon_0\sqrt{a^2 - b^2}} \ln \frac{a + \sqrt{a^2 - b^2}}{a - \sqrt{a^2 - b^2}} \qquad (19)$$

$$V_p = \frac{p\ e^2}{8\pi\varepsilon_0\sqrt{a^2 - b^2}} \qquad (20)$$

where

$$a = \frac{a_0}{p} \qquad (21)$$

$$b = \frac{1}{p\sqrt{2}}\ a_0 \qquad (22)$$

$$c' = \sqrt{a^2 - b^2} = \frac{\sqrt{2}\ a_0}{2p} \qquad (23)$$

and where p is an integer. From energy conservation, the resonance energy hole of a hydrogen-type molecule which causes the transition

$$H_2^*\left[2c' = \frac{\sqrt{2}\ a_0}{p}\right] \rightarrow H_2^*\left[2c' = \frac{\sqrt{2}\ a_0}{p + m}\right] \qquad (24)$$

is

$$mp^2 \times 48.6\ eV \qquad (25)$$

where m and p are integers. During the transition, the elliptic field is increased from magnitude p to magnitude p + m. The corresponding potential energy change equals the energy absorbed by the energy hole.

$$\text{Energy hole} = -V_e - V_p = mp^2 \times 48.6\ eV \qquad (26)$$

Further energy is released by the hydrogen-type molecule as the internuclear distance "shrinks". The total energy, $E_T$, released during the transition is

$$E_T = -13.6 \text{ eV} \left[ \left( 2(m+p)^2\sqrt{2} - (m+p)^2\sqrt{2} + \frac{(m+p)^2\sqrt{2}}{2} \right) \ln \frac{\sqrt{2}+1}{\sqrt{2}-1} - (m+p)^2\sqrt{2} \right]$$
$$+13.6 \text{ eV} \left[ \left( 2p^2\sqrt{2} - p^2\sqrt{2} + \frac{p^2\sqrt{2}}{2} \right) \ln \frac{\sqrt{2}+1}{\sqrt{2}-1} - p^2\sqrt{2} \right] \qquad (27)$$

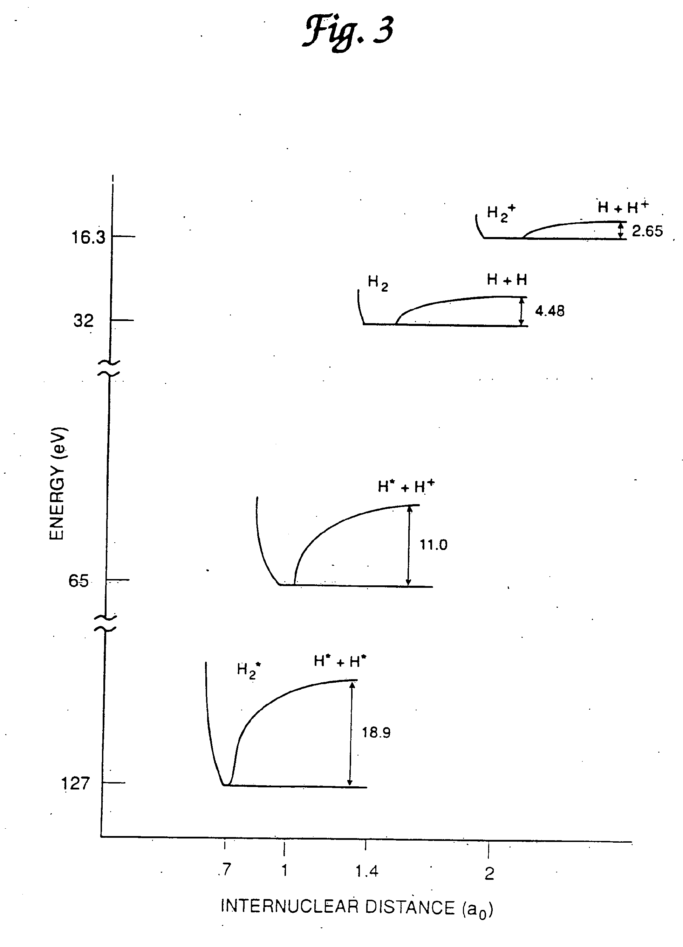

A schematic drawing of the total energy well of hydrogen-type molecules and molecular ions is given in FIGURE 3. The exothermic reaction involving transitions from one potential energy level to a lower level below the "ground state" is also hereafter referred to as HECTER (Hydrogen Emission by Catalytic Thermal Electronic Relaxation).

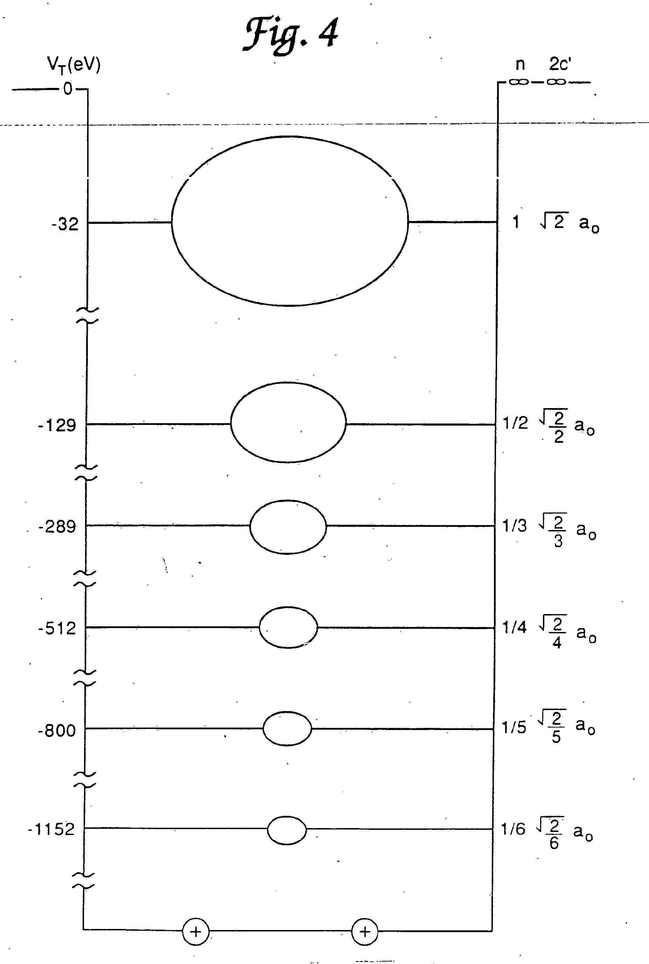

A hydrogen-type molecule with its electrons in a lower than "ground state" energy level corresponding to a fractional quantum number is hereafter referred to as a dihydrino molecule. The designation for a dihydrino molecule of internuclear distance, $2c' = \dfrac{\sqrt{2}\ a_0}{p}$ where p is an integer, is $H^*_2 \left[ 2c' = \dfrac{\sqrt{2}\ a_0}{p} \right]$. A schematic drawing of the size of hydrogen-type molecules as a function of total energy is given in FIGURE 4.

The magnitude of the elliptic field corresponding to the first below "ground state" hydrogen-type molecule is 2. From energy conservation, the resonance energy hole of a hydrogen molecule which excites the transition of the hydrogen molecule with internuclear distance $2c' = \sqrt{2}\ a_0$ to the first below "ground state" with internuclear distance $2c' = \dfrac{1}{\sqrt{2}}\ a_0$ is given by Eqs. (19) and (20) where the elliptic field is increased from magnitude one to magnitude two:

$$V_e = \frac{-2e^2}{8\pi\varepsilon_0\sqrt{a^2 - b^2}} \ln \frac{a + \sqrt{a^2 - b^2}}{a - \sqrt{a^2 - b^2}} = -67.813 \text{ eV} \qquad (28)$$

$$V_p = \frac{e^2}{8\pi\varepsilon_0\sqrt{a^2 - b^2}} = 19.23 \text{ eV} \qquad (29)$$

$$\text{Energy hole} = -V_e - V_p = 48.6 \text{ eV} \qquad (30)$$

In other words, the ellipsoidal "ground state" field of the hydrogen molecule can be considered as the superposition of Fourier components. The removal of negative Fourier components of energy

$$m \times 48.6 \text{ eV} \qquad (31)$$

where m is an integer, increases the positive electric field inside the ellipsoidal shell by m times the charge of a proton at each focus. The resultant electric field is a time harmonic solution of the Laplacian in ellipsoidal coordinates. The hydrogen molecule with internuclear distance $2c' = \sqrt{2}\ a_0$ is caused to undergo a transition to a below "ground state" level, and the internuclear distance for which force balance and nonradiation are achieved is $2c' = \dfrac{\sqrt{2}\ a_0}{1 + m}$.

In decaying to this internuclear distance from the "ground state", a total energy of

$$-13.6 \text{ eV} \left[ \left( 2(1+m)^2\sqrt{2} - (1+m)^2\sqrt{2} + \frac{(1+m)^2\sqrt{2}}{2} \right) \ln \frac{\sqrt{2}+1}{\sqrt{2}-1} - (1+m)^2\sqrt{2} \right]$$

$$+13.6 \text{ eV} \left[ \left( 2\sqrt{2} - \sqrt{2} + \frac{\sqrt{2}}{2} \right) \ln \frac{\sqrt{2}+1}{\sqrt{2}-1} - \sqrt{2} \right] \quad (32)$$

is released.

Energy Hole (Molecular Hydrogen)

In a preferred embodiment, energy holes, each of approximately m X 48.6 eV, are provided by electron transfer reactions of reactants including electrochemical reactant(s) (electrocatalytic couple(s)) which cause heat to be released from hydrogen molecules as their electrons are stimulated to relax to quantized potential energy levels below that of the "ground state". The energy removed by an electron transfer reaction, energy hole, is resonant with the hydrogen energy released to stimulate this transition. The source of hydrogen molecules is the production on the surface of a cathode during electrolysis of water in the case of an electrolytic energy reactor and hydrogen gas or a hydride in the case of a pressurized gas energy reactor or gas discharge energy reactor.

Energy Reactor

The present invention of an electrolytic cell energy reactor, pressurized gas energy reactor, and a gas discharge energy reactor, comprises: a means for containing a source of hydrogen; a means for bringing the hydrogen atoms (molecules) into contact with one of a solid, molten, liquid, or gaseous solution of energy holes; and a means for removing the lower-energy hydrogen atoms (molecules) so as to prevent an exothermic shrinkage reaction from coming to equilibrium. The shrinkage reaction rate and net power output can be increased by conforming the energy hole to match the resonance shrinkage energy. In general, power output is optimized by controlling the temperature, pressure of the hydrogen gas, the source of the energy hole including the electrocatalytic couple which provides the energy hole, the counterion of the electrocatalytic couple, and the area of the surface on which the shrinkage reaction occurs. In the case of an electrolytic cell, power output is optimized by controlling the the electric field of the electrolysis cell as a function of time, the pH of the solution, the surface area of the cathode, the current density of the cathode, and the material composition and structure of the cathode. In the case of atomic hydrogen shrinkage, further enhancement of the electrolytic cell can be achieved by preventing the development of a hydrogen gas boundary layer between the surface of the cathode where the reacting hydrogen atoms are generated and the solution which contains the electrocatalytic couple. This can be achieved by applying vibration or ultrasound to the cathode and /or electrolytic solution and by the use of an electrolysis circuit where the current is intermittent.

Other objects, features, and characteristics of the present invention, as well as the methods of operation and the functions of the related elements, will become apparent upon consideration of the following description and the appended claims with reference to the accompanying drawings, all of which form a part of this specification, wherein like reference numerals designate corresponding parts in the various figures:

BRIEF DESCRIPTION OF THE DRAWINGS

FIGURE 1 is a schematic drawing of the total energy well of the hydrogen atom;
FIGURE 2 is a schematic drawing of the size of electron orbitspheres as a function of potential energy;

FIGURE 3 is a schematic drawing of the total energy wells of the hydrogen molecule, $H_2\left[ 2c' = \sqrt{2} \, a_o \right]$,

the hydrogen molecular ion, $H_2\left[ 2c' = 2a_o \right]^+$, the dihydrino molecule, $H^*_2\left[ 2c' = \frac{a_o}{\sqrt{2}} \right]$, and

the dihydrino molecular ion, $H*_2\left[2c' = a_o\right]^+$;

FIGURE 4 is a schematic drawing of the size of hydrogen-type molecules, $H*_2\left[2c' = \dfrac{\sqrt{2}\, a_o}{p}\right]$, as a function of total energy;

FIGURE 5 is a schematic drawing of an energy reactor in accordance with the invention;

FIGURE 6 is a schematic drawing of an electrolytic cell energy reactor in accordance with the present invention;

FIGURE 7 is a schematic drawing of a pressurized gas energy reactor in accordance with the present invention;

FIGURE 8 is a schematic drawing of a gas discharge energy reactor in accordance with the invention;

FIGURE 9 is the experimental calorimeter set-up. 1 - vacuum jacketed dewar, 2 - thermistor, 3 - Pt anode, 4 - Ni cathode, 5 - magnetic stirring bar, 6 - resistor heater, 7 - rubber stopper, 8 - Teflon tubing, 9 - magnetic stirrer, 10 - aluminium cylinder;

FIGURE 10 is the Experiment #1 plot of the heating coefficients versus time. 1 - electrolysis with a nickel wire cathode at 0.083 A in $K_2CO_3$, 2 - resistor working in $K_2CO_3$;

FIGURE 11 is the Experiment #2 plot of the heating coefficients versus time. 1 - electrolysis with a nickel cathode and a periodic square-wave having an offset voltage of 1.60 volts; a peak voltage of 1.90 volts; a peak constant current of 47.3 mA; a 36.0% duty cycle; and a frequency of 600 Hz in $K_2CO_3$, 2 - resistor working in $K_2CO_3$;

FIGURE 12 is the Experiment #3 plot of the heating coefficients versus time. 1 - electrolysis at 0.081 A in $Na_2CO_3$, 2 - resistor working in $Na_2CO_3$;

FIGURE 13 is the ESCA analysis of a control nickel sheet;

FIGURE 14A-14D are the ESCA analysis of a sample of the nickel cathode from each of an aqueous potassium carbonate electrolytic cell and a control aqueous sodium carbonate electrolytic cell;

FIGURE 15 is a schematic of the cryofiltration apparatus; and

FIGURE 16 is a plot of the intensity verses ionization potential of the mass spectroscopic analysis of cryofiltered electrolysis gases evolved from the potassium electrolytic cell.

TABLE 1 is the power input and output parameters of Experiment #1-#3;

TABLE 2 is the Faradaic efficiency of gas production by the heat producing $K_2CO_3$ cell and $Na_2CO_3$ control cell;

TABLE 3 is the observed extreme ultraviolet background emission data of interstellar space [Labov, S., Bowyer, S., "Spectral observations of the extreme ultraviolet background", The Astrophysical Journal, 371, (1991), pp. 810-819] according to Eq.

TABLE 4 is the binding energies of the hydrino atom as a function of principle quantum number according to Eq. (312);

TABLE 5 is data of the mass spectroscopic analysis with varying ionization potential of standard hydrogen;

TABLE 6 is data of the mass spectroscopic analysis with varying ionization potential of cryofiltered standard hydrogen;

TABLE 7 is data of the mass spectroscopic analysis with varying ionization potential of gases from the cryofilter alone;

TABLE 8 is data of the mass spectroscopic analysis with varying ionization potential of cryofiltered electrolysis gases- evolved from the sodium electrolytic cell; and

TABLE 9 is data of the mass spectroscopic analysis with varying ionization potential of cryofiltered electrolysis gases evolved from the potassium electrolytic cell.

DETAILED DESCRIPTION OF THE PRESENTLY PREFERRED EMBODIMENTS

THEORY

Below "Ground State" Transitions of Hydrogen Atoms

$$\frac{m_e v_1^2}{a_o} = \frac{e^2}{4\pi\varepsilon_o a_o^2} \qquad (33)$$

For the hydrogen atom, the radius of the "ground state" orbitsphere is $a_o$. This orbitsphere contains no photonic waves and the centripetal force and the electric force balance iswhere $v_1$ is the velocity of the electron in the "ground state", and $m_e$ is the electron mass. It was shown in the Excited States of the One Electron Atom (Quantization) Section of Unification of Spacetime, the Forces, Matter, and Energy, Mills, R., Technomics Publishing Company, Lancaster, PA, (1992) that the electron orbitsphere is a resonator cavity which can trap electromagnetic radiation of discrete frequencies. The photon electric field functions are solutions of the Laplacian in spherical coordinates. The photons decrease the nuclear charge to 1/n and increase the radius of the orbitsphere to $na_o$. The new configuration is also in force balance.

$$\frac{m_e v_n^2}{na_o} = \frac{e^2/n}{4\pi\varepsilon_0 (na_o)^2} \qquad (34)$$

where $v_n$ is the velocity in the nth excited state corresponding to radius $r_n = na_o$.

For a spherical resonator cavity, the nonradiative boundary condition and the relationship between an allowed radius and the photon standing wave wavelength, Eq. (2), gives rise to Eq. (3), the boundary condition for allowed radii and allowed electron wavelengths as a function of the parameter n. Each value of n corresponds to an allowed transition effected by a resonant photon which excites the transition in the orbitsphere resonator cavity. In addition to the traditional integer values (1, 2, 3,....), n values of fractions are allowed by Eq. (3) which correspond to transitions with an increase in the nuclear charge and decrease in the radius of the orbitsphere. This occurs, for example, when the orbitsphere couples to another resonator cavity which can absorb energy. This is the absorption of an energy hole. The absorption of an energy hole destroys the balance, between the centrifugal force and the increased central electric force. As a result, the electron undergoes a transition to a lower energy nonradiative state.

For the He$^+$ ion (Z = 2; a one-electron atom) an allowed state exists at 0.5 $a_o$. It can be shown that if a "ground state" hydrogen atom emits a photon of about 27.21 eV, the photonic wave in the orbitsphere creates an effective charge at the orbitsphere such that the electron experiences an effective charge of +2e, and establishes a new centripetal/ electric equilibrium at $r_{1/2} = 0.5\ a_o$. That is, the orbitsphere shrinks from $r_1 = a_o$ to $r_{1/2} = \frac{a_o}{2}$.

$$V, \text{ or } T - \frac{Z_{eff} e^2}{4\pi\varepsilon_0 r_{1/2}} = -\frac{2 \times 2\ e^2}{4\pi\varepsilon_0 a_0} = -4 \times 27.178 \text{ eV} = -108.70 \text{ eV}$$

The kinetic energy of the shrunken orbitsphere is $-\frac{1}{2} V$, or T = 54.35 eV. The "ground state" hydrogen atom has a net energy of -13.59 eV and the final hydrogen atom has a net energy of -54.42 eV (same as He$^+$), and DE = -40.83 eV for the reaction

$$H(Z_{eff} = 1;\ r_1 = a_o) \;\to\; H(Z_{eff} = 2;\ r_{1/2} = 0.5\ a_o)\ . \quad (36)$$

That is, about 27.21 eV is lost with the absorption of the energy hole and about 14 eV is given off after absorption of the energy hole.

From energy conservation, the resonance energy hole of a hydrogen atom which excites resonator modes of radial dimensions $\frac{a_o}{m+1}$ is

$$m \times 27.2 \text{ eV,} \qquad\qquad (37)$$

where m = 1, 2, 3, 4, ....

After resonant absorption of the hole, the radius of the orbitsphere, $a_o$, shrinks to $\frac{a_o}{m+1}$ and after p cycles of resonant shrinkage, the radius is $\dfrac{a_o}{mp + 1}$.

In other words, the radial "ground state" field can be considered as the superposition of Fourier components. The removal of negative Fourier components of energy m x 27.2 eV, where m is an integer increases the positive electric field inside the spherical shell by m times the charge of a proton. The resultant electric field is a time harmonic solution of Laplace's equations in spherical coordinates. In this case, the radius at which force balance and nonradiation are

achieved is $\dfrac{a_o}{m + 1}$ where m is an integer. In decaying to this radius from the "ground state", a total energy of [(m + 1)² - 1²] x 13.6 eV is released. The process is hereafter referred to as HECTER (Hydrogen Emission by Catalytic Thermal Electronic Relaxation).

ENERGY HOLES

The same energy hole can continue the shrinkage cycle. In general, absorption of an energy hole will cause the orbitsphere to undergo a transition from one stable non-radiative radius to another stable non-radiative radius. The electric force is attractive, thus, the orbitsphere will shrink when the effective nuclear charge increases. The orbitsphere has an initial radius, $r_n$, initial effective nuclear charge, $Z_{eff}$, and initial velocity, $v_n$, given by the condition for non-radiation

$$2\pi(nr_1) = vl_1 \qquad n = 1, \frac{1}{2}, \frac{1}{3}, \frac{1}{4}, \dots, \qquad (38)$$

$$v_n = \frac{\hbar}{m_e n a_o} \qquad (39)$$

At force balance,

$$\frac{\hbar^2}{m_e (r_n)^3} = \frac{Z_{eff} e^2}{4\pi\varepsilon_0 (r_n)^2} \qquad (40)$$

Shrinkage occurs because the effective nuclear charge increases by an integer, m, when Eqs. (38-40) are satisfied by the introduction of an energy sink of a coupled resonator, such as an electron orbitsphere resonator cavity comprising an electrochemical couple or other electron transfer reaction. The coupled resonator provides energy holes and affects the shrinkage transition from the initial radius $a_o/(mp+1)$ and a nuclear charge of (mp + 1) to the second radius

$\left[\dfrac{a_o}{m(p+1) + 1}\right]$ and a nuclear charge of m(p+1) + 1. Energy conservation and the boundary condition that trapped photons must be a solution to the Laplacian in spherical coordinates determine that the energy hole to cause a shrinkage is given by Eq. (37). As a result of coupling, the hydrogen atom emits a photon of m x 27.21 eV, and this photon is absorbed by the coupled resonator. Stated another way, the hydrogen atom absorbs an energy hole of m x 27.21 eV. The energy hole absorption causes a second photon to be trapped in the hydrogen atom electron orbitsphere. Recall from the Excited States of the One Electron Atom (Quantization) Section of Mills, R., Unification of Spacetime, the Forces, Matter, and Energy, Technomics Publishing Company, Lancaster, PA, (1992) that electromagnetic radiation of discrete energy can be trapped in a resonator cavity. As shown previously, the photonic equation must be a solution of the Laplacian in spherical coordinates. The photon field comprises an electric field which Provides force balance and a nonradiative orbitsphere. The solution to this boundary value problem of the radial photon electric field is given by

$$\hat{\mathcal{E}}\hat{i}_r \text{ photon } n,l,m = \frac{e}{4\pi\varepsilon_0} \frac{(\frac{a_0}{n})^l}{r^{(l+2)}} \left( -1 + n \left[ Y_l^m (\phi,\theta) + Y_s^{m\,s} \right] \right)$$

$$(41)$$

For

n = 2, 3, 4, ...

l = 1, 2, ..., n - 1

m = -l, -l + 1, ..., 0, ..., +l

And, the quantum numbers of the electron are n, l, m ($m_\ell$), and $m_S$.

It is apparent from this equation that given an initial radius of $\left[ \dfrac{a_0}{(mp + 1)} \right]$ and a final radius of

$\left[ \dfrac{a_0}{m(p+1) + 1} \right]$ that the nuclear charge is increased by m with the absorption of an energy hole of m x 27.2 eV. The potential energy decreases by this energy; thus, energy is conserved. However, the force balance equation is not initially satisfied as the effective nuclear charge increases by m. Further energy is emitted as force balance is achieved at the final radius. By replacing the initial radius with the final radius, and by increasing the charge by m in Eq. (40).

$$[m(p+1) + 1]^3 \frac{\hbar^2}{m_e a_0^3} = [m(p+1) + 1]^2 \frac{((m(p+1)+ 1)e)e}{4\pi\varepsilon_0 a_0^2} , (42)$$

force balance is achieved and the orbitsphere is non-radiative. The energy balance for m = 1 is as follows. An initial energy of 27.21 eV is emitted as the energy hole absorption event. This increases the effective nuclear charge by one and decreases the potential by 27.21 eV. More energy is emitted until the total energy released is [(p + 1)$^2$ - p$^2$] x 13.6 eV where p is an integer.

Several examples of different energy holes effecting shrinkage and the corresponding effective nuclear charges, total energy released, and final radii of the orbitspheres going from infinity to the final radius, $a_0/(m + 1)$ are given in the following table.

Radii, energies, energy holes, and energy released for several states of hydrogen.

| m | R | V(eV) | T(eV) | Zeff | energy hole (eV) | total energy released (eV) r=∞ to r=R |
|---|---|---|---|---|---|---|
| - | $a_0$ | -27.2 | 13.6 | 1 | - | 13.6 |
| 1 | $a_0/2$ | -108.8 | 54.4 | 2 | 27.2 | 54.4 |
| 2 | $a_0/3$ | -244.9 | 122.4 | 3 | 54.4 | 122.4 |
| 3 | $a_0/4$ | -435.4 | 217.7 | 4 | 81.6 | 217.7 |
| 4 | $a_0/5$ | -680.2 | 340.1 | 5 | 108.8 | 340.1 |
| 5 | $a_0/6$ | -979.6 | 489.6 | 6 | 136.1 | 489.6 |
| 6 | $a_0/7$ | -1333.3 | 666.4 | 7 | 163.3 | 666.4 |
| 7 | $a_0/8$ | -1741.4 | 870.4 | 8 | 190.5 | 870.4 |
| 8 | $a_0/9$ | -2204.0 | 1101.6 | 9 | 217.7 | 1101.6 |
| 9 | $a_0/10$ | -2721.0 | 1360.5 | 10 | 244.9 | 1360.5 |

Energy released for any transition is given by $\Delta E_{final}$ (∞ to R) - $\Delta E_{initial}$ (∞ to R)

CATALYTIC ENERGY HOLE STRUCTURES FOR ATOMS

Single Electron Transfer

An energy hole is provided by the transfer of an electron between participating species including atoms, ions, molecules, an ionic and molecular compounds. In one embodiment, the energy hole comprises the transfer of an electron from one species to another species whereby the sum of the ionization energy of the electron donating species minus the ionization energy or electron affinity of the electron accepting species equals approximately m X 27.21 eV where m is an integer.

Single Electron Transfer (Two Species)

An efficient catalytic system that hinges on the coupling of three resonator cavities involves potassium. For example, the second ionization energy of potassium is 31.63 eV. This energy hole is obviously too high for resonant absorption. However, $K^+$ releases 4.34 eV when it is reduced to K. The combination of $K^+$ to $K^{2+}$ and $K^+$ to K, then, has a net energy change of 27.28 eV; m = 1 in Eq. (37).

$$27.28 \text{ eV} + K^+ + K^+ + H\left[\frac{a_0}{p}\right] \rightarrow K + K^{2+} + H\left[\frac{a_0}{(p+1)}\right] + [(p+1)^2 - p^2] \text{ x } 13.6 \text{ eV} \tag{43}$$

$$K + K^{2+} \rightarrow K^+ + K^+ + 27.28 \text{ eV} \tag{44}$$

And, the overall reaction is

$$H\left[\frac{a_0}{p}\right] \rightarrow H\left[\frac{a_0}{(p+1)}\right] + [(p+1)^2 - p^2] \text{ x } 13.6 \text{ eV} \tag{45}$$

Note that the energy given off as the atom shrinks is much greater than the energy lost to the energy hole. And, the energy released is large compared to conventional chemical reactions.

For sodium or sodium ions no electrocatalytic reaction of approximately 27.21 eV is possible. For example, 42.15 eV of energy is absorbed by the reverse of the reaction given in Eq. (44) where $Na^+$ replaces $K^+$ :

$$Na^+ + Na^+ + 42.15 \text{ eV} \rightarrow Na + Na^{2+} \tag{46}$$

Other less efficient catalytic systems that hinge on the coupling of three resonator cavities exist. For example, the third ionization energy of palladium is 32.93 eV. This energy hole is obviously too high for resonant absorption. However, $Li^+$ releases 5.392 eV when it is reduced to Li. The combination of $Pd^{2+}$ to $Pd^{3+}$ and $Li^+$ to Li, then, has a net energy change of 27.54 eV.

$$27.54 \text{ eV} + Li^+ + Pd^{2+} + H\left[\frac{a_0}{p}\right] \rightarrow Li + Pd^{3+} + H\left[\frac{a_0}{(p+1)}\right] + [(p+1)^2 - p^2] \text{ x } 13.6 \text{ eV} \tag{47}$$

$$Li + Pd^{3+} = Li^+ + Pd^{2+} + 27.54 \text{ eV} \tag{48}$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \tag{49}$$

Single Electron Transfer (One Species)

An energy hole is provided by the ionization of an electron from a participating species including an atom, an ion, a molecule, and an ionic or molecular compound to a vacuum energy level. In one embodiment, the energy hole comprises the ionization of an electron from one species to a vacuum energy level whereby the ionization energy of the electron donating species equals approximately m X 27.21 eV where m is an integer.

Titanium is one of the catalysts that can cause resonant shrinkage because the third ionization energy is 27.49 eV, m = 1 in Eq. (37). Thus, the shrinkage cascade for the p th cycle is represented by

$$27.491 \text{ eV} + Ti^{2+} + H\left[\frac{a_0}{p}\right] \rightarrow Ti^{3+} + e^- + H\left[\frac{a_0}{(p+1)}\right] + [(p+1)^2 - p^2] \times 13.6 \text{ eV} \tag{50}$$

$$Ti^{3+} + e^- \rightarrow Ti^{2+} + 27.491 \text{ eV} \tag{51}$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \tag{52}$$

Rubidium(I) is also a catalyst. The second ionization energy is

$$\tag{53}$$

$$27.28 \text{ eV} + Rb^+ + H\left[\frac{a_0}{p}\right] \rightarrow Rb^{2+} + e^- + H\left[\frac{a_0}{(p+1)}\right] + [(p+1)^2 - p^2] \times 13.6 \text{ eV}$$

$$Rb^{2+} + e^- \rightarrow Rb^+ + 27.28 \text{ eV} \tag{54}$$

And, the overall reaction is

$$2H\left[\frac{a_0}{p}\right] \rightarrow 2H\left[\frac{a_0}{(p+1)}\right] + [(p+1)^2 - p^2] \times 13.6 \text{ eV} \tag{55}$$

Other single electron transfer reactions to provide energy holes of approximately m X 27.21 eV where m is an integer appear in my previous U.S. Patent Applications entitled "Energy/ Matter Conversion Methods and Structures," filed on December 12, 1990 and April 28, 1989, which are incorporated herein by reference.

Multiple Electron Transfer

An energy hole is provided by the transfer of multiple electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately m X 27.21 eV where m and t are integers.

An energy hole is provided by the transfer of multiple electrons between participating species including atoms, ions, molecules, and ionic and molecular compounds. In one embodiment, the energy hole comprises the transfer of t electrons from one species to another whereby the t consecutive electron affinities and/or ionization energies of the electron donating species minus the t consecutive ionization energies and/or electron affinities of the electron acceptor equals approximately m X 27.21 eV where m and t are integers.

In a preferred embodiment the electron acceptor species is an oxide such as $MnO_x$, $AlO_x$, $SiO_x$. A preferred molecular electron acceptor is oxygen, $O_2$.

Two Electron Transfer(One Species)

In an embodiment, a catalytic system that provides an energy hole hinges on the ionization of two electrons from an atom, ion, or molecule to a vacuum energy level such that the sum of two ionization energies is approximately 27.21 eV. Zinc is one of the catalysts that can cause resonant shrinkage because the sum of the first and second ionization energies is 27.358 eV, m = 1 in Eq. (37). Thus, the shrinkage cascade for the p th cycle is represented by

$$27.358 \text{ eV} + Zn + H\left[\frac{a_o}{p}\right] \rightarrow Zn^{2+} + 2e^- + H\left[\frac{a_o}{(p+1)}\right] + [(p+1)^2 - p^2] \text{ x } 13.6 \text{ eV} \tag{56}$$

$$\overline{Zn^{2+} + 2e^-} \rightarrow \overline{Zn} + \overline{27.358 \text{ eV}} \tag{57}$$

And, the overall reaction is

$$H\left[\frac{a_o}{p}\right] \rightarrow H\left[\frac{a_o}{(p+1)}\right] + [(p+1)^2 - p^2] \text{ x } 13.6 \text{ eV} \tag{58}$$

Catalytic systems that hinge on the transfer of two electrons from an atom to a vacuum energy level capable of producing energy holes for shrinking hydrogen atoms are given in the following table. The sum of the first ionization energy, $IE_1$, plus the second ionization energy, $IE_2$, equals approximately 27.21 eV. As an example, Zn + 27.358 eV = $Zn^{2+}$ + 2e⁻ where $IE_1$ + $IE_2$ equals 27.358 eV.

| Catalytic Atom | $IE_1$ | $IE_2$ | Energy Hole |
|---|---|---|---|
| Be | 9.32 | 18.211 | 27.53 |
| Cu | 7.726 | 20.292 | 28.0 |
| Zn | 9.394 | 17.964 | 27.358 |
| Pd | 8.34 | 19.43 | 27.77 |
| Te | 9.009 | 18.6 | 27.609 |
| Pt | 9.0 | 18.563 | 27.563 |

Two Electron Transfer(Two Species)

In another embodiment, a catalytic system that provides an energy hole hinges on the transfer of two electrons from an atom, ion, or molecule to another atom or molecule such that the sum of two ionization energies minus the sum of two electron affinities of the participating atoms, ions, and/or molecules is approximately 27.21 eV. A catalytic system that hinges on the transfer of two electrons from an atom to a molecule involves palladium and oxygen. For example, the first and second ionization energies of palladium are 8.34 eV and 19.43 eV, respectively. And, the first and second electron affinities of the oxygen molecule are 0.45 eV and 0.11 eV, respectively. The energy hole resulting from a two electron transfer is appropriate for resonant absorption. The combination of Pd to $Pd^{2+}$ and $O_2$ to $O_2^{2-}$, then, has a net energy change of 27.21 eV.

$$27.21 \text{ eV} + Pd + O_2 + H\left[\frac{a_0}{p}\right] \rightarrow Pd^{2+} + O_2^{2-} \ H\left[\frac{a_0}{(p+1)}\right] + [(p+1)^2 - p^2] \times 13.6$$

$$\text{eV} \tag{59}$$

$$Pd^{2+} : O_2^{2-} \rightarrow Pd + O_2 + 27.21 \text{ eV} \tag{60}$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \tag{61}$$

Additional atoms, molecules, or compounds which could be substituted for $O_2$ are those with first and second electron affinities of approximately 0.45 eV and 0.11 eV, respectively, such as a mixed oxide ($MnO_x$, $AlO_x$, $SiO_x$) containing O to form $O^{2-}$ or $O_2$ to form $O_2^{2-}$. Catalytic systems which could be substituted for Pd in Eqs. (59-61) that hinge on the transfer of two electrons from an atom to oxygen or to an atom, ion, or molecule with first and second electron affinities of approximately 0.45 eV and 0.11 eV, respectively, that are capable of producing energy holes for shrinking hydrogen atoms are given in the following table.

| Catalytic Atom | $IE_1$ | $IE_2$ | Energy Hole |
|---|---|---|---|
| Cu | 7.726 | 20.292 | 27.46 |
| As | 9.81 | 18.633 | 27.88 |
| Pd | 8.34 | 19.43 | 27.21 |
| Te | 9.009 | 18.60 | 27.05 |
| Cs | 3.894 | 25.10 | 28.43 |
| Pt | 9.00 | 18.563 | 27.00 |

Two Electron Transfer(Two Species)

In another embodiment, a catalytic system that provides an energy hole hinges on the transfer of two electrons from an atom, ion, or molecule to another atom, ion, or molecule such that the sum of two ionization energies minus the sum of one ionization energy and one electron affinity of the participating atoms, ions, and/or molecules is approximately 27.21 eV. A catalytic system that hinges on the transfer of two electrons from an atom to an ion involves xenon and lithium. For example, the first and second ionization energies of xenon are 12.13 eV and 21.21 eV, respectively. And, the first ionization energy and the first electron affinity of lithium are 5.39 and 0.62 eV, respectively. The energy hole resulting from a two electron transfer is appropriate for resonant absorption. The combination of Xe to $Xe^{2+}$ and $Li^+$ to $Li^-$, then, has a net energy change of 27.33 eV.

$$27.33 \text{ eV} + Xe + Li^+ + H\left[\frac{a_0}{p}\right] \rightarrow Xe^{2+} + Li^- + H\left[\frac{a_0}{(p+1)}\right] + [(p+1)^2 - p^2] \times 13.6$$

$$\text{eV} \tag{62}$$

$$Xe^{2+} + Li^- \rightarrow Xe + Li^+ + 27.33 \text{ eV} \qquad (63)$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \qquad (64)$$

Catalytic systems that hinge on the transfer of two electrons from an atom or ion to an ion capable of producing, energy holes for shrinking hydrogen atoms are given in the following table. The sum of an ionization energy, $IE_n$, plus the next consecutive ionization energy, $IE_{n+1}$, of the electron donating atom or ion minus the sum of the first ionization energy, $IE_1$, and the electron affinity, EA, of the electron accepting ion equals approximately 27.21 eV.

| Catalytic Donating Atom or Ion | $IE_n$ | $IE_{n+1}$ | Catalytic Accepting Ion | $IE_1$ | EA | Energy Hole |
|---|---|---|---|---|---|---|
| B | 8.30 | 25.15 | $Li^+$ | 5.39 | 0.62 | 27.44 |
| S | 10.36 | 23.33 | $Li^+$ | 5.39 | 0.62 | 27.68 |
| Br | 11.81 | 21.80 | $Li^+$ | 5.3 9 | 0.62 | 27.60 |
| $Pm^+$ | 10.90 | 22.30 | $Li^+$ | 5.39 | 0.62 | 27.19 |
| $Sm^+$ | 11.07 | 23.40 | $Li^+$ | 5.39 | 0.62 | 28.46 |
| $Tb^+$ | 11.52 | 21.91 | $Li^+$ | 5.39 | 0.62 | 27.42 |
| $Dy^+$ | 11.67 | 22.80 | $Li^+$ | 5.39 | 0.62 | 28.46 |
| $Sb^+$ | 16.53 | 25.30 | $H^+$ | 13.60 | 0.75 | 27.48 |
| $Bi^+$ | 16.69 | 25.56 | $H^+$ | 13.60 | 0.75 | 27.90 |

Two Electron Transfer(Two Species)

In another embodiment, a catalytic system that provides an energy hole hinges the transfer of two electrons from an atom, ion, or molecule to another atom, ion, or molecule such that the sum of two ionization energies minus the sum of two ionization energies of the participating atoms and/or molecules is approximately 27.21 eV. A catalytic system that hinges on the transfer of two electrons from a first ion to a second ion involves silver( $Ag^+$) and silver ($Ag^{2+}$). For example, the second and third ionization energies of silver are 21.49 eV and 34.83 eV, respectively. And, the second and first ionization energies of silver are 21.49 eV and 7.58 eV, respectively. The energy hole resulting from a two electron transfer is appropriate for resonant absorption. The combination of $Ag^+$ to $Ag^{3+}$ and $Ag^{2+}$ to Ag, then, has a net energy change of 27.25 eV.

$$27.25 \text{ eV} + Ag^+ + Ag^{2+} + H\left[\frac{a_0}{p}\right] \rightarrow Ag^{3+} + Ag + H\left[\frac{a_0}{(p+1)}\right] + [(p+1)^2 - p^2] \times$$

$$13.6 \text{ eV}$$

$$(65)$$

$$Ag^{3+} + Ag \rightarrow Ag^+ + Ag^{2+} + 27.25 \text{ eV} \qquad (66)$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \qquad (67)$$

Catalytic systems that hinge on the transfer of two electrons from an atom, or ion to an ion capable of producing energy holes for shrinking hydrogen atoms are given in the following table. The sum of an ionization energy, $IE_n$, plus the next consecutive ionization energy, $IE_{n+1}$, of the electron donating atom or ion minus the sum of an ionization energy, $IE_{m+1}$, plus the next consecutive lower ionization energy, $IE_m$, of the electron accepting ion equals approximately 27.21 eV.

| Catalytic Donating Atom or Ion | | IE$_n$ | IE$_{n+1}$ | Catalytic Accepting Ion | | IE$_{m+1}$ | IE$_m$ | Energy Hole |
|---|---|---|---|---|---|---|---|---|
| He | 0+ | 24.59 | 54.42 | Co | 3+ | 33.50 | 17.06 | 28.44 |
| He | 0+ | 24.59 | 54.42 | Ga | 3+ | 30.71 | 20.51 | 27.78 |
| Li | 0+ | 5.39 | 75.64 | Ni | 3+ | 35.17 | 18.17 | 27.69 |
| Li | 0+ | 5.39 | 75.64 | Xe | 3+ | 32.10 | 21.21 | 27.72 |
| Li | 0+ | 5.39 | 75.64 | Hg | 3+ | 34.20 | 18.76 | 28.07 |
| Li | 1+ | 75.64 | 122.45 | Na | 4+ | 98.91 | 71.64 | 27.54 |
| Li | 1+ | 75.64 | 122.45 | Y | 6+ | 93.00 | 77.00 | 28.09 |
| Be | 1+ | 18.21 | 153.89 | Bi | 6+ | 88.30 | 56.00 | 27.80 |
| Be | 2+ | 153.89 | 217.71 | Al | 6+ | 190.47 | 153.71 | 27.43 |
| B | 1+ | 25.15 | 37.93 | C | 2+ | 24.38 | 11.26 | 27.44 |
| B | 1+ | 25.15 | 37.93 | K | 2+ | 31.63 | 4.34 | 27.12 |
| B | 1+ | 25.15 | 37.93 | Ho | 3+ | 22.84 | 11.80 | 28.44 |
| B | 1+ | 25.15 | 37.93 | Er | 3+ | 22.74 | 11.93 | 28.41 |
| B | 1+ | 25.15 | 37.93 | Tm | 3+ | 23.68 | 12.05 | 27.35 |
| B | 1+ | 25.15 | 37.93 | Lu | 3+ | 20.96 | 13.90 | 28.22 |
| C | 1+ | 24.38 | 47.89 | N | 2+ | 29.60 | 14.53 | 28.14 |
| C | 1+ | 24.38 | 47.89 | V | 3+ | 29.31 | 14.65 | 28.31 |
| C | 1+ | 24.38 | 47.89 | Tc | 3+ | 29.54 | 15.26 | 27.47 |
| C | 1+ | 24.38 | 47.89 | Ru | 3+ | 28.47 | 16.76 | 27.04 |
| C | 1+ | 24.38 | 47.89 | Sn | 3+ | 30.50 | 14.63 | 27.14 |
| N | 0+ | 14.53 | 29.60 | Sr | 2+ | 11.03 | 5.70 | 27.41 |
| N | 0+ | 14.53 | 29.60 | La | 2+ | 11.06 | 5.58 | 27.50 |
| N | 0+ | 14.53 | 29.60 | Ce | 2+ | 10.85 | 5.47 | 27.82 |
| N | 0+ | 14.53 | 29.60 | Pr | 2+ | 10.55 | 5.42 | 28.16 |
| N | 0+ | 14.53 | 29.60 | Nd | 2+ | 10.73 | 5.49 | 27.92 |
| N | 0+ | 14.53 | 29.60 | Pm | 2+ | 10.90 | 5.55 | 27.68 |
| N | 0+ | 14.53 | 29.60 | Sm | 2+ | 11.07 | 5.63 | 27.43 |
| N | 0+ | 14.53 | 29.60 | Eu | 2+ | 11.24 | 5.67 | 27.23 |
| N | 1+ | 29.60 | 47.45 | O | 2+ | 35.12 | 13.62 | 28.32 |
| N | 1+ | 29.60 | 47.45 | Si | 3+ | 33.19 | 16.34 | 27.21 |
| N | 1+ | 29.60 | 47.45 | P | 3+ | 30.18 | 19.73 | 27.14 |
| N | 1+ | 29.60 | 47.45 | Mn | 3+ | 33.67 | 15.64 | 27.74 |
| N | 1+ | 29.60 | 47.45 | Rh | 3+ | 31.06 | 18.08 | 27.91 |
| N | 2+ | 47.45 | 77.47 | F | 3+ | 62.71 | 34.97 | 27.24 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| N | 3+ | 77.47 | 97.89 | Br | 6+ | 88.60 | 59.70 | 27.06 |
| O | 0+ | 13.62 | 35.12 | Ti | 2+ | 13.58 | 6.82 | 28.33 |
| O | 0+ | 13.62 | 35.12 | V | 2+ | 14.65 | 6.74 | 27.34 |
| O | 0+ | 13.62 | 35.12 | Nb | 2+ | 14.32 | 6.88 | 27.53 |
| O | 0+ | 13.62 | 35.12 | Hf | 2+ | 14.90 | 6.60 | 27.23 |
| O | 1+ | 35.12 | 54.93 | Ne | 2+ | 40.96 | 21.56 | 27.52 |
| O | 1+ | 35.12 | 54.93 | Ca | 3+ | 50.91 | 11.87 | 27.27 |
| O | 1+ | 35.12 | 54.93 | Nd | 4+ | 40.41 | 22.10 | 27.54 |
| O | 1+ | 35.12 | 54.93 | Tb | 4+ | 39.80 | 21.91 | 28.34 |
| O | 4+ | 113.90 | 138.12 | Fe | 7+ | 125.00 | 99.00 | 28.01 |
| F | 0+ | 17.42 | 34.97 | Al | 2+ | 18.83 | 5.99 | 27.58 |
| F | 0+ | 17.42 | 34.97 | Si | 2+ | 16.34 | 8.15 | 27.90 |
| F | 0+ | 17.42 | 34.97 | Fe | 2+ | 16.18 | 7.87 | 28.34 |
| F | 0+ | 17.42 | 34.97 | Co | 2+ | 17.06 | 7.86 | 27.47 |
| F | 0+ | 17.42 | 34.97 | Ru | 2+ | 16.76 | 7.37 | 28.26 |
| F | 0+ | 17.42 | 34.97 | In | 2+ | 18.87 | 5.79 | 27.74 |
| F | 0+ | 17.42 | 34.97 | Sb | 2+ | 16.53 | 8.64 | 27.22 |
| F | 0+ | 17.42 | 34.97 | Bi | 2+ | 16.69 | 7.29 | 28.41 |
| Ne | 0+ | 21.56 | 40.96 | Sm | 3+ | 23.40 | 11.07 | 28.06 |
| Ne | 0+ | 21.56 | 40.96 | Dy | 3+ | 22.80 | 11.67 | 28.06 |
| Ne | 0+ | 21.56 | 40.96 | Ho | 3+ | 22.84 | 11.80 | 27.89 |
| Ne | 0+ | 21.56 | 40.96 Er | | 3+ | 22.74 | 11.93 | .27.86 |
| Ne | 0+ | 21.56 | 40.96 | Lu | 3+ | 20.96 | 13.90 | 27.67 |
| Na | 0+ | 5.14 | 47.29 | Al | 2+ | 18.83 | 5.99 | 27.61 |
| Na | 0+ | 5.14 | 47.29 | Si | 2+ | 16.34 | 8.15 | 27.93 |
| Na | 0+ | 5.14 | 47.29 | Fe | 2+ | 16.18 | 7.87 | 28.38 |
| Na | 0+ | 5.14 | 47.29 | Co | 2+ | 17.06 | 7.86 | 27.50 |
| Na | 0+ | 5.14 | 47.29 | Ru | 2+ | 16.76 | 7.37 | 28.29 |
| Na | 0+ | 5.14 | 47.29 | In | 2+ | 18.87 | 5.79 | 27.77 |
| Na | 0+ | 5.14 | 47.29 | Sb | 2+ | 16.53 | 8.64 | 27.25 |
| Na | 0+ | 5.14 | 47.29 | Bi | 2+ | 16.69 | 7.29 | 28.45 |
| Na | 3+ | 98.91 | 138.39 | Y | 7+ | 116.00 | 93.00 | 28.30 |
| Mg | 1+ | 15.03 | 80.14 | Rb | 3+ | 40.00 | 27.28 | 27.90 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Mg | 1+ | 15.03 | 80.14 | Eu | 4+ | 42.60 | 24.90 | 27.68 |
| Al | 1+ | 18.83 | 28.45 | Sc | 2+ | 12.80 | 6.54 | 27.94 |
| Al | 1+ | 18.83 | 28.45 | Zr | 2+ | 13.13 | 6.84 | 27.31 |
| Al | 1+ | 18.83 | 28.45 | Lu | 2+ | 13.90 | 5.43 | 27.95 |
| Al | 2+ | 28.45 | 119.99 | S | 5+ | 72.68 | 47.30 | 28.46 |
| Al | 2+ | 28.45 | 119.99 | Cl | 5+ | 67.80 | 53.46 | 27.18 |
| Al | 4+ | 153.71 | 190.47 | Mn | 8+ | 196.46 | 119.27 | 28.45 |
| Si | 1+ | 16.34 | 33.49 | Mg | 2+ | 15.03 | 7.65 | 27.16 |
| Si | 1+ | 16.34 | 33.49 | V | 2+ | 14.65 | 6.74 | 28.45 |
| Si | 1+ | 16.34 | 33.49 | Tc | 2+ | 15.26 | 7.28 | 27.30 |
| Si | 1+ | 16.34 | 33.49 | Sn | 2+ | 14.63 | 7.34 | 27.86 |
| Si | 1+ | 16.34 | 33.49 | Hf | 2+ | 14.90 | 6.60 | 28.34 |
| Si | 1+ | 16.34 | 33.49 | Pb | 2+ | 15.03 | 7.42 | 27.39 |
| Si | 2+ | 33.49 | 45.14 | Co | 3+ | 33.50 | 17.06 | 28.07 |
| Si | 2+ | 33.49 | 45.14 | Ga | 3+ | 30.71 | 20.51 | 27.41 |
| Si | 2+ | 33.49 | 45.14 | Ge | 3+ | 34.22 | 15.93 | 28.48 |
| Si | 2+ | 33.49 | 45.14 | Tl | 3+ | 29.83 | 20.43 | 28.37 |
| Si | 3+ | 45.14 | 166.77 | Ni | 6+ | 108.00 | 75.50 | 28.41 |
| Si | 3+ | 45.14 | 166.77 | Rb | 7+ | 99.20 | 84.40 | 28.31 |
| Si | 4+ | 166.77 | 205.05 | Al | 6+ | 190.47 | 153.71 | 27.64 |
| P | 1+ | 19.73 | 30.18 | Mg | 2+ | 15.03 | 7.65 | 27.22 |
| P | 1+ | 19.73 | 30.18 | Tc | 2+ | 15.26 | 7.28 | 27.36 |
| P | 1+ | 19.73 | 30.18 | Sn | 2+ | 14.63 | 7.34 | 27.93 |
| P | 1+ | 19.73 | 30.18 | Hf | 2+ | 14.90 | 6.60 | 28.40 |
| P | 1+ | 19.73 | 30.18 | Pb | 2+ | 15.03 | 7.42 | 27.46 |
| P | 2+ | 30.18 | 51.37 | Ni | 3+ | 35.17 | 18.17 | 28.21 |
| P | 2+ | 30.18 | 51.37 | Cd | 3+ | 37.48 | 16.91 | 27.16 |
| P | 2+ | 30.18 | 51.37 | Xe | 3+ | 32.10 | 21.21 | 28.24 |
| P | 3+ | 51.37 | 65.02 | Nb | 5+ | 50.55 | 38.30 | 27.54 |
| P | 5+ | 220.43 | 263.22 | C | 5+ | 392.08 | 64.49 | 27.08 |
| S | 1+ | 23.33 | 34.83 | P | 2+ | 19.73 | 10.49 | 27.95 |
| S | 1+ | 23.33 | 34.83 | Se | 2+ | 21.19 | 9.75 | 27.22 |
| S | 1+ | 23.33 | 34.83 | La | 3+ | 19.18 | 11.06 | 27.92 |

22

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| S | 1+ | 23.33 | 34.83 | Ce | 3+ | 20.20 | 10.85 | 27.11 |
| S | 1+ | 23.33 | 34.83 | Au | 2+ | 20.50 | 9.23 | 28.44 |
| S | 2+ | 34.83 | 47.30 | Sr | 3+ | 43.60 | 11.03 | 27.50 |
| S | 2+ | 34.83 | 47.30 | Cd | 3+ | 37.48 | 16.91 | 27.74 |
| S | 3+ | 47.30 | 72.68 | Cu | 4+ | 55.20 | 36.83 | 27.95 |
| S | 3+ | 47.30 | 72.68 | Rb | 4+ | 52.60 | 40.00 | 27.38 |
| S | 4+ | 72.68 | 88.05 | O | 4+ | 77.41 | 54.93 | 28.38 |
| Cl | 1+ | 23.81 | 39.61 | C | 2+ | 24.38 | 11.26 | 27.78 |
| Cl | 1+ | 23.81 | 39.61 | K | 2+ | 31.63 | 4.34 | 27.45 |
| Cl | 1+ | 23.81 | 39.61 | Zr | 3+ | 22.99 | 13.13 | 27.30 |
| Cl | 1+ | 23.81 | 39.61 | Eu | 3+ | 24.90 | 11.24 | 27.28 |
| Cl | 1+ | 23.81 | 39.61 | Tm | 3+ | 23.68 | 12.05 | 27.69 |
| Ar | 0+ | 15.76 | 27.63 | Ba | 2+ | 10.00 | 5.21 | 28.17 |
| Ar | 0+ | 15.76 | 27.63 | Ce | 2+ | 10.85 | 5.47 | 27.07 |
| Ar | 0+ | 15.76 | 27.63 | Pr | 2+ | 10.55 | 5.42 | 27.42 |
| Ar | 0+ | 15.76 | 27.63 | Nd | 2+ | 10.73 | 5.49 | 27.17 |
| Ar | 0+ | 15.76 | 27.63 | Ra | 2+ | 10.15 | 5.28 | 27.96 |
| K | 1+ | 31.63 | 45.72 | Si | 3+ | 33.49 | 16.34 | 27.51 |
| K | 1+ | 31.63 | 45.72 | P | 3+ | 30.18 | 19.73 | 27.44 |
| K | 1+ | 31.63 | 45.72 | Mn | 3+ | 33.67 | 15.64 | 28.04 |
| K | 1+ | 31.63 | 45.72 | Ge | 3+ | 34.22 | 15.93 | 27.19 |
| K | 1+ | 31.63 | 45.72 | Rh | 3+ | 31.06 | 18.08 | 28.21 |
| K | 1+ | 31.63 | 45.72 | Tl | 3+ | 29.83 | 20.43 | 27.09 |
| Ca | 1+ | 11.87 | 50.91 | C | 2+ | 24.38 | 11.26 | 27.14 |
| Ca | 1+ | 11.87 | 50.91 | Sm | 3+ | 23.40 | 11.07 | 28.31 |
| Ca | 1+ | 11.87 | 50.91 | Dy | 3+ | 22.80 | 11.67 | 28.31 |
| Ca | 1+ | 11.87 | 50.91 | Ho | 3+ | 22.84 | 11.80 | 28.14 |
| Ca | 1+ | 11.87 | 50.91 | Er | 3+ | 22.74 | 11.93 | 28.11 |
| Ca | 1+ | 11.87 | 50.91 | Tm | 3+ | 23.68 | 12.05 | 27.05 |
| Ca | 1+ | 11.87 | 50.91 | Lu | 3+ | 20.96 | 13.90 | 27.92 |
| Ca | 2+ | 50.91 | 67.10 | O | 3+ | 54.93 | 35.12 | 27.96 |
| Ca | 2+ | 50.91 | 67.10 | Ni | 4+ | 54.90 | 35.17 | 27.94 |
| Ca | 3+ | 67.10 | 84.41 | Mn | 5+ | 72.40 | 51.20 | 27.91 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Ca | 3+ | 67.10 | 84.41 | Rb | 5+ | 71.00 | 52.60 | 27.91 |
| Sc | 2+ | 24.76 | 73.47 | Ti | 4+ | 43.27 | 27.49 | 27.47 |
| Sc | 2+ | 24.76 | 73.47 | Bi | 4+ | 45.30 | 25.56 | 27.37 |
| Sc | 4+ | 91.66 | 111.10 | N | 5+ | 97.89 | 77.47 | 27.40 |
| Ti | 2+ | 27.49 | 43.27 | Ar | 2+ | 27.63 | 15.76 | 27.37 |
| Ti | 2+ | 27.49 | 43.27 | Mo | 3+ | 27.16 | 16.15 | 27.45 |
| Ti | 4+. | 99.22 | 119.36 | O | 5+ | 113.90 | 77.41 | 27.27 |
| Ti | 4+ | 99.22 | 119.36 | Zn | 6+ | 108.00 | 82.60 | 27.98 |
| Ti | 4+ | 99.22 | 119.36 | As | 6+ | 127.60 | 63.63 | 27.35 |
| V | 1+ | 14.65 | 29.31 | Sr | 2+ | 11.03 | 5.70 | 27.23 |
| V | 1+ | 14.65 | 29.31 | La | 2+ | 11.06 | 5.58 | 27.32 |
| V | 1+ | 14.65 | 29.31 | Ce | 2+ | 10.85 | 5.47 | 27.64 |
| V | 1+ | 14.65 | 29.31 | Pr | 2+ | 10.55 | 5.42 | 27.99 |
| V | 1+ | 14.65 | 29.31 | Nd | 2+ | 10.73 | 5.49 | 27.74 |
| V | 1+ | 14.65 | 29.31 | Pm | 2+ | 10.90 | 5.55 | 27.51 |
| V | 1+ | 14.65 | 29.31 | Sm | 2+ | 11.07 | 5.63 | 27.26 |
| V | 1+ | 14.65 | 29.31 | Eu | 2+ | 11.24 | 5.67 | 27.05 |
| V | 2+ | 29.31 | 46.71 | O | 2+ | 35.12 | 13.62 | 27.28 |
| V | 3+ | 46.71 | 65.23 | Mn | 4+ | 51.20 | 33.67 | 27.07 |
| V | 3+ | 46.71 | 65.23 | Co | 4+ | 51.30 | 33.50 | 27.14 |
| V | 4+ | 65.23 | 128.12 | Ar | 6+ | 91.01 | 75.02 | 27.32 |
| V | 4+ | 65.23 | 128.12 | Sc | 5+ | 91.66 | 73.47 | 28.22 |
| V | 5+ | 128.12 | 150.17 | Mg | 5+ | 141.26 | 109.24 | 27.79 |
| Cr | 1+ | 16.50 | 30.96 | Sc | 2+ | 12.80 | 6.54 | 28.12 |
| Cr | 1+ | 16.50 | 30.96 | Ti | 2+ | 13.58 | 6.82 | 27.06 |
| Cr | 1+ | 15.50 | 30.96 | Zr | 2+ | 13.13 | 6.84 | 27.49 |
| Cr | 1+ | 16.50 | 30.96 | Lu | 2+ | 13.90 | 5.43 | 28.13 |
| Cr | 2+ | 30.96 | 49.10 | F | 2+ | 34.97 | 17.42 | 27.67 |
| Cr | 2+ | 30.96 | 49.10 | Na | 2+ | 47.29 | 5.14 | 27.63 |
| Cr | 2+ | 30.96 | 49.10 | Se | 3+ | 30.82 | 21.19 | 28.05 |
| Cr | 2+ | 30.96 | 49.10 | Pd | 3+ | 32.93 | 19.43 | 27.70 |
| Cr | 2+ | 30.96 | 49.10 | I | 3+ | 33.00 | 19.13 | 27.93 |
| Cr | 2+ | 30.96 | 49.10 | Hg | 3+ | 34.20 | 18.76 | 27.10 |

(continued)

| Catalytic Donating Atom or Ion | | IE$_n$ | IE$_{n+1}$ | Catalytic Accepting Ion | | IE$_{m+1}$ | IE$_m$ | Energy Hole |
|---|---|---|---|---|---|---|---|---|
| Cr | 3+ | 49.10 | 69.30 | O | 3+ | 54.93 | 35.12 | 28.35 |
| Cr | 3+ | 49.10 | 69.30 | Ni | 4+ | 54.90 | 35.17 | 28.33 |
| Cr | 4+ | 69.30 | 90.56 | O | 4+ | 77.41 | 54.93 | 27.51 |
| Cr | 5+ | 90.56 | 161.10 | Ne | 5+ | 126.21 | 97.11 | 28.34 |
| Cr | 5+ | 90.56 | 161.10 | Fe | 7+ | 125.00 | 99.00 | 27.66 |
| Mn | 1+ | 15.64 | 33.67 | V | 2+ | 14.65 | 6.74 | 27.92 |
| Mn | 1+ | 15.64 | 33.67 | Nb | 2+ | 14.32 | 6.88 | 28.11 |
| Mn | 1+ | 15.64 | 33.67 | Sn | 2+ | 14.63 | 7.34 | 27.33 |
| Mn | 1+ | 15.64 | 33.67 | Hf | 2+ | 14.90 | 6.60 | 27.81 |
| Mn | 2+ | 33.67 | 51.20 | Cu | 3+ | 36.83 | 20.29 | 27.75 |
| Mn | 2+ | 33.67 | 51.20 | Zn | 3+ | 39.72 | 17.96 | 27.18 |
| Mn | 2+ | 33.67 | 51.20 | Br | 3+ | 36.00 | 21.80 | 27.07 |
| Mn | 2+ | 33.67 | 51.20 | Zr | 4+ | 34.34 | 22.99 | 27.54 |
| Mn | 2+ | 33.67 | 51.20 | Ce | 4+ | 36.76 | 20.20 | 27.91 |
| Mn | 2+ | 33.67 | 51.20 | Hf | 4+ | 33.33 | 23.30 | 28.24 |
| Mn | 3+ | 51.20 | 72.40 | Mg | 3+ | 80.14 | 15.03 | 28.42 |
| Mn | 3+ | 51.20 | 72.40 | Te | 5+ | 58.75 | 37.41 | 27.44 |
| Mn | 4+ | 72.40 | 95.00 | Ge | 5+ | 93.50 | 45.71 | 28.19 |
| Fe | 1+ | 16.18 | 30.65 | Sc | 2+ | 12.80 | 6.54 | 27.49 |
| Fe | 1+ | 16.18 | 30.65 | Y | 2+ | 12.24 | 6.38 | 28.21 |
| Fe | 1+ | 16.18 | 30.65 | Yb | 2+ | 12.18 | 6.25 | 28.40 |
| Fe | 1+ | 16.18 | 30.65 | Lu | 2+ | 13.90 | 5.43 | 27.51 |
| Fe | 2+ | 30.65 | 54.80 | S | 3+ | 34.83 | 23.33 | 27.29 |
| Fe | 2+ | 30.65 | 54.80 | Cu | 3+ | 36.83 | 20.29 | 28.33 |
| Fe | 2+ | 30.65 | 54.80 | Zn | 3+ | 39.72 | 17.96 | 27.76 |
| Fe | 2+ | 30.65 | 54.80 | Br | 3+ | 36.00 | 21.80 | 27.65 |
| Fe | 2+ | 30.65 | 54.80 | Zr | 4+ | 34.34 | 22.99 | 28.12 |
| Fe | 2+ | 30.65 | 54.80 | Ce | 4+ | 36.76 | 20.20 | 28.49 |
| Co | 1+ | 17.06 | 33.50 | Mg | 2+ | 15.03 | 7.65 | 27.88 |
| Co | 1+ | 17.06 | 33.50 | Cr | 2+ | 16.50 | 6.77 | 27.29 |
| Co | 1+ | 17.06 | 33.50 | Mn | 2+ | 15.64 | 7.43 | 27.48 |
| Go | 1+ | 17.06 | 33.50 | Mo | 2+ | 16.15 | 7.10 | 27.31 |
| Co | 1+ | 17.06 | 33.50 | Tc | 2+ | 15.26 | 7.28 | 28.02 |

(continued)

| Catalytic Donating Atom or Ion | | IE$_n$ | IE$_{n+1}$ | Catalytic Accepting Ion | | IE$_{m+1}$ | IE$_m$ | Energy Hole |
|---|---|---|---|---|---|---|---|---|
| Co | 1+ | 17.06 | 33.50 | Pb | 2+ | 15.03 | 7.42 | 28.11 |
| Co | 2+ | 33.50 | 51.30 | Cu | 3+ | 36.83 | 20.29 | 27.68 |
| Co | 2+ | 33.50 | 51.30 | Zn | 3+ | 39.72 | 17.96 | 27.11 |
| Co | 2+ | 33.50 | 51..30 | Br | 3+ | 36.00 | 21.80 | 27.00 |
| Co | 2+ | 33.50 | 51.30 | Zr | 4+ | 34.34 | 22.99 | 27.47 |
| Co | 2+ | 33.50 | 51.30 | Ag | 3+ | 34.83 | 21.49 | 28.48 |
| Co | 2+ | 33.50 | 51.30 | Ce | 4+ | 36.76 | 20.20 | 27.84 |
| Co | 2+ | 33.50 | 51.30 | Hf | 4+ | 33.33 | 23.30 | 28.17 |
| Co | 4+ | 79.50 | 102.00 | Nb | 6+ | 102.60 | 50.55 | 28.35 |
| Co | 5+ | 102.00 | 129.00 | Sc | 6+ | 111.10 | 91.66 | 28.24 |
| Ni | 1+ | 18.17 | 35.17 | Co | 2+ | 17.06 | 7.86 | 28.42 |
| Ni | 1+ | 18.17 | 35.17 | Ni | 2+ | 18.17 | 7.64 | 27.53 |
| Ni | 1+ | 18.17 | 35.17 | Rh | 2+ | 18.08 | 7.46 | 27.80 |
| Ni | 1+ | 18.17 | 35.17 | Cd | 2+ | 16.91 | 8.99 | 27.44 |
| Ni | 1+ | 18.17 | 35.17 | Sb | 2+ | 16.53 | 8.64 | 28.17 |
| Cu | 1+ | 20.29 | 36.83 | Ag | 2+ | 21.49 | 7.58 | 28.06 |
| Cu | 1+ | 20.29 | 36.83 | I | 2+ | 19.13 | 10.45 | 27.54 |
| Cu | 1+ | 20.29 | 36.83 | Cs | 2+ | 25.10 | 3.89 | 28.13 |
| Cu | 1+ | 20.29 | 36.83 | Au | 2+ | 20.50 | 9.23 | 27.40 |
| Cu | 1+ | 20.29 | 36.83 | Hg | 2+ | 18.76 | 10.44 | 27.93 |
| Zn | 1+ | 17.96 | 39.72 | P | 2+ | 19.73 | 10.49 | 27.48 |
| Zn | 1+ | 17.96 | 39.72 | I | 2+ | 19.13 | 10.45 | 28.10 |
| Zn | 1+ | 17.96 | 39.72 | La | 3+ | 19.18 | 11.06 | 27.45 |
| Zn | 1+ | 17.96 | 39.72 | Au | 2+ | 20.50 | 9.23 | 27.96 |
| Zn | 1+ | 17.96 | 39.72 | Hg | 2+ | 18.76 | 10.44 | 28.49 |
| Zn | 2+ | 39.72 | 59.40 | Ti | 4+ | 43.27 | 27.49 | 28.37 |
| Zn | 2+ | 39.72 | 59.40 | Sn | 4+ | 40.73 | 30.50 | 27.89 |
| Zn | 2+ | 39.72 | 59.40 | Bi | 4+ | 45.30 | 25.56 | 28.26 |
| Ga | 1+ | 20.51 | 34.71 | Cr | 2+ | 16.50 | 6.77 | 27.95 |
| Ga | 1+ | 20.51 | 30.71 | Mn | 2+ | 15.64 | 7.43 | 28.15 |
| Ga | 1+ | 20.51 | 30.71 | Fe | 2+ | 16.18 | 7.87 | 27.17 |
| Ga | 1+ | 20.51 | 30.71 | Ge | 2+ | 15.93 | 7.90 | 27.39 |
| Ga | 1+ | 20.51 | 30.71 | Mo | 2+ | 16.15 | 7.10 | 27.97 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Ga | 1+ | 20.51 | 30.71 | Ru | 2+ | 16.76 | 7.37 | 27.09 |
| Ga | 1+ | 20.51 | 30.71 | Bi | 2+ | 16.69 | 7.29 | 27.24 |
| Ga | 2+ | 30.71 | 64.00 | Rb | 3+ | 40.00 | 27.28 | 27.43 |
| Ga | 2+ | 30.71 | 64.00 | Eu | 4+ | 42.60 | 24.90 | 27.21 |
| Ga | 2+ | 30.71 | 64.00 | Tm | 4+ | 42.70 | 23.68 | 28.33 |
| Ge | 1+ | 15.93 | 34.22 | Mg | 2+ | 15.03 | 7.65 | 27.47 |
| Ge | 1+ | 15.93 | 34.22 | Mn | 2+ | 15.64 | 7.43 | 27.08 |
| Ge | 1+ | 15.93 | 34.22 | Tc | 2+ | 15.26 | 7.28 | 27.61 |
| Ge | 1+ | 15.93 | 34.22 | Sn | 2+ | 14.63 | 7.34 | 28.18 |
| Ge | 1+ | 15.93 | 34.22 | Pb | 2+ | 15.03 | 7.42 | 27.71 |
| Ge | 2+ | 34.22 | 45.71 | F | 2+ | 34.97 | 17.42 | 27.54 |
| Ge | 2+ | 34.22 | 45.71 | Na | 2+ | 47.29 | 5.14 | 27.51 |
| Ge | 2+ | 34.22 | 45.71 | Se | 3+ | 30.82 | 21.19 | 27.92 |
| Ge | 2+ | 34.22 | 45.71 | Pd | 3+ | 32.93 | 19.43 | 27.57 |
| Ge | 2+ | 34.22 | 45.71 | I | 3+ | 33.00 | 19.13 | 27.80 |
| Ge | 3+ | 45.71 | 93.50 | V | 5+ | 65.23 | 46.71 | 27.27 |
| Ge | 3+ | 45.71 | 93.50 | Se | 5+ | 68.30 | 42.94 | 27.97 |
| Ge | 3+ | 45.71 | 93.50 | Pb | 5+ | 68.80 | 42.32 | 28.09 |
| As | 1+ | 18.63 | 28.35 | Sc | 2+ | 12.80 | 6.54 | 27.64 |
| As | 1+ | 18.63 | 28.35 | Y | 2+ | 12.24 | 6.38 | 28.36 |
| As | 1+ | 18.63 | 28.35 | Zr | 2+ | 13.13 | 6.84 | 27.01 |
| As | 1+ | 18.63 | 28.35 | Lu | 2+ | 13.90 | 5.43 | 27.66 |
| As | 2+ | 28.35 | 50.13 | Co | 3+ | 33.50 | 17.06 | 27.92 |
| As | 2+ | 28.35 | 50.13 | Ga | 3+ | 30.71 | 20.51 | 27.26 |
| As | 2+ | 28.35 | 50.13 | Ge | 3+ | 34.22 | 15.93 | 28.33 |
| As | 2+ | 28.35 | 50.13 | Tl | 3+ | 29.83 | 20.43 | 28.22 |
| As | 3+ | 50.13 | 63.63 | Fe | 4+ | 54.80 | 30.65 | 28.31 |
| As | 4+ | 63.63 | 127.60 | Sb | 6+ | 108.00 | 56.00 | 27.23 |
| Se | 1+ | 21.19 | 30.82 | Al | 2+ | 18.83 | 5.99 | 27.20 |
| Se | 1+ | 21.19 | 30.82 | Si | 2+ | 16.34 | 8.15 | 27.51 |
| Se | 1+ | 21.19 | 30.82 | Fe | 2+ | 16.18 | 7.87 | 27.96 |
| Se | 1+ | 21.19 | 30.82 | Co | 2+ | 17.06 | 7.86 | 27.09 |
| Se | 1+ | 21.19 | 30.82 | Ge | 2+ | 15.93 | 7.90 | 28.18 |

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Se | 1+ | 21.19 | 30.82 | Ru | 2+ | 16.76 | 7.37 | 27.88 |
| Se | 1+ | 21.19 | 30.82 | In | 2+ | 18.87 | 5.79 | 27.36 |
| Se | 1+ | 21.19 | 30.82 | Bi | 2+ | 16.69 | 7.29 | 28.03 |
| Se | 2+ | 30.82 | 42.94 | Te | 3+ | 27.96 | 18.60 | 27.20 |
| Se | 3+ | 42.94 | 68.30 | Br | 4+ | 47.30 | 36.00 | 27.94 |
| Rb | 1+ | 27.28 | 40.00 | Nb | 3+ | 25.04 | 14.32 | 27.92 |
| Sr | 1+ | 11.03 | 43.60 | Be | 2+ | 18.21 | 9.32 | 27.10 |
| Sr | 1+ | 11.03 | 43.60 | Zn | 2+ | 17.96 | 9.39 | 27.27 |
| Sr | 1+ | 11.03 | 43.60 | Ga | 2+ | 20.51 1 | 6.00 | 28.12 |
| Sr | 1+ | 11.03 | 43.60 | Te | 2+ | 18.60 | 9.01 | 27.02 |
| Sr | 1+ | 11.03 | 43.60 | Pt | 2+ | 18.56 | 9.00 | 27.07 |
| Sr | 1+ | 11.03 | 43.60 | Tl | 2+ | 20.43 | 6.11 | 28.09 |
| Sr | 2+ | 43.60 | 57.00 | C | 3+ | 47.89 | 24.38 | 28.33 |
| Sr | 2+ | 43.60 | 57.00 | Mo | 4+ | 46.40 | 27.16 | 27.04 |
| Sr | 3+ | 57.00 | 71.60 | Ar | 4+ | 59.81 | 40.74 | 28.05 |
| Sr | 3+ | 57.00 | 71.60 | Sr | 4+ | 57.00 | 43.60 | 28.00 |
| Sr | 3+ | 57.00 | 71.60 | Sb | 5+ | 56.00 | 44.20 | 28.40 |
| Sr | 3+ | 57.00 | 71.60 | Bi | 5+ | 56.00 | 45.30 | 27.30 |
| Sr | 4+ | 71.60 | 90.80 | Ar | 5+ | 75.02 | 59.81 | 27.57 |
| Sr | 4+ | 71.60 | 90.80 | Cu | 5+ | 79.90 | 55.20 | 27.30 |
| Y | 2+ | 20.52 | 61.80 | Sr | 3+ | 43.60 | 11.03 | 27.69 |
| Y | 2+ | 20.52 | 61.80 | Cd | 3+ | 37.48 | 16.91 | 27.93 |
| Y | 3+ | 61.80 | 77.00 | Se | 5+ | 68.30 | 42.94 | 27.56 |
| Y | 3+ | 61.80 | 77.00 | Pb | 5+ | 68.80 | 42.32 | 27.68 |
| Y | 4+ | 77.00 | 93.00 | Ti | 5+ | 99.22 | 43.27 | 27.51 |
| Y | 4+ | 77.00 | 93.00 | Zn | 5+ | 82.60 | 59.40 | 28.00 |
| Y | 5+ | 93.00 | 116.00 | Co | 6+ | 102.00 | 79.50 | 27.50 |
| Y | 6+ | 116.00 | 129.00 | K | 7+ | 117.56 | 100.00 | 27.44 |
| Zr | 2+ | 22.99 | 34.34 | P | 2+ | 19.73 | 10.49 | 27.12' |
| Zr | 2+ | 22.99 | 34.34 | Ag | 2+ | 21.49 | 7.58 | 28.26 |
| Zr | 2+ | 22.99 | 34.34 | I | 2+ | 19.13 | 10.45 | 27.75 |
| Zr | 2+ | 22.99 | 34.34 | Cs | 2+ | 25.10 | 3.89 | 28.34 |
| Zr | 2+ | 22.99 | 34.34 | La | 3+ | 19.18 | 11.06 | 27.09 |

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Zr | 2+ | 22.99 | 34.34 | Au | 2+ | 20.50 | 9.23 | 27.61 |
| Zr | 2+ | 22.99 | 34.34 | Hg | 2+ | 18.76 | 10.44 | 28.14 |
| Nb | 2+ | 25.04 | 38.30 | C | 2+ | 24.38 | 11.26 | 27.70 |
| Nb | 2+ | 25.04 | 38.30 | K | 2+ | 31.63 | 4.34 | 27.37 |
| Nb | 2+ | 25.04 | 38.30 | Zr | 3+ | 22.99 | 13.13 | 27.22 |
| Nb | 2+ | 25.04 | 38.30 | Eu | 3+ | 24.90 | 11.24 | 27.20 |
| Nb | 2+ | 25.04 | 38.30 | Tm | 3+ | 23.68 | 12.05 | 27.61 |
| Nb | 2+ | 25.04 | 38.30 | Lu | 3+ | 20.96 | 13.90 | 28.48 |
| Nb | 3+ | 38.30 | 50.55 | Kr | 3+ | 36.95 | 24.36 | 27.54 |
| Nb | 3+ | 38.30 | 50.55 | Pr | 4+ | 38.98 | 21.62 | 28.25 |
| Nb | 3+ | 38.30 | 50.55 | Tb | 4+ | 39.80 | 21.91 | 27.14 |
| Nb | 4+ | 50.55 | 102.60 | N | 4+ | 77.47 | 47.45 | 28.23 |
| Mo | 1+ | 16.15 | 27.16 | Ba | 2+ | 10.00 | 5.21 | 28.09 |
| Mo | 1+ | 16.15 | 27.16 | Pr | 2+ | 10.55 | 5.42 | 27.34 |
| Mo | 1+ | 16.15 | 27.16 | Nd | 2+ | 10.73 | 5.49 | 27.09 |
| Mo | 1+ | 16.15 | 27.16 | Ra | 2+ | 10.15 | 5.28 | 27.88 |
| Mo | 2+ | 27.16 | 46.40 | Ru | 3+ | 28.47 | 16.76 | 28.33 |
| Mo | 2+ | 27.16 | 46.40 | Sn | 3+ | 30.50 | 14.63 | 28.43 |
| Mo | 3+ | 46.40 | 61.20 | Cr | 4+ | 49.10 | 30.96 | 27.54 |
| Mo | 3+ | 46.40 | 61.20 | Ge | 4+ | 45.71 | 34.22 | 27.67 |
| Mo | 4+ | 61.20 | 68.00 | Bi | 5+ | 56.00 | 45.30 | 27.90 |
| Tc | 1+ | 15.26 | 29.54 | Sr | 2+ | 11.03 | 5.70 | 28.08 |
| Tc | 1+ | 15.26 | 29.54 | La | 2+ | 11.06 | 5.58 | 28.16 |
| Tc | 1+ | 15.26 | 29.54 | Ce | 2+ | 10.85 | 5.47 | 28.48 |
| Tc | 1+ | 15.26 | 29.54 | Pm | 2+ | 10.90 | 5.55 | 28.35 |
| Tc | 1+ | 15.26 | 29.54 | Sm | 2+ | 11.07 | 5.63 | 28.10 |
| Tc | 1+ | 15.26 | 29.54 | Eu | 2+ | 11.24 | 5.67 | 27.89 |
| Tc | 1+ | 15.26 | 29.54 | Tb | 2+ | 11.52 | 5.85 | 27.43 |
| Tc | 1+ | 15.26 | 29.54 | Dy | 2+ | 11.67 | 5.93 | 27.20 |
| Ru | 1 + | 16.76 | 28.47 | Ca | 2+ | 11.87 | 6.11 | 27.25 |
| Ru | 1+ | 16.76 | 28.47 | Eu | 2+ | 11.24 | 5.67 | 28.32 |
| Ru | 1+ | 16.76 | 28.47 | Tb | 2+ | 11.52 | 5.85 | 27.86 |
| Ru | 1+ | 16.76 | 28.47 | Dy | 2+ | 11.67 | 5.93 | 27.63 |

| Catalytic Donating Atom or Ion | | IE$_n$ | IE$_{n+1}$ | Catalytic Accepting Ion | | IE$_{m+1}$ | IE$_m$ | Energy Hole |
|---|---|---|---|---|---|---|---|---|
| Ru | 1+ | 16.76 | 28.47 | Ho | 2+ | 11.80 | 6.02 | 27.41 |
| Ru | 1+ | 16.76 | 28.47 | Er | 2+ | 11.93 | 6.10 | 27.20 |
| Rh | 1+ | 18:08 | 31.06 | V | 2+ | 14.65 | 6.74 | 27.75 |
| Rh | 1+ | 18.08 | 31.06 | Nb | 2+ | 14.32 | 6.88 | 27.94 |
| Rh | 1+ | 18.08 | 31.06 | Sn | 2+ | 14.63 | 7.34 | 27.16 |
| Rh | 1+ | 18.08 | 31.06 | Hf | 2+ | 14.90 | 6.60 | 27.64 |
| Pd | 1+ | 19.43 | 32.93 | Al | 2+ | 18.83 | 5.99 | 27.55 |
| Pd | 1+ | 19.43 | 32.93 | Si | 2+ | 16.34 | 8.15 | 27.86 |
| Pd | 1+ | 19.43 | 32.93 | Fe | 2+ | 16.18 | 7.87 | 28.31 |
| Pd | 1+ | 19.43 | 32.93 | Co | 2+ | 17.06 | 7.86 | 27.44 |
| Pd | 1+ | 19.43 | 32.93 | Ru | 2+ | 16.76 | 7.37 | 28.23 |
| Pd | 1+ | 19.43 | 32.93 | In | 2+ | 18.87 | 5.79 | 27.71 |
| Pd | 1+ | 19.43 | 32.93 | Sb | 2+ | 16.53 | 8.64 | 27.19 |
| Pd | 1+ | 19.43 | 32.93 | Bi | 2+ | 16.69 | 7.29 | 28.38 |
| Ag | 1+ | 21.49 | 34.83 | Cu | 2+ | 20.29 | 7.73 | 28.30 |
| Ag | 1+ | 21.49 | 34.83 | As | 2+ | 18.63 | 9.81 | 27.88 |
| Ag | 1+ | 21.49 | 34.83 | Ag | 2+ | 21.49 | 7.58 | 27.25 |
| Ag | 1+ | 21.49 | 34.83 | Cs | 2+ | 25.10 | 3.89 | 27.33 |
| Ag | 1+ | 21.49 | 34.83 | Hg | 2+ | 18.76 | 10.44 | 27.13 |
| Cd | 1+ | 16.91 | 37.48 | Zn | 2+ | 17.96 | 9.39 | 27.03 |
| Cd | 1+ | 16.91 | 37.48 | Ga | 2+ | 20.51 | 6.00 | 27.88 |
| Cd | 1+ | 16.91 | 37.48 | Cd | 2+ | 16.91 | 8.99 | 28.49 |
| Cd | 1+ | 16.91 | 37.48 | Tl | 2+ | 20.43 | 6.11 | 27.85 |
| In | 1+ | 18.87 | 28.03 | Sc | 2+ | 12.80 | 6.54 | 27.56 |
| In | 1+ | 18.87 | 28.03 | Y | 2+ | 12.24 | 6.38 | 28.28 |
| In | 1+ | 18.87 | 28.03 | Yb | 2+ | 12.18 | 6.25 | 28.47 |
| In | 1+ | 18.87 | 28.03 | Lu | 2+ | 13.90 | 5.43 | 27.57 |
| In | 2+ | 28.03 | 54.00 | Sr | 3+ | 43.60 | 11.03 | 27.40 |
| In | 2+ | 28.03 | 54.00 | Cd | 3+ | 37.48 | 16.91 | 27.64 |
| Sn | 1+ | 14.63 | 30.50 | Ca | 2+ | 11.87 | 6.11 | 27.15 |
| Sn | 1+ | 14.63 | 30.50 | Sr | 2+ | 11.03 | 5.70 | 28.41 |
| Sn | 1+ | 14.63 | 30.50 | La | 2+ | 11.06 | 5.58 | 28.50 |
| Sn | 1+ | 14.63 | 30.50 | Sm | 2+ | 11.07 | 5.63 | 28.43 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Sn | 1+ | 14.63 | 30.50 | Eu | 2+ | 11.24 | 5.67 | 28.23 |
| Sn | 1+ | 14.63 | 30.50 | Tb | 2+ | 11.52 | 5.85 | 27.76 |
| Sn | 1+ | 14.63 | 30.50 | Dy | 2+ | 11.67 | 5.93 | 27.54 |
| Sn | 1+ | 14.63 | 30.50 | Ho | 2+ | 11.80 | 6.02 | 27.31 |
| Sn | 1+ | 14.63 | 30.50 | Er | 2+ | 11.93 | 6.10 | 27.10 |
| Sn | 2+ | 30.50 | 40.73 | N | 2+ | 29.60 | 14.53 | 27.10 |
| Sn | 2+ | 30.50 | 40.73 | Ar | 2+ | 27.63 | 15.76 | 27.85 |
| Sn | 2+ | 30.50 | 40.73 | V | 3+ | 29.31 | 14.65 | 27.28 |
| Sn | 2+ | 30.50 | 40.73 | Mo | 3+ | 27.16 | 16.15 | 27.93 |
| Sn | 3+ | 40.73 | 72.28 | Mn | 4+ | 51.20 | 33.67 | 28.15 |
| Sn | 3+ | 40.73 | 72.28 | Fe | 4+ | 54.80 | 30.65 | 27.56 |
| Sn | 3+ | 40.73 | 72.28 | Co | 4+ | 51.30 | 33.50 | 28.21 |
| Sb | 2+ | 25.30 | 44.20 | Ti | 3+ | 27.49 | 13.58 | 28.43 |
| Sb | 2+ | 25.30 | 44.20 | Sb | 3+ | 25.30 | 16.53 | 27.67 |
| Sb | 2+ | 25.30 | 44.20 | Bi | 3+ | 25.56 | 16.69 | 27.25 |
| Sb | 3+ | 44.20 | 56.00 | C | 3+ | 47.89 | 24.38 | 27.93 |
| Te | 1+ | 18.60 | 27.96 | Sc | 2+ | 12.80 | 6.54 | 27.22 |
| Te | 1+ | 18.60 | 27.96 | Y | 2+ | 12.24 | 6.38 | 27.94 |
| Te | 1+ | 18.60 | 27.96 | Gd | 2+ | 12.09 | 6.14 | 28.33 |
| Te | 1+ | 18.60 | 27.96 | Tm | 2+ | 12.05 | 6.18 | 28.33 |
| Te | 1+ | 18.60 | 27.96 | Yb | 2+ | 12.18 | 6.25 | 28.13 |
| Te | 1+ | 18.60 | 27.96 | Lu | 2+ | 13.90 | 5.43 | 27.23 |
| Te | 2+ | 27.96 | 37.41 | Sc | 3+ | 24.76 | 12.80 | 27.81 |
| Te | 2+ | 27.96 | 37.41 | Kr | 2+ | 24.36 | 14.00 | 27.01 |
| Te | 2+ | 27.96 | 37.41 | Yb | 3+ | 25.03 | 12.18 | 28.16 |
| Te | 2+ | 27.96 | 37.41 | Hf | 3+ | 23.30 | 14.90 | 27.17 |
| Te | 3+ | 37.41 | 58.75 | Ar | 3+ | 40.74 | 27.63 | 27.79 |
| Te | 3+ | 37.41 | 58.75 | La | 4+ | 49.95 | 19.18 | 27.03 |
| Te | 3+ | 37.41 | 58.75 | Yb | 4+ | 43.70 | 25.03 | 27.43 |
| Te | 4+ | 58.75 | 70.70 | Bi | 5+ | 56.00 | 45.30 | 28.15 |
| La | 2+ | 19.18 | 49.95 | Ti | 3+ | 27.49 | 13.58 | 28.06 |
| La | 2+ | 19.18 | 49.95 | Sb | 3+ | 25.30 | 16.53 | 27.30 |
| Ce | 2+ | 20.20 | 36.76 | Ag | 2+ | 21.49 | 7.58 | 27.89 |

(continued)

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Ce | 2+ | 20.20 | 36.76 | I | 2+ | 19.13 | 10.45 | 27.37 |
| Ce | 2+ | 20.20 | 36.76 | Cs | 2+ | 25.10 | 3.89 | 27.96 |
| Ce | 2+ | 20.20 | 36.76 | Au | 2+ | 20.50 | 9.23 | 27.23 |
| Ce | 2+ | 20.20 | 36.76 | Hg | 2+ | 18.76 | 10.44 | 27.76 |
| Pr | 2+ | 21.62 | 38.98 | B | 2+ | 25.15 | 8.30 | 27.15 |
| Pr | 2+ | 21.62 | 38.98 | Y | 3+ | 20.52 | 12.24 | 27.84 |
| Pr | 2+ | 21.62 | 38.98 | Xe | 2+ | 21.21 | 12.13 | 27.26 |
| Pr | 2+ | 21.62 | 38.98 | Pr | 3+ | 21.62 | 10.55 | 28.43 |
| Pr | 2+ | 21.62 | 38.98 | Nd | 3+ | 22.10 | 10.73 | 27.77 |
| Pr | 2+ | 21.62 | 38.98 | Pm | 3+ | 22.30 | 10.90 | 27.40 |
| Pr | 2+ | 21.62 | 38.98 | Gd | 3+ | 20.63 | 12.09 | 27.88 |
| Pr | 2+ | 21.62 | 38.98 | Tb | 3+ | 21.91 | 11.52 | 27.17 |
| Nd | 2+ | 22.10 | 40.41 | Sm | 3+ | 23.40 | 11.07 | 28.04 |
| Nd | 2+ | 22.10 | 40.41 | Dy | 3+ | 22.80 | 11.67 | 28.04 |
| Nd | 2+ | 22.10 | 40.41 | Ho | 3+ | 22.84 | 11.80 | 27.87 |
| Nd | 2+ | 22.10 | 40.41 | Er | 3+ | 22.74 | 11.93 | 27.84 |
| Nd | 2+ | 22.10 | 40.41 | Lu | 3+ | 20.96 | 13.90 | 27.65 |
| Pm | 2+ | 22.30 | 41.10 | C | 2+ | 24.38 | 11.26 | 27.76 |
| Pm | 2+ | 22.30 | 41.10 | K | 2+ | 31.63 | 4.34 | 27.43 |
| Pm | 2+ | 22.30 | 41.10 | Zr | 3+ | 22.99 | 13.13 | 27.28 |
| Pm | 2+ | 22.30 | 41.10 | Eu | 3+ | 24.90 | 11.24 | 27.26 |
| P m | 2+ | 22.30 | 41.10 | Tm | 3+ | 23.68 | 12.05 | 27.67 |
| Sm | 2+ | 23.40 | 41.40 | Cl | 2+ | 23.81 | 12.97 | 28.02 |
| Sm | 2+ | 23.40 | 41.40 | Sc | 3+ | 24.76 | 12.80 | 27.24 |
| Sm | 2+ | 23.40 | 41.40 | Yb | 3+ | 25.03 | 12.18 | 27.59 |
| Eu | 2+ | 24.90 | 42.60 | Nb | 3+ | 25.04 | 14.32 | 28.14 |
| Gd | 2+ | 20.63 | 44:00 | Cl | 2+ | 23.81 | 12.97 | 27.85 |
| Gd | 2+ | 20.63 | 44.00 | Sc | 3+ | 24.76 | 12.80 | 27.07 |
| Gd | 2+ | 20.63 | 44.00 | Eu | 3+ | 24.90 | 11.24 | 28.49 |
| Gd | 2+ | 20.63 | 44.00 | Yb | 3+ | 25.03 | 12.18 | 27.42 |
| Tb | 2+ | 21.91 | 39.80 | B | 2+ | 25.15 | 8.30 | 28.26 |
| Tb | 2+ | 21.91 | 39.80 | S | 2+ | 23.33 | 10.36 | 28.02 |
| Tb | 2+ | 21.91 | 39.80 | Br | 2+ | 21.80 | 11.81 | 28.10 |

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Tb | 2+ | 21.91 | 39.80 | Xe | 2+ | 21.21 | 12.13 | 28.37 |
| Tb | 2+ | 21.91 | 39.80 | Sm | 3+ | 23.40 | 11.07 | 27.24 |
| Tb | 2+ | 21.91 | 39.80 | Tb | 3+ | 21.91 | 11.52 | 28.28 |
| Tb | 2+ | 21.91 | 39.80 | Dy | 3+ | 22.80 | 11.67 | 27.24 |
| Tb | 2+ | 21.91 | 39.80 | Ho | 3+ | 22.84 | 11.80 | 27.07 |
| Tb | 2+ | 21.91 | 39.80 | Er | 3+ | 22.74 | 11.93 | 27.04 |
| Dy | 2+ | 22.80 | 41.50 | Cl | 2+ | 23.81 | 12.97 | 27.52 |
| Dy | 2+ | 22.80 | 41.50 | K | 2+ | 31.63 | 4.34 | 28.33 |
| Dy | 2+ | 22.80 | 41.50 | Zr | 3+ | 22.99 | 13.13 | 28.18 |
| Dy | 2+ | 22.80 | 41.50 | Eu | 3+ | 24.90 | 11.24 | 28.16 |
| Dy | 2+ | 22.80 | 41.50 | Yb | 3+ | 25.03 | 12.18 | 27.09 |
| Ho | 2+ | 22.84 | 42.50 | Sc | 3+ | 24.76 | 12.80 | 27.78 |
| Ho | 2+ | 22.84 | 42.50 | Yb | 3+ | 25.03 | 12.18 | 28.13 |
| Ho | 2+ | 22.84 | 42.50 | Hf | 3+ | 23.30 | 14.90 | 27.14 |
| Er | 2+ | 22.74 | 42.60 | Sc | 3+ | 24.76 | 12.80 | 27.78 |
| Er | 2+ | 22.74 | 42.60 | Yb | 3+ | 25.03 | 12.18 | 28.13 |
| Er | 2+ | 22.74 | 42.60 | Hf | 3+ | 23.30 | 14.90 | 27.14 |
| Tm | 2+ | 23.68 | 42.70 | Kr | 2+ | 24.36 | 14.00 | 28.02 |
| Tm | 2+ | 23.68 | 42.70 | Nb | 3+ | 25.04 | 14.32 | 27.02 |
| Tm | 2+ | 23.68 | 42.70 | Hf | 3+ | 23.30 | 14.90 | 28.18 |
| Yb | 2+ | 25.03 | 43.70 | Ti | 3+ | 27.49 | 13.58 | 27.66 |
| Lu | 2+ | 20.96 | 45.19 | Kr | 2+ | 24.36 | 14.00 | 27.79 |
| Lu | 2+ | 20.96 | 45.19 | Hf | 3+ | 23.30 | 14.90 | 27.95 |
| Hf | 2+ | 23.30 | 33.33 | As | 2+ | 18.63 | 9.81 | 28.19 |
| Hf | 2+ | 23.30 | 33.33 | Ag | 2+ | 21.49 | 7.58 | 27.56 |
| Hf | 2+ | 23.30 | 33.33 | Cs | 2+ | 25.10 | 3.89 | 27.64 |
| Hf | 2+ | 23.30 | 33.33 | Hg | 2+ | 18.76 | 10.44 | 27.44 |
| Hg | 1+ | 18.76 | 34.20 | Al | 2+ | 18.83 | 5.99 | 28.14 |
| Hg | 1+ | 18.76 | 34.20 | Si | 2+ | 16.34 | 8.15 | 28.46 |
| Hg | 1+ | 18.76 | 34.20 | Co | 2+ | 17.06 | 7.86 | 28.04 |
| Hg | 1+ | 18.76 | 34.20 | Ni | 2+ | 18.17 | 7.64 | 27.15 |
| Hg | 1+ | 18.76 | 34.20 | Rh | 2+ | 18.08 | 7.46 | 27.42 |
| Hg | 1+ | 18.76 | 34.20 | Cd | 2+ | 16.91 | 8.99 | 27.06 |

| Catalytic Donating Atom or Ion | | $IE_n$ | $IE_{n+1}$ | Catalytic Accepting Ion | | $IE_{m+1}$ | $IE_m$ | Energy Hole |
|---|---|---|---|---|---|---|---|---|
| Hg | 1+ | 18.76 | 34.20 | In | 2+ | 18.87 | 5.79 | 28.30 |
| Hg | 1+ | 18.76 | 34.20 | Sb | 2+ | 16.53 | 8.64 | 27.78 |
| Tl | 1+ | 20.43 | 29.83 | Mg | 2+ | 15.03 | 7.65 | 27.58 |
| Tl | 1+ | 20.43 | 29.83 | Mn | 2+ | 15.64 | 7.43 | 27.18 |
| Tl | 1+ | 20.43 | 29.83 | Mo | 2+ | 16.15 | 7.10 | 27.01 |
| Tl | 1+ | 20.43 | 29.83 | Tc | 2+ | 15.26 | 7.28 | 27.72 |
| Tl | 1+ | 20.43 | 29.83 | Sn | 2+ | 14.63 | 7.34 | 28.28 |
| Tl | 1+ | 20.43 | 29.83 | Pb | 2+ | 15.03 | 7.42 | 27.81 |
| Pb | 1+ | 15.03 | 31.94 | Sc | 2+ | 12.80 | 6.54 | 27.63 |
| Pb | 1+ | 15.03 | 31.94 | Y | 2+ | 12.24 | 6.38 | 28.35 |
| Pb | 1+ | 15.03 | 31.94 | Lu | 2+ | 13.90 | 5.43 | 27.64 |
| Pb | 2+ | 31.94 | 42.32 | Fe | 3+ | 30.65 | 16.18 | 27.43 |
| Pb | 2+ | 31.94 | 42.32 | As | 3+ | 28.35 | 18.63 | 27.27 |
| Pb | 2+ | 31.94 | 42.32 | In | 3+ | 28.03 | 18.87 | 27.36 |
| Pb | 2+ | 31.94 | 42.32 | Te | 3+ | 27.96 | 18.60 | 27.70 |
| Pb | 2+ | 31.94 | 42.32 | Pb | 3+ | 31.94 | 15.03 | 27.29 |
| Bi | 1+ | 16.69 | 25.56 | Ba | 2+ | 10.00 | 5.21 | 27.03 |
| Bi | 2+ | 25.56 | 45.30 | Ar | 2+ | 27.63 | 15.76 | 27.47 |
| Bi | 2+ | 25.56 | 45.30 | Mo | 3+ | 27.16 | 16.15 | 27.55 |
| Bi | 3+ | 45.30 | 56.00 | Se | 4+ | 42.94 | 30.82 | 27.54 |
| Bi | 3+ | 45.30 | 56.00 | Mo | 4+ | 46.40 | 27.16 | 27.74 |
| Bi | 3+ | 45.30 | 56.00 | Pb | 4+ | 42.32 | 31.94 | 27.04 |
| Bi | 4+ | 56.00 | 88.30 | P | 5+ | 65.02 | 51.37 | 27.91 |
| Bi | 4+ | 56.00 | 88.30 | Zr | 5+ | 81.50 | 34.34 | 28.46 |

Three Electron Transfer(Two Species)

In another embodiment, a catalytic system that provides an energy hole hinges on the transfer of three electrons from an ion to another ion such that the sum of the electron affinity and two ionization energies of the first ion minus the sum of three ionization energies of the second ion is is approximately 27.21 eV. A catalytic system that hinges on the transfer of three electrons from an ion to a second ion involves $Li^-$ and $Cr^{3+}$. For example, the electron affinity, first ionization energy, and second ionization energy of lithium are 0.62 eV, 5.392 eV, and 75.638 eV, respectively. And, the third, second, and first ionization energies of $Cr^{3+}$ are 30.96 eV, 16.50 eV, and 6.766 eV, respectively. The energy hole resulting from a three electron transfer is appropriate for resonant absorption. The combination of $Li^-$ to $Li^{2+}$ and $Cr^{3+}$ to Cr, then, has a net energy change of 27.42 eV.

$$27.42 \text{ eV} + Li^- + Cr^{3+} + H\left[\frac{a_0}{p}\right] \rightarrow Li^{2+} + Cr + H\left[\frac{a_0}{(p+1)}\right] + [(p+1)^2 - p^2] \times 13.6 \text{ eV} \tag{68}$$

$$Li^{2+} + Cr \rightarrow Li^- + Cr^{3+} + 27.42 \text{ eV} \tag{69}$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \tag{70}$$

Three Electron Transfer(Two Species)

In another embodiment, a catalytic system that provides an energy hole hinges on the transfer of three electrons from an atom, ion, or molecule to another atom, ion, or molecule such that the sum of three consecutive ionization energies of the electron donating species minus the sum of three consecutive ionization energies of the electron accepting species is approximately 27.21 eV. A catalytic system that hinges on the transfer of three electrons from an atom to an ion involves Ag and $Ce^{3+}$ For example, the first, second, and third ionization energies of silver are 7.58 eV, 21.49 eV, and 34.83 eV, respectively. And, the third; second, and first ionization energies of $Ce^{3+}$ are 20.20 eV, 10.85 eV, and 5.47 eV, respectively. The energy hole resulting from a three electron transfer is appropriate for resonant absorption. The combination of Ag to $Ag^{3+}$ and $Ce^{3+}$ to Ce, then, has a net energy change of 27.38 eV.

$$27.38 \text{ eV} + Ag + Ce^{3+} + H\left[\frac{a_0}{p}\right] \rightarrow Ag^{3+} + Ce + H\left[\frac{a_0}{(p+1)}\right] + [(p+1)^2 - p^2] \times 13.6 \text{ eV} \tag{71}$$

$$Ag^{3+} + Ce \rightarrow Ag + Ce^{3+} + 27.38 \text{ eV} \tag{72}$$

And, the overall reaction is

$$H\left[\frac{a_0}{p}\right] \rightarrow H\left[\frac{a_0}{(p+1)}\right] + [(p+1)^2 - p^2] \times 13.6 \text{ eV} \tag{73}$$

Catalytic systems that hinge on the transfer of three electrons from an atom, or ion to an ion capable of producing energy holes for shrinking hydrogen atoms are given in the following table. The sum of three consecutive ionization energies, $IE_n + IE_{n+1} + IE_{n+2}$, of the electron donating species, DS, minus three consecutive ionization energies, $IE_{m+2} + EF_{m+1} + IE_m$, of the electron accepting species, AS, equals approximately 27.21 eV.

| DS | | $IE_n$ | $IE_{n+1}$ | $IE_{n+2}$ | AS | | $IE_{m+2}$ | $IE_{m+1}$ | $IE_m$ | Energy Hole |
|---|---|---|---|---|---|---|---|---|---|---|
| B | 0+ | 8.30 | 25.15 | 37.93 | Sc | 3+ | 24.76 | 12.80 | 6.54 | 27.28 |
| B | 0+ | 8.30 | 25.15 | 37.93 | Zr | 3+ | 22.99 | 13.13 | 6.84 | 28.42 |
| B | 0+ | 8.30 | 25.15 | 37.93 | Yb | 3+ | 25.03 | 12.18 | 6.25 | 27.92 |
| C | 0+ | 11.26 | 24.38 | 47.89 | Te | 3+ | 27.96 | 18.60 | 9.01 | 27.96 |
| C | 0+ | 11.26 | 24.38 | 47.89 | Tl | 3+ | 29.83 | 20.43 | 6.11 | 27.16 |
| N | 0+ | 14.53 | 29.60 | 47.45 | Ag | 3+ | 34.83 | 21.49 | 7.58 | 27.69 |
| N | 0+ | 14.53 | 29.60 | 47.45 | Cd | 3+ | 37.48 | 16.91 | 8.99 | 28.20 |
| N | 0+ | 14.53 | 29.60 | 47.45 | Hg | 3+ | 34.20 | 18.76 | 10.44 | 28.19 |
| N | 1+ | 29.60 | 47.45 | 77.47 | Bi | 5+ | 56.00 | 45.30 | 25.56 | 27.66 |
| O | 0+ | 13.62 | 35.12 | 54.93 | Cl | 3+ | 39.61 | 23.81 | 12.97 | 27.28 |
| O | 0+ | 13.62 | 35.12 | 54.93 | Kr | 3+ | 36.95 | 24.36 | 14.00 | 28.36 |
| O | 0+ | 13.62 | 35.12 | 54.93 | Sm | 4+ | 41.40 | 23.40 | 11.07 | 27.80 |
| O | 0+ | 13.62 | 35.12 | 54.93 | Dy | 4+ | 41.50 | 22.80 | 11.67 | 27.70 |
| F | 0+ | 17.42 | 34.97 | 62.71 | Bi | 4+ | 45.30 | 25.56 | 16.69 | 27.55 |
| F | 1+ | 34.97 | 62.71 | 87.14 | Mn | 5+ | 72.40 | 51.20 | 33.67 | 27.55 |
| e | 1+ | 40.96 | 63.45 | 97.11 | Ge | 5+ | 93.50 | 45.71 | 34.22 | 28.09 |
| Na | 0+ | 5.14 | 47.29 | 71.64 | Cr | 4+ | 49.10 | 30.96 | 16.50 | 27.51 |
| Na | 0+ | 5.14 | 47.29 | 71.64 | Ge | 4+ | 45.71 | 34.22 | 15.93 | 28.20 |
| Al | 1+ | 18.83 | 28.45 | 119.99 | Zr | 5+ | 81.50 | 34.34 | 22.99 | 28.43 |
| Si | 1+ | 16.34 | 33.49 | 45.14 | Zn | 3+ | 39.72 | 17.96 | 9.39 | 27.90 |
| Si | 1+ | 16.34 | 33.49 | 45.14 | Ce | 4+ | 36.76 | 20.20 | 10.85 | 27.17 |
| Si | 3+ | 45.14 | 166.77 | 205.05 | Be | 4+ | 217.71 | 153.89 | 18.21 | 27.14 |
| P | 1+ | 19.73 | 30.18 | 51.37 | Nd | 4+ | 40.41 | 22.10 | 10.73 | 28.03 |
| P | 1+ | 19.73 | 30.18 | 51.37 | Tb | 4+ | 39.80 | 21.91 | 11.52 | 28.04 |
| P | 3+ | 51.37 | 65.02 | 220.43 | Na | 5+ | 138.39 | 98.91 | 71.64 | 27.88 |
| S | 0+ | 10.36 | 23.33 | 34.83 | Sm | 3+ | 23.40 | 11.07 | 5.63 | 28.42 |
| S | 0+ | 10.36 | 23.33 | 34.83 | Dy | 3+ | 22.80 | 11.67 | 5.93 | 28.12 |
| S | 0+ | 10.36 | 23.33. | 34.83 | Ho | 3+ | 22.84 | 11.80 | 6.02 | 27.86 |
| S | 0+ | 10.36 | 23.33 | 34.83 | Er | 3+ | 22.74 | 11.93 | 6.10 | 27.75 |
| S | 0+ | 10.36 | 23:33 | 34.83 | Lu | 3+ | 20.96 | 13.90 | 5.43 | 28.23 |
| S | 1+ | 23.33 | 34.83 | 47.30 | Nb | 4+ | 38.30 | 25.04 | 14.32 | 27.80 |
| S | 1+ | 23.33 | 34.83 | 47.30 | Ho | 4+ | 42.50 | 22.84 | 11.80 | 28.32 |
| S | 1+ | 23.33 | 34.83 | 47.30 | Er | 4+ | 42.60 | 22.74 | 11.93 | 28.19 |
| S | 1+ | 23.33 | 34.83 | 47.30 | Tm | 4+ | 42.70 | 23.68 | 12.05 | 27.03 |
| S | 2+ | 34.83 | 47.30 | 72.68 | Bi | 5+ | 56.00 | 45.30 | 25.56 | 27.95 |
| Cl | 0+ | 12.97 | 23.81 | 39.61 | Ti | 3+ | 27.49 | 13.58 | 6.82 | 28.50 |
| Cl | 1+ | 23.81 | 39.61 | 53.46 | Mo | 4+ | 46.40 | 27.16 | 16.15 | 27.17 |
| Cl | 1+ | 23.81 | 39.61 | 53.46 | Pb | 4+ | 42.32 | 31.94 | 15.03 | 27.59 |
| Ar | 0+ | 15.76 | 27.63 | 40.74 | Mn | 3+ | 33.67 | 15.64 | 7.43 | 27.39 |
| Ar | 0+ | 15.76 | 27.63 | 40.74 | As | 3+ | 28.35 | 18.63 | 9.81 | 27.33 |
| Ar | 0+ | 15.76 | 27.63 | 40.74 | Rh | 3+ | 31.06 | 18.08 | 7.46 | 27.53 |
| Ar | 0+ | 15.76 | 27.63 | 40.74 | Tl | 3+ | 29.83 | 20.43 | 6.11 | 27.76 |
| Ar | 1+ | 27.63 | 40.74 | 59.81 | Mn | 4+ | 51.20 | 33.67 | 15.64 | 27.67 |
| Ar | 1+ | 27.63 | 40.74 | 59.81 | In | 4+ | 54.00 | 28.03 | 18.87 | 27.28 |
| K | 0+ | 4.34 | 31.63 | 45.72 | Al | 3+ | 28.45 | 18.83 | 5.99 | 28.43 |
| K | 0+ | 4.34 | 31.63 | 45.72 | Cr | 3+ | 30.96 | 16.50 | 6.77 | 27.46 |
| K | 0+ | 4.34 | 31.63 | 45.72 | Pb | 3+ | 31.94 | 15.03 | 7.42 | 27.30 |

(continued)

| DS | | IE$_n$ | IE$_{n+1}$ | IE$_{n+2}$ | AS | | IE$_{m+2}$ | IE$_{m+1}$ | IE$_m$ | Energy Hole |
|----|----|--------|-----------|-----------|----|----|-----------|-----------|--------|-------------|
| K | 1+ | 31.63 | 45.72 | 60.91 | Sc | 4+ | 73.47 | 24.76 | 12.80 | 27.22 |
| K | 2+ | 45.72 | 60.91 | 82.66 | Cl | 5+ | 67.80 | 53.46 | 39.61 | 28.42 |
| Ca | 0+ | 6.11 | 11.87 | 50.91 | Eu | 3+ | 24.90 | 11.24 | 5.67 | 27.08 |
| Ca | 0+ | 6.11 | 11.87 | 50.91 | Dy | 3+ | 22.80 | 11.67 | 5.93 | 28.49 |
| Ca | 0+ | 6.11 | 11.87 | 50.91 | Ho | 3+ | 22.84 | 11.80 | 6.02 | 28.23 |
| Ca | 0+ | 6.11 | 11.87 | 50.91 | Er | 3+ | 22.74 | 11.93 | 6.10 | 28.12 |
| Ca | 1+ | 11.87 | 50.91 | 67.10 | Mg | 3+ | 80.14 | 15.03 | 7.65 | 27.06 |
| Ca | 1+ | 11.87 | 50.91 | 67.10 | Fe | 4+ | 54.80 | 30.65 | 16.18 | 28.25 |
| Ca | 1+ | 11.87 | 50.91 | 67.10 | Co | 4+ | 51.30 | 33.50 | 17.06 | 28.02 |
| Sc | 1+ | 12.80 | 24.76 | 73.47 | C | 3+ | 47.89 | 24.38 | 11.26 | 27.50 |
| Sc | 1+ | 12.80 | 24.76 | 73.47 | Te | 4+ | 37.41 | 27.96 | 18.60 | 27.06 |
| Ti | 1+ | 13.58 | 27.49 | 43.27 | Mn | 3+ | 33.67 | 15.64 | 7.43 | 27.59 |
| Ti | 1+ | 13.58 | 27.49 | 43.27 | Ga | 3+ | 30.71 | 20.51 | 6.00 | 27.12 |
| Ti | 1+ | 13.58 | 27.49 | 43.27 | As | 3+ | 28.35 | 18.63 | 9.81 | 27.54 |
| Ti | 1+ | 13.58 | 27.49 | 43.27 | Rh | 3+ | 31.06 | 18.08 | 7.46 | 27.74 |
| Ti | 1+ | 13.58 | 27.49 | 43.27 | Tl | 3+ | 29.83 | 20.43 | 6.11 | 27.97 |
| Ti | 2+ | 27.49 | 43.27 | 99.22 | As | 5+ | 63.63 | 50.13 | 28.35 | 27.87 |
| Ti | 2+ | 27.49 | 43.27 | 99.22 | Se | 5+ | 68.30 | 42.94 | 30.82 | 27.91 |
| V | 1+ | 14.65 | 29.31 | 46.71 | Cd | 3+ | 37.48 | 16.91 | 8.99 | 27.29 |
| V | 1+ | 14.65 | 29.31 | 46.71 | I | 3+ | 33.00 | 19.13 | 10.45 | 28.08 |
| V | 1+ | 14.65 | 29.31 | 46.71 | Hg | 3+ | 34.20 | 18.76 | 10.44 | 27.27 |
| Cr | 1+ | 16.50 | 30.96 | 49.10 | S | 3+ | 34.83 | 23.33 | 10.36 | 28.04 |
| Cr | 1+ | 16.50 | 30.96 | 49.10 | Ca | 3+ | 50.91 | 11.87 | 6.11 | 27.67 |
| Cr | 3+ | 49.10 | 69.30 | 90.56 | Be | 3+ | 153.89 | 18.21 | 9.32 | 27.53 |
| Mn | 1+ | 15.64 | 33.67 | 51.20 | Nd | 4+ | 40.41 | 22.10 | 10.73 | 27.27 |
| Mn | 1+ | 15.64 | 33.67 | 51.20 | Tb | 4+ | 39.80 | 21.91 | 11.52 | 27.28 |
| Mn | 2+ | 33.67 | 51.20 | 72.40 | Ca | 4+ | 67.10 | 50.91 | 11.87 | 27.39 |
| Fe | 1+ | 16.18 | 30.65 | 54.80 | Nd | 4+ | 40.41 | 22.10 | 10.73 | 28.39 |
| Fe | 1+ | 16.18 | 30.65 | 54.80 | Pm | 4+ | 41.10 | 22.30 | 10.90 | 27.33 |
| Fe | 1+ | 16.18 | 30.65 | 54.80 | Tb | 4+ | 39.80 | 21.91 | 11.52 | 28.40 |
| Fe | 3+ | 54.80 | 75.00 | 99.00 | Ne | 4+ | 97.11 | 63.45 | 40.96 | 27.28 |
| Co | 1+ | 17.06 | 33.50 | 51.30 | Pm | 4+ | 41.10 | 22.30 | 10.90 | 27.56 |
| Co | 2+ | 33.50 | 51.30 | 79.50 | C | 4+ | 64.49 | 47.89 | 24.38 | 27.54 |
| Co | 3+ | 51.30 | 79.50 | 102.00 | Mg | 4+ | 109.24 | 80.14 | 15.03 | 28.38 |
| Ni | 1+ | 18.17 | 35.17 | 54.90 | La | 4+ | 49.95 | 19.18 | 11.06 | 28.05 |
| Ni | 1+ | 18.17 | 35.17 | 54.90 | Yb | 4+ | 43.70 | 25.03 | 12.18 | 27.33 |
| Ni | 1+ | 18.17 | 35.17 | 54.90 | Lu | 4+ | 45.19 | 20.96 | 13.90 | 28.19 |
| Ni | 2+ | 35.17 | 54.90 | 75.50 | K | 4+ | 60.91 | 45.72 | 31.63 | 27.32 |
| Ni | 5+ | 108.00 | 133.00 | 162.00 | Fe | 8+ | 151.06 | 125.00 | 99.00 | 27.94 |
| Cu | 0+ | 7.73 | 20.29 | 36.83 | Ce | 3+ | 20.20 | 10.85 | 5.47 | 28.33 |
| Cu | 0+ | 7.73 | 20.29 | 36.83 | Pr | 3+ | 21.62 | 10.55 | 5.42 | 27.25 |
| Cu | 1+ | 20.29 | 36.83 | 55.20 | Ar | 3+ | 40.74 | 27.63 | 15.76 | 28.19 |
| Cu | 1+ | 20.29 | 36.83 | 55.20 | Ti | 4+ | 43.27 | 27.49 | 13.58 | 27.99 |
| Cu | 1+ | 20.29 | 36.83 | 55.20 | Te | 4+ | 37.41 | 27.96 | 18.60 | 28.35 |
| Cu | 2+ | 36.83 | 55.20 | 79.90 | Sn | 5+ | 72.28 | 40.73 | 30.50 | 28.41 |
| Zn | 0+ | 9.39 | 17.96 | 39.72 | Y | 3+ | 20.52 | 12.24 | 6.38 | 27.94 |
| Zn | 0+ | 9.39 | 17.96 | 39.72 | Pm | 3+ | 22.30 | 10.90 | 5.55 | 28.33 |
| Zn | 0+ | 9.39 | 17.96 | 39.72 | Gd | 3+ | 20.63 | 12.09 | 6.14 | 28.22 |
| Zn | 0+ | 9.39 | 17.96 | 39.72 | Tb | 3+ | 21.91 | 11.52 | 5.85 | 27.80 |
| Zn | 1+ | 17.96 | 39.72 | 59.40 | Mo | 4+ | 46.40 | 27.16 | 16.15 | 27.38 |

(continued)

| DS | | $IE_n$ | $IE_{n+1}$ | $IE_{n+2}$ | AS | | $IE_{m+2}$ | $IE_{m+1}$ | $IE_m$ | Energy Hole |
|----|----|----|----|----|----|----|----|----|----|----|
| Zn | 1+ | 17.96 | 39.72 | 59.40 | Pb | 4+ | 42.32 | 31.94 | 15.03 | 27.80 |
| Ga | 1+ | 20.51 | 30.71 | 64.00 | Bi | 4+ | 45.30 | 25.56 | 16.69 | 27.67 |
| Ge | 1+ | 15.93 | 34.22 | 45.71 | S | 3+ | 34.83 | 23.33 | 10.36 | 27.34 |
| Ge | 1+ | 15.93 | 34.22 | 45.71 | Ce | 4+ | 36.76 | 20.20 | 10.85 | 28.06 |
| As | 1+ | 18.63 | 28.35 | 50.13 | Ca | 3+ | 50.91 | 11.87 | 6.11 | 28.22 |
| As | 2+ | 28.35 | 50.13 | 63.63 | Nb | 5+ | 50.55 | 38.30 | 25.04 | 28.22 |
| Se | 1+ | 21.19 | 30.82 | 42.94 | Zn | 3+ | 39.72 | 17.96 | 9.39 | 27.87 |
| Se | 1+ | 21.19 | 30.82 | 42.94 | Ce | 4+ | 36.76 | 20.20 | 10.85 | 27.15 |
| Se | 2+ | 30.82 | 42.94 | 68.30 | Kr | 4+ | 52.50 | 36.95 | 24.36 | 28.25 |
| Br | 0+ | 11.81 | 21.80 | 36.00 | Eu | 3+ | 24.90 | 11.24 | 5.67 | 27.81 |
| Br | 0+ | 11.81 | 21.80 | 36.00 | Tm | 3+ | 23.68 | 12.05 | 6.18 | 27.70 |
| Br | 1+ | 21.80 | 36.00 | 47.30 | Nb | 4+ | 38.30 | 25.04 | 14.32 | 27.44 |
| Br | 1+ | 21.80 | 36.00 | 47.30 | Gd | 4+ | 44.00 | 20.63 | 12.09 | 28.38 |
| Br | 1+ | 21.80 | 36.00 | 47.30 | Ho | 4+ | 42.50 | 22.84 | 11.80 | 27.96 |
| Br | 1+ | 21.80 | 36.00 | 47.30 | Er | 4+ | 42.60 | 22.74 | 11.93 | 27.83 |
| Kr | 0+ | 14.00 | 24.36 | 36.95 | Ti | 3+ | 27.49 | 13.58 | 6.82 | 27.42 |
| Rb | 0+ | 4.18 | 27.28 | 40.00 | Sc | 3+ | 24.76 | 12.80 | 6.54 | 27.36 |
| Rb | 0+ | 4.18 | 27.28 | 40.00 | Zr | 3+ | 22.99 | 13.13 | 6.84 | 28.50 |
| Rb | 0+ | 4.18 | 27.28 | 40.00 | Yb | 3+ | 25.03 | 12.18 | 6.25 | 27.99 |
| Rb | 1+ | 27.28 | 40.00 | 52.60 | N | 3+ | 47.45 | 29.60 | 14.53 | 28.30 |
| Sr | 1+ | 11.03 | 43.60 | 57.00 | C | 3+ | 47.89 | 24.38 | 11.26 | 28.10 |
| Sr | 1+ | 11.03 | 43.60 | 57.00 | Ar | 3+ | 40.74 | 27.63 | 15.76 | 27.50 |
| Sr | 1+ | 11.03 | 43.60 | 57.00 | Ti | 4+ | 43.27 | 27.49 | 13.58 | 27.29 |
| Sr | 1+ | 11.03 | 43.60 | 57.00 | Te | 4+ | 37.41 | 27.96 | 18.60 | 27.66 |
| Y | 1+ | 12.24 | 20.52 | 61.80 | Zn | 3+ | 39.72 | 17.96 | 9.39 | 27.48 |
| Y | 3+ | 61.80 | 77.00 | 93.00 | Li | 3+ | 40.00 | 75.64 | 5.39 | 28.32 |
| Y | 3+ | 61.80 | 77.00 | 93.00 | Mg | 4+ | 109.24 | 80.14 | 15.03 | 27.38 |
| Zr | 1+ | 13.13 | 22.99 | 34.34 | Zr | 3+ | 22.99 | 13.13 | 6.84 | 27.50 |
| Zr | 2+ | 22.99 | 34.34 | 81.50 | Sc | 4+ | 73.47 | 24.76 | 12.80 | 27.80 |
| Zr | 2+ | 22.99 | 34.34 | 81.50 | Sr | 4+ | 57.00 | 43.60 | 11.03 | 27.20 |
| Nb | 1+ | 14.32 | 25.04 | 38.30 | Mo | 3+ | 27.16 | 16.15 | 7.10 | 27.25 |
| Nb | 1+ | 14.32 | 25.04 | 38.30 | Sb | 3+ | 25.30 | 16.53 | 8.64 | 27.19 |
| Nb | 1+ | 14.32 | 25.04 | 38.30 | Bi | 3+ | 25.56 | 16.69 | 7.29 | 28.12 |
| Nb | 2+ | 25.04 | 38.30 | 50.55 | Sn | 4+ | 40.73 | 30.50 | 14.63 | 28.02 |
| Nb | 2+ | 25.04 | 38,30 | 50.55 | Sb- | 4+ | 44.20 | 25.30 | 16.53 | 27.86 |
| Nb | 3+ | 38.30 | 50.55 | 102.60 | Co | 5+ | 79.50 | 51.30 | 33.50 | 27.15 |
| Mo | 1+ | 16.15 | 27.16 | 46.40 | Se | 3+ | 30.82 | 21.19 | 9.75 | 27.95 |
| Mo | 1+ | 16.15 | 27.16 | 46.40 | I | 3+ | 33.00 | 19.13 | 10.45 | 27.13 |
| Ag | 0+ | 7.58 | 21.49 | 34.83 | La | 3+ | 19.18 | 11.06 | 5.58 | 28.08 |
| Ag | 0+ | 7.58 | 2,1.49 | 34.83 | Ce | 3+ | 20.20 | 10.85 | 5.47 | 27.38 |
| Cd | 0+ | 8.99 | 16.91 | 37.48 | La | 3+ | 19.18 | 11.06' | 5.58 | 27.57 |
| In | 1+ | 18.87 | 28.03 | 54.00 | Nd | 4+ | 40.41 | 22.10 | 10.73 | 27.66 |
| In | 1+ | 18.87 | 28.03 | 54.00 | Tb | 4+ | 39.80 | 21.91 | 11.52 | 27.67 |
| Sn | 1+ | 14.63 | 30.50 | 40.73 | Si | 3+ | 33.49 | 16.34 | 8.15 | 27.88 |
| Sn | 1+ | 14.63 | 30.50 | 40.73 | Co | 3+ | 33.50 | 17.06 | 7.86 | 27.45 |
| Sn | 1+ | 14.63 | 30.50 | 40.73 | Ge | 3+ | 34.22 | 15.93 | 7.90 | 27.82 |
| Sn | 2+ | 30.50 | 40.73 | 72.28 | F | 3+ | 62.71 | 34.97 | 17.42 | 28.42 |
| Sn | 2+ | 30.50 | 40.73 | 72.28 | Ga | 4+ | 64.00 | 30.71 | 20.51 | 28.30 |
| Sb | 1+ | 16.53 | 25.30 | 44.20 | Si | 3+ | 33.49 | 16.34 | 8.15 | 28.04 |
| Sb | 1+ | 16.53 | 25.30 | 44.20 | Co | 3+ | 33.50 | 17.06 | 7.86 | 27.61 |

(continued)

| DS | | $IE_n$ | $IE_{n+1}$ | $IE_{n+2}$ | AS | | $IE_{m+2}$ | $IE_{m+1}$ | $IE_m$ | Energy Hole |
|---|---|---|---|---|---|---|---|---|---|---|
| Sb | 1+ | 16.53 | 25.30 | 44.20 | Ge | 3+ | 34.22 | 15.93 | 7.90 | 27.98 |
| Sb | 2+ | 25.30 | 44.20 | 56.00 | As | 4+ | 50.13 | 28.35 | 18.63 | 28.39 |
| Te | 1+ | 18.60 | 27.96 | 37.41 | Mn | 3+ | 33.67 | 15.64 | 7.43 | 27.23 |
| Te | 1+ | 18.60 | 27.96 | 37.41 | As | 3+ | 28.35 | 18.63 | 9.81 | 27.18 |
| Te | 1+ | 18.60 | 27.96 | 37.41 | Rh | 3+ | 31.06 | 18.08 | 7.46 | 27.37 |
| Te | 1+ | 18.60 | 27.96 | 37.41 | Te | 3+ | 27.96 | 18.60 | 9.01 | 28.40 |
| Te | 1+ | 18.60 | 27.96 | 37.41 | Tl | 3+ | 29.83 | 20.43 | 6.11 | 27.60 |
| Te | 2+ | 27.96 | 37.41 | 58.75 | Cr | 4+ | 49.10 | 30.96 | 16.50 | 27.56 |
| Te | 2+ | 27.96 | 37.41 | 58.75 | Ge | 4+ | 45.71 | 34.22 | 15.93 | 28.26 |
| Te | 2+ | 27.96 | 37.41 | 58.75 | As | 4+ | 50.13 | 28.35 | 18.63 | 27.01 |
| Xe | 0+ | 12.13 | 21.21 | 32.10 | Pr | 3+ | 21.62 | 10.55 | 5.42 | 27.84 |
| Xe | 0+ | 12.13 | 21.21 | 32.10 | Nd | 3+ | 22.10 | 10.73 | 5.49 | 27.12 |
| La | 1+ | 11.06 | 19.18 | 49.95 | Tc | 3+ | 29.54 | 15.26 | 7.28 | 28.11 |
| La | 1+ | 11.06 | 19.18 | 49.95 | Ru | 3+ | 28.47 | 16.76 | 7.37 | 27.59 |
| La | 1+ | 11.06 | 19.18 | 49.95 | In | 3+ | 28.03 | 18.87 | 5.79 | 27.50 |
| La | 1+ | 11.06 | 19.18 | 49.95 | Sn | 3+ | 30.50 | 14.63 | 7.34 | 27.71 |
| Ce | 1+ | 10.85 | 20.20 | 36.76 | Sm | 3+ | 23.40 | 11.07 | 5.63 | 27.70 |
| Ce | 1+ | 10.85 | 20.20 | 36.76 | Dy | 3+ | 22.80 | 11.67 | 5.93 | 27.41 |
| Ce | 1+ | 10.85 | 20.20 | 36.76 | Ho | 3+ | 22.84 | 11.80 | 6.02 | 27.15 |
| Ce | 1+ | 10.85 | 20.20 | 36.76 | Er | 3+ | 22.74 | 11.93 | 6.10 | 27.04 |
| Ce | 1+ | 10.85 | 20.20 | 36.76 | Lu | 3+ | 20.96 | 13.90 | 5.43 | 27.52 |
| Pr | 1+ | 10.55 | 21.62 | 38.98 | Sc- | 3+ | 24.76 | 12.80 | 6.54 | 27.05 |
| Pr | 1+ | 10.55 | 21.62 | 38.98 | Zr | 3+ | 22.99 | 13.13 | 6.84 | 28.19 |
| Pr | 1+ | 10.55 | 21.62 | 38.98 | Yb | 3+ | 25.03 | 12.18 | 6.25 | 27.69 |
| Nd | 1+ | 10.73 | 22.10 | 40.41 | Nb | 3+ | 25.04 | 14.32 | 6.88 | 27.00 |
| Nd | 1+ | 10.73 | 22.10 | 40.41 | Hf | 3+ | 23.30 | 14.90 | 6.60 | 28.44 |
| Pm | 1+ | 10.90 | 22.30 | 41.10 | Nb | 3+ | 25.04 | 14.32 | 6.88 | 28.06 |
| Sm | 1+ | 11.07 | 23.40 | 41.40 | Ti | 3+ | 27.49 | 13.58 | 6.82 | 27.98 |
| Eu | 1+ | 11.24 | 24.90 | 42.60 | V | 3+ | 29.31 | 14.65 | 6.74 | 28.04 |
| Eu | 1+ | 11.24 | 24.90 | 42.60 | Mo | 3+ | 27.16 | 16.15 | 7.10 | 28.33 |
| Eu | 1+ | 11.24 | 24.90 | 42.60 | Sb | 3+ | 25.30 | 16.53 | 8.64 | 28.27 |
| Gd | 1+ | 12.09 | 20.63 | 44.00 | Bi | 3+ | 25.56 | 16.69 | 7.29 | 27.18 |
| Tb | 1+ | 11.52 | 21.91 | 39.80 | Hf | 3+ | 23.30 | 14.90 | 6.60 | 28.43 |
| Dy | 1+ | 11.67 | 22.80 | 41.50 | Ti | 3+ | 27.49 | 13.58 | 6.82 | 28.08 |
| Ho | 1+ | 11.80 | 22.84 | 42.50 | Bi | 3+ | 25.56 | 16.69 | 7.29 | 27.60 |
| Er | 1+ | 11.93 | 22.74 | 42.60 | Bi | 3+ | 25.56 | 16.69 | 7.29 | 27.73 |
| Tm | 1+ | 12.05 | 23.68 | 42.70 | V | 3+ | 29.31 | 14.65 | 6.74 | 27.73 |
| Tm | 1+ | 12.05 | 23.68 | 42.70 | Mo | 3+ | 27.16 | 16.15 | 7.10 | 28.02 |
| Tm | 1+ | 12.05 | 23.68 | 42.70 | Sb | 3+ | 25.30 | 16.53 | 8.64 | 27.96 |
| Yb | 1+ | 12.18 | 25.03 | 43.70 | Al | 3+ | 28.45 | 18.83 | 5.99 | 27.65 |
| Yb | 1+ | 12.18 | 25.03 | 43.70 | Ru | 3+ | 28.47 | 16.76 | 7.37 | 28.31 |
| Yb | 1+ | 12.18 | 25.03 | 43.70 | In | 3+ | 28.03 | 18.87 | 5.79 | 28.23 |
| Yb | 1+ | 12.18 | 25.03 | 43.70 | Sn | 3+ | 30.50 | 14.63 | 7.34 | 28.43 |
| Lu | 1+ | 13.90 | 20.96 | 45.19 | Tc | 3+ | 29.54 | 15.26 | 7.28 | 27.97 |
| Lu | 1+ | 13.90 | 20.96 | 45.19 | Ru | 3+ | 28.47 | 16.76 | 7.37 | 27.45 |
| Lu | 1+ | 13.90 | 20.96 | 45.19 | In | 3+ | 28.03 | 18.87 | 5.79 | 27.37 |
| Lu | 1+ | 13.90 | 20.96 | 45.19 | Sn | 3+ | 30.50 | 14.63 | 7.34 | 27.57 |
| Hf | 1+ | 14.90 | 23.30 | 33.33 | Sc | 3+ | 24.76 | 12.80 | 6.54 | 27.43 |
| Hf | 1+ | 14.90 | 23.30 | 33.33 | Yb | 3+ | 25.03 | 12.18 | 6.25 | 28.07 |
| Hg | 0+ | 10.44 | 18.76 | 34.20 | La | 3+ | 19.18 | 11.06 | 5.58 | 27.58 |

(continued)

| DS | | $IE_n$ | $IE_{n+1}$ | $IE_{n+2}$ | AS | | $IE_{m+2}$ | $IE_{m+1}$ | $IE_m$ | Energy Hole |
|---|---|---|---|---|---|---|---|---|---|---|
| Pb | 1+ | 15.03 | 31.94 | 42.32 | Ni | 3+ | 35.17 | 18.17 | 7.64 | 28.32 |
| Pb | 1+ | 15.03 | 31.94 | 42.32 | Se | 3+ | 30.82 | 21.19 | 9.75 | 27.53 |
| Pb | 2+ | 31.94 | 42.32 | 68.80 | F | 3+ | 62.71 | 34.97 | 17.42 | 27.96 |
| Pb | 2+ | 31.94 | 42.32 | 68.80 | Ga | 4+ | 64.00 | 30.71 | 20.51 | 27.84 |
| Bi | 1+ | 16.69 | 25.56 | 45.30 | P | 3+ | 30.18 | 19.73 | 10.49 | 27.16 |
| Bi | 1+ | 16.69 | 25.56 | 45.30 | Sr | 3+ | 43.60 | 11.03 | 5.70 | 27.23 |

## ADDITIONAL CATALYTIC ENERGY HOLE STRUCTURES

### Single Electron Transfer

In a further embodiment, an energy hole of energy equal to the total energy released for a below "ground state" electronic transition of the hydrogen atom is provided by the transfer of an electron between participating species including atoms, ions, molecules, and ionic and molecular compounds. In one embodiment, the energy hole comprises the transfer of an electron from one species to another species whereby the sum of the ionization energy of the electron donating species minus the ionization energy or electron affinity of the electron accepting species equals approximately $\frac{m}{2}$ 27.21 eV; where m is an integer.

For m = 3 corresponding to the n = 1 to n = 1/2 transition, an efficient catalytic system that hinges on the coupling of three resonator cavities involves arsenic and calcium. For example, the third ionization energy of calcium is 50.908 eV. This energy hole is obviously too high for resonant absorption. However, As(I) releases 9.81 eV when it is reduced to As. The combination of $Ca^{2+}$ to $Ca^{3+}$ and $As^+$ to As, then, has a net energy change of 41.1 eV.

$$41.1 \text{ eV} + As^+ + Ca^{2+} + H\left[\frac{a_0}{p}\right] \rightarrow As + Ca^{3+} + H\left[\frac{a_0}{(p+1)}\right] + [(p+1)^2 - p^2] \text{ x } 13.6 \text{ eV} \tag{74}$$

$$As + Ca^{3+} \rightarrow As^+ + Ca^{2+} + 41.1 \text{ eV} \tag{75}$$

And, the overall reaction is

$$H\left[\frac{a_0}{p}\right] \rightarrow H\left[\frac{a_0}{(p+1)}\right] + [(p+1)^2 - p^2] \text{ x } 13.6 \text{ eV} \tag{76}$$

Catalytic systems that hinge on the transfer of an electron from an atom or ion to another atom or ion capable of producing energy holes of approximately 40.8 eV corresponding in energy to the n = 1 to the n = 1/2 electronic transition of hydrogen are given in the following table. The ionization energy of the electron donor, $IE_n$, minus the ionization energy of the electron acceptor, $IE_m$, equal approximately 40.8 eV.

| Catalytic Donating Atom or Ion | $IE_n$ | Catalytic Accepting Atom or Ion | $IE_m$ | Energy Hole |
|---|---|---|---|---|
| $Na^+$ | 47.286 | $Sc^+$ | 6.54 | 40.75 |
| $Ca^{2+}$ | 50.908 | $Se^+$ | 9.752 | 41.16 |
| $K^{2+}$ | 45.72 | $K^+$ | 4.341 | 41.38 |
| $Mo^{3+}$ | 46.4 | $Li^+$ | 5.392 | 41.00 |
| $Ge^{3+}$ | 45.71 | $K^+$ | 4.341 | 41.37 |

Multiple Electron Transfer

An energy hole is provided by the transfer of multiple electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately $\dfrac{m}{2}$ 27.21 eV where m and t are integers.

## THE NATURE OF THE CHEMICAL BOND OF HYDROGEN-TYPE MOLECULES AND MOLECULAR IONS

Two hydrogen atoms react to form a diatomic molecule, the hydrogen molecule.

$$2 H[a_0] \quad \rightarrow \quad H_2\left[2c' = \sqrt{2}\, a_0\right] \qquad (77)$$

where 2c' is the internuclear distance. Also, two hydrino atoms react to form a diatomic molecule, a dihydrino molecule.

$$2 H\left[\frac{a_0}{p}\right] \quad \rightarrow \quad H^*_2\left[2c' = \frac{\sqrt{2}\, a_0}{p}\right] \qquad (78)$$

where p is an integer.
Hydrogen molecules form hydrogen molecular ions when they are singly ionized.

$$H_2\left[2c' = \sqrt{2}\, a_0\right] \quad \rightarrow \quad H_2\left[2c' = 2a_0\right]^+ + e^- \quad (79)$$

Also, dihydrino molecules form dihydrino molecular ions when they are singly ionized.

$$H^*_2\left[2c' = \frac{\sqrt{2}\, a_0}{p}\right] \quad \rightarrow \quad H^*_2\left[2c' = \frac{2a_0}{p}\right]^+ + e^- \quad (80)$$

The Hydrogen-Type Molecular Ions

Each hydrogen-type molecular ion comprises two protons and an electron where the equation of motion of the electron is determined by the central field which is p times that of a proton at each focus (p is one for the hydrogen molecular ion, and p is an integer greater than one for each dihydrino niolecular ion). The differential equations of motion in the case of a central field are

$$m\left(\ddot{r} - r\dot{\theta}^2\right) = f(r) \qquad (81)$$

$$m\left(2\dot{r}\dot{\theta} + r\ddot{\theta}\right) = 0 \qquad (82)$$

The second or transverse equation, Eq. (82), gives the result that the angular momentum is constant.

$$r^2 \dot{\theta} = \text{constant} = L/m \tag{83}$$

where L is the angular momentum ( h in the case of the electron). The central force equations can be transformed into an orbital equation by the substitution, $u = \dfrac{1}{r}$. The differential equation of the orbit of a particle moving under a central force is

$$\frac{\delta^2 u}{\delta\theta^2} + u = \frac{-1}{\dfrac{mL^2u^2}{m^2}} f(u^{-1}) \tag{84}$$

Because the angular momentum is constant, motion in only one plane need be considered; thus, the orbital equation is given in polar coordinates. The solution of Eq. (84) for an inverse square force

$$f(r) = -\frac{k}{r^2} \tag{85}$$

is

$$r = r_0 \frac{1 + e}{1 + e \cos\theta} \tag{86}$$

$$e = A \frac{m\dfrac{L^2}{m^2}}{k} \tag{87}$$

$$r_0 = \frac{m\dfrac{L^2}{m^2}}{k(1 + e)} \tag{88}$$

where e is the eccentricity of the ellipse and A is a constant. The equation of motion due to a central force can also be expressed in terms of the energies of the orbit. The square of the speed in polar coordinates is

$$v^2 = (\dot{r}^2 + r^2\dot{\theta}^2) \tag{89}$$

Since a central force is conservative, the total energy, E, is equal to the sum of the kinetic, T, and the potential, V, and is constant. The total energy is

$$\frac{1}{2} m (\dot{r}^2 + r^2\dot{\theta}^2) + V(r) = E = \text{constant} \tag{90}$$

Substitution of the variable $u = \dfrac{1}{r}$ and Eq. (83) into Eq. (90) gives the orbital energy equation.

$$\frac{1}{2} m \frac{L^2}{m^2} [(\frac{\delta^2 u}{\delta \theta^2}) + u^2 ] + V(u^{-1}) = E \quad (91)$$

Because the potential energy function V(r) for an inverse square force field is

$$V(r) = -\frac{k}{r} = -ku \qquad (92)$$

the energy equation of the orbit, Eq. (91),

$$\frac{1}{2} m \frac{L^2}{m^2} [(\frac{\delta^2 u}{\delta \theta^2}) + u^2 ] - ku = E \qquad (93)$$

which has the sutution

$$r = \frac{m \frac{L^2}{m^2} k^{-1}}{1 + [1 + 2Em\frac{L^2}{m^2} k^{-2} ]^{1/2} \cos\theta} \qquad (94)$$

where the eccentricity, e, is

$$e = [1 + 2Em\frac{L^2}{m^2} k^{-2} ]^{1/2} \qquad (95)$$

Eq. (95) permits the classification of the orbits according to the total energy, E, as follows:

E < 0, e < 1   closed orbits (ellipse or circle)
E = 0, e = 1   parabolic orbit
E > 0, e > 1   hyperbolic orbit

Since E = T + V and is constant, the closed orbits are those for which T < IVI, and the open orbits are those for which T ≥ IVI. It can be shown that the time average of the kinetic energy, < T >, for elliptic motion in an inverse square field is' 1/2 that of the time average of the potential energy, < V >. < T > = 1/2 < V >.

As demonstrated in the One Electron Atom Section of The Unification of Spacetime, the Forces, Matter, and Energy, Mills, R., Technomics Publishing Company, Lancaster, PA, (1992), the electric inverse square force is conservative; thus, the angular momentum of the electron, h, and the energy of atomic orbitspheres is constant. In addition, the orbitspheres are nonradiative when the boundary condition is met.

The central force equation, Eq. (90), has orbital solutions which are circular, elliptic, parabolic, or hyperbolic. The former two types of solutions are associated with atomic and molecular orbitals. These solutions are nonradiative. The boundary condition for nonradiation given in the One Electron Atom Section of The Unification of Spacetime, the Forces. Matter, and Energy, Mills, R., Technomics Publishing Company, Lancaster, PA, (1992), is the absence of components of the space-time Fourier transform of the charge density function synchronous with waves traveling at the speed of light. The boundary condition is met when the velocity for every point on the orbitsphere is

$$v_n = \frac{\hbar}{m_e r_n} \cdot \qquad (96)$$

The allowed velocities and angular frequencies are related to $r_n$ by

$$v_n = r_n \omega_n \qquad (97)$$

$$\omega_n = \frac{\hbar}{m_e r_n^2} \cdot \qquad (98)$$

As demonstrated in the One Electron Atom Section and by and Eq. (8.17) of <u>The Unification of Spacetime, the Forces, Matter, and Energy</u>, Mills, R., Technomics Publishing Company, Lancaster, PA, (1992), this condition is met for the product function of a radial Dirac delta function and a time harmonic function where the angular frequency, w, is constant and given by Eq. (98).

$$\omega_n = \frac{\hbar}{m_e r_n^2} = \frac{\frac{\pi L}{m_e}}{A} \qquad (99)$$

where L is the angular momentum and A is the area of the closed geodesic orbit. Consider the solution of the central force equation comprising the product of a two dimensional ellipsoid and a time harmonic function. The spatial part of the product function is the convolution of a radial Dirac delta function with the equation of an ellipsoid. The Fourier transform of the convolution of two functions is the product of the individual Fourier transforms of the functions; thus, the boundary condition is met for an ellipsoidal-time harmonic function when

$$\omega_n = \frac{\pi \hbar}{m_e A} = \frac{\hbar}{m_e a b} \qquad (100)$$

where the area of an ellipse is

$$A = \pi a b \qquad (101)$$

where 2b is the length of the semiminor axis and 2a is the length of the semimajor axis. The geometry of molecular hydrogen is elliptic with the internuclear axis as the principle axis; thus, the electron orbital is a two dimensional ellipsoidal-time harmonic function. The mass follows geodesics time harmonically as determined by the central field of the protons at the foci. Rotational symmetry about the internuclear axis further determines that the orbital is a prolate spheroid. In general, ellipsoidal orbits of molecular bonding, hereafter referred to as ellipsoidal molecular orbitals (M. O. 's), have the general equation

$$\frac{x^2}{a^2} + \frac{y^2}{b^2} + \frac{z^2}{c^2} = 1 \qquad (102)$$

The semiprinciple axes of the ellipsoid are a, b, c.

In ellipsoidal coordinates the Laplacian is

$$( \eta - \zeta)R_\xi \frac{\delta}{\delta\xi}(R_\xi \frac{\delta\phi}{\delta\xi}) + ( \zeta - \xi)R_\eta \frac{\delta}{\delta\eta} (R_\eta \frac{\delta\phi}{\delta\eta}) + ( \xi - \eta)R_\zeta \frac{\delta}{\delta\zeta} (R_\zeta \frac{\delta\phi}{\delta\zeta}) = 0 \quad (103)$$

An ellipsoidal M. O. is equivalent to a charged conductor whose surface is given by Eq. (102). It carries a total charge q, and it's potential is a solution of the Laplacian in ellipsoidal coordinates, Eq. (103).

Excited states of orbitspheres are discussed in the Excited States of the One Electron Atom (Quantization) Section of The Unification of Spacetime, the Forces, Matter, and Energy, Mills, R., Technamics Publishing Company, Lancaster, PA, (1992). in the case of ellipsoidal M. O. 's, excited electronic states are created when photons of discrete frequencies are trapped in the ellipsoidal resonator cavity of the M. O. The photon changes the effective charge at the M. O. surface where the central field is ellipsoidal and arises from the protons and the effective charge of the trapped photon at the foci of the M. O. Force balance is achieved at a series of ellipsoidal equipotential two dimensional surfaces confocal with the ground state ellipsoid. The trapped photons are solutions of the Laplacian in ellipsoidal coordinates, Eq. (103).

As is the case with the orbitsphere, higher and lower energy states are equally valid. The photon standing wave in both cases is a solution of the Laplacian in ellipsoidal coordinates. For an ellipsoidal resonator cavity, the relationship between an allowed circumference, 4aE, and the photon standing wavelength, $\lambda$, is

$$4aE = n\lambda \quad (104)$$

where n is an integer and where

$$k = \frac{\sqrt{a^2 - b^2}}{a} \quad (105)$$

is used in the elliptic integral E of Eq. (104). Applying Eqs. (104) and (105), the relationship between an allowed angular frequency given by Eq. (100) and the photon standing wave angular frequency, w, is:

$$\frac{\pi\hbar}{m_e A} = \frac{\hbar}{m_e n a_1 n b_1} = \frac{\hbar}{m_e a_n b_n} = \frac{1}{n^2} \omega_1 = \omega_n \quad (106)$$

where n = 1, 2, 3, 4, ...

$$n = \frac{1}{2}, \frac{1}{3}, \frac{1}{4}, ...$$

$w_1$ is the allowed angular frequency for n = 1

$a_1$ and $b_1$ are the allowed semimajor and semiminor axes for n = 1

Let us compute the potential of an ellipsoidal M. O. which is equivalent to a charged conductor whose surface is given by Eq. (102). It carries a total charge q, and we assume initially that there is no external field. We wish to know the potential, $\phi$, and the distribution of charge, $\sigma$, over the conducting surface. To solve this problem a potential function must be found which satisfies Eq. (103), which is regular at infinity, and which is constant over the given ellipsoid. Now $\xi$ is the parameter of a family of ellipsoids all confocal with the standard surface $\xi = 0$ whose axes have the specified values a, b, c. The variables $\zeta$ and $\eta$ are the parameters of confocal hyperboloids and as such serve to measure position on any ellipsoid $\zeta$ = constant. On the surface $\xi = 0$; therefore, $\phi$ must be independent of $\zeta$ and $\eta$. If we can find a function depending only on $\xi$ which satisfies Eq. (103) and behaves properly at infinity, it can be adjusted to represent the potential correctly at any point outside the ellipsoid $\xi = 0$.

Let us assume, then, that $\phi=\phi(\xi)$. The Laplacian reduces to

$$\frac{\delta}{\delta\xi}(R_\xi \frac{\delta\phi}{\delta\xi}) = 0 \qquad R_\xi = \sqrt{(\xi + a^2)(\xi + b^2)(\xi + c^2)} \qquad (107)$$

which on integration leads to

$$\phi(\xi) = C_1 \int_\xi^\infty \frac{\delta\xi}{R_\xi} \qquad (108)$$

where $C_1$ is an arbitrary constant. The choice of the upper limit is such as to ensure the proper behavior at infinity. When $\xi$ becomes very large, $R_\xi$ approaches $\xi^{3/2}$ and

$$f \sim \frac{2C_1}{\sqrt{x}} \qquad (\xi \to \infty) \qquad (109)$$

On the other hand, the equation of an ellipsoid can' be written in the form

$$\frac{x^2}{1 + \frac{a^2}{\xi}} + \frac{y^2}{1 + \frac{b^2}{\xi}} + \frac{z^2}{1 + \frac{c^2}{\xi}} = \xi \qquad (110)$$

If $r^2 = x^2 + y^2 + z^2$ is the distance from the origin to any point on the ellipsoid $\xi$, it is apparent that as x becomes very large $\xi \to r^2$ and hence at great distances from the origin

$$\phi \sim \frac{2C_1}{r} \qquad (111)$$

The solution Eq. (108) is, therefore, regular at infinity. Moreover Eq. (111) enables us to determine at once the value of $C_1$; for it has been shown that whatever the distribution, the dominant term of the expansion at remote points is the potential of a point charge at the origin equal to the total charge of the distribution - in this case q. Hence $C_1 = \frac{q}{8\pi\varepsilon_0}$, and the potential at any point is

$$\phi(\xi) = \frac{q}{8\pi\varepsilon_0} \int_\xi^\infty \frac{\delta\xi}{R_\xi} \qquad (112)$$

The equipotential surfaces are the ellipsoids x = constant. Eq. (112) is a elliptic integral and its values have been tabulated (See for example, Jahnke-Emde, Tables of Functions, 2nd ed., Teubner, (1933)).

To obtain the normal derivative we must remember that distance along a curvilinear coordinate $u^1$ is measured not by $du^1$ but by $h_1 du^1$. In ellipsoidal coordinates

$$h_1 = \frac{1}{2}\frac{\sqrt{(\xi - \eta)(\xi - \zeta)}}{R_\xi} \tag{113}$$

$$\frac{\delta\phi}{\delta n} = \frac{1}{h_1}\frac{\delta\phi}{\delta\xi} = \frac{-q}{4\pi\varepsilon_0}\frac{1}{\sqrt{(\xi - \eta)(\xi - \zeta)}} \tag{114}$$

The density of charge, $\sigma$, over the surface $\xi = 0$ is

$$\sigma = \varepsilon_0\left(\frac{\delta\phi}{\delta n}\right)_{\xi=0} - \frac{q}{4\pi\sqrt{\eta\zeta}} \tag{115}$$

Defining x, y, z in terms of x,h,z we put x = 0, it may be easily verified that

$$\frac{x^2}{a^4} + \frac{y^2}{b^4} + \frac{z^2}{c^4} = \frac{\zeta\eta}{a^2 b^2 c^2} \qquad (\xi = 0) \tag{116}$$

Consequently, the charge density in rectangular coordinates is

$$\sigma = \frac{q}{4\pi abc}\frac{1}{\sqrt{\left(\dfrac{x^2}{a^4} + \dfrac{y^2}{b^4} + \dfrac{z^2}{c^4}\right)}} \tag{117}$$

(The mass density function of an M. O. is equivalent to its charge density function where m replaces q of Eq. (117)). The equation of the plane tangent to the ellipsoid at the point $x_0, y_0, z_0$ is

$$X\frac{x_0}{a^2} + Y\frac{y_0}{b^2} + Z\frac{z_0}{c^2} = 1 \tag{118}$$

where X, Y, Z are running co-ordinates in the plane. After dividing through by the square root of the sum of the squares of the coefficients of X, Y, and Z, the right member is the distance D from the origin to the tangent plane. That is,

$$D = \frac{1}{\sqrt{\left(\dfrac{x^2}{a^4} + \dfrac{y^2}{b^4} + \dfrac{z^2}{c^4}\right)}} \tag{119}$$

so that

$$\sigma = \frac{q}{4\pi abc}D \tag{120}$$

In other words, the surface density at any point on a charged ellipsoidal conductor is proportional to the perpendicular distance from the center of the ellipsoid to the plane tangent to the ellipsoid at the point. The charge is thus greater on the more sharply rounded ends farther away from the origin.

In the case of hydrogen-type molecules and molecular ions, rotational symmetry about the internuclear axis requires that two of the axes be equal. Thus, the M. O. is a spheroid, and Eq. (112) can be integrated in terms of elementary functions.

If $a > b = c$, the spheroid is prolate, and we find for the potential

$$\phi = \frac{1}{8\pi\varepsilon_0\sqrt{a^2 - b^2}} \ln \frac{\sqrt{\xi + a^2} + \sqrt{a^2 - b^2}}{\sqrt{\xi + a^2} - \sqrt{a^2 - b^2}} \qquad (121)$$

Spheroidal Force Equations

Electric Force

The' spheroidal M. O. is a two dimensional surface of constant potential given by Eq. (121) for $\xi = 0$. For an isolated electron M. O. the electric field inside is zero as given by Gauss' Law

$$\int_S \varepsilon \, dA = \int_V \frac{\rho}{\varepsilon_0} dV \qquad (122)$$

where the charge density, r, inside the M. O. is zero. Gauss' Law at a two dimensional surface is

$$\hat{n} \cdot (\varepsilon_1 - \varepsilon_2) = \frac{\sigma}{\varepsilon_0} \qquad (123)$$

$\varepsilon_2$ is the electric field inside which is zero. The electric field of an ellipsoidal M. O. is given by substituting s given by Eq. (114) and Eq. (115) into Eq. (123).

$$\varepsilon = \frac{\sigma}{\varepsilon_0} = \frac{q}{4\pi\varepsilon_0\sqrt{(\xi - \eta)(\xi - \zeta)}} \qquad (124)$$

The electric field in spheroid coordinates is

$$\varepsilon = \frac{q}{8\pi\varepsilon_0\sqrt{\xi + a^2}} \frac{1}{\xi + b^2} \frac{1}{c} \sqrt{\frac{\xi^2 - 1}{\xi^2 - \eta}} \qquad (125)$$

From Eqs. (106), the magnitude of the elliptic field corresponding to a below "ground state" hydrogen-type molecular ion is an integer. The integer is one in the case of the hydrogen molecular ion and an integer greater than one in the case of each dihydrino molecular ion. The central electric force from the two protons, $F_e$, is

$$F_e = Ze\varepsilon = \frac{p2e^2}{8\pi\varepsilon_0\sqrt{\xi + a^2}} \frac{1}{\xi + b^2} \frac{1}{c} \sqrt{\frac{\xi^2 - 1}{\xi^2 - \eta}} \qquad (126)$$

where p is one for the hydrogen molecular ion, and p is an integer greater than one for each dihydrino molecule and molecular ion.

Centripetal Force

Each infinitesimal point mass of the electron M. O. moves along a geodesic orbit of a spheroidal M. O. in such a way that its eccentric angle, $\theta$, changes at a constant rate. That is $\theta = \omega t$ at time t where $\omega$ is a constant, and

$$r(t) = \hat{i} a \cos \omega t + \hat{j} b \sin \omega t \qquad (127)$$

is the parametric equation of the ellipse of the geodesic. If $\overrightarrow{a(t)}$ denotes the acceleration vector, then

$$\overrightarrow{a(t)} = -\omega^2 r(t) \qquad (128)$$

In other words, the acceleration is centripetal as in the case of circular motion with constant angular speed w. The centripetal force, $F_c$, is

$$F_c = ma = -m\omega^2 r(t) \qquad (129)$$

Recall that nonradiation results when $\omega$ = constant given by Eq. (106). Substitution of $\omega$ given by Eq. (106) into Eq. (129) gives

$$F_c = \frac{-\hbar^2}{m_e a^2 b^2} r(t) = \frac{-\hbar^2}{m_e a^2 b^2} D \qquad (130)$$

where D is the distance from the origin to the tangent plane as given by Eq. (119).
If X is defined as follows

$$X = \frac{1}{\sqrt{\xi + a^2}} \frac{1}{\xi + b^2} \frac{1}{c} \sqrt{\frac{\xi^2 - 1}{\xi^2 - \eta}} \qquad (131)$$

Then, it follows from Eqs. (114), (120), (124), and (126) that

$$D = 2ab^2 X \qquad (132)$$

Force balance between the electric and centripetal forces is

$$\frac{\hbar^2}{m_e a^2 b^2} 2ab^2 X = \frac{pe^2}{4\pi\varepsilon_0} X \qquad (133)$$

which has the parametric solution given by Eq. (127) when

$$a = \frac{2a_0}{p} \quad\quad\quad (134)$$

Energies of Hydrogen-Type Molecular Ions

From Eqs. (106), the magnitude of the elliptic field corresponding to a below "ground state" hydrogen-type molecule is an integer, and the integer. The potential energy, $V_e$, of the electron M. O. in the field of magnitude p times that of the protons at the foci ($\xi = 0$) is

$$V_e = \frac{-4pe^2}{8\pi\varepsilon_0 \sqrt{a^2 - b^2}} \ln \frac{a + \sqrt{a^2 - b^2}}{a - \sqrt{a^2 - b^2}} \quad\quad (135)$$

where

$$\sqrt{a^2 - b^2} = c' \quad\quad\quad (136)$$

2c' is the distance between the foci which is the internuclear distance. The kinetic energy, T, of the electron M. O. is given by the integral of the left side of Eq. (133)

$$T = \frac{2\hbar^2}{m_e a \sqrt{a^2 - b^2}} \ln \frac{a + \sqrt{a^2 - b^2}}{a - \sqrt{a^2 - b^2}} \quad\quad (137)$$

From the orbital equations in polar coordinates, Eqs. (86-88), the following relationship can be derived:

$$a = \frac{m \frac{L^2}{m^2}}{k(1 - e^2)} \quad\quad\quad (138)$$

For any ellipse,

$$b = a\sqrt{1 - e^2} \quad\quad\quad (139)$$

Thus,

$$b = a\sqrt{\frac{\frac{L^2}{m^2}m}{ka}} \quad \text{(polar coordinates)} \quad\quad (140)$$

Using Eqs. (130) and (137), and (92) and (137), respectively, it can be appreciated that b of polar coordinates corresponds to $c' = \sqrt{a^2 - b^2}$ of elliptic coordinates, and k of polar coordinates with one attracting focus is replaced by 2k of elliptic coordinates with two attracting foci. In elliptic coordinates, k is given by Eq. (124) and (126)

$$k = \frac{2pe^2}{4\pi\varepsilon_0} \qquad (141)$$

and L for the electron equals h; thus, in elliptic coordinates

$$c' = a\sqrt{\frac{\hbar^2 4\pi\varepsilon_0}{me^2 2pa}} = \sqrt{\frac{aa_0}{2p}} \qquad (142)$$

Substitution of a given by Eq. (134) into Eq. (142) is

$$c' = \frac{a_0}{p} \qquad (143)$$

The internuclear distance from Eq. (143) is $2c' = \dfrac{2a_0}{p}$.

One half the length of the semiminor axis of the prolate spheroidal M.O., b=c, is

$$b = \sqrt{a^2 - c'^2} \qquad (144)$$

Substitution of $a = \dfrac{2a_0}{p}$ and $c' = \dfrac{a_0}{p}$ into Eq. (144) is

$$b = \frac{\sqrt{3}}{p} a_0 \qquad (145)$$

The eccentricity, e, is

$$e = \frac{c'}{a} \qquad (146)$$

Substitution of $a = \dfrac{2a_0}{p}$ and $c' = \dfrac{a_0}{p}$ into Eq. (146) is

$$e = \frac{1}{2} \tag{147}$$

The potential energy, Vp, due to proton-proton repulsion in the field of magnitude p times that of the protons at the foci $(x = 0)$ is

$$V_p = \frac{pe^2}{8\pi\varepsilon_0\sqrt{a^2 - b^2}} \tag{148}$$

Substitution of a and b given by Eqs. (134) and (145), respectively, into Eqs. (135), (137), and (148) is

$$V_e = \frac{-4p^2e^2}{8\pi\varepsilon_0 a_0} \ln 3 \tag{149}$$

$$V_p = \frac{p^2e^2}{8\pi\varepsilon_0 a_0} \tag{150}$$

$$T = \frac{2p^2e^2}{8\pi\varepsilon_0 a_0} \ln 3 \tag{151}$$

$$E_T = V_e + V_p + T \tag{152}$$

$$E_T = 13.6 \ eV \ ( \ -4p^2\ln3 \ + \ p^2 \ + \ 2p^2\ln3 \ ) \tag{153}$$

The bond dissociation energy, $E_D$, is the difference between the binding energy of the corresponding hydrogen atom or hydrino atom and $E_T$.

$$E_D = E( H\left[\frac{a_0}{p}\right] ) - E_T \tag{154}$$

Vibration

It can be shown that a perturbation of the orbit determined by an inverse square force results in simple harmonic oscillatory motion of the orbit. For the case of a circular orbit of radius a, an approximation of the angular frequency of this oscillation is

$$\omega = \sqrt{\frac{[\frac{-3}{a} f(a) + f'(a) ]}{m}} = \sqrt{\frac{k}{m}} \tag{155}$$

Oscillating charges radiate. However, molecules and molecular ions including 'the hydrogen molecule, the hydrogen molecular ion, dihydrino molecules, and dihydrino molecular ions demonstrate nonradiative zero order vibration which is time harmonic oscillation of the position of the protons along the principle axis. The protons are located at the foci, and nonradiation is due to the geometry of the ellipse where the electron M. O. is ellipsoidal. A fundamental property of an ellipse is that a light ray emitted from a focus in any direction is reflected off of the ellipse to the other focus, and the sum of the lengths of the ray paths is constant, 2a.

An oscillating charge $r_0(t) = d \sin w_0 t$ has a Fourier spectrum

$$\bar{J}(\bar{k},\omega) = \frac{q\omega_0 d}{2} J_m(k\cos\theta \, d)\{\delta[\omega - (m+1)\omega_0] + \delta[w - (m-1)\omega_0]\} \quad (156)$$

where $J_m$'s are Bessel functions of order m. These Fourier components can, and do, acquire phase velocities that are equal to the velocity of light. Consider two oscillating charges at the foci of an ellipsoidal resonator cavity, an ellipsoidal M. O. A nonradiative standing electromagnetic wave can be excited which has higher order harmonics in addition to the fundamental frequency as given in Eq. (156). This nonradiative standing wave gives rise to zero order vibration of the molecule. The zero order mode is a standing wave with destructive interference of all harmonics of the fundamental frequency, $\omega_0$. A ray undergoes a 180° phase shift upon reflection, and the' protons oscillate in opposite relative directions. Thus, mutual destructive interference occurs when x, the distance from one focus to the other for a reflected ray is equal to a wavelength, $\lambda$, where $\lambda$ is

$$\lambda = \frac{h}{m \, v} \quad (157)$$

It follows that

$$v = \frac{h}{m\lambda} = \frac{h}{m \, x} \quad (158)$$

For time harmonic motion,

$$v = v_{average} = \frac{v_{maximum}}{\sqrt{2}} \quad (159)$$

The kinetic energy, T, is given by

$$T = \frac{1}{2} m v^2 \quad (160)$$

The vibrational energy of the protons, $E_{Pvib}$, is equal to the maximum vibrational kinetic energy of the protons. Substitution of Eqs. (158) and (159) into Eq. (160) and multiplication by two corresponding to the two protons is

$$T = T_{max} = 2 \frac{1}{2} m \frac{h^2}{m^2 x^2} (\sqrt{2})^2 = 2 \frac{h^2}{m x^2} \quad (161)$$

The vibrational energy is the sum of the vibrational energy of the electron M. O. and that of the protons which are equal.

$$E_{vib} \approx \frac{4h^2}{mx^2} \tag{162}$$

where m is the sum of the masses of the protons, each of mass mp.

$$m = m_p \tag{163}$$

And, X is 2a. Thus, the vibrational energy is

$$E_{vib} = \frac{h^2}{m_p a^2} \tag{164}$$

For a in units of $a_o$,

$$E_{vib} = \frac{.59}{a^2} eV \tag{165}$$

The time average internuclear distance is increased by the zero order vibration because the total energy verses internuclear distance function is asymmetrical with a lower slope for internuclear distances greater than the internuclear distance at which the total energy is a minimum. Elongation occurs along the principle axis, and shifts the the total energy verses internuclear distance function to a new function which includes the contribution due to vibration. The perturbation of $E_T$, the total energy of the M. O. given by Eq. (152) with a fractional increase in the semimajor axis, a, and the reciprocal decrease in the semiminor axis, b is calculated by reiteration. The angular frequency of the M.O. given by Eq. (100) is unchanged when a and b are changed by reciprocal fractions. The corrected a and b are obtained when the change in $E_T$ is equal to the vibrational energy. The vibrational energy is the sum of two equal components, the vibrational energy of the protons and the vibrational energy of the electron M. O. Vibration causes a redistribution of energy within the molecule. The M.O. potential and kinetic energy terms given by Eqs. (135), (137), and (148) add $\pi$ radians out of phase with the potential and kinetic energies of vibration; thus, the energy of the molecule will decrease by this amount which is equal to one half the vibrational energy. An x% increase in the semimajor axis and the reciprocal decrease in the semiminor axis decreases $E_T$ by the vibrational energy and releases energy equal to one half vibrational energy. Substitution of $a = (1 + \frac{x}{100}) \frac{2a_o}{p}$ and $b = \frac{1}{(1 + \frac{x}{100})} \frac{\sqrt{3}}{p} a_o$ into Eqs. (149), (150), (151), and (152) and (154) with the reduction of the total energy by one half the vibrational energy is

$$E_D = E(H\left[\frac{a_o}{p}\right]) - E_{T zero\ order} - \frac{E_{vib}}{2} \tag{166}$$

Eq. (166) is the bond dissociation energy where $E_{vib}$ is given by Eq. (167).

Substitution of $a = (1 + \frac{x}{100}) \frac{2a_o}{p}$ into Eq. (165) is

$$E_{vib} = \frac{0.59}{\left[ (1 + \frac{x}{100}) \frac{2a_0}{p} \right]^2} \text{ eV} \qquad (167)$$

Zero order vibration arises because the state is nonradiative and is an energy minimum. Furthermore, electromagnetic radiation of discrete energies given by Eq. (165) can be trapped in the resonator cavity where constructive interference occurs at the foci. These standing waves change the electric field at the ellipse surface as described in the Excited States Section of The Unification of Spacetime, the Forces, Matter, and Energy, Mills, R., Technomics Publishing Company, Lancaster, PA, (1992); thus, the major and minor axes increase and the total energy of the molecule given by Eqs. (149), (150), (151), and (152) increases. The photons of these standing waves drive the vibration of the molecule at a higher frequency than the zero order frequency, but are reradiated. The energy of a vibrational transition is given by the difference of the sum of the energies of the modes excited before and after the transition. The modes are quantized, and from Eq. (165), the energy spacing of the modes is closer together as the total vibrational energy increases.

Excited Electronic States of Ellipsoidal M. O. 's

Excited states of orbitspheres are discussed in the Excited States of the One Electron Atom (Quantization) Section of The Unification of Spacetime, the Forces, Matter, and Energy, Mills, R., Technomics Publishing Company, Lancaster, PA, (1992). In the case of ellipsoidal M. O. 's, excited electronic states are created when photons of discrete frequencies are trapped in the ellipsoidal resonator cavity of the M. O. The photon changes the effective charge at the M. O. surface where the central field is ellipsoidal and arises from the protons and the effective charge of the trapped photon at the foci of the M. O. Force balance is achieved at a series of ellipsoidal equipotential two dimensional surfaces confocal with the ground state ellipsoid. The trapped photons are solutions of the Laplacian in ellipsoidal coordinates, Eq. (103).

Magnetic Moment of an Ellipsoidal M. O.

The magnetic dipole moment, $\mu$, of a current loop is

$$\mu = iA \qquad (168)$$

The area of an ellipse is given by Eq. (101). For any elliptic orbital due to a central field, the frequency, f, is

$$f = \frac{\frac{L}{m}}{2\pi\,ab} \qquad (169)$$

where L is the angular momentum. The current, i, is

$$i = ef = \frac{\frac{eL}{m_e}}{2\pi\,ab} \qquad (170)$$

where e is the charge. Substitution of Eqs. (170) and (101) into Eq. (168) where L is the angular momentum of the electron, h ,is

$$\mu = \frac{e\hbar}{2\,m} \qquad (171)$$

which is the Bohr magneton.

Magnetic Field of an Ellipsoidal M. O.

The magnetic field can be solved as a magnetostatic boundary value problem which is equivalent to that of a uniformly magnetized ellipsoid (See Stratton, J. A., Electromagnetic Theory, McGraw-Hill Book Company, (1941), p. 257). The magnetic scalar potential inside the ellipsoidal M. O., $\phi^-$, is

$$\phi^- = \frac{e\hbar}{2m_e} x \int_0^\infty \frac{ds}{(s + a^2)R_s} \qquad (172)$$

The magnetic scalar potential outside of the M. O., $\phi^+$, is

$$\phi^+ = \frac{e\hbar}{2m_e} x \int_\xi^\infty \frac{ds}{(s + a^2)R_s} \qquad (173)$$

The magnetic field inside the ellipsoidal M. O., $H^-_x$, is

$$H^-_x = -\frac{\delta\phi^-}{\delta x} = \frac{-e\hbar}{2m_e} \int_0^\infty \frac{ds}{(s + a^2)R_s} \qquad (174)$$

The magnetic field inside the ellipsoidal M. O. is uniform and parallel to the minor axis.

HYDROGEN-TYPE MOLECULES

Force Balance

Hydrogen-type molecules comprise two indistinguishable electrons bound by an elliptic field. Each electron experiences a centrifugal force, and the balancing centripetal force (on each electron) is produced by the electric force between the electron and the elliptic electric field and the magnetic force between the two electrons causing the electrons to pair. In the present case of hydrogen-type molecules, if the eccentricity equals $\frac{1}{\sqrt{2}}$, then the vectorial projection of the magnetic force between the electrons, $\sqrt{\frac{3}{4}}$ of Eq. (3.15) of the Two Electron Atom Section of The Unification of Spacetime, the Forces, Matter, and Energy, Mills, R., Technomics Publishing Company, Lancaster, PA, (1992), is one. The molecules will be solved by self consistency. Assume $e = \frac{1}{\sqrt{2}}$, then the force balance equation given by Eq. (3.18) of the Two Electron Atom Section of The Unification of Spacetime, the Forces, Matter, and Energy, Mills, R., Technomics Publishing Company, Lancaster, PA, (1992) and Eq. (133) is

$$\frac{\hbar^2}{m_e a^2 b^2} 2ab^2 X = \frac{pe^2}{4\pi\varepsilon_0} X + \frac{\hbar^2}{2m_e a^2 b^2} 2ab^2 X \qquad (175)$$

$$\frac{2a_0}{p\,a} - \frac{a_0}{p\,a} = 1 \qquad\qquad (176)$$

$$a = \frac{a_0}{p} \qquad\qquad (177)$$

Substitution of Eq. (177) into (142) is

$$c' = \frac{1}{p\sqrt{2}}\,a_0 \qquad\qquad (178)$$

Substitution of Eqs. (177) and (178) into Eq. (144) is

$$b = c = \frac{1}{p\sqrt{2}}\,a_0 \qquad\qquad (179)$$

Substitution of Eqs. (177) and (178) into Eq. (146) is

$$e' = \frac{1}{\sqrt{2}} \qquad\qquad (180)$$

The eccentricity is $\dfrac{1}{\sqrt{2}}$ ; thus, the present self consistent solution which was obtained as a boundary value problem is coriect.

The internuclear distance given by multiplying Eq. (178) by two is $\dfrac{a_0\sqrt{2}}{p}$ .

Energies of the Hydrogen-Type Molecules

The energy components defined previously for the molecular ion, Eqs. (149-153), apply in the case of the corresponding molecule. And, each molecular energy component is given by the integral of corresponding force in Eq. (175) where each energy component is the total for the two equivalent electrons. The parameters a and b are given by Eqs. (177) and (179), respectively.

$$V_e = \frac{-2pe^2}{8\pi\varepsilon_0\sqrt{a^2 - b^2}}\,\ln\frac{a + \sqrt{a^2 - b^2}}{a - \sqrt{a^2 - b^2}} \qquad\qquad (181)$$

$$V_p = \frac{p\;\;\;e^2}{8\pi\varepsilon_0\sqrt{a^2 - b^2}} \qquad\qquad (182)$$

$$T = \frac{\hbar^2}{2m_e a\sqrt{a^2 - b^2}} \; \ln\frac{a + \sqrt{a^2 - b^2}}{a - \sqrt{a^2 - b^2}} \tag{183}$$

The energy, $V_m$ , corresponding to the magnetic force of Eq. (175) is

$$V_m = \frac{-\hbar^2}{4m_e a\sqrt{a^2 - b^2}} \; \ln\frac{a + \sqrt{a^2 - b^2}}{a - \sqrt{a^2 - b^2}} \tag{184}$$

$$E_T = V_e + T + V_m + V \tag{185}$$

$$E_T = -13.6 \; eV \left[ \left( 2p^2\sqrt{2} - p^2\sqrt{2} + \frac{p^2\sqrt{2}}{2} \right) \ln\frac{\sqrt{2} + 1}{\sqrt{2} - 1} - p^2\sqrt{2} \right] \tag{186}$$

$$E\left( 2 \; H\left[ \frac{a_0}{p} \right] \right) = -2p^2 13.6 \; eV \tag{187}$$

The bond dissociation energy, $E_D$, is the difference between the binding energy of the corresponding hydrogen atoms or hydrino atoms and $E_T$.

$$E_D = E\left( 2 \; H\left[ \frac{a_0}{p} \right] \right) - E_T \tag{188}$$

As in the case of the hydrogen-type molecular ion, the time averaged internuclear distance is increased by the zero order molecular vibration. A y% increase in the semimajor axis and the reciprocal decrease in the semiminor axis releases energy which is equal to one half the vibrational energy.

Substitution of $a = \left( 1 + \frac{y}{100} \right) \frac{a_0}{p}$ and $b = \frac{1}{\left( 1 + \frac{y}{100} \right)} \frac{1}{p} \frac{1}{\sqrt{2}} a_0$ into Eqs. (181-188) with the reduction of the total energy by one half the vibrational energy is

$$E_D = E\left( H\left[ \frac{a_0}{p} \right] \right) - E_{T \; zero \; order} - \frac{E_{vib}}{2} \tag{189}$$

Eq. (189) is the bond dissociation energy where $E_{vib}$ is given by Eq. (190).

Substitution of $a = \left( 1 + \frac{y}{100} \right) \frac{a_0}{p}$ into Eq. (165) is

$$E_{vib} = \frac{0.59}{\left[(1 + \frac{y}{100}) \frac{a_0}{p}\right]^2} \ eV \qquad (190)$$

THE HYDROGEN MOLECULAR ION $H_2\left[2c' = \sqrt{2} \ a_0\right]^+$

Force balance between the electric and centripetal forces is given by Eq. (133) where p = 1

$$\frac{\hbar^2}{m_e a^2 b^2} 2ab^2 X = \frac{e^2}{4\pi\varepsilon_0} X \qquad (191)$$

which has the parametric solution given by Eq. (127) when

$$a = 2a_0. \qquad (192)$$

The semimajor axis, a, is also given by Eq. (134) where p = 1. The internuclear distance, 2c', which is the distance between the foci is given by Eq. (143) where p = 1.

$$2c' = 2a_0 \qquad (193)$$

The experimental internuclear distance is $2a_0$.
The semiminor axis is given by Eq. (145) where p = 1.

$$b = \sqrt{3} \ a_0 \qquad (194)$$

The eccentricity, e, is given by Eq. (147).

$$e = \frac{1}{2} \qquad (195)$$

Energies of the Molecular Hydrogen Ion

The potential energy, $V_e$, of, the electron M. O. in the field of the protons at the foci (x = 0) is given by Eq. (135) where p = 1

$$V_e = \frac{-4e^2}{8\pi\varepsilon_0\sqrt{a^2 - b^2}} \ln \frac{a + \sqrt{a^2 - b^2}}{a - \sqrt{a^2 - b^2}} \qquad (196)$$

The potential energy, Vp, due to proton-proton repulsion is given by Eq. (148) where p = 1

$$V_p = \frac{e^2}{8\pi\varepsilon_0\sqrt{a^2 - b^2}} \qquad (197)$$

The kinetic energy, T, of the electron M. O. is given by Eq. (137) where p = 1

$$T = \frac{2\hbar^2}{m_e a \sqrt{a^2 - b^2}} \ln \frac{a + \sqrt{a^2 - b^2}}{a - \sqrt{a^2 - b^2}} \qquad (198)$$

Substitution of a and b given by Eqs. (192) and (194), respectively, into Eqs. (196) (197), and (198) is

$$V_e = \frac{-4e^2}{8\pi\varepsilon_0 a_0} \ln 3 = -59.763 eV \qquad (199)$$

$$V_p = \frac{e^2}{8\pi\varepsilon_0 a_0} = 13.6 \ eV \qquad (200)$$

$$T = \frac{e^2}{8\pi\varepsilon_0 a_0} \ln 3 = 29.88 \ eV \qquad (201)$$

$$E_T = V_e + V_p + T \qquad (202)$$

$$E_T = -16.282 \ eV \qquad (203)$$

$$E( H[a_0] ) = -13.6 \ eV$$

$$E_T = V_e + V_p + T \qquad (204)$$

$$E_T = 13.6 \ eV \ ( -4\ln 3 \ + \ 1 \ + \ 2\ln 3 ) \qquad (205)$$

The bond dissociation energy, $E_D$, is the difference between the binding energy of the corresponding hydrogen atom and $E_T$

$$E_D = E( H[a_0] ) - E_T = 2.68 \ eV \qquad (206)$$

Eqs. (199-206) are equivalent to Eqs. (149-154) where p = 1.

Vibration

It can be shown that a perturbation of the orbit determined by an inverse square force results in simple harmonic oscillatory motion of the orbit. Zero order vibration arises because the state is nonradiative and is an energy minimum. The time average internuclear distance is increased by the zero order vibration. A 0.1% increase in the semimajor axis and the reciprocal decrease in the semiminor axis decreases $E_T$ by the vibration energy and releases energy equal to one half the vibrational energy. Substitution of a = 2.002 $a_O$ and b = 1.7303 $a_O$ into Eqs. (196), (197), (198), and (204) and (206) with the reduction of the total energy by one half the vibrational energy is

$$E_D = E(\ H[a_0]\ ) - E_{T\ zero\ order} - \frac{E_{vib}}{2} = 2.76\ eV \qquad (207)$$

Eq. (207) is the bond dissociation energy where $E_{vib}$ is given by Eq. (208). The experimental value is 2.78 eV. Substitution of a = 2.002 $a_0$ into Eq. (165) is

$$E_{vib} = 0.147\ eV \qquad (208)$$

THE HYDROGEN MOLECULE $H_2\left[ 2c' = \sqrt{2}\ a_0 \right]$

Force Balance

The force balance equation for the hydrogen molecule is given by Eq. (175) where p = 1

$$\frac{\hbar^2}{m_e a^2 b^2}\ 2ab^2\ X = \frac{e^2}{4\pi\varepsilon_0}X + \frac{\hbar^2}{2m_e a^2 b^2}\ 2ab^2\ X \qquad (209)$$

which has the parametric solution given by Eq. (127) when

$$a = a_0 \qquad (210)$$

The semimajor axis; a, is also given by Eq. (177) where p = 1. The internuclear distance, 2c', which is the distance between the foci is given by Eq. (178) where p = 1.

$$2c' = \sqrt{2}\ a_0 \qquad (211)$$

The experimental internuclear distance is $\sqrt{2}\ a_O$. The semiminor axis is given by Eq. (179) where p = 1.

$$b = \frac{1}{\sqrt{2}}\ a_0 \qquad (212)$$

The eccentricity, e, is given by Eq. (180).

$$e = \frac{1}{\sqrt{2}} \qquad (213)$$

Energies of the Hydrogen Molecule

The energies of the hydrogen molecule are given by Eqs. (181-187) where p = 1

$$V_e = \frac{-2e^2}{8\pi\varepsilon_0\sqrt{a^2 - b^2}} \ln \frac{a + \sqrt{a^2 - b^2}}{a - \sqrt{a^2 - b^2}} = -67.813 \text{ eV} \qquad (214)$$

$$V_p = \frac{e^2}{8\pi\varepsilon_0\sqrt{a^2 - b^2}} = 19.23 \text{ eV} \qquad (215)$$

$$T = \frac{\hbar^2}{2m_e a\sqrt{a^2 - b^2}} \ln \frac{a + \sqrt{a^2 - b^2}}{a - \sqrt{a^2 - b^2}} = 33.906 \text{ eV} \qquad (216)$$

The energy, $V_m$, of the magnetic force is

$$V_m = \frac{-\hbar^2}{4m_e a\sqrt{a^2 - b^2}} \ln \frac{a + \sqrt{a^2 - b^2}}{a - \sqrt{a^2 - b^2}} = -16.9533 \text{ eV} \qquad (217)$$

$$E_T = V_e + T + V_m + V_p \qquad (218)$$

$$E_T = -13.6 \text{ eV} \left[ \left( 2\sqrt{2} - \sqrt{2} + \frac{\sqrt{2}}{2} \right) \ln \frac{\sqrt{2} + 1}{\sqrt{2} - 1} - \sqrt{2} \right] = -31.63 \text{ eV} \qquad (219)$$

$$E( 2 H[a_0] ) = -27.21 \text{ eV} \qquad (220)$$

The bond dissociation energy, $E_D$, is the difference between the binding energy of the corresponding hydrogen atoms and $E_T$.

$$E_D = E( 2 H[a_0] ) - E_T = 4.43 \text{ eV} \qquad (221)$$

As in the case of the hydrogen molecular ion, the time averaged internuclear distance is increased by the zero order molecular vibration. A 0.7% increase in the semimajor axis and the reciprocal decrease in the semiminor axis releases energy which is equal to one half the vibrational energy. Substitution of a = 1.007 $a_0$ and b = 0.702 $a_0$ into Eqs. (214-221) with the reduction of the total energy by one half the vibrational energy is

$$ED = E(2\,H[a_o]) - ET_{zero\ order} - \frac{E_{vib}}{2} = -27.21 + 31.94 = 4.73\ eV \tag{222}$$

Eq. (222) is the bond dissociation energy where $E_{vib}$ is given by Eq. (223). The experimental value is 4.75 eV. Substitution of $a = 1.005\ a_o$ into Eq. (165) is

$$E_{vib} = 0.582\ eV \tag{223}$$

The experimental value is 0.55 eV which is calculated using the quantum harmonic oscillator approximation with the experimental value of the first vibrational transition.

THE DIHYDRINO MOLECULAR ION $H^{*}{}_{2}\left[2c' = a_o\right]^{+}$

Force balance between the electric and centripetal forces is given by Eq. (133) where $p = 2$

$$\frac{\hbar^2}{m_e a^2 b^2}\, 2ab^2\, X = \frac{2e^2}{4\pi\varepsilon_0}\, X \tag{224}$$

which has the parametric solution given by Eq. (127) when

$$a = a_0 \tag{225}$$

The semimajor axis, $a$, is also given by Eq. (134) where $p = 2$. The internuclear distance, $2c'$, which is the distance between the foci is given by Eq. (143) where $p = 2$.

$$2c' = a_0 \tag{226}$$

The semiminor axis is given by Eq. (145) where $p = 2$.

$$b = \frac{\sqrt{3}}{2}\, a_0 \tag{227}$$

The eccentricity, $e$, is given by Eq. (147).

$$e = \frac{1}{2} \tag{228}$$

Energies of the Dihydrino Molecular Ion $H^{*}{}_{2}\left[2c' = a_o\right]^{+}$

The potential energy, $V_e$, of the electron M. O. in the field of magnitude twice that of the protons at the foci ($x = 0$) is given by Eq. (135) where $p = 2$

$$V_e = \frac{-8e^2}{8\pi\varepsilon_0\sqrt{a^2 - b^2}} \ln \frac{a + \sqrt{a^2 - b^2}}{a - \sqrt{a^2 - b^2}} \qquad (229)$$

The potential energy, Vp, due to proton-proton repulsion in the field of magnitude twice that of the protons at the foci ($\xi$ = 0) is given by Eq. (148) where p = 2

$$V_p = \frac{2e^2}{8\pi\varepsilon_0\sqrt{a^2 - b^2}} \qquad (230)$$

The kinetic energy, T, of the electron M. O. is given by Eq. (137) where p = 2

$$T = \frac{2\hbar^2}{m_e a\sqrt{a^2 - b^2}} \ln \frac{a + \sqrt{a^2 - b^2}}{a - \sqrt{a^2 - b^2}} \qquad (231)$$

Substitution of a and b given by Eqs. (225) and (227), respectively, into Eqs. (229), (230), and (231) is

$$V_e = \frac{-16e^2}{8\pi\varepsilon_0 a_0} \ln 3 = -239.058 \text{ eV} \qquad (232)$$

$$V_p = \frac{4e^2}{8\pi\varepsilon_0 a_0} = 54.42 \text{ eV} \qquad (233)$$

$$T = \frac{8e^2}{8\pi\varepsilon_0 a_0} \ln 3 = 119.53 \text{ eV} \qquad (234)$$

$$E(H\left[\frac{a_0}{2}\right]) = -54.4 \text{ eV} \qquad (235)$$

$$E_T = V_e + V_p + T \qquad (236)$$

$$E_T = 13.6 \text{ eV} (-16\ln 3 + 4 + 8\ln 3) = -65.09 \text{ eV} \qquad (237)$$

The bond dissociation energy. $E_D$, is the difference between the binding energy of the corresponding hydrino atom and $E_T$.

$$E_D = E(H\left[\frac{a_o}{2}\right]) - E_T = 10.69 \text{ eV} \qquad (238)$$

Eqs. (232-238) are equivalent to Eqs. (149-154) where p = 2.

Vibration

It can be shown that a perturbation of the orbit determined by an inverse square force results in simple harmonic oscillatory motion of the orbit. Zero order vibration arises because the state is nonradiative and is an energy minimum. The time average internuclear distance is increased by the zero order vibration. A 0.15% increase in the semimajor axis and the reciprocal decrease in the semiminor axis decreases' $E_T$ by the vibrational energy and releases energy equal to one half the vibrational energy. Substitution of a = 1.0015 $a_o$ and b = 0.8647 $a_o$ into Eqs. (229), (230), (231), and (236) and (238) with the reduction of the total energy by one half the vibrational energy is

$$E_D = E(H\left[\frac{a_o}{2}\right]) - E_{T \text{ zero order}} - \frac{E_{vib}}{2} = -54.4 + 65.39 = 10.99 \text{ eV} \qquad (239)$$

Eq. (239) is the bond dissociation energy where $E_{vib}$ is given by Eq. (240). Substitution of a = 1.0015 $a_O$ into Eq. (165) is

$$E_{vib} = 0.588 \text{ eV} \qquad (240)$$

THE DHIYDRINO MOLECULE $H^*_2\left[2c' = \frac{a_o}{\sqrt{2}}\right]$

Force Balance

The force balance equation for the dihydrino molecule $H^*_2\left[2c' = \frac{a_o}{\sqrt{2}}\right]$ is given by Eq. (175) where p = 2

$$\frac{\hbar^2}{m_e a^2 b^2} 2ab^2 X = \frac{2e^2}{4\pi\varepsilon_0} X + \frac{\hbar^2}{2m_e a^2 b^2} 2ab^2 X \qquad (241)$$

which has the parametric solution given by Eq. (127) when

$$a = \frac{a_O}{2}. \qquad (242)$$

The semimajor axis, a, is also given by Eq. (177) where p = 2. The internuclear distance, 2c', which is the distance between the foci is given by Eq. (178) where p = 2.

$$2c' = \frac{1}{\sqrt{2}} a_0 \tag{243}$$

The semiminor axis is given by Eq. (179) where p = 2.

$$b = c = \frac{1}{2\sqrt{2}} a_0 \tag{244}$$

The eccentricity, e, is given by Eq. (180).

$$e = \frac{1}{\sqrt{2}} \tag{245}$$

Energies of the Dihydrino Molecule $H^*_2\left[2c' = \dfrac{a_0}{\sqrt{2}}\right]$ The energies of the dihydrino molecule

$H^*_2\left[2c' = \dfrac{a_0}{\sqrt{2}}\right]$ are given by Eqs. (181-187) where p = 2

$$V_e = \frac{-4e^2}{8\pi\varepsilon_0\sqrt{a^2 - b^2}} \ln\frac{a + \sqrt{a^2 - b^2}}{a - \sqrt{a^2 - b^2}} = -271.23 \text{ eV} \tag{246}$$

$$V_p = \frac{2}{8\pi\varepsilon_0} \frac{e^2}{\sqrt{a^2 - b^2}} = 76.93 \text{ eV} \tag{247}$$

$$T = \frac{\hbar^2}{2m_e a\sqrt{a^2 - b^2}} \ln\frac{a + \sqrt{a^2 - b^2}}{a - \sqrt{a^2 - b^2}} = 135.614 \text{ eV} \tag{248}$$

The energy, $V_m$, of the magnetic force is

$$V_m = \frac{-\hbar^2}{4m_e a\sqrt{a^2 - b^2}} \ln\frac{a + \sqrt{a^2 - b^2}}{a - \sqrt{a^2 - b^2}} = -67.8069 \text{ eV} \tag{249}$$

$$E_T = V_e + T + V_m + V_p \tag{250}$$

$$E_T = -13.6 \text{ eV} \left[ \left( 8\sqrt{2} - 4\sqrt{2} + \frac{4\sqrt{2}}{2} \right) \ln \frac{\sqrt{2} + 1}{\sqrt{2} - 1} - 4\sqrt{2} \right] = -126.5 \text{ eV} \qquad (251)$$

$$E(2 \text{ H}\left[ \frac{a_0}{2} \right]) = -2(54.4) \text{ eV} \qquad (252)$$

The bond dissociation energy, $E_D$, is the difference between the binding energy of the corresponding hydrino atoms and $E_T$.

$$E_D = E(2 \text{ H}\left[ \frac{a_0}{2} \right]) - E_T = 17.688 \text{ eV} \qquad (253)$$

As in the case of the dihydrino molecular ion, the time averaed internuclear distance is increased by the zero order molecular vibration. A 0.7% increase in the semimajor axis and the reciprocal decrease in the semiminor axis releases energy which is equal to one half the vibrational energy. Substitution of $a = 0.5035 \, a_0$ and $b = 0.351 \, a_0$ into Eqs. (246-253) with the reduction of the total energy by one half the vibrational energy is

$$E_D = E(2 \text{ H}\left[ \frac{a_0}{2} \right]) - E_{T \text{ zero order}} - \frac{E_{vib}}{2} = -108.8 + 127.66 = 18.86 \text{ eV} \qquad (254)$$

Eq. (254) is the bond dissociation energy where $E_{vib}$ is given by Eq. (255). Substitution of $a = 0.5035 \, a_0$ into Eq. (165) is

$$E_{vib} = 2.33 \text{ eV} \qquad (255)$$

Ionization Energies

The first ionization energy, $IP_1$, of the dihydrino molecule

$$H^*_2\left[ 2c' = \frac{\sqrt{2} \, a_0}{2} \right] \rightarrow H^*_2\left[ 2c' = a_0 \right]^+ + e^- \qquad (256)$$

is given by Eqs.(236) and (250) with zero order vibration, Eqs. (239) and (254), respectively.

$$IP_1 = E_T(H^*_2\left[ 2c' = a_0 \right]^+) - E_T(H^*_2\left[ 2c' = \frac{\sqrt{2} \, a_0}{2} \right]) \qquad (257)$$

$$IP_1 = -65.39 \text{ eV} + 127.66 \text{ eV} = 62.27 \text{ eV} \qquad (258)$$

The second ionization energy, $IP_2$, is given by Eq. (236) with zero order vibration, Eq (239).

$$IP_2 = 65.39 \text{ eV} \qquad (259)$$

A hydrino atom can react with a hydrogen, deuterium, or tritium nucleus to form a hydrino molecular ion that further reacts with an electron to form a dihydrino molecule.

$$H\left[\frac{a_o}{p}\right] + H^+ + e^- \rightarrow H^*_2\left[2c' = \frac{\sqrt{2}\ a_o}{p}\right] \qquad (260)$$

The energy released is

$$E = E\left(H\left[\frac{a_o}{p}\right]\right) - E_T \qquad (261)$$

where $E_T$ is given by Eq. (250) with zero order vibration, Eq. (254).

A hydrino atom can react with a hydrogen, deuterium, or tritium atom to form a dihydrino molecule.

$$H\left[\frac{a_o}{p}\right] + H[a_o] \rightarrow H^*_2\left[2c' = \frac{\sqrt{2}\ a_o}{p}\right] \qquad (262)$$

The energy released is

$$E = E\left(H\left[\frac{a_o}{p}\right]\right) + E(H[a_o]) - E_T \qquad (263)$$

where $E_T$ is given by Eq. (250) with zero order vibration, Eq. (254).

Below "Ground State" Transitions of Hydrogen-Type Molecules and Molecular Ions

Excited states of orbitspheres are discussed in the Excited States of the One Electron Atom (Quantization) Section of The Unification of Spacetime, the Forces, Matter, and Energy, Mills, R., Technomics Publishing Company, Lancaster, PA, (1992). In the case of ellipsoidal M. O. 's, excited electronic states are created when photons of discrete frequencies are trapped in the ellipsoidal resonator cavity of the M. O. The photon changes the effective charge at the M. O. surface where the central field is ellipsoidal and arises from the protons and the effective charge of the trapped photon at the foci of the M. O. Force balance is achieved at a series of ellipsoidal equipotential two dimensional surfaces confocal with the ground state ellipsoid. The trapped photons are solutions of the Laplacian in ellipsoidal coordinates, Eq. (103).

As is the case with the orbitsphere, higher and lower energy states are equally valid. The photon standing wave in both cases is a solution of the Laplacian in ellipsoidal coordinates. For an ellipsoidal resonator cavity, the relationship between an allowed circumference, 4aE, and the photon standing wavelength, $\lambda$, is

$$4aE = n\lambda \qquad (264)$$

where n is an integer and where

$$k = \frac{\sqrt{a^2 - b^2}}{a} \qquad (265)$$

is used in the elliptic integral E of Eq. (264). Applying Eqs. (264) and (265), the relationship between an allowed angular frequency given by Eq. (100) and the photon standing wave angular frequency, $\omega$, is:

$$\frac{\pi \hbar}{m_e A} = \frac{\hbar}{m_e n a_1 n b_1} = \frac{\hbar}{m_e a_{\dot{n}} b_n} = \frac{1}{n^2} \omega_1 = \omega_n \qquad (266)$$

where n = 1, 2, 3, 4, ...

$$n = \frac{1}{2}, \frac{1}{3}, \frac{1}{4}, \dots$$

$\omega_1$ is the allowed angular frequency fnr n = 1

$a_1$ and $b_1$ are the allowed semimajor and semiminor axes for n = 1

## ENERGY HOLES

From Eq. (266), the magnitude of the elliptic field corresponding to a below "ground state" transition of the hydrogen molecule is an integer. The potential energy equations of hydrogen-type molecules are

$$V_e = \frac{-p \, 2e^2}{8\pi\varepsilon_0 \sqrt{a^2 - b^2}} \ln \frac{a + \sqrt{a^2 - b^2}}{a - \sqrt{a^2 - b^2}} \qquad (267)$$

$$V_p = \frac{p}{8\pi\varepsilon_0 \sqrt{a^2 - b^2}} e^2 \qquad (268)$$

where

$$a = \frac{a_0}{p} \qquad (269)$$

$$b = \frac{1}{p \sqrt{2}} a_0 \qquad (270)$$

$$c' = \sqrt{a^2 - b^2} = \frac{\sqrt{2} \, a_0}{2p} \qquad (271)$$

and where p is an integer. (These energies are approximate in that they do not include the energy component corresponding to zero order vibration. The exact energies are given by Eqs. (267-268) where the parameters a and b are those given by Eqs. (269-270) with the correction for zero order vibration as given in the Vibration Section). From energy conservation, the resonance energy hole of a hydrogen-type molecule which causes the transition

$$H^*_2\left[2c' = \frac{\sqrt{2}\ a_0}{p}\right] \rightarrow H^*_2\left[2c' = \frac{\sqrt{2}\ a_0}{p + m}\right] \quad (272)$$

$$mp^2 \text{ X } 48.6 \text{ eV} \quad (273)$$

where m and p are integers. During the transition, the elliptic field is increased from magnitude p to magnitude p + m. The corresponding potential energy change equals the energy absorbed by the energy hole.

$$\text{Energy hole } = -V_e - V_p = mp^2 \text{ X } 48.6 \text{ eV} \quad (274)$$

Further energy is released by the hydrogen-type molecule as the internuclear distance "shrinks". The total energy, $E_T$, released during the transition is

$$E_T = -13.6 \text{ eV}\left[\left(2(m+p)^2\sqrt{2} - (m+p)^2\sqrt{2} + \frac{(m+p)^2\sqrt{2}}{2}\right)\ln\frac{\sqrt{2}+1}{\sqrt{2}-1} - (m+p)^2\sqrt{2}\right]$$
$$+ 13.6 \text{ eV}\left[\left(2p^2\sqrt{2} - p^2\sqrt{2} + \frac{p^2\sqrt{2}}{2}\right)\ln\frac{\sqrt{2}+1}{\sqrt{2}-1} - p^2\sqrt{2}\right] \quad (275)$$

(This energy is approximate in that it does not include the energy component corresponding to zero order vibration. The exact energy is given by Eq. (275) with the correction for zero order vibration as given in the Vibration Section).

A schematic drawing of the total energy well of hydrogen-type molecules and molecular ions is given in FIGURE 3. The exothermic reaction involving transitions from one potential energy level to a lower level is also hereafter referred to as HECTER (Hydrogen Emission by Catalytic Thermal Electronic Relaxation).

A hydrogen-type molecule with its electrons in a lower than "ground state" energy level corresponding to a fractional quantum number is hereafter referred to as a dihydrino molecule. The designation for a dihydrino molecule of internuclear distance, $2c' = \dfrac{\sqrt{2}\ a_0}{p}$ where p is an integer, is $H^*_2\left[2c' = \dfrac{\sqrt{2}\ a_0}{p}\right]$. A schematic drawing of the size of hydrogen-type molecules as a function of total energy is given in FIGURE 4.

The magnitude of the elliptic field corresponding to the first below "ground state" transition of the hydrogen molecule is 2. From energy conservation, the resonance energy hole of a hydrogen molecule which excites the transition of the hydrogen molecule with internuclear distance $2c' = \sqrt{2}\ a_0$ to the first below "ground state" with internuclear distance $2c' = \dfrac{1}{\sqrt{2}}\ a_0$ is given by Eqs. (267-271) where the elliptic field is increased from magnitude one to magnitude two:

$$V_e = \frac{-2e^2}{8\pi\varepsilon_0\sqrt{a^2 - b^2}}\ln\frac{a + \sqrt{a^2 - b^2}}{a - \sqrt{a^2 - b^2}} = -67.813 \text{ eV} \quad (276)$$

$$V_p = \frac{-e^2}{8\pi\varepsilon_0\sqrt{a^2 - b^2}} = 19.23 \text{ eV} \qquad (277)$$

$$\text{Energy hole} = -V_e - V_p = 48.6 \text{ eV} \qquad (278)$$

In other words, the elliptic "ground state" field of the hydrogen molecule can be considered as the superposition of Fourier components. The removal of negative Fourier components of energy

$$m \times 48.6 \text{ eV} \qquad (279)$$

where in is an integer, increases the positive electric field inside the ellipsoidal shell by m times the charge of a proton at each focus. The resultant electric field is a time harmonic solution of the Laplacian in ellipsoidal coordinates. The corresponding potential energy change equals the energy absorbed by the energy hole.

$$\text{Energy hole} = -V_e - V_p = m \times 48.6 \text{ eV} \qquad (280)$$

Further energy is released by the hydrogen molecule as the internuclear distance "shrinks". The hydrogen molecule with internuclear distance $2c' = \sqrt{2} a_0$ is caused to undergo a transition to the a below "ground state" level, and the internuclear distance for which force balance and nonradiation are achieved is $2c' = \dfrac{\sqrt{2} a_0}{1 + m}$. In decaying to this internuclear distance from the "ground state", a total energy of

$$-13.6 \text{ eV} \left[ \left( 2(1+m)^2\sqrt{2} - (1+m)^2\sqrt{2} + \frac{(1+m)^2\sqrt{2}}{2} \right) \ln \frac{\sqrt{2} + 1}{\sqrt{2} - 1} - (1+m)^2\sqrt{2} \right]$$

$$+13.6 \text{ eV} \left[ \left( 2\sqrt{2} - \sqrt{2} + \frac{\sqrt{2}}{2} \right) \ln \frac{\sqrt{2} + 1}{\sqrt{2} - 1} - \sqrt{2} \right] \qquad (281)$$

is released.
In a preferred embodiment, energy holes, each of approximately m X 48.6 eV, are provided by electron transfer reactions of reactants including electrochemical reactant(s) (electrocatalytic couple(s)) which cause heat to be released from hydrogen molecules as their electrons are stimulated to relax to quantized potential energy levels below that of the "ground state". The energy removed by an electron transfer reaction, energy hole, is resonant with the hydrogen energy released to stimulate this transition. The source of hydrogen molecules is the production on the surface of a cathode during electrolysis of water in the case of an electrolytic energy reactor and hydrogen gas or a hydride in the case of a pressurized gas energy reactor or gas discharge energy reactor

## CATALYTIC ENERGY HOLE STRUCTURES FOR MOLECULES

### Single Electron Transfer

An energy hole is provided by the transfer of an electron between participating species including atoms, ions, molecules, and ionic and molecular compounds. In one embodiment, the energy hole comprises the transfer of an electron from one species to another species whereby the sum of the ionization energy of the electron donating species minus the ionization energy or electron affinity of the electron accepting species equals approximately $mp^2$ X 48.6 eV where m and p are integers.

Single Electron Transfer (Two Species)

An efficient catalytic system that hinges on the coupling of three resonator cavities involves iron and lithium. For example, the fourth ionization energy of iron is 54.8 eV. This energy hole is obviously too high for resonant absorption. However, $Li^+$ releases 5.392 eV when it is reduced to Li. The combination of $Fe^{3+}$ to $Fe^{4+}$ and $Li^+$ to Li, then, has a net energy change of 49.4 eV.

$$49.4 \text{ eV} + Fe^{3+} + Li^+ + H_2\left[2c' = \sqrt{2} \ a_o\right]$$
$$\rightarrow Fe^{4+} + Li + H^*_2\left[2c' = \frac{\sqrt{2} \ a_o}{2}\right] + 95.7 \text{ eV} \qquad (282)$$

$$Li + Fe^{4+} \rightarrow Li^+ + Fe^{3+} + 49.4 \text{ eV} \qquad (283)$$

And, the overall reaction is

$$H_2\left[2c' = \sqrt{2} \ a_o\right] \rightarrow H^*_2\left[2c' = \frac{\sqrt{2} \ a_o}{2}\right] + 95.7 \text{ eV} \qquad (284)$$

Note that the energy given off as the molecule shrinks is much greater than the energy lost to the energy hole. And, the energy released is large compared to conventional chemical reactions.

An efficient catalytic system that hinges on the coupling of three resonator cavities involves scandium. For example, the fourth ionization energy of scandium is 73.47 eV. This energy hole is obviously too high for resonant absorption. However, $Sc^{3+}$ releases 24.76 eV when it is reduced to $Sc^{2+}$. The combination of $Sc^{3+}$ to $Sc^{4+}$ and $Sc^{3+}$ to $Sc^{2+}$, then, has a net energy change of 48.7 eV.

$$48.7 \text{ eV} + Sc^{3+} + Sc^{3+} + H_2\left[2c' = \sqrt{2} \ a_o\right]$$
$$\rightarrow Sc^{4+} + Sc^{2+} + H^*_2\left[2c' = \frac{\sqrt{2} \ a_o}{2}\right] + 95.7 \text{ eV} \qquad (285)$$

$$Sc^{2+} + Sc^{4+} \rightarrow Sc^{3+} + Sc^{3+} + 48.7 \text{ eV} \qquad (286)$$

And, the overall reaction is

$$H_2\left[2c' = \sqrt{2} \ a_o\right] \rightarrow H^*_2\left[2c' = \frac{\sqrt{2} \ a_o}{2}\right] + 95.7 \text{ eV} \qquad (287)$$

An efficient catalytic system that hinges on the coupling of three resonator cavities involves yttrium. For example, the fourth ionization energy of gallium is 64.00 eV. This energy hole is obviously too high for resonant absorption. However, $Pb^{2+}$ releases 15.03 eV when it is reduced to $Pb^+$. The combination of $Ga^{3+}$ to $Ga^{4+}$ and $Pb^{2+}$ to $Pb^+$, then, has a net energy change of 48.97 eV.

$$48.97 \text{ eV} + Ga^{3+} + Pb^{2+} + H_2 \left[ 2c' = \sqrt{2} \ a_0 \right]$$

$$\rightarrow Ga^{4+} + Pb^+ + H^*_2 \left[ 2c' = \frac{\sqrt{2} \ a_0}{2} \right] + 95.7 \text{ eV} \quad (288)$$

$$Ga^{4+} + Pb^+ \rightarrow Ga^{3+} + Pb^{2+} + 48.97 \text{ eV} \quad (289)$$

And, the overall reaction is

$$H_2 \left[ 2c' = \sqrt{2} \ a_0 \right] \rightarrow H^*_2 \left[ 2c' = \frac{\sqrt{2} \ a_0}{2} \right] + 95.7 \text{ eV} \quad (290)$$

Catalytic systems that hinge on the transfer of one electron from an atom or ion to an atom or ion capable of producing energy holes for shrinking hydrogen molecules are given in the following table. The number in the column following the ion, (n), is the nth ionization energy of the atom. That is for example, $Ga^{3+} + 64.00 \text{ eV} = Ga^{4+} + e-$ and $H^+ + e- = H + 13.60 \text{ eV}$.

| Atom Oxidized | n | nth Ionization Energy (ev) | Atom Reduced | n | nth Ionization Energy (ev) | Energy Hole (ev) |
|---|---|---|---|---|---|---|
| Ga 3 + | 3 | 64.00 | H 1 + | 1 | 13.60 | 50.40 |
| As 4 + | 4 | 63.63 | H 1 + | 1 | 13.60 | 50.03 |
| Y 3 + | 3 | 61.80 | H 1 + | i | 13.60 | 48.20 |
| Mo 4 + | 4 | 61.20 | H 1 + | 1 | 13.60 | 47.60 |
| Sc 3 + | 3 | 73.47 | Hel 1 + | 1 | 24.59 | 48.88 |
| Mn 4 + | 4 | 72.40 | He 1 + | 1 | 24.59 | 47.81 |
| Fe 4 + | 4 | 75.00 | He 1 + | 1 | 24.59 | 50.41 |
| Sr 4 + | 4 | 71.60 | He 1 + | 1 | 24.59 | 47.01 |
| Sn 4 + | 4 | 72.28 | He 1 + | 1 | 24.59 | 47.69 |
| He 1 + | 2 | 54.42 | Li 1 + | 1 | 5.39 | 49.02 |
| He 1 + | 2 | 54.42 | Na 1 + | 1 | 5.14 | 49.28 |
| He 1 + | 2 | 54.42 | Mg 1 + | 1 | 7.65 | 46.77 |
| He 1 + | 2 | 54.42 | Al 1 + | 1 | 5.99 | 48.43 |
| He 1 + | 2 | 54.42 | K 1 + | 1 | 4.34 | 50.08 |
| He 1 + | 2 | 54.42 | Ca 1 + | 1 | 6.11 | 48.30 |
| He 1 + | 2 | 54.42 | Sc 1 + | 1 | 6.54 | 47.88 |
| He 1 + | 2 | 54.42 | Ti 1 + | 1 | 6.82 | 47.60 |
| He 1 + | 2 | 54.42 | V 1 + | 1 | 6.74 | 47.68 |
| He 1 + | 2 | 54.42 | Cr 1 + | 1 | 6.77 | 47.65 |
| He 1 + | 2 | 54.42 | Mn 1 + | 1 | 7.43 | 46.98 |
| He 1 + | 2 | 54.42 | Ni 1 + | 1 | 7.64 | 46.78 |
| He 1 + | 2 | 54.42 | Cu 1 + | 1 | 7.73 | 46.69 |
| He 1 + | 2 | 54.42 | Ga 1 + | 1 | 6.00 | 48.42 |
| He 1+ | 2 | 54.42 | Rb 1 + | 1 | 4.18 | 50.24 |
| He 1 + | 2 | 54.42 | Sr 1 + | 1 | 5.70 | 48.72 |
| He 1 + | 2 | 54.42 | Y 1 + | 1 | 6.38 | 48.04 |
| He 1 + | 2 | 54.42 | Zr 1 + | 1 | 6.84 | 47.58 |
| He 1+ | 2 | 54.42 | Nb 1 + | 1 | 6.88 | 47.54 |
| He 1 + | 2 | 54.42 | Mo 1 + | 1 | 7.10 | 47.32 |
| He 1 + | 2 | 54.42 | Tc 1 + | 1 | 7.28 | 47.14 |
| He 1 + | 2 | 54.42 | Ru 1 + | 1 | 7.37 | 47.05 |
| He 1 + | 2 | 54.42 | Rh 1 + | 1 | 7.46 | 46.96 |
| He 1 + | 2 | 54.42 | Ag 1 + | 1 | 7.58 | 46.84 |
| He 1 + | 2 | 54.4 | In 1 + | 1 | 7.34 | 47.07 |

(continued)

| Atom Oxidized | n | nth Ionization Energy (ev) | Atom Reduced | n | nth Ionization Energy (ev) | Energy Hole (ev) |
|---|---|---|---|---|---|---|
| He 1 + | 2 | 54.42 | Cs 1 + | 1 | 3.89 | 50.52 |
| He 1 + | 2 | 54.42 | Ba 1 + | 1 | 5.21 | 49.20 |
| He 1 + | 2 | 54.42 | La 1 + | 1 | 5.58 | 48.84 |
| He 1 + | 2 | 54.42 | Ce 1 + | 1 | 5.47 | 48.95 |
| He 1 + | 2 | 54.42 | Pr 1 + | 1 | 5.42 | 48.99 |
| He 1 + | 2 | 54.42 | Nd 1 + | 1 | 5.49 | 48.93 |
| He 1 + | 2 | 54.42 | Pm 1 + | 1 | 5.55 | 48.86 |
| He 1 + | 2 | 54.42 | Sm 1 + | 1 | 5.63 | 48.78 |
| He 1 + | 2 | 54.42 | Eu 1 | 1 | 5.67 | 48.75 |
| He 1 + | 2 | 54.42 | Gd 1 + | 1 | 6.14 | 48.28 |
| He 1 + | 2 | 54.42 | Tb 1 + | 1 | 5.85 | 48.57 |
| He 1 + | 2 | 54.42 | Dy 1 + | 1 | 5.93 | 48.49 |
| He 1 + | 2 | 54.42 | Ho 1 + | 1 | 6.02 | 48.40 |
| He 1 + | 2 | 54.42 | Er 1 + | 1 | 6.10 | 48.32 |
| He 1 + | 2 | 54.42 | Tm 1 ± | 1 | 6.18 | 48.23 |
| He 1 + | 2 | 54.42 | Yb 1 + | 1 | 6.25 | 48.16 |
| He 1 + | 2 | 54.42 | Lu 1 + | 1 | 5.43 | 48.99 |
| He 1 + | 2 | 54.42 | Hf 1 + | 1 | 6.60 | 47.82 |
| He 1 + | 2 | 54.42 | Tl 1 + | 1 | 6.11 | 48.31 |
| He 1 + | 2 | 54.42 | Pb 1 + | 1 | 7.42 | 47.00 |
| He 1 + | 2 | 54.42 | Bi 1 + | 1 | 7.29 | 47.13 |
| He 1 + | 2 | 54.42 | Ra 1 + | 1 | 5.28 | 49.14 |
| He 1 + | 2 | 54.42 | Ac 1 + | 1 | 5.20 | 49.22 |
| He 1+ | 2 | 54.42 | Th 1 + | 1 | 6.10 | 48.32 |
| He 1 + | 2 | 54.42 | Pa 1 + | 1 | 5.90 | 48.52 |
| He 1 + | 2 | 54.42 | U 1 + | 1 | 6.05 | 48.37 |
| He 1 + | 2 | 54.42 | Np 1 + | 1 | 6.20 | 48.22 |
| He 1 + | 2 | 54.42 | Pu 1 + | 1 | 6.06 | 48.36 |
| He 1 + | 2 | 54.42 | Am 1 + | 1 | 5.99 | 48.43 |
| He 1 + | 2 | 54.42 | Cm 1 + | 1 | 6.02 | 48.40 |
| He 1 + | 2 | 54.42 | Bk 1 + | 1 | 6.23 | 48.19 |
| He 1 + | 2 | 54.42 | Cf 1 + | 1 | 6.30 | 48.12 |
| He 1 + | 2 | 54.42 | Es 1 + | 1 | 6.42 | 48.00 |

| Atom Oxidized | n | nth Ionization Energy (ev) | Atom Reduced | n | nth Ionization Energy (ev) | Energy Hole (ev) |
|---|---|---|---|---|---|---|
| Fe 3 + | 3 | 54.80 | Li 1 + | 1 | 5.39 | 49.41 |
| Ni 3 + | 3 | 54.90 | Li 1 + | 1 | 5.39 | 49.51 |
| Cu 3 + | 3 | 55.20 | Li 1 + | 1 | 5.39 | 49.81 |
| Kr 3 + | 3 | 52.50 | Li 1 + | 1 | 5.39 | 47.11 |
| In 3 + | 3 | 54.00 | Li 1 + | 1 | 5.39 | 48.61 |
| Li 1 + | 2 | 75.64 | Al 3 + | 3 | 28.45 | 47.19 |
| Li 1 + | 2 | 75.64 | Ar 2 + | 2 | 27.63 | 48.01 |
| Li 1 + | 2 | 75.64 | Ti 3 + | 3 | 27.49 | 48.15 |
| Li 1 + | 2 | 75.64 | As 3 + | 3 | 28.35 | 47.29 |
| Li 1 + | 2 | 75.64 | Rb 2 + | 2 | 27.28 | 48.36 |
| Li 1 + | 2 | 75.64 | Nb 3 + | 3 | 25.04 | 50.60 |
| Li 1 + | 2 | 75.64 | Mo 3 + | 3 | 27.16 | 48.48 |
| Li 1 + | 2 | 75.64 | Ru 3 + | 3 | 28.47 | 47.17 |
| Li 1 + | 2 | 75.64 | In 3 + | 3 | 28.03 | 47.61 |
| Li 1 + | 2 | 75.64 | Sb 3 + | 3 | 25.30 | 50.34 |
| Li 1 + | 2 | 75.64 | Te 3 + | 3 | 27.96 | 47.68 |
| Li 1 + | 2 | 75.64 | Cs 2 + | 2 | 25.10 | 50.54 |
| Li 1 + | 2 | 75.64 | Bi 3 + | 3 | 25.56 | 50.08 |
| Li 2 + | 3 | 122.45 | Li 2 + | 2 | 75.64 | 46.81 |
| Li 2 + | 3 | 122.45 | S 5 + | 5 | 72.68 | 49.77 |
| Li 2 + | 3 | 122.45 | Sc 4 + | 4 | 73.47 | 48.98 |
| Li 2 + | 3 | 122.45 | Mn 5 + | 5 | 72.40 | 50.05 |
| Li 2 + | 3 | 122.45 | Fe 5 + | 5 | 75.00 | 47.45 |
| Li 2 + | 3 | 122.45 | Ni 5 + | 5 | 75.50 | 46.95 |
| Li 2 + | 3 | 122.45 | Sn 5 + | 5 | 72.28 | 50.17 |
| Ar 3 + | 3 | 59.81 | Be 1 + | 1 | 9.32 | 50.49 |
| Zn 3 + | 3 | 59.40 | Be 1 + | 1 | 9.32 | 50.08 |
| Sr 3 + | 3 | 57.00 | Be 1 + | 1 | 9.32 | 47.68 |
| Sb 4 + | 4 | 56.00 | Be 1 + | 1 | 9.32 | 46.68 |
| Te 4 + | 4 | 58.75 | Be 1 + | 1 | 9.32 | 49.43 |
| Ca 3 + | 3 | 67.10 | Be2+ | 2 | 18.21 | 48.89 |
| V 4 + | 4 | 65.23 | Be 2 + | 2 | 18.21 | 47.02 |
| Se 4 + | 4 | 68.30 | Be 2 + | 2 | 18.21 | 50.09 |

(continued)

| Atom Oxidized | n | nth Ionization Energy (ev) | Atom Reduced | n | nth Ionization Energy (ev) | Energy Hole (ev) |
|---|---|---|---|---|---|---|
| Be 2 + | 3 | 153.89 | Sr 7 + | 7 | 106.00 | 47.89 |
| Be 3 + | 4 | 217.71 | Ti 8 + | 8 | 168.50 | 49.21 |
| Ni 3 + | 3 | 54.90 | B 1 + | 1 | 8.30 | 46.60 |
| Cu 3 + | 3 | 55.20 | B 1 + | 1 | 8.30 | 46.90 |
| Sr 3+ | 3 | 57.00 | B 1 + | 1 | 8.30 | 48.70 |
| Sb 4 + | 4 | 56.00 | B 1 + | 1 | 8.30 | 47.70 |
| Te 4 + | 4 | 58.75 | B 1+ | 1 | 8.30 | 50.45 |
| Bi 4 + | 4 | 56.00 | B 1 + | 1 | 8.30 | 47.70 |
| S 4 + | 4 | 72.68 | B 2+ | 2 | 25.15 | 47.53 |
| Sc 3 + | 3 | 73.47 | B 2 + | 2 | 25.15 | 48.32 |
| Mn 4 + | 4 | 72.40 | B 2 + | 2 | 25.15 | 47.25 |
| Fe 4 + | 4 | 75.00 | B 2 + | 2 | 25.15 | 49.85 |
| Sn 4 + | 4 | 72.28 | B 2 + | 2 | 25.15 | 47.13 |
| Zn 3+ | 3 | 59.40 | C 1 + | 1 | 11.26 | 48.14 |
| Y 3 + | 3 | 61.80 | C 1 + | 1 | 11.26 | 50.54 |
| Mo 4 + | 4 | 61.20 | C 1 + | 1 | 11.26 | 49.94 |
| Na 2 + | 2 | 71.64 | C 2 + | 2 | 24.38 | 47.26 |
| Sc 3 + | 3 | 73.47 | C 2 + | 2 | 24.38 | 49.09 |
| Mn 4 + | 4 | 72.40 | C 2 + | 2 | 24.38 | 48.02 |
| Sn 4 + | 4 | 72.28 | C 2 + | 2 | 24.38 | 47.90 |
| Ga 3 + | 3 | 64.00 | N 1 + | 1 | 14.53 | 49.47 |
| As 4 + | 4 | 63.63 | N 1 + | 1 | 14.53 | 49.10 |
| Y 3+ | 3 | 61.80 | N 1 + | 1 | 14.53 | 47.27 |
| Mo 4 + | 4 | 61.20 | N 1 + | 1 | 14.53 | 46.67 |
| Mg 2 + | 2 | 80.14 | N 2 + | 2 | 29.60 | 50.54 |
| Co 4 + | 4 | 79.50 | N 2 + | 2 | 29.60 | 49.90 |
| Ne 3 + | 3 | 97.11 | N 3 + | 3 | 47.45 | 49.66 |
| N 3 + | 4 | 77.47 | Rb 2 + | 2 | 27.28 | 50.19 |
| Nb 6 + | 6 | 125.00 | N 4 + | 4 | 77.47 | 47.53 |
| N 3+ | 4 | 77.47 | Mo 3 + | 3 | 27.16 | 50.31 |
| Ga 3 + | 3 | 64.00 | O 1 + | 1 | 13.62 | 50.38 |
| As 4 + | 4 | 63.63 | O 1 + | 1 | 13.62 | 50.01 |
| Y 3 + | 3 | 61.80 | O 1 + | 1 | 13.62 | 48.18 |

| Atom Oxidized | n | nth Ionization Energy (ev) | Atom Reduced | n | nth Ionization Energy (ev) | Energy Hole (ev) |
|---|---|---|---|---|---|---|
| Mo 4 + | 4 | 61.20 | O 1 + | 1 | 13.62 | 47.58 |
| K 4 + | 4 | 82.66 | O 2 + | 2 | 35.12 | 47.54 |
| Fe 3 + | 3 | 54.80 | Mg 1 + | 1 | 7.65 | 47.15 |
| Ni 3 + | 3 | 54.90 | Mg 1 + | 1 | 7.65 | 47.25 |
| Cu 3 + | 3 | 55.20 | Mg 1 + | 1 | 7.65 | 47.55 |
| Sr 3 + | 3 | 57.00 | Mg 1 + | 1 | 7.65 | 49.35 |
| Sb 4 + | 4 | 56.00 | Mg 1 + | 1 | 7.65 | 48.35 |
| V 4 + | 4 | 65.23 | Mg 2 + | 2 | 15.03 | 50.20 |
| Ga 3 + | 3 | 64.00 | Mg 2 + | 2 | 15.03 | 48.97 |
| As 4 + | 4 | 63.63 | Mg 2 + | 2 | 15.03 | 48.60 |
| Kr 4 + | 4 | 64.70 | Mg 2 + | 2 | 15.03 | 49.66 |
| Y 3 + | 3 | 61.80 | Mg 2 + | 2 | 15.03 | 46.76 |
| Mg 2 + | 3 | 80.14 | Si 3 + | 3 | 33.49 | 46.65 |
| Mg 2 + | 3 | 80.14 | K 2 + | 2 | 31.63 | 48.52 |
| Mg 2 + | 3 | 80.14 | Cr 3 + | 3 | 30.96 | 49.18 |
| Mg 2 + | 3 | 80.14 | Fe 3 + | 3 | 30.65 | 49.49 |
| Mg 2 + | 3 | 80.14 | Co 3 + | 3 | 33.50 | 46.64 |
| Mg 2 + | 3 | 80.14 | Ga 3 + | 3 | 30.71 | 49.43 |
| Mg 2 + | 3 | 80.14 | Se 3 + | 3 | 30.82 | 49.32 |
| Mg 2 + | 3 | 80.14 | Rh 3 + | 3 | 31.06 | 49.08 |
| Mg 2 + | 3 | 80.14 | Pd 3 + | 3 | 32.93 | 47.21 |
| Mg 2 + | 3 | 80.14 | Sn 3 + | 3 | 30.50 | 49.64 |
| Mg 2 + | 3 | 80.14 | I 3 + | 3 | 33.00 | 47.14 |
| Mg 2 + | 3 | 80.14 | Xe 3 + | 3 | 32.10 | 48.04 |
| Mg 2 + | 3 | 80.14 | Hf 4 + | 4 | 33.33 | 46.81 |
| Mg 2 + | 3 | 80.14 | Tl 3 + | 3 | 29.83 | 50.31 |
| Mg 2 + | 3 | 80.14 | Pb 3 + | 3 | 31.94 | 48.21 |
| Bi 4 + | 4 | 56.00 | Al 1 + | 1 | 5.99 | 50.01 |
| Ca 3 + | 3 | 67.10 | Al 2 + | 2 | 18.83 | 48.27 |
| Cu 3 + | 3 | 55.20 | Al 1 + | 1 | 5.99 | 49.21 |
| In 3 + | 3 | 54.00 | Al 1 + | 1 | 5.99 | 48.01 |
| Ni 3 + | 3 | 54.90 | Al 1 + | 1 | 5.99 | 48.91 |
| Rb 3 + | 3 | 52.60 | Al 1 + | 1 | 5.99 | 46.61 |

(continued)

| Atom Oxidized | n | nth Ionization Energy (ev) | Atom Reduced | n | nth Ionization Energy (ev) | Energy Hole (ev) |
|---|---|---|---|---|---|---|
| Sb 4 + | 4 | 56.00 | Al 1 + | 1 | 5.99 | 50.01 |
| Cr 4 + | 4 | 69.30 | Al 2 + | 2 | 18.83 | 50.47 |
| Se 4 + | 4 | 68.30 | Al 2 + | 2 | 18.83 | 49.47 |
| Pb 4 + | 4 | 68.80 | Al 2 + | 2 | 18.83 | 49.97 |
| Y 4 + | 4 | 77.00 | Al 3 + | 3 | 28.45 | 48.55 |
| Fe 3 + | 3 | 54.80 | Si 1 + | 1 | 8.15 | 46.65 |
| Ni 3 + | 3 | 54.90 | Si 1 + | 1 | 8.15 | 46.75 |
| Cu 3 + | 3 | 55.20 | Si 1 + | 1 | 8.15 | 47.05 |
| Sr 3 + | 3 | 57.00 | Si 1 + | 1 | 8.15 | 48.85 |
| Sb 4 + | 4 | 56.00 | Si 1 + | 1 | 8.15 | 47.85 |
| Te 4 + | 4 | 58.75 | Si 1 + | 1 | 8.15 | 50.60 |
| Bi 4 + | 4 | 56.00 | Si 1 + | 1 | 8.15 | 47.85 |
| V 4 + | 4 | 65.23 | Si 2 + | 2 | 16.34 | 48.89 |
| Ga 3 + | 3 | 64.00 | Si 2 + | 2 | 16.34 | 47.65 |
| As 4 + | 4 | 63.63 | Si 2 + | 2 | 16.34 | 47.29 |
| Mn 3 + | 3 | 51.20 | K 1 + | 1 | 4.34 | 46.86 |
| Fe 3 + | 3 | 54.80 | K 1 + | 1 | 4.34 | 50.46 |
| Co 3 + | 3 | 51.30 | K 1 + | 1 | 4.34 | 46.96 |
| Ni 3 + | 3 | 54.90 | K 1 + | 1 | 4.34 | 50.56 |
| In 3 + | 3 | 54.00 | K 1 + | 1 | 4.34 | 49.66 |
| Fe 3 + | 3 | 54.80 | Ca 1 + | 1 | 6.11 | 48.69 |
| Ni 3 + | 3 | 54.90 | Ca 1 + | 1 | 6.11 | 48.79 |
| Cu 3 + | 3 | 55.20 | Ca 1 + | 1 | 6.11 | 49.09 |
| In 3 + | 3 | 54.00 | Ca 1 + | 1 | 6.11 | 47.89 |
| Sb 4 + | 4 | 56.00 | Ca 1 + | 1 | 6.11 | 49.89 |
| Bi 4 + | 4 | 56.00 | Ca 1 + | 1 | 6.11 | 49.89 |
| Zn 3 + | 3 | 59.40 | Ca 2 + | 2 | 11.87 | 47.53 |
| Y 3 + | 3 | 61.80 | Ca 2 + | 2 | 11.87 | 49.93 |
| Mo 4 + | 4 | 61.20 | Ca 2 + | 2 | 11.87 | 49.33 |
| Te 4 + | 4 | 58.75 | Ca 2 + | 2 | 11.87 | 46.88 |
| Ca 2 + | 3 | 50.91 | Rb 1 + | 1 | 4.18 | 46.73 |
| Ca 2 + | 3 | 50.91 | Cs 1 + | 1 | 3.89 | 47.01 |
| Ca 3 + | 4 | 67.10 | Co 2 + | 2 | 17.06 | 50.04 |

79

(continued)

| Atom Oxidized | n | nth Ionization Energy (ev) | Atom Reduced | n | nth Ionization Energy (ev) | Energy Hole (ev) |
|---|---|---|---|---|---|---|
| Ca 3 + | 4 | 67.10 | Ni 2 + | 2 | 18.17 | 48.93 |
| Ca 3 + | 4 | 67.10 | Cu 2 + | 2 | 20.29 | 46.81 |
| Ca 3 + | 4 | 67.10 | Zn2+ | 2 | 17.96 | 49.14 |
| Ca 3 + | 4 | 67.10 | As 2 + | 2 | 18.63 | 48.47 |
| Fe 3 + | 3 | 54.80 | Sc 1 + | 1 | 6.54 | 48.26 |
| Ni 3 + | 3 | 54.90 | Sc 1 + | 1 | 6.54 | 48.36 |
| Cu 3 + | 3 | 55.20 | Sc 1 + | 1 | 6.54 | 48.66 |
| In 3 + | 3 | 54.00 | Sc 1 + | 1 | 6.54 | 47.46 |
| Sb 4 + | 4 | 56.00 | Sc 1 + | 1 | 6.54 | 49.46 |
| Bi 4 + | 4 | 56.00 | Sc 1 + | 1 | 6.54 | 49.46 |
| Zn 3 + | 3 | 59.40 | Sc 2 + | 2 | 12.80 | 46.60 |
| Y 3 + | 3 | 61.80 | Sc 2 + | 2 | 12.80 | 49.00 |
| Mo 4 + | 4 | 61.20 | Sc 2 + | 2 | 12.80 | 48.40 |
| Sc 3 + | 3 | 73.47 | Sc 3 + | 3 | 24.76 | 48.71 |
| Mn 4 + | 4 | 72.40 | Sc 3 + | 3 | 24.76 | 47.64 |
| Fe 4 + | 4 | 75.00 | Sc 3 + | 3 | 24.76 | 50.24 |
| Sr 4 + | 4 | 71.60 | Sc 3 + | 3 | 24.76 | 46.84 |
| Sn 4 + | 4 | 72.28 | Sc 3 + | 3 | 24.76 | 47.52 |
| Sc 3 + | 4 | 73.47 | Sc 3 + | 3 | 24.76 | 48.71 |
| Sc 3 + | 4 | 73.47 | Kr 2 + | 2 | 24.36 | 49.11 |
| Sc 3 + | 4 | 73.47 | Zr 3 + | 3 | 22.99 | 50.48 |
| Sc 3 + | 4 | 73.47 | Nb 3 + | 3 | 25.04 | 48.43 |
| Sc 3 + | 4 | 73.47 | Sb 3 + | 3 | 25.30 | 48.17 |
| Sc 3 + | 4 | 73.47 | Cs 2 + | 2 | 25.10 | 48.37 |
| Sc 3 + | 4 | 73.47 | Sm 3 + | 3 | 23.40 | 50.07 |
| Sc 3 + | 4 | 73.47 | Eu 3 + | 3 | 24.90 | 48.57 |
| Sc 3 + | 4 | 73.47 | Tm 3 + | 3 | 23.68 | 49.79 |
| Sc 3 + | 4 | 73.47 | Yb 3 + | 3 | 25.03 | 48.44 |
| Sc 3 + | 4 | 73.47 | Hf 3 + | 3 | 23.30 | 50.17 |
| Sc 3 + | 4 | 73.47 | Bi 3 + | 3 | 25.56 | 47.91 |
| Sc 4 + | 5 | 91.66 | Ti 4 + | 4 | 43.27 | 48.39 |
| Sc 4 + | 5 | 91.66 | Se 4 + | 4 | 42.94 | 48.72 |
| Sc 4 + | 5 | 91.66 | Sr 3 + | 3 | 43.60 | 48.06 |

| Atom Oxidized | n | nth Ionization Energy (ev) | (continued) Atom Reduced | n | nth Ionization Energy (ev) | Energy Hole (ev) |
|---|---|---|---|---|---|---|
| Sc 4+ - | 5 | 91.66 | Sb 4+ | 4 | 44.20 | 47.46 |
| Sc 4+ | 5 | 91.66 | Pm 4+ | 4 | 41.10 | 50.56 |
| Sc 4+ | 5 | 91.66 | Sm 4+ | 4 | 41.40 | 50.26 |
| Sc 4+ | 5 | 91.66 | Eu 4+ | 4 | 42.60 | 49.06 |
| Sc 4+ | 5 | 91.66 | Gd 4+ | 4 | 44.00 | 47.66 |
| Sc 4+ | 5 | 91.66 | Dy 4+ | 4 | 41.50 | 50.16 |
| Sc 4+ | 5 | 91.66 | Ho 4+ | 4 | 42.50 | 49.16 |
| Sc 4+ | 5 | 91.66 | Er 4+ | 4 | 42.60 | 49.06 |
| Sc 4+ | 5 | 91.66 | Tm 4+ | 4 | 42.70 | 48.96 |
| Sc 4+ | 5 | 91.66 | Yb 4+ | 4 | 43.70 | 47.96 |
| Sc 4+ | 5 | 91.66 | Pb 4+ | 4 | 42.32 | 49.34 |
| Sc 4+ | 5 | 91.66 | Ti 1+ | 1 | 6.82 | 47.98 |
| Sc 4+ | 5 | 91.66 | Ti 1+ | 1 | 6.82 | 48.08 |
| Sc 4+ | 5 | 91.66 | Ti 1+ | 1 | 6.82 | 48.18 |
| Fe 3+ | 3 | 54.80 | Ti 1+ | 1 | 6.82 | 48.38 |
| Ni 3+ | 3 | 54.90 | Ti 1+ | 1 | 6.82 | 50.18 |
| Cu 3+ | 3 | 55.20 | Ti 1+ | 1 | 6.82 | 49.18 |
| Sr 3+ | 3 | 57.00 | Ti 1+ | 1 | 6.82 | 49.18 |
| In 3+ | 3 | 54.00 | Ti 2+ | 2 | 13.58 | 47.18 |
| Sb 4+ | 4 | 56.00 | Ti 2+ | 2 | 13.58 | 50.42 |
| Bi 4+ | 4 | 56.00 | Ti 2+ | 2 | 13.58 | 50.05 |
| Ga 3+ | 3 | 64.00 | Ti 2+ | 2 | 13.58 | 48.22 |
| As 4+ | 4 | 63.63 | Ti 2+ | 2 | 13.58 | 47.62 |
| Y 3+ | 3 | 61.80 | Ti 3+ | 3 | 27.49 | 48.01 |
| Mo 4+ | 4 | 61.20 | Ti 3+ | 3 | 27.49 | 47.51 |
| Fe 4+ | 4 | 75.00 | Ti 3+ | 3 | 27.49 | 47.51 |
| Ni 4+ | 4 | 75.50 | Ti 3+ | 3 | 27.49 | 49.51 |
| Y 4+ | 4 | 77.00 | V 1+ | 1 | 6.74 | 48.06 |
| Fe 3+ | 3 | 54.80 | V 1+ | 1 | 6.74 | 48.16 |
| Ni 3+ | 3 | 54.90 | V 1+ | 1 | 6.74 | 48.46 |
| Cu 3+ | 3 | 55.20 | V 1+ | 1 | 6.74 | 50.26 |
| Sr 3+ | 3 | 57.00 | V 1+ | 1 | 6.74 | 47.26 |
| In 3+ | 3 | 54.00 | V 1+ | 1 | 6.74 | 47.26 |
| Sb 4+ | 4 | 56.00 | V 1+ | 1 | 6.74 | 49.26 |
| Bi 4+ | 4 | 56.00 | V 2+ | 2 | 14.65 | 50.58 |
| V 4+ | 4 | 65.23 | | | | |

(continued)

| Atom Oxidized | n | nth Ionization Energy (ev) | Atom Reduced | n | nth Ionization Energy (ev) | Energy Hole (ev) |
|---|---|---|---|---|---|---|
| Ga 3 + | 3 | 64.00 | V 2 + | 2 | 14.65 | 49.35 |
| As 4 + | 4 | 63.63 | V 2+ | 2 | 14.65 | 48.98 |
| Y 3 + | 3 | 61.80 | V + | 2 | 14.65 | 47.15 |
| Co 4 + | 4 | 79.50 | V 3 + | 3 | 29.31 | 50.19 |
| Cu 4 + | 4 | 79.90 | V 3 + | 3 | 29.31 | 50.59 |
| Y 4 + | 4 | 77.00 | V 3 + | 3 | 29.31 | 47.69 |
| Mn 5 + | 5 | 95.00 | V 4 + | 4 | 46.71 | 48.29 |
| Ge 4 + | 4 | 93.50 | V 4 + | 4 | 46.71 | 46.79 |
| V 4 + | 5 | 65.23 | V 2 + | 2 | 14.65 | 50.58 |
| V 4 + | 5 | 65.23 | Cr 2 + | 2 | 16.50 | 48.73 |
| V 4 + | 5 | 65.23 | Fe 2 + | 2 | 16.18 | 49.05 |
| V 4 + | 5 | 65.23 | Co 2 + | 2 | 17.06 | 48.17 |
| V 4 + | 5 | 65.23 | Ni 2 + | 2 | 18.17 | 47.06 |
| V 4 + | 5 | 65.23 | Zn 2 + | 2 | 17.96 | 47.27 |
| V 4 + | 5 | 65.23 | Ge 2 + | 2 | 15.93 | 49.30 |
| V 4 + | 5 | 65.23 | Mo 2 + | 2 | 16.15 | 49.08 |
| V 4 + | 5 | 65.23 | Tc 2 + | 2 | 15.26 | 49.97 |
| V 4 + | 5 | 65.23 | Ru 2 + | 2 | 16.76 | 48.47 |
| V 4 + | 5 | 65.23 | Rh 2 + | 2 | 18.08 | 47.15 |
| V 4 + | 5 | 65.23 | Cd 2 + | 2 | 16.91 | 48.32 |
| V 4 + | 5 | 65.23 | Sn 2 + | 2 | 14.63 | 50.60 |
| V 4 + | 5 | 65.23 | Sb 2 + | 2 | 16.53 | 48.70 |
| V 4 + | 5 | 65.23 | Te 2 + | 2 | 8.60 | 46.63 |
| V 4 + | 5 | 65.23 | Hf 2 + | 2 | 4.90 | 50.33 |
| V 4 + | 5 | 65.23 | Pt 2 + | 2 | 18.56 | 46.67 |
| V 4 + | 5 | 65.23 | Pb 2 + | 2 | 5.03 | 50.20 |
| V 4 + | 5 | 65.23 | Bi 2 + | 2 | 16.69 | 48.54 |
| V 5 + | 6 | 28.12 | Co 5 + | 5 | 79.50 | 48.62 |
| V 5 + | 6 | 128.12 | Cu 5 + | 5 | 79.90 | 48.22 |
| V 5 + | 6 | 128.12 | Kr 6 + | 6 | 78.50 | 49.62 |
| V 5+ | 6 | 128.12 | Zr 5 + | 5 | 81.50 | 46.62 |
| V 6 + | 7 | 150.17 | Co 6 + | 6 | 102.00 | 48.17 |
| V 7 + | 8 | 173.70 | Fe 7 + | 7 | 125.00 | 48.70 |

82

(continued)

| Atom Oxidized | n | nth Ionization Energy (ev) | Atom Reduced | n | nth Ionization Energy (ev) | Energy Hole (ev) |
|---|---|---|---|---|---|---|
| Fe 3 + | 3 | 54.80 | Cr 1 + | 1 | 6.77 | 48.03 |
| Ni 3 + | 3 | 54.90 | Cr 1 + | 1 | 6.77 | 48.13 |
| Cu 3 + | 3 | 55.20 | Cr 1 + | 1 | 6.77 | 48.43 |
| Sr 3 + | 3 | 57.00 | Cr 1 + | 1 | 6.77 | 50.23 |
| In 3 + | 3 | 54.00 | Cr 1 + | 1 | 6.77 | 47.23 |
| Sb 4 + | 4 | 56.00 | Cr 1 + | 1 | 6.77 | 49.23 |
| Bi 4 + | 4 | 56.00 | Cr 1 + | 1 | 6.77 | 49.23 |
| Ga 3 + | 3 | 64.00 | Cr 2 + | 2 | 16.50 | 47.50 |
| As 4 + | 4 | 63.63 | Cr 2 + | 2 | 16.50 | 47.13 |
| Kr 4 + | 4 | 64.70 | Cr 2 + | 2 | 16.50 | 48.20 |
| Co 4 + | 4 | 79.50 | Cr 3 + | 3 | 30.96 | 48.54 |
| Cu 4 + | 4 | 79.90 | Cr 3 + | 3 | 30.96 | 48.94 |
| Kr 5 + | 5 | 78.50 | Cr 3 + | 3 | 30.96 | 47.54 |
| Zr 4 + | 4 | 81.50 | Cr 3 + | 3 | 30.96 | 50.54 |
| Cr 4 + | 5 | 69.30 | Cu 2 + | 2 | 20.29 | 49.01 |
| Cr 4 + | 5 | 69.30 | Ga 2 + | 2 | 20.51 | 48.79 |
| Cr 4 + | 5 | 69.30 | Se2+ | 2 | 21.19 | 48.11 |
| Cr 4 + + | 5 | 69.30 | Br 2 + | 2 | 21.80 | 47.50 |
| Cr 4 + | 5 | 69.30 | Y 3 + | 3 | 20.52 | 48.78 |
| Cr 4 + | 5 | 69.30 | Pd 2 + | 2 | 19.43 | 49.87 |
| Cr 4 + | 5 | 69.30 | Ag +. | 2 | 21.49 | 47.81 |
| Cr 4 + | 5 | 69.30 | In +. | 2 | 18.87 | 50.43 |
| Cr 4+ | 5 | 69.30 | I 2+ | 2 | 19.13 | 50.17 |
| Cr 4 + | 5 | 69.30 | Xe 2+ | 2 | 21.21 | 48.09 |
| Cr 4 + | 5 | 69.30 | La 3+ | 3 | 19.18 | 50.12 |
| Cr 4 + | 5 | 69.30 | Ce 3 + | 3 | 20.20 | 49.10 |
| Cr 4 + | 5 | 69.30 | Pr 3 + | 3 | 21.62 | 47.68 |
| Cr 4 + | 5 | 69.30 | Nd 3 + | 3 | 22.10 | 47.20 |
| Cr 4 + | 5 | 69.30 | Pm 3 + | 3 | 22.30 | 47.00 |
| Cr 4 + | 5 | 69.30 | Gd 3 + | 3 | 20.63 | 48.67 |
| Cr 4 + | 5 | 69.30 | Tb 3 + | 3 | 21.91 | 47.39 |
| Cr 4 + | 5 | 69.30 | Lu 3 + | 3 | 20.96 | 48.34 |
| Cr 4 + | 5 | 69.30 | Au 2 + | 2 | 20.50 | 48.80 |

(continued)

| Atom Oxidized | n | nth Ionization Energy (ev) | Atom Reduced | n | nth Ionization Energy (ev) | Energy Hole (ev) |
|---|---|---|---|---|---|---|
| Cr 4 + | 5 | 69.30 | Hg 2 + | 2 | 18.76 | 50.54 |
| Cr 4 + | 5 | 69.30 | Tl 2 + | 2 | 20.43 | 48.87 |
| Cr 5 + | 6 | 90.56 | Se 4 + | 4 | 42.94 | 47.62 |
| Cr 5 + | 6 | 90.56 | Rb 3 + | 3 | 40.00 | 50.56 |
| Cr 5 + | 6 | 90.56 | Sr 3 + | 3 | 43.60 | 46.96 |
| Cr 5 + | 6 | 90.56 | Sn 4 + | 4 | 40.73 | 49.83 |
| Cr 5 + | 6 | 90.56 | Nd 4 + | 4 | 40.41 | 50.15 |
| Cr 5 + | 6 | 90.56 | Pm 4 + | 4 | 1.10 | 49.46 |
| Cr 5 + | 6 | 90.56 | Sm 4 + | 4 | 41.40 | 49.16 |
| Cr 5 + | 6 | 90.56 | Eu 4 + | 4 | 42.60 | 47.96 |
| Cr 5 + | 6 | 90.56 | Dy 4 + | 4 | 41.50 | 49.06 |
| Cr 5 + | 6 | 90.56 | Ho 4 + | 4 | 42.50 | 48.06 |
| Cr 5 + | 6 | 90.56 | Er 4 + | 4 | 42.60 | 47.96 |
| Cr 5 + | 6 | 90.56 | Tm 4 + | 4 | 42.70 | 47.86 |
| Cr 5 + | 6 | 90.56 | Yb 4 + | 4 | 43.70 | 46.86 |
| Cr 5 + | 6 | 90.56 | Pb 4 + | 4 | 42.32 | 48.24 |
| Fe 3 + | 3 | 54.80 | Mn 1 + | 1 | 7.43 | 47.36 |
| Ni 3 + | 3 | 54.90 | Mn 1 + | 1 | 7.43 | 47.47 |
| Cu 3 + | 3 | 55.20 | Mn 1 + | 1 | 7.43 | 47.76 |
| Sr 3 + | 3 | 57.00 | Mn 1 + | 1 | 7.43 | 49.56 |
| Sb 4 + | 4 | 56.00 | Mn 1 + | 1 | 7.43 | 48.56 |
| Bi 4 + | 4 | 56.00 | Mn 1 + | 1 | 7.43 | 48.56 |
| Ga 3 + | 3 | 64.00 | Mn 2 + | 2 | 15.64 | 48.36 |
| As 4 + | 4 | 63.63 | Mn 2 + | 2 | 15.64 | 47.99 |
| Se 5 + | 5 | 81.70 | Mn 3 + | 3 | 33.67 | 48.03 |
| Zr 4 + | 4 | 81.50 | Mn 3 + | 3 | 33.67 | 47.83 |
| Fe 5 + | 5 | 99.00 | Mn 4 + | 4 | 51.20 | 47.80 |
| Mn 3 + | 4 | 51.20 | Rb 1 + | 1 | 4.18 | 47.02 |
| Mn 3 + | 4 | 51.20 | Cs 1 + | 1 | 3.89 | 47.31 |
| Mn 6 + | 6 | 119.27 | Mn 5 + | 5 | 72.40 | 46.87 |
| Mn 4 + | 5 | 72.40 | Kr 2 + | 2 | 24.36 | 48.04 |
| Mn 4 + | 5 | 72.40 | Zr 3 + | 3 | 22.99 | 49.41 |
| Mn 4 + | 5 | 72.40 | Nb 3 + | 3 | 25.04 | 47.36 |

| Atom Oxidized | n | nth Ionization Energy (ev) | Atom Reduced | n | nth Ionization Energy (ev) | Energy Hole (ev) |
|---|---|---|---|---|---|---|
| Mn 4 + | 5 | 72.40 | Sb 3 + | 3 | 25.30 | 47.10 |
| Mn 4 + | 5 | 72.40 | Cs 2 + | 2 | 5.10 | 47.30 |
| Mn 4 + | 5 | 72.40 | Nd 3 + | 3 | 22.10 | 50.30 |
| Mn 4 + | 5 | 72.40 | Pm 3 + | 3 | 22.30 | 50.10 |
| Mn 4 + | 5 | 72.40 | Sm 3 + | 3 | 23.40 | 49.00 |
| Mn 4 + | 5 | 72.40 | Eu 3 + | 3 | 24.90 | 47.50 |
| Mn 4 + | 5 | 72.40 | Tb 3 + | 3 | 21.91 | 50.49 |
| Mn 4 + | 5 | 72.40 | Dy 3 + | 3 | 22.80 | 49.60 |
| Mn 4 + | 5 | 72.40 | Ho 3 + | 3 | 22.84 | 49.56 |
| Mn 4 + | 5 | 72.40 | Er 3 + | 3 | 22.74 | 49.66 |
| Mn 4 + | 5 | 72.40 | Tm 3 + | 3 | 23.68 | 48.72 |
| Mn 4 + | 5 | 72.40 | Yb 3 + | 3 | 25.03 | 47.37 |
| Mn4+ | 5 | 72.40 | Hf3+ | 3 | 23.30 | 49.10 |
| Mn 4 + | 5 | 72.40 | Bi 3 + | 3 | 25.56 | 46.84 |
| Mn 5 + | 6 | 95.00 | Ge 4 + | 4 | 45.71 | 49.29 |
| Mn 5 + | 6 | 95.00 | Br 4 + | 4 | 47.30 | 47.70 |
| Mn 5 + | 6 | 95.00 | Mo 4 + | 4 | 46.40 | 48.60 |
| Mn 5 + | 6 | 95.00 | Lu 4 + | 4 | 45.19 | 49.81 |
| Mn 5 + | 6 | 95.00 | Bi 4 + | 4 | 45.30 | 49.70 |
| Fe 3 + | 3 | 54.80 | Fe 1 + | 1 | 7.87 | 46.93 |
| Ni 3 + | 3 | 54.90 | Fe 1 + | 1 | 7.87 | 47.03 |
| Cu 3 + | 3 | 55.20 | Fe 1 + | 1 | 7.87 | 47.33 |
| Sr3+ | 3 | 57.00 | Fe 1 + | 1 | 7.87 | 49.13 |
| Sb 4 + | 4 | 56.00 | Fe 1 + | 1 | 7.87 | 48.13 |
| Bi 4 + | 4 | 56.00 | Fe 1 + | 1 | 7.87 | 48.13 |
| Ga 3 + | 3 | 64.00 | Fe 2 + | 2 | 16.18 | 47.82 |
| As 4 + | 4 | 63.63 | Fe 2 + | 2 | 6.18 | 47.45 |
| Co 4 + | 4 | 79.50 | Fe 3 + | 3 | 30.65 | 48.85 |
| Fe 3 + | 4 | 54.80 | Fe 1 + | 1 | 7.87 | 46.93 |
| Fe 3 + | 4 | 54.80 | Co 1 + | 1 | 7.86 | 46.94 |
| Fe 3 + | 4 | 54.80 | Ni 1 + | 1 | 7.64 | 47.17 |
| Fe 3 + | 4 | 54.80 | Cu 1 + | 1 | 7.73 | 47.07 |
| Fe 3 + | 4 | 54.80 | Ga 1 + | 1 | 6.00 | 48.80 |

(continued)

| Atom Oxidized | n | nth Ionization Energy (ev) | Atom Reduced | n | nth Ionization Energy (ev) | Energy Hole (ev) |
|---|---|---|---|---|---|---|
| Fe 3 + | 4 | 54.80 | Ge 1 + | 1 | 7.90 | 46.90 |
| Fe 3 + | 4 | 54.80 | Sr 1 + | 1 | 5.70 | 49.10 |
| Fe 3 + | 4 | 54.80 | Y 1 + | 1 | 6.38 | 48.42 |
| Fe 3 + | 4 | 54.80 | Zr 1 + | 1 | 6.84 | 47.96 |
| Fe 3 + | 4 | 54.80 | Nb 1 + | 1 | 6.88 | 47.92 |
| Nb 5 + | 5 | 102.60 | Fe 4 + | 4 | 54.80 | 47.80 |
| Fe 3 + | 4 | 54.80 | Mo 1 + | 1 | 7.10 | 47.70 |
| Fe 3 + | 4 | 54.80 | Tc 1 + | 1 | 7.28 | 47.52 |
| Fe 3 + | 4 | 54.80 | Ru 1 + | 1 | 7.37 | 47.43 |
| Fe 3 + | 4 | 54.80 | Rh 1 + | 1 | 7.46 | 47.34 |
| Fe 3 + | 4 | 54.80 | Ag 1 + | 1 | 7.58 | 47.22 |
| Fe 3 + | 4 | 54.80 | In 1 + | 1 | 5.79 | 49.01 |
| Fe 3 + | 4 | 54.80 | Sn 1 + | 1 | 7.34 | 47.46 |
| Fe3+ | 4 | 54.80 | Ba 1 + | 1 | 5.21 | 49.59 |
| Fe 3 + | 4 | 54.80 | La 1 + | 1 | 5.58 | 49.22 |
| Fe 3 + | 4 | 54.80 | Ce 1 + | 1 | 5.47 | 49.33 |
| Fe 3 + | 4 | 54.80 | Pr 1 + | 1 | 5.42 | 49.38 |
| Fe 3 + | 4 | 54.80 | Nd 1 + | 1 | 5.49 | 49.31 |
| Fe 3 + | 4 | 54.80 | Pm 1 + | 1 | 5.55 | 49.25 |
| Fe 3 + | 4 | 54.80 | Sm 1 + | 1 | 5.63 | 49.17 |
| Fe 3 + | 4 | 54.80 | Eu 1 + | 1 | 5.67 | 49.13 |
| Fe3+ | 4 | 54.80 | Gd 1 + | 1 | 6.14 | 48.66 |
| Fe 3 + | 4 | 54.80 | Tb 1 + | 1 | 5.85 | 48.95 |
| Fe 3 + | 4 | 54.80 | Dy 1 + | 1 | 5.93 | 48.87 |
| Fe 3 + | 4 | 54.80 | Ho 1 + | 1 | 6.02 | 48.78 |
| Fe 3 + | 4 | 54.80 | Er 1 + | 1 | 6.10 | 48.70 |
| Fe 3 + | 4 | 54.80 | Tm 1 + | 1 | 6.18 | 48.62 |
| Fe 3 + | 4 | 54.80 | Yb 1 + | 1 | 6.25 | 48.55 |
| Fe 3 + | 4 | 54.80 | Lu 1 + | 1 | 5.43 | 49.37 |
| Fe 3 + | 4 | 54.80 | Hf 1 + | 1 | 6.60 | 48.20 |
| Fe 3 + | 4 | 54.80 | Ta 1 + | 1 | 7.89 | 46.91 |
| Fe 3 + | 4 | 54.80 | W 1 + | 1 | 7.98 | 46.82 |
| Fe 3 + | 4 | 54.80 | Re 1 + | 1 | 7.88 | 46.92 |

(continued)

| Atom Oxidized | n | nth Ionization Energy (ev) | Atom Reduced | n | nth Ionization Energy (ev) | Energy Hole (ev) |
|---|---|---|---|---|---|---|
| Fe 3 + | 4 | 54.80 | Tl 1 + | 1 | 6.11 | 48.69 |
| Fe3+ | 4 | 54.80 | Pb 1+ | 1 | 7.42 | 47.38 |
| Fe3+ | 4 | 54.80 | Bi 1+ | 1 | 7.29 | 47.51 |
| Fe3+ | 4 | 54.80 | Ra 1 + | 1 | 5.28 | 49.52 |
| Fe 3 + | 4 | 54.80 | Ac 1 + | 1 | 5.20 | 49.60 |
| Fe3+ | 4 | 54.80 | Th 1 + | 1 | 6.10 | 48.70 |
| Fe 3 + | 4 | 54.80 | Pa 1 + | 1 | 5.90 | 48.90 |
| Fe 3 + | 4 | 54.80 | U 1 + | 1 | 6.05 | 48.75 |
| Fe 3 + | 4 | 54.80 | Np 1 + | 1 | 6.20 | 48.60 |
| Fe 3 + | 4 | 54.80 | Pu 1 + | 1 | 6.06 | 48.74 |
| Fe 3 + | 4 | 54.80 | Am 1 + | 1 | 5.99 | 48.81 |
| Fe 3 + | 4 | 54.80 | Cm 1 + | 1 | 6.02 | 48.78 |
| Fe 3 + | 4 | 54.80 | Bk 1 + | 1 | 6.23 | 48.57 |
| Fe 3 + | 4 | 54.80 | Cf 1 + | 1 | 6.30 | 48.50 |
| Fe 3 + | 4 | 54.80 | Es 1 + | 1 | 6.42 | 48.38 |
| Fe 4 + | 5 | 75.00 | As 3 + | 3 | 28.35 | 46.65 |
| Fe 4 + | 5 | 75.00 | Rb 2 + | 2 | 27.28 | 47.72 |
| Fe 4 + | 5 | 75.00 | Nb 3 + | 3 | 25.04 | 49.96 |
| Fe 4 + | 5 | 75.00 | o 3 + | 3 | 27.16 | 47.84 |
| Fe 4 + | 5 | 75.00 | In 3 + | 3 | 28.03 | 46.97 |
| Fe 4 + | 5 | 75.00 | Sb 3 + | 3 | 25.30 | 49.70 |
| Fe 4 + | 5 | 75.00 | Te 3 + | 3 | 27.96 | 47.04 |
| Fe 4 + | 5 | 75.00 | Cs 2 + | 2 | 25.10 | 49.90 |
| Fe 4 + | 5 | 75.00 | Eu 3 + | 3 | 24.90 | 50.10 |
| Fe 4 + | 5 | 75.00 | Yb 3 + | 3 | 25.03 | 49.97 |
| Fe 4 + | 5 | 75.00 | Bi 3 + | 3 | 25.56 | 49.44 |
| Ni 3 + | 3 | 54.90 | Co 1 + | 1 | 7.86 | 47.04 |
| Cu 3 + | 3 | 55.20 | Co 1 + | 1 | 7.86 | 47.34 |
| Sr 3 + | 3 | 57.00 | Co 1 + | 1 | 7.86 | 49.14 |
| Sb 4 + | 4 | 56.00 | Co 1 + | 1 | 7.86 | 48.14 |
| Bi 4 + | 4 | 56.00 | Co 1 + | 1 | 7.86 | 48.14 |
| Ga 3 + | 3 | 64.00 | Co 2 + | 2 | 17.06 | 46.94 |
| Se 5 + | 5 | 81.70 | Co 3 + | 3 | 33.50 | 48.20 |

(continued)

| Atom Oxidized | n | nth Ionization Energy (ev) | Atom Reduced | n | nth Ionization Energy (ev) | Energy Hole (ev) |
|---|---|---|---|---|---|---|
| Zr 4 + | 4 | 81.50 | Co 3 + | 3 | 33.50 | 48.00 |
| Co 3 + | 4 | 51.30 | Rb 1 + | 1 | 4.18 | 47.12 |
| Co 3 + | 4 | 51.30 | Cs 1 + | 1 | 3.89 | 47.41 |
| Co 4 + | 5 | 79.50 | Ga 3 + | 3 | 30.71 | 48.79 |
| Co 4+ | 5 | 79.50 | Se 3 + | 3 | 30.82 | 48.68 |
| Co 4 + | 5 | 79.50 | Tc 3 + | 3 | 29.54 | 49.96 |
| Co 4 + | 5 | 79.50 | Rh3+ | 3 | 31.06 | 48.44 |
| Co 4 + | 5 | 79.50 | Sn 3 + | 3 | 30.50 | 49.00 |
| Co 4 + | 5 | 79.50 | Xe 3 + | 3 | 32.10 | 47.40 |
| Co 4 + | 5 | 79.50 | Tl 3 + | 3 | 29.83 | 49.67 |
| Co 4 + | 5 | 79.50 | Pb 3 + | 3 | 31.94 | 47.56 |
| Ni 3 + | 3 | 54.90 | Ni 1 + | 1 | 7.64 | 47.26 |
| Cu 3 + | 3 | 55.20 | Ni 1 + | 1 | 7.64 | 47.67 |
| Sr 3 + | 3 | 57.00 | Ni 1+ | 1 | 7.64 | 49.36 |
| Sb 4 + | 4 | 56.00 | Ni 1 + | 1 | 7.64 | 48.36 |
| Bi 4 + | 4 | 56.00 | Ni 1 + | 1 | 7.64 | 48.36 |
| Se 4 + | 4 | 68.30 | Ni 2 + | 2 | 18.17 | 50.13 |
| Mo 5 + | 5 | 68.00 | Ni2+ | 2 | 18.17 | 49.83 |
| Zn 4 + | 4 | 82.60 | Ni 3 + | 3 | 35.17 | 47.43 |
| Ni 3 + | 4 | 54.90 | Ni 1 + | 1 | 7.64 | 47.26 |
| Ni 3 + | 4 | 54.90 | Cu 1 + | 1 | 7.73 | 47.17 |
| Ni 3 + | 4 | 54.90 | Ga 1 + | 1 | 6.00 | 48.90 |
| Ni 3 + | 4 | 54.90 | Ge 1 + | 1 | 7.90 | 47.00 |
| Ni 3 + | 4 | 54.90 | Sr 1 + | 1 | 5.70 | 49.21 |
| Ni 3 + | 4 | 54.90 | Y 1 + | 1 | 6.38 | 48.52 |
| Ni 3 + | 4 | 54.90 | Zr 1 + | 1 | 6.84 | 48.06 |
| Ni 3 + | 4 | 54.90 | Nb 1 + | 1 | 6.88 | 48.02 |
| Nb 5 + | 5 | 102.60 | Ni 4 + | 4 | 54.90 | 47.70 |
| Ni 3 + | 4 | 54.90 | Mo 1 + | 1 | 7.10 | 47.80 |
| Ni 3 + | 4 | 54.90 | Tc 1 + | 1 | 7.28 | 47.62 |
| Ni 3 + | 4 | 54.90 | Ru 1 + | 1 | 7.37 | 47.53 |
| Ni 3 + | 4 | 54.90 | Rh 1 + | 1 | 7.46 | 47.44 |
| Ni 3 + | 4 | 54.90 | Ag 1 + | 1 | 7.58 | 47.32 |

(continued)

| Atom Oxidized | n | nth Ionization Energy (ev) | Atom Reduced | n | nth Ionization Energy (ev) | Energy Hole (ev) |
|---|---|---|---|---|---|---|
| Ni 3 + | 4 | 54.90 | In 1 + | 1 | 5.79 | 49.11 |
| Ni 3 + | 4 | 54.90 | Sn 1 + | 1 | 7.34 | 47.56 |
| Ni 3 + | 4 | 54.90 | Ba 1 + | 1 | 5.21 | 49.69 |
| Ni 3 + | 4 | 54.90 | La 1 + | 1 | 5.58 | 49.32 |
| Ni 3 + | 4 | 54.90 | Ce 1 + | 1 | 5.47 | 49.43 |
| Ni 3 + | 4 | 54.90 | Pr 1 + | 1 | 5.42 | 49.48 |
| Ni 3 + | 4 | 54.90 | Nd 1 + | 1 | 5.49 | 49.41 |
| Ni 3 + | 4 | 54.90 | Pm 1 + | 1 | 5.55 | 49.35 |
| Ni 3 + | 4 | 54.90 | Sm 1 + | 1 | 5.63 | 49.27 |
| Ni 3 + | 4 | 54.90 | Eu 1 + | 1 | 5.67 | 49.23 |
| Ni 3 + | 4 | 54.90 | Gd 1 + | 1 | 6.14 | 48.76 |
| Ni 3 + | 4 | 54.90 | Tb 1 + | 1 | 5.85 | 49.05 |
| Ni 3 + | 4 | 54.90 | Dy 1 + | 1 | 5.93 | 48.97 |
| Ni 3 + | 4 | 54.90 | Ho 1 + | 1 | 6.02 | 48.88 |
| Ni 3 + | 4 | 54.90 | Er 1 + | 1 | 6.10 | 48.80 |
| Ni 3 + | 4 | 54.90 | Tm 1 + | 1 | 6.18 | 48.72 |
| Ni 3 + | 4 | 54.90 | Yb 1 + | 1 | 6.25 | 48.65 |
| Ni 3 + | 4 | 54.90 | Lu 1 + | 1 | 5.43 | 49.47 |
| Ni 3 + | 4 | 54.90 | Hf 1 + | 1 | 6.60 | 48.30 |
| Ni 3 + | 4 | 54.90 | Ta 1 + | 1 | 7.89 | 47.01 |
| Ni 3 + | 4 | 54.90 | W 1 + | 1 | 7.98 | 46.92 |
| Ni 3 + | 4 | 54.90 | Re 1 + | 1 | 7.88 | 47.02 |
| Ni 3 + | 4 | 54.90 | Tl 1 + | 1 | 6.11 | 48.79 |
| Ni 3 + | 4 | 54.90 | Pb 1 + | 1 | 7.42 | 47.48 |
| Ni 3 + | 4 | 54.90 | Bi 1 + | 1 | 7.29 | 47.61 |
| Ni 3 + | 4 | 54.90 | Ra 1 + | 1 | 5.28 | 49.62 |
| Ni 3 + | 4 | 54.90 | Ac 1 + | 1 | 5.20 | 49.70 |
| Ni 3 + | 4 | 54.90 | Th 1 + | 1 | 6.10 | 48.80 |
| Ni 3 + | 4 | 54.90 | Pa 1 + | 1 | 5.90 | 49.00 |
| Ni 3 + | 4 | 54.90 | U 1 + | 1 | 6.05 | 48.85 |
| Ni 3 + | 4 | 54.90 | Np 1 + | 1 | 6.20 | 48.70 |
| Ni 3 + | 4 | 54.90 | Pu 1 + | 1 | 6.06 | 48.84 |
| Ni 3 + | 4 | 54.90 | Am 1 + | 1 | 5.99 | 48.91 |

| Atom Oxidized | n | nth Ionization Energy (ev) | Atom Reduced | n | nth Ionization Energy (ev) | Energy Hole (ev) |
|---|---|---|---|---|---|---|
| Ni 3 + | 4 | 54.90 | Cm 1 + | 1 | 6.02 | 48.88 |
| Ni 3 + | 4 | 54.90 | Bk 1 + | 1 | 6.23 | 48.67 |
| Ni 3 + | 4 | 54.90 | Cf 1 + | 1 | 6.30 | 48.60 |
| Ni 3 + | 4 | 54.90 | Es 1 + | 1 | 6.42 | 48.48 |
| Ni 4 + | 5 | 75.50 | As 3 + | 3 | 28.35 | 47.15 |
| Cu 3 + | 3 | 55.20 | Cu 1 + | 1 | 7.73 | 47.47 |
| Sr 3 + | 3 | 57.00 | Cu 1 + | 1 | 7.73 | 49.27 |
| Sb 4 + | 4 | 56.00 | Cu 1 + | 1 | 7.73 | 48.27 |
| Bi 4 + | 4 | 56.00 | Cu 1 + | 1 | 7.73 | 48.27 |
| Se 4 + | 4 | 68.30 | Cu 2 + | 2 | 20.29 | 48.01 |
| Mo 5 + | 5 | 68.00 | Cu2+ | 2 | 20.29 | 47.71 |
| Te 5 + | 5 | 70.70 | Cu 2 + | 2 | 20.29 | 50.41 |
| Cu 3 + | 4 | 55.20 | Cu 1 + | 1 | 7.73 | 47.47 |
| Cu 5 + | 5 | 103.00 | Cu 4 + | 4 | 55.20 | 47.80 |
| Cu 3 + | 4 | 55.20 | Ga 1 + | 1 | 6.00 | 49.20 |
| Cu 3 + | 4 | 55.20 | Ge 1 + | 1 | 7.90 | 47.30 |
| Cu 3 + | 4 | 55.20 | Sr 1 + | 1 | 5.70 | 49.51 |
| Cu 3 + | 4 | 55.20 | Y 1 + | 1 | 6.38 | 48.82 |
| Cu 3 + | 4 | 55.20 | Zr 1 + | 1 | 6.84 | 48.36 |
| Cu 3 + | 4 | 55.20 | Nb 1 + | 1 | 6.88 | 48.32 |
| Cu 3 + | 4 | 55.20 | Mo 1 + | 1 | 7.10 | 48.10 |
| Cu 3 + | 4 | 55.20 | Tc 1 + | 1 | 7.28 | 47.92 |
| Cu 3 + | 4 | 55.20 | Ru 1 + | 1 | 7.37 | 47.83 |
| Cu 3 + | 4 | 55.20 | Rh 1 + | 1 | 7.46 | 47.74 |
| Cu 3 + | 4 | 55.20 | Pd 1 + | 1 | 8.34 | 46.86 |
| Cu 3 + | 4 | 55.20 | Ag 1 + | 1 | 7.58 | 47.62 |
| Cu 3 + | 4 | 55.20 | In 1 + | 1 | 5.79 | 49.41 |
| Cu 3 + | 4 | 55.20 | Sn 1 + | 1 | 7.34 | 47.86 |
| Cu 3 + | 4 | 55.20 | Ba 1 + | 1 | 5.21 | 49.99 |
| Cu 3 + | 4 | 55.20 | La 1 + | 1 | 5.58 | 49.62 |
| Cu 3 + | 4 | 55.20 | Ce 1 + | 1 | 5.47 | 49.73 |
| Cu 3 + | 4 | 55.20 | Pr 1 + | 1 | 5.42 | 49.78 |
| Cu 3 + | 4 | 55.20 | Nd 1 + | 1 | 5.49 | 49.71 |

| Atom Oxidized | n | nth Ionization Energy (ev) | Atom Reduced | n | nth Ionization Energy (ev) | Energy Hole (ev) |
|---|---|---|---|---|---|---|
| Cu 3 + | 4 | 55.20 | Pm 1 + | 1 | 5.55 | 49.65 |
| Cu 3 + | 4 | 55.20 | Sm 1 + | 1 | 5.63 | 49.57 |
| Cu 3 + | 4 | 55.20 | Eu 1 + | 1 | 5.67 | 49.53 |
| Cu 3 + | 4 | 55.20 | Gd 1 + | 1 | 6.14 | 49.06 |
| Cu 3 + | 4 | 55.20 | Tb 1 + | 1 | 5.85 | 49.35 |
| Cu 3 + | 4 | 55.20 | Dy 1 + | 1 | 5.93 | 49.27 |
| Cu 3 + | 4 | 55.20 | Ho 1 + | 1 | 6.02 | 49.18 |
| Cu 3 + | 4 | 55.20 | Er 1 + | 1 | 6.10 | 49.10 |
| Cu 3 + | 4 | 55.20 | Tm 1 + | 1 | 6.18 | 49.02 |
| Cu 3 + | 4 | 55.20 | Yb 1 + | 1 | 6.25 | 48.95 |
| Cu 3 + | 4 | 55.20 | Lu 1 + | 1 | 5.43 | 49.77 |
| Cu 3 + | 4 | 55.20 | Hf 1 + | 1 | 6.60 | 48.60 |
| Cu 3 + | 4 | 55.20 | Ta 1 + | 1 | 7.89 | 47.31 |
| Cu 3 + | 4 | 55.20 | W 1 + | 1 | 7.98 | 47.22 |
| Cu 3 + | 4 | 55.20 | Re 1 + | 1 | 7.88 | 47.32 |
| Cu 3 + | 4 | 55.20 | Ti 1 + | 1 | 6.11 | 49.09 |
| Cu 3 + | 4 | 55.20 | Pb 1 + | 1 | 7.42 | 47.78 |
| Cu3+ | 4 | 55.20 | Bi 1 + | 1 | 7.29 | 47.91 |
| Cu 3 + | 4 | 55.20 | Po 1 + | 1 | 8.42 | 46.78 |
| Cu 3 + | 4 | 55.20 | Ra 1 + | 1 | 5.28 | 49.92 |
| Cu 3 + | 4 | 55.20 | Ac 1 + | 1 | 5.20 | 50.00 |
| Cu 3 + | 4 | 55.20 | Th 1 + | 1 | 6.10 | 49.10 |
| Cu 3 + | 4 | 55.20 | Pa 1 + | 1 | 5.90 | 49.30 |
| Cu 3 + | 4 | 55.20 | U 1 + | 1 | 6.05 | 49.15 |
| Cu 3 + | 4 | 55.20 | Np 1 + | 1 | 6.20 | 49.00 |
| Cu 3 + | 4 | 55.20 | Pu 1 + | 1 | 6.06 | 49.14 |
| Cu 3 + | 4 | 55.20 | Am 1 + | 1 | 5.99 | 49.21 |
| Cu 3 + | 4 | 55.20 | Cm 1 + | 1 | 6.02 | 49.18 |
| Cu 3 + | 4 | 55.20 | Bk 1 + | 1 | 6.23 | 48.97 |
| Cu 3 + | 4 | 55.20 | Cf 1 + | 1 | 6.30 | 48.90 |
| Sr 3 + | 3 | 57.00 | Zn 1 + | 1 | 9.39 | 47.61 |
| Sb 4 + | 4 | 56.00 | Zn 1 + | 1 | 9.39 | 46.61 |
| Te 4 + | 4 | 58.75 | Zn 1 + | 1 | 9.39 | 49.36 |

(continued)

| Atom Oxidized | n | nth Ionization Energy (ev) | Atom Reduced | n | nth Ionization Energy (ev) | Energy Hole (ev) |
|---|---|---|---|---|---|---|
| Bi 4 + | 4 | 56.00 | Zn 1 + | 1 | 9.39 | 46.61 |
| Se 4 + | 4 | 68.30 | Zn 2 + | 2 | 17.96 | 50.34 |
| Kr 4 + | 4 | 64.70 | Zh 2 + | 2 | 17.96 | 46.74 |
| Zn 3 + | 4 | 59.40 | Zn 1 + | 1 | 9.39 | 50.01 |
| Zn 5 + | 5 | 108.00 | Zn 4 + | 4 | 59.40 | 48.60 |
| Zn 3 + | 4 | 59.40 | As 1 + | 1 | 9.81 | 49.59 |
| Zn 3 + | 4 | 59.40 | Se 1 + | 1 | 9.75 | 49.65 |
| Zn 3 + | 4 | 59.40 | Br 1 + | 1 | 11.81 | 47.59 |
| Zn 3 + | 4 | 59.40 | Sr 2 + | 2 | 11.03 | 48.37 |
| Zn 3 + | 4 | 59.40 | Y 2 + | 2 | 12.24 | 47.16 |
| Zn 3 + | 4 | 59.40 | Cd 1 + | 1 | 8.99 | 50.41 |
| Sb 5 + | 5 | 108.00 | Zn 4 + | 4 | 59.40 | 48.60 |
| Zn 3 + | 4 | 59.40 | Te 1 + | 1 | 9.01 | 50.39 |
| Zn 3 + | 4 | 59.40 | I 1 + | 1 | 10.45 | 48.95 |
| Zn 3 + | 4 | 59.40 | Xe 1 + | 1 | 12.13 | 47.27 |
| Zn 3 + | 4 | 59.40 | Ba 2 + | 2 | 10.00 | 49.40 |
| Zn 3 + | 4 | 59.40 | La 2 + | 2 | 11.06 | 48.34 |
| Zn 3 + | 4 | 59.40 | Ce 2 + | 2 | 10.85 | 48.55 |
| Zn 3 + | 4 | 59.40 | Pr 2 + | 2 | 10.55 | 48.85 |
| Zn 3 + | 4 | 59.40 | Nd 2 + | 2 | 10.73 | 48.67 |
| Zn 3 + | 4 | 59.40 | Pm 2 + | 2 | 10.90 | 48.50 |
| Zn 3 + | 4 | 59.40 | Sm 2 + | 2 | 11.07 | 48.33 |
| Zn 3 + | 4 | 59.40 | Eu 2 + | 2 | 11.24 | 48.16 |
| Zn 3 + | 4 | 59.40 | Gd 2 + | 2 | 12.09 | 47.31 |
| Zn3+ | 4 | 59.40 | Tb2 + | 2 | 11.52 | 47.88 |
| Zn 3 + | 4 | 59.40 | Dy 2 + | 2 | 11.67 | 47.73 |
| Zn 3 + | 4 | 59.40 | Ho 2 + | 2 | 11.80 | 47.60 |
| Zn 3 + | 4 | 59.40 | Er 2 + | 2 | 11.93 | 47.47 |
| Zn 3 + | 4 | 59.40 | Tm 2 + | 2 | 12.05 | 47.35 |
| Zn 3 + | 4 | 59.40 | Yb 2 + | 2 | 12.18 | 47.22 |
| Zn 3 + | 4 | 59.40 | Ir 1 + | 1 | 9.10 | 50.30 |
| Zn 3 + | 4 | 59.40 | Pt 1 + | 1 | 9.00 | 50.40 |
| Zn 3 + | 4 | 59.40 | Au 1 + | 1 | 9.23 | 50.18 |

(continued)

| Atom Oxidized | n | nth Ionization Energy (ev) | Atom Reduced | n | nth Ionization Energy (ev) | Energy Hole (ev) |
|---|---|---|---|---|---|---|
| Zn 3 + | 4 | 59.40 | Hg 1 + | 1 | 10.44 | 48.96 |
| Zn 3 + | 4 | 59.40 | Rn 1 + | 1 | 10.75 | 48.65 |
| Zn 3 + | 4 | 59.40 | Ra 2 + | 2 | 10.15 | 49.25 |
| In 3 + | 3 | 54.00 | Ga 1 + | 1 | 6.00 | 48.00 |
| Sb 4 + | 4 | 56.00 | Ga 1 + | 1 | 6.00 | 50.00 |
| Bi 4 + | 4 | 56.00 | Ga 1 + | 1 | 6.00 | 50.00 |
| Se 4 + | 4 | 68.30 | Ga 2 + | 2 | 20.51 | 47.49 |
| Mo 5+ | 5 | 68.00 | Ga2+ | 2 | 20.51 | 47.49 |
| Te 5 + | 5 | 70.70 | Ga 2 + | 2 | 20.51 | 50.19 |
| Ga 3 + | 4 | 64.00 | Ge 2 + | 2 | 15.93 | 48.07 |
| Ga 3 + | 4 | 64.00 | Kr 1 + | 1 | 14.00 | 50.00 |
| Ga 3 + | 4 | 64.00 | Nb 2 + | 2 | 14.32 | 49.68 |
| Ga3+ | 4 | 64.00 | Mo 2 + | 2 | 16.15 | 47.85 |
| Ga 3 + | 4 | 64.00 | Tc 2 + | 2 | 5.26 | 48.74 |
| Ga 3 + | 4 | 64.00 | Ru 2 + | 2 | 16.76 | 47.24 |
| Ga 3 + | 4 | 64.00 | Cd 2 + | 2 | 16.91 | 47.09 |
| Ga 3 + | 4 | 64.00 | Sn 2 + | 2 | 14.63 | 49.37 |
| Ga 3 + | 4 | 64.00 | Sb 2 + | 2 | 16.53 | 47.47 |
| Ga3 + | 4 | 64.00 | Lu 2 + | 2 | 13.90 | 50.10 |
| Ga 3 + | 4 | 64.00 | Hf 2 + | 2 | 14.90 | 49.10 |
| Ga 3 + | 4 | 64.00 | Pb 2 + | 2 | 15.03 | 48.97 |
| Ga 3 + | 4 | 64.00 | Bi 2 + | 2 | 16.69 | 47.31 |
| Sr 3 + | 3 | 57.00 | Ge 1 + | 1 | 7.90 | 49.10 |
| Sb 4 + | 4 | 56.00 | Ge 1 + | 1 | 7.90 | 48.10 |
| Bi 4 + | 4 | 56.00 | Ge 1 + | 1 | 7.90 | 48.10 |
| As 4 + | 4 | 63.63 | Ge 2 + | 2 | 15.93 | 47.70 |
| Se 5 + | 5 | 81.70 | Ge 3 + | 3 | 34.22 | 47.48 |
| Zr 4 + | 4 | 81.50 | Ge 3 + | 3 | 34.22 | 47.28 |
| Ge 4 + | 4 | 93.50 | Ge 4 + | 4 | 45.71 | 47.79 |
| Ge 4 + | 5 | 93.50 | Ge 4 + | 4 | 45.71 | 47.79 |
| Ge 4 + | 5 | 93.50 | Se 4 + | 4 | 42.94 | 50.56 |
| Ge 4 + | 5 | 93.50 | Sr 3 + | 3 | 43.60 | 49.90 |
| Ge 4 + | 5 | 93.50 | Mo 4 + | 4 | 46.40 | 47.10 |

(continued)

| Atom Oxidized | n | nth Ionization Energy (ev) | Atom Reduced | n | nth Ionization Energy (ev) | Energy Hole (ev) |
|---|---|---|---|---|---|---|
| Ge 4 + | 5 | 93.50 | Sb 4 + | 4 | 44.20 | 49.30 |
| Ge 4 + | 5 | 93.50 | Gd 4 + | 4 | 44.00 | 49.50 |
| Ge 4 + | 5 | 93.50 | Yb 4 + | 4 | 43.70 | 49.80 |
| Ge 4 + | 5 | 93.50 | Lu 4 + | 4 | 45.19 | 48.31 |
| Ge 4 + | 5 | 93.50 | Bi 4 + | 4 | 45.30 | 48.20 |
| Br 4 + | 4 | 59.70 | As 1 + | 1 | 9.81 | 49.89 |
| Sr 3 + | 3 | 57.00 | As 1 + | 1 | 9.81 | 47.19 |
| Te 4 + | 4 | 58.75 | As 1 + | 1 | 9.81 | 48.94 |
| Se 4 + | 4 | 68.30 | As 2 + | 2 | 18.63 | 49.67 |
| Mo 5 + | 5 | 68.00 | As 2 + | 2 | 18.63 | 49.37 |
| Y 4 + | 4 | 77.00 | As 3 + | 3 | 28.35 | 48.65 |
| As 4 + | 5 | 63.63 | Zr2+ | 2 | 13.13 | 50.50 |
| As 4 + | 5 | 63.63 | Nb 2 + | 2 | 14.32 | 49.31 |
| As 4 + | 5 | 63.63 | Mo 2 + | 2 | 16.15 | 47.48 |
| As 4 + | 5 | 63.63 | Tc 2 + | 2 | 15.26 | 48.37 |
| As 4 + | 5 | 63.63 | Ru 2 + | 2 | 16.76 | 46.87 |
| As 4 + | 5 | 63.63 | Cd 2 + | 2 | 16.91 | 46.72 |
| As 4 + | 5 | 63.63 | Sn 2 + | 2 | 14.63 | 49.00 |
| As 4 + | 5 | 63.63 | Sb 2 + | 2 | 16.53 | 47.10 |
| As 4 + | 5 | 63.63 | Lu 2 + | 2 | 13.90 | 49.73 |
| As 4 + | 5 | 63.63 | Hf 2 + | 2 | 14.90 | 48.73 |
| As 4 + | 5 | 63.63 | Pb 2 + | 2 | 15.03 | 48.60 |
| As 4 + | 5 | 63.63 | Bi 2 + | 2 | 16.69 | 46.94 |
| As 5 + | 6 | 127.60 | Kr 6 + | 6 | 78.50 | 49.10 |
| Sr 3 + | 3 | 57.00 | Se 1 + | 1 | 9.75 | 47.25 |
| Te 4 + | 4 | 58.75 | Se 1 + | 1 | 9.75 | 49.00 |
| Se 4 + | 4 | 68.30 | Se 2 + | 2 | 21.19 | 47.11 |
| Mo5+ | 5 | 68.00 | Se2+ | 2 | 21.19 | 46.81 |
| Te 5 + | 5 | 70.70 | Se 2 + | 2 | 21.19 | 49.51 |
| Y 5 + | 5 | 93.00 | Se 4 + | 4 | 42.94 | 50.06 |
| Se 4 + | 5 | 68.30 | Se2+ | 2 | 21.19 | 47.11 |
| Se 4 + | 5 | 68.30 | Y 3 + | 3 | 20.52 | 47.78 |
| Se 4 + | 5 | 68.30 | Rh 2 + | 2 | 18.08 | 50.22 |

EP 1 684 311 A2

94

(continued)

| Atom Oxidized | n | nth Ionization Energy (ev) | Atom Reduced | n | nth Ionization Energy (ev) | Energy Hole (ev) |
|---|---|---|---|---|---|---|
| Se 4 + | 5 | 68.30 | Pd 2 + | 2 | 19.43 | 48.87 |
| Se 4 + | 5 | 68.30 | Ag 2 + | 2 | 21.49 | 46.81 |
| Se 4 + | 5 | 68.30 | In 2 + | 2 | 18.87 | 49.43 |
| Se 4 + | 5 | 68.30 | Te 2 + | 2 | 18.60 | 49.70 |
| Se 4 + | 5 | 68.30 | I 2 + | 2 | 19.13 | 49.17 |
| Se 4 + | 5 | 68.30 | Xe 2 + | 2 | 21.21 | 47.09 |
| Se 4 + | 5 | 68.30 | La 3 + | 3 | 19.18 | 49.12 |
| Se 4 + | 5 | 68.30 | Ce 3 + | 3 | 20.20 | 48.10 |
| Se4 + | 5 | 68.30 | Pr 3 + | 3 | 21.62 | 46.68 |
| Se 4 + | 5 | 68.30 | Gd 3 + | 3 | 20.63 | 47.67 |
| Se 4 + | 5 | 68.30 | Lu 3 + | 3 | 20.96 | 47.34 |
| Se 4 + | 5 | 68.30 | Pt 2 + | 2 | 18.56 | 49.74 |
| Se 4 + | 5 | 68.30 | Au 2 + | 2 | 20.50 | 47.80 |
| Se 4 + | 5 | 68.30 | Hg 2 + | 2 | 18.76 | 49.54 |
| Se 4 + | 5 | 68.30 | Tl 2 + | 2 | 20.43 | 47.87 |
| Se 5 + | 6 | 81.70 | Zr 4 + | 4 | 34.34 | 47.36 |
| Se 5 + | 6 | 81.70 | Pd 3 + | 3 | 32.93 | 48.77 |
| Se 5 + | 6 | 81.70 | Ag 3 + | 3 | 34.83 | 46.87 |
| Se 5 + | 6 | 81.70 | I 3 + | 3 | 33.00 | 48.70 |
| Se 5 + | 6 | 81.70 | Xe 3 + | 3 | 32.10 | 49.60 |
| Se 5 + | 6 | 81.70 | Hf 4 + | 4 | 33.33 | 48.37 |
| Se 5 + | 6 | 81.70 | Hg 3 + | 3 | 34.20 | 47.50 |
| Se 5 + | 6 | 81.70 | Pb 3 + | 3 | 31.94 | 49.76 |
| Se 6 + | 7 | 155.40 | Sr 7 + | 7 | 106.00 | 49.40 |
| Se 6 + | 7 | 155.40 | Sb 6 + | 6 | 108.00 | 47.40 |
| Y 3 + | 3 | 61.80 | Br 1 + | 1 | 11.81 | 49.99 |
| Mo 4 + | 4 | 61.20 | Br 1 + | 1 | 11.81 | 49.39 |
| Te 4 + | 4 | 58.75 | Br 1 + | 1 | 11.81 | 46.94 |
| Sn 4 + | 4 | 72.28 | Br 2 + | 2 | 21.80 | 50.48 |
| Pb 4 + | 4 | 68.80 | Br 2 + | 2 | 21.80 | 47.00 |
| Sb 5 + | 5 | 108.00 | Br 5 + | 5 | 59.70 | 48.30 |
| In 3 + | 3 | 54.00 | Sr 1 + | 1 | 5.70 | 48.31 |
| Sb 4 + | 4 | 56.00 | Sr 1 + | 1 | 5.70 | 50.31 |

(continued)

| Atom Oxidized | n | nth Ionization Energy (ev) | Atom Reduced | n | nth Ionization Energy (ev) | Energy Hole (ev) |
|---|---|---|---|---|---|---|
| Bi 4 + | 4 | 56.00 | Sr 1 + | 1 | 5.70 | 50.31 |
| Mo 4 + | 4 | 61.20 | Sr 2 + | 2 | 11.03 | 50.17 |
| Te4+ | 4 | 58.75 | Sr 2 + | 2 | 11.03 | 47.72 |
| Sr3+ | 4 | 57.00 | Zr 1 + | 1 | 6.84 | 50.16 |
| Sr 3 + | 4 | 57.00 | Nb 1 + | 1 | 6.88 | 50.12 |
| Sr 3 + | 4 | 57.00 | Mo 1 + | 1 | 7.10 | 49.90 |
| Sr 3 + | 4 | 57.00 | Tc 1 + | 1 | 7.28 | 49.72 |
| Sr 3 + | 4 | 57.00 | Ru 1 + | 1 | 7.37 | 49.63 |
| Sr 3 + | 4 | 57.00 | Rh 1 + | 1 | 7.46 | 49.54 |
| Sr 3 + | 4 | 57.00 | Pd 1 + | 1 | 8.34 | 48.66 |
| Sr 3 + | 4 | 57.00 | Ag 1 + | 1 | 7.58 | 49.42 |
| Sr 3 + | 4 | 57.00 | Cd 1 + | 1 | 8.99 | 48.01 |
| Sr 3 + | 4 | 57.00 | Sn 1 + | 1 | 7.34 | 49.66 |
| Sr 3 + | 4 | 57.00 | Sb 1 + | 1 | 8.64 | 48.36 |
| Sr 3 + | 4 | 57.00 | Te 1 + | 1 | 9.01 1 | 47.99 |
| Sr 3 + | 4 | 57.00 | Ba2+ | 2 | 10.00 | 47.00 |
| In 3 + | 3 | 54.00 | Y 1 + | 1 | 6.38 | 47.62 |
| Sb 4 + | 4 | 56.00 | Y 1 + | 1 | 6.38 | 49.62 |
| Bi 4 + | 4 | 56.00 | Y 1 + | 1 | 6.38 | 49.62 |
| Y 3 + | 3 | 61.80 | Y 2 + | 2 | 12.24 | 49.56 |
| Mo 4 + | 4 | 61.20 | Y 2 + | 2 | 12.24 | 48.96 |
| Mo 5 + | 5 | 68.00 | Y 3 + | 3 | 20.52 | 47.48 |
| Te 5 + | 5 | 70.70 | Y 3 + | 3 | 20.52 | 50.18 |
| Y 3 + | 4 | 61.80 | Y 2 + | 2 | 12.24 | 49.56 |
| Y 3 + | 4 | 61.80 | Zr 2 + | 2 | 13.13 | 48.67 |
| Y 3 + | 4 | 61.80 | Nb 2 + | 2 | 14.32 | 47.48 |
| Y 3 + | 4 | 61.80 | Sn 2 + | 2 | 14.63 | 47.17 |
| Y 3 + | 4 | 61.80 | Eu 2 + | 2 | 11.24 | 50.56 |
| Y 3 + | 4 | 61.80 | Gd 2 + | 2 | 12.09 | 49.71 |
| Y 3 + | 4 | 61.80 | Tb 2 + | 2 | 11.52 | 50.28 |
| Y 3 + | 4 | 61.80 | Dy 2 + | 2 | 11.67 | 50.13 |
| Y 3 + | 4 | 61.80 | Ho 2 + | 2 | 11.80 | 50.00 |
| Y 3 + | 4 | 61.80 | Er 2 + | 2 | 11.93 | 49.87 |

(continued)

| Atom Oxidized | n | nth Ionization Energy (ev) | Atom Reduced | n | nth Ionization Energy (ev) | Energy Hole (ev) |
|---|---|---|---|---|---|---|
| Y 3 + | 4 | 61.80 | Tm 2 + | 2 | 12.06 | 49.75 |
| Y 3 + | 4 | 61.80 | Yb 2 + | 2 | 12.18 | 49.62 |
| Y 3 + | 4 | 61.80 | Lu 2 + | 2 | 13.90 | 47.90 |
| Y 3 + | 4 | 61.80 | Hf 2 + | 2 | 14.90 | 46.90 |
| Y 3 + | 4 | 61.80 | Pb 2 + | 2 | 15.03 | 46.77 |
| Y 4 + | 5 | 77.00 | Mo 3 + | 3 | 27.16 | 49.84 |
| Y 4 + | 5 | 77.00 | Tc 3 + | 3 | 29.54 | 47.46 |
| Y 4 + | 5 | 77.00 | Ru 3 + | 3 | 28.47 | 48.53 |
| Y 4 + | 5 | 77.00 | In 3 + | 3 | 28.03 | 48.97 |
| Y 4 + | 5 | 77.00 | Te 3 + | 3 | 27.96 | 49.04 |
| Y 4 + | 5 | 77.00 | Tl 3 + | 3 | 29.83 | 47.17 |
| In 3 + | 3 | 54.00 | Zr 1 + | 3 | 6.84 | 47.16 |
| Sb 4 + | 4 | 56.00 | Zr 1 + | 1 | 6.84 | 49.16 |
| Bi 4 + | 4 | 56.00 | Zr 1 + | 1 | 6.84 | 49.16 |
| Mo 4 + | 4 | 61.20 | Zr 2 + | 2 | 13.13 | 48.07 |
| Sn 4 + | 4 | 72.28 | Zr 3 + | 3 | 22.99 | 49.29 |
| Te 5 + | 5 | 70.70 | Zr 3 + | 3 | 22.99 | 47.71 |
| Zr 4 + | 4 | 81.50 | Zr 4 + | 4 | 34.34 | 47.16 |
| Zr 4 + | 5 | 81.50 | Zr 4 + | 4 | 34.34 | 47.16 |
| Zr 4 + | 5 | 81.50 | Rh 3 + | 3 | 31.06 | 50.44 |
| Zr 4 + | 5 | 81.50 | Pd 3 + | 3 | 32.93 | 48.57 |
| Zr 4 + | 5 | 81.50 | Hf 4 + | 4 | 33.33 | 48.17 |
| Zr 4 + | 5 | 81.50 | Pb 3 + | 3 | 31.94 | 49.56 |
| In 3 + | 3 | 54.00 | Nb 1 + | 1 | 6.88 | 47.12 |
| Sb 4 + | 4 | 56.00 | Nb 1 + | 1 | 6.88 | 49.12 |
| Bi 4 + | 4 | 56.00 | Nb 1 + | 1 | 6.88 | 49.12 |
| Mo 4 + | 4 | 61.20 | Nb 2 + | 2 | 14.32 | 46.88 |
| Sn 4 + | 4 | 72.28 | Nb 3 + | 3 | 25.04 | 47.24 |
| Bi 5 + | 5 | 88.30 | Nb 4 + | 4 | 38.30 | 50.00 |
| Nb 4 + | 5 | 50.55 | Cs 1 + | 1 | 3.89 | 46.66 |
| In 3 + | 3 | 54.00 | Mo 1 + | 1 | 7.10 | 46.90 |
| Sb 4 + | 4 | 56.00 | Mo 1 + | 1 | 7.10 | 48.90 |
| Bi 4 + | 4 | 56.00 | Mo 1 + | 1 | 7.10 | 48.90 |

(continued)

| Atom Oxidized | n | nth Ionization Energy (ev) | Atom Reduced | n | nth Ionization Energy (ev) | Energy Hole (ev) |
|---|---|---|---|---|---|---|
| Sb 5 + | 5 | 108.00 | Mo 5 + | 5 | 61.20 | 46.80 |
| Mo 4 + | 5 | 61.20 | Xe 1 + | 1 | 12.13 | 49.07 |
| Mo 4 + | 5 | 61.20 | La 2 + | 2 | 11.06 | 50.14 |
| Mo 4 + | 5 | 61.20 | Ce2 + | 2 | 10.85 | 50.35 |
| Mo 4 + | 5 | 61.20 | Nd 2 + | 2 | 10.73 | 50.47 |
| Mo4+ | 5 | 61.20 | Pm 2 + | 2 | 10.90 | 50.30 |
| Mo4+ | 5 | 61.20 | Sm2+ | 2 | 11.07 | 50.13 |
| Mo 4 + | 5 | 61.20 | Eu 2 + | 2 | 11.24 | 49.96 |
| Mo 4 + | 5 | 61.20 | Gd 2 + | 2 | 12.09 | 49.11 |
| Mo 4 + | 5 | 61.20 | Tb 2 + | 2 | 11.52 | 49.68 |
| Mo 4 + | 5 | 61.20 | Dy 2 + | 2 | 11.67 | 49.53 |
| Mo 4 + | 5 | 61.20 | Ho2+ | 2 | 11.80 | 49.40 |
| Mo 4 + | 5 | 61.20 | Er 2 + | 2 | 11.93 | 49.27 |
| Mo 4 + | 5 | 61.20 | Tm 2 + | 2 | 12.05 | 49.15 |
| Mo 4 + | 5 | 61.20 | Yb 2 + | 2 | 12.18 | 49.02 |
| Mo 4 + | 5 | 61.20 | Lu 2 + | 2 | 13.90 | 47.30 |
| Mo 4 + | 5 | 61.20 | Rn 1 + | 1 | 10.75 | 50.45 |
| Mo 5 + | 6 | 68.00 | Rh 2 + | 2 | 18.08 | 49.92 |
| Mo 5 + | 6 | 68.00 | Pd 2 + | 2 | 19.43 | 48.57 |
| Mo 5 + | 6 | 68.00 | In2+ | 2 | 18.87 | 49.13 |
| Mo 5 + | 6 | 68.00 | Te 2 + | 2 | 18.60 | 48.78 |
| Mo 5 + | 6 | 68.00 | I 2 + | 2 | 19.13 | 48.87 |
| Mo 5 + | 6 | 68.00 | Xe 2 + | 2 | 21.21 | 46.79 |
| Mo 5 + | 6 | 68.00 | La 3 + | 3 | 19.18 | 48.82 |
| Mo 5 + | 6 | 68.00 | Ce 3 + | 3 | 20.20 | 47.80 |
| Mo 5 + | 6 | 68.00 | Gd3+ | 3 | 20.63 | 47.37 |
| Mo 5 + | 6 | 68.00 | Lu 3 + | 3 | 20.96 | 47.04 |
| Mo 5 + | 6 | 68.00 | Pt 2 + | 2 | 18.56 | 49.44 |
| Mo 5 + | 6 | 68.00 | Au 2 + | 2 | 20.50 | 47.50 |
| Mo 5 + | 6 | 68.00 | Hg 2 + | 2 | 8.76 | 49.24 |
| Mo 5 + | 6 | 68.00 | Tl 2 + | 2 | 20.43 | 47.57 |
| In 3 + | 3 | 54.00 | Tc 1 + | 1 | 7.28 | 46.72 |
| Sb 4 + | 4 | 56.00 | Tc 1 + | 1 | 7.28 | 48.72 |

98

(continued)

| Atom Oxidized | n | nth Ionization Energy (ev) | Atom Reduced | n | nth Ionization Energy (ev) | Energy Hole (ev) |
|---|---|---|---|---|---|---|
| Bi 4 + | 4 | 56.00 | Tc 1 + | 1 | 7.28 | 48.72 |
| In 3 + | 3 | 54.00 | Ru 1 + | 1 | 7.37 | 46.63 |
| Sb 4 + | 4 | 56.00 | Ru 1 + | 1 | 7.37 | 48.63 |
| Bi 4 + | 4 | 56.00 | Ru 1 + | 1 | 7.37 | 48.63 |
| Sb 4 + | 4 | 56.00 | Rh 1 + | 1 | 7.46 | 48.54 |
| Bi 4 + | 4 | 56.00 | Rh 1 + | 1 | 7.46 | 48.54 |
| Sb 4 + | 4 | 56.00 | Pd 1 + | 1 | 8.34 | 47.66 |
| Te 4 + | 4 | 58.75 | Pd 1 + | 1 | 8.34 | 50.41 |
| Bi 4 + | 4 | 56.00 | Pd 1 + | 1 | 8.34 | 47.66 |
| Pb 4 + | 4 | 68.80 | Pd 2 + | 2 | 19.43 | 49.37 |
| Sb 4 + | 4 | 56.00 | Ag 1 + | 1 | 7.58 | 48.42 |
| Bi 4 + | 4 | 56.00 | Ag 1 + | 1 | 7.58 | 48.42 |
| Te 5 + | 5 | 70.70 | Ag 2 + | 2 | 21.49 | 49.21 |
| Sb 4 + | 4 | 56.00 | Cd 1 + | 1 | 8.99 | 47.01 |
| Te 4 + | 4 | 58.75 | Cd 1 + | 1 | 8.99 | 49.76 |
| Bi 4 + | 4 | 56.00 | Cd 1+ | 1 | 8.99 | 47.01 |
| In 3 + | 3 | 54.00 | In 1 + | 1 | 5.79 | 48.21 |
| Sb 4 + | 4 | 56.00 | In 1 + | 1 | 5.79 | 50.21 |
| Bi 4 + | 4 | 56.00 | In 1 + | 1 | 5.79 | 50.21 |
| In 3 + | 4 | 54.00 | In 1 + | 1 | 5.79 | 48.21 |
| In 3 + | 4 | 54.00 | Sn 1 + | 1 | 7.34 | 46.66 |
| In 3 + | 4 | 54.00 | Cs 1 + | 1 | 3.89 | 50.11 |
| In 3 + | 4 | 54.00 | Ba 1 + | 1 | 5.21 | 48.79 |
| In3+ | 4 | 54.00 | La 1 + | 1 | 5.58 | 48.42 |
| In 3 + | 4 | 54.00 | Ce 1 + | 1 | 5.47 | 48.53 |
| In 3 + | 4 | 54.00 | Pr 1 + | 1 | 5.42 | 48.58 |
| In 3 + | 4 | 54.00 | Nd 1 + | 1 | 5.49 | 48.51 |
| In 3 + | 4 | 54.00 | Pm 1 + | 1 | 5.55 | 48.45 |
| In 3 + | 4 | 54.00 | Sm 1 + | 1 | 5.63 | 48.37 |
| In 3 + | 4 | 54.00 | Eu 1 + | 1 | 5.67 | 48.33 |
| In 3 + | 4 | 54.00 | Gd 1 + | 1 | 6.14 | 47.86 |
| In 3 + | 4 | 54.00 | Tb 1 + | 1 | 5.85 | 48.15 |
| In 3 + | 4 | 54.00 | Dy 1 + | 1 | 5.93 | 48.07 |

| Atom Oxidized | n | nth Ionization Energy (ev) | Atom Reduced | n | nth Ionization Energy (ev) | Energy Hole (ev) |
|---|---|---|---|---|---|---|
| In 3 + | 4 | 54.00 | Ha 1 + | 1 | 6.02 | 47.98 |
| In 3 + | 4 | 54.00 | Er 1 + | 1 | 6.10 | 47.90 |
| In 3 + | 4 | 54.00 | Tm 1 + | 1 | 6.18 | 47.82 |
| In 3 + | 4 | 54.00 | Yb 1 + | 1 | 6.25 | 47.75 |
| In 3 + | 4 | 54.00 | Lu 1+ | 1 | 5.43 | 48.57 |
| In 3 + | 4 | 54.00 | Hf 1 + | 1 | 6.60 | 47.40 |
| In 3 + | 4 | 54.00 | Tl 1 + | 1 | 6.11 | 47.89 |
| In 3 + | 4 | 54.00 | Bi 1 + | 1 | 7.29 | 46.71 |
| In 3+ | 4 | 54.00 | Ra 1 + | 1 | 5.28 | 48.72 |
| In 3 + | 4 | 54.00 | Ac 1 + | 1 | 5.20 | 48.80 |
| In 3 + | 4 | 54.00 | Th 1+ | 1 | 6.10 | 47.90 |
| In 3 + | 4 | 54.00 | Pa 1 + | 1 | 5.90 | 48.10 |
| In 3 + | 4 | 54.00 | U 1 + | 1 | 6.05 | 47.95 |
| In 3 + | 4 | 54.00 | Np 1 + | 1 | 6.20 | 47.80 |
| In 3 + | 4 | 54.00 | Pu 1 + | 1 | 6.06 | 47.94 |
| In 3 + | 4 | 54.00 | Am 1 + | 1 | 5.99 | 48.01 |
| In 3 + | 4 | 54.00 | Cm 1 + | 1 | 6.02 | 47.98 |
| In 3 + | 4 | 54.00 | Bk 1 + | 1 | 1 6.23 | 47.77 |
| In 3 + | 4 | 54.00 | Cf 1 + | 1 | 6.30 | 47.70 |
| In 3 + | 4 | 54.00 | Es 1 + | 1 | 6.42 | 47.58 |
| Sb 4 + | 4 | 56.00 | Sn 1 + | 1 | 7.34 | 48.66 |
| Bi 4 + | 4 | 56.00 | Sn 1 + | 1 | 7.34 | 48.66 |
| Bi 5 + | 5 | 88.30 | Sn 4 + | 4 | 40.73 | 47.57 |
| Sn 4 + | 5 | 72.28 | Sb 3 + | 3 | 25.30 | 46.98 |
| Sn 4 + | 5 | 72.28 | Cs 2 + | 2 | 25.10 | 47.18 |
| Sn 4 + | 5 | 72.28 | Nd 3 + | 3 | 22.10 | 50.18 |
| Sn 4 + | 5 | 72.28 | Pm 3 + | 3 | 22.30 | 49.98 |
| Sn 4 + | 5 | 72.28 | Sm 3 + | 3 | 23.40 | 48.88 |
| Sn 4 + | 5 | 72.28 | Eu 3 + | 3 | 24.90 | 47.38 |
| Sn 4 + | 5 | 72.28 | Tb 3 + | 3 | 21.91 | 50.37 |
| Sn 4 + | 5 | 72.28 | Dy 3 + | 3 | 22.80 | 49.48 |
| Sn 4 + | 5 | 72.28 | Ho 3 + | 3 | 22.84 | 49.44 |
| Sn 4 + | 5 | 72.28 | Er 3 + | 3 | 22.74 | 49.54 |

| Atom Oxidized | n | nth Ionization Energy (ev) | Atom Reduced | n | nth Ionization Energy (ev) | Energy Hole (ev) |
|---|---|---|---|---|---|---|
| Sn 4 + | 5 | 72.28 | Tm 3 + | 3 | 23.68 | 48.60 |
| Sn 4 + | 5 | 72.28 | Yb 3 + | 3 | 25.03 | 47.25 |
| Sn 4 + | 5 | 72.28 | Hf 3 + | 3 | 23.30 | 48.98 |
| Sn 4 + | 5 | 72.28 | Bi 3 + | 3 | 25.56 | 46.72 |
| Sb 4 + | 4 | 56.00 | Sb 1 + | 1 | 8.64 | 47.36 |
| Te 4 + | 4 | 58.75 | Sb 1 + | 1 | 8.64 | 50.11 |
| Bi 4 + | 4 | 56.00 | Sb 1 + | 1 | 8.64 | 47.36 |
| Sb 4 + | 5 | 56.00 | Sb 1 + | 1 | 8.64 | 47.36 |
| Sb 4 + | 5 | 56.00 | Te 1 + | 1 | 9.01 | 46.99 |
| Sb 4 + | 5 | 56.00 | La 1 + | 1 | 5.58 | 50.42 |
| Sb4+ | 5 | 56.00 | Ce 1 + | 1 | 5.47 | 50.53 |
| Sb 4 + | 5 | 56.00 | Pr 1 + | 1 | 5.42 | 50.58 |
| Sb 4 + | 5 | 56.00 | Nd 1 + | 1 | 5.49 | 50.51 |
| Sb 4 + | 5 | 56.00 | Pm 1 + | 1 | 5.55 | 50.45 |
| Sb 4 + | 5 | 56.00 | Sm 1 + | 1 | 5.63 | 50.37 |
| Sb 4 + | 5 | 56.00 | Eu 1 + | 1 | 5.67 | 50.33 |
| Sb 4 + | 5 | 56.00 | Gd 1 + | 1 | 6.14 | 49.86 |
| Sb 4 + | 5 | 56.00 | Tb 1 + | 1 | 5.85 | 50.15 |
| Sb 4 + | 5 | 56.00 | Dy 1 + | 1 | 5.93 | 50.07 |
| Sb 4 + | 5 | 56.00 | Ho 1 + | 1 | 6.02 | 49.98 |
| Sb 4 + | 5 | 56.00 | Er 1 + | 1 | 6.10 | 49.90 |
| Sb 4 + | 5 | 56.00 | Tm 1 + | 1 | 6.18 | 49.82 |
| Sb 4 + | 5 | 56.00 | Yb 1 + | 1 | 6.25 | 49.75 |
| Sb 4 + | 5 | 56.00 | Lu 1 + | 1 | 5.43 | 50.57 |
| Sb 4 + | 5 | 56.00 | Hf 1 + | 1 | 6.60 | 49.40 |
| Sb 4 + | 5 | 56.00 | Ta 1 + | 1 | 7.89 | 48.11 |
| Sb 4 + | 5 | 56.00 | W 1 + | 1 | 7.98 | 48.02 |
| Sb 4 + | 5 | 56.00 | Re 1 + | 1 | 7.88 | 48.12 |
| Sb 4 + | 5 | 56.00 | Os 1 + | 1 | 8.70 | 47.30 |
| Sb 4 + | 5 | 56.00 | Ir 1 + | 1 | 9.10 | 46.90 |
| Sb 4 + | 5 | 56.00 | Pt 1 + | 1 | 9.00 | 47.00 |
| Sb 4 + | 5 | 56.00 | Au 1 + | 1 | 9.23 | 46.78 |
| Sb4+ | 5 | 56.00 | Tl 1 + | 1 | 6.11 | 49.89 |

| Atom Oxidized | n | nth Ionization Energy (ev) | Atom Reduced | n | nth Ionization Energy (ev) | Energy Hole (ev) |
|---|---|---|---|---|---|---|
| Sb4+ | 5 | 56.00 | Pb 1 + | 1 | 7.42 | 48.58 |
| Sb 4 + | 5 | 56.00 | Bi1+ | 1 | 7.29 | 48.71 |
| Sb 4 + | 5 | 56.00 | Po 1 + | 1 | 8.42 | 47.58 |
| Sb 4 + | 5 | 56.00 | Th 1 + | 1 | 6.10 | 49.90 |
| Sb 4 + | 5 | 56.00 | Pa 1 + | 1 | 5.90 | 50.10 |
| Sb 4 + | 5 | 56.00 | U 1 + | 1 | 6.05 | 49.95 |
| Sb 4 + | 5 | 56.00 | Np 1 + | 1 | 6.20 | 49.80 |
| Sb 4 + | 5 | 56.00 | Pu 1 + | 1 | 6.06 | 49.94 |
| Sb 4 + | 5 | 56.00 | Am 1 + | 1 | 5.99 | 50.01 |
| Sb 4 + | 5 | 56.00 | Cm 1 + | 1 | 6.02 | 49.98 |
| Sb 4 + | 5 | 56.00 | Bk 1 + | 1 | 6.23 | 49.77 |
| Sb 4 + | 5 | 56.00 | Cf 1 + | 1 | 6.30 | 49.70 |
| Sb 4 + | 5 | 56.00 | Es 1 + | 1 | 6.42 | 49.58 |
| Sb 5 + | 6 | 108.00 | e 5 + | 5 | 58.75 | 49.25 |
| Te 4 + | 4 | 58.75 | Te 1 + | 1 | 9.01 | 49.74 |
| Bi 4 + | 4 | 56.00 | Te 1 + | 1 | 9.01 | 46.99 |
| Pb 4 + | 4 | 68.80 | Te 2 + | 2 | 18.60 | 50.20 |
| Te 4 + | 5 | 58.75 | Te 1 + | 1 | 9.01 | 9.74 |
| Te 4 + | 5 | 58.75 | I 1 + | 1 | 10.45 | 48.30 |
| Te 4 + | 5 | 58.75 | Ba 2 + | 2 | 10.00 | 48.75 |
| Te 4 + | 5 | 58.75 | La 2 + | 2 | 11.06 | 47.69 |
| Te4+ | 5 | 58.75 | Ce 2 + | 2 | 10.85 | 47.90 |
| Te 4 + | 5 | 58.75 | Pr 2 + | 2 | 10.55 | 48.20 |
| Te 4 + | 5 | 58.75 | Nd 2 + | 2 | 10.73 | 48.02 |
| Te 4 + | 5 | 58.75 | Pm 2 + | 2 | 10.90 | 47.85 |
| Te 4 + | 5 | 58.75 | Sm 2 + | 2 | 11.07 | 47.68 |
| Te 4 + | 5 | 58.75 | Eu 2 + | 2 | 11.24 | 47.51 |
| Te 4 + | 5 | 58.75 | Gd 2 + | 2 | 12.09 | 46.66 |
| Te 4 + | 5 | 58.75 | Tb 2 + | 2 | 11.52 | 7.23 |
| Te 4 + | 5 | 58.75 | Dy 2 + | 2 | 11.67 | 47.08 |
| Te 4 + | 5 | 58.75 | Ho 2 + | 2 | 11.80 | 46.95 |
| Te 4 + | 5 | 58.75 | Er 2 + | 2 | 11.93 | 46.82 |
| Te 4 + | 5 | 58.75 | Tm 2 + | 2 | 12.05 | 46.70 |

| Atom Oxidized | n | nth Ionization Energy (ev) | Atom Reduced | n | nth Ionization Energy (ev) | Energy Hole (ev) |
|---|---|---|---|---|---|---|
| Te 4 + | 5 | 58.75 | Os 1 + | 1 | 8.70 | 50.05 |
| Te 4 + | 5 | 58.75 | Ir 1 + | 1 | 9.10 | 49.65 |
| Te 4 + | 5 | 58.75 | Pt 1 + | 1 | 9.00 | 49.75 |
| Te 4 + | 5 | 58.75 | Au 1 + | 1 | 9.23 | 49.53 |
| Te 4 + | 5 | 58.75 | Hg 1 + | 1 | 10.44 | 48.31 |
| Te 4 + | 5 | 58.75 | Po 1 + | 1 | 8.42 | 50.33 |
| Te 4 + | 5 | 58.75 | Rn 1 + | 1 | 10.75 | 48.00 |
| Te 4 + | 5 | 58.75 | Ra 2 + | 2 | 10.15 | 48.60 |
| Fe 3 + | 3 | 54.80 | V 1 + | 1 | 6.74 | 48.06 |
| Ni 3 + | 3 | 54.90 | V 1 + | 1 | 6.74 | 48.16 |
| Cu 3 + | 3 | 55.20 | V 1 + | 1 | 6.74 | 48.46 |
| Sr3 + | 3 | 57.00 | V 1 + | 1 | 6.74 | 50.26 |
| In 3 + | 3 | 54.00 | V 1 + | 1 | 6.74 | 47.26 |
| Sb4+ | 4 | 56.00 | V 1 + | 1 | 6.74 | 49.26 |
| Bi 4 + | 4 | 56.00 | V 1 + | 1 | 6.74 | 49.26 |
| V 4 + | 4 | 65.23 | V 2 + | 2 | 14.65 | 50.58 |
| Ga 3 + | 3 | 64.00 | V 2 + | 2 | 14.65 | 49.35 |
| As4+ | 4 | 63.63 | V2+ | 2 | 14.65 | 48.98 |
| Y 3 + | 3 | 61.80 | V 2+ | 2 | 14.65 | 47.15 |
| Co 4 + | 4 | 79.50 | V 3 + | 3 | 29.31 | 50.19 |
| Cu 4 + | 4 | 79.90 | V 3 + | 3 | 29.31 | 50.59 |
| Y 4+ | 4. | 77.00 | V 3 + | 3 | 9.31 | 47.69 |
| Mn 5 + | 5 | 5.00 | V 4 + | 4 | 46.71 | 48.29 |
| Ge 4 + | 4 | 93.50 | V 4 + | 4 | 46.71 | 46.79 |
| V 4 + | 5 | 65.23 | V 2 + | 2 | 14.65 | 50.58 |
| V 4 + | 5 | 65.23 | Cr 2 + | 2 | 16.50 | 48.73 |
| Sr 3 + | 4 | 57.00 | Hf 1 + | 1 | 6.60 | 50.40 |
| Sr 3 + | 4 | 57.00 | Ta 1 + | 1 | 7.89 | 49.11 |
| Sr 3 + | 4 | 57.00 | W 1 + | 1 | 7.98 | 49.02 |
| Sr 3 + | 4 | 57.00 | Re 1 + | 1 | 7.88 | 49.12 |
| Sr 3 + | 4 | 57.00 | Os 1 + | 1 | 8.70 | 48.30 |
| Sr 3 + | 4 | 57.00 | Ir 1 + | 1 | 9.10 | 47.90 |
| Sr3 + | 4 | 57.00 | Pt 1 + | 1 | 9.00 | 48.00 |

(continued)

| Atom Oxidized | n | nth Ionization Energy (ev) | Atom Reduced | n | nth Ionization Energy (ev) | Energy Hole (ev) |
|---|---|---|---|---|---|---|
| Sr 3 + | 4 | 57.00 | Au 1 + | 1 | 9.23 | 47.78 |
| Sr 3 + | 4 | 57.00 | Pb 1 + | 1 | 7.42 | 49.58 |
| Sr 3 + | 4 | 57.00 | Bi 1 + | 1 | 7.29 | 49.71 |
| Sr 3 + | 4 | 57.00 | Po 1 + | 1 | 8.42 | 48.58 |
| Sr3 + | 4 | 57.00 | Es 1 + | 1 | 6.42 | 50.58 |
| Sr 4 + | 5 | 71.60 | Zr 3 + | 3 | 22.99 | 48.61 |

Single Electron Transfer (One Species)

An energy hole is provided by the ionization of an electron from a participating species including an atom, an ion, a molecule, and an ionic or molecular compound to a vacuum energy level. In one embodiment, the energy hole comprises the ionization of an electron from one species to a vacuum energy level whereby the ionization energy of the electron donating species equals approximately $mp^2 \times 48.6$ eV where m and p are integers. Catalytic systems that hinge on the transfer of one electron from an atom or ion to a vacuum energy level capable of producing energy holes for shrinking hydrogen molecules are given in the following table. The number following the atomic symbol (n) is the nth ionization energy of the atom. That is for example, $Na^+ + 47.29$ eV $= Na^{2+} + e^-$.

| Catalytic Ion | n | nth ionization energy |
|---|---|---|
| Na 1 + | 2 | 47.29 |
| Cr 3 + | 4 | 49.10 |
| As 3 + | 4 | 50.13 |
| Nb 4 + | 5 | 50.55 |
| La 3 + | 4 | 49.95 |

Multiple Electron Transfer

An energy hole is provided by the transfer of multiple electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately $mp^2 \times 48.6$ eV where m, p, and t are integers.

An energy hole is provided by the transfer of multiple electrons between participating species including atoms, ions, molecules, and ionic and molecular compounds. In one embodiment, the energy hole comprises the transfer of t electrons from one species to another whereby the t consecutive electron affinities and/or ionization energies of the electron donating species minus the t consecutive ionization energies and/or electron affinities of the electron acceptor equals approximately $mp^2 \times 48.6$ eV where m, p, and t are integers.

In a preferred embodiment the electron acceptor species is an oxide such as $MnO_X$, $AlO_X$, $SiO_X$. A preferred molecular electron acceptor is oxygen, $O_2$.

Two Electron Transfer (One Species)

In an embodiment, a catalytic system that provides an energy hole hinges on the- ionization of two electrons from an atom, ion, or molecule to a vacuum energy level such that the sum of two ionization energies is approximately $mp^2 \times 48.6$ eV where m, and p are integers.

Two Electron Transfer (Two Species)

In another embodiment, a catalytic system that provides an energy hole hinges on the transfer of two electrons from an atom, ion, or molecule to another atom or molecule such that the sum of two ionization energies minus the sum of two electron affinities of the participating atoms, ions, and/or molecules is approximately $mp^2 \times 48.6$ eV where m and p are integers.

Two Electron Transfer (Two Species)

In another embodiment, a catalytic system that provides an energy hole hinges on the transfer of two electrons from an atom, ion, or molecule to another atom, ion, or niolecule such that the sum of two ionization energies minus the sum of one ionization energy and one electron affinity of the participating atoms, ions, and/or molecules is approximately $mp^2 \times 48.6$ eV where m and p are integers.

Other Energy Holes

In another embodiment, energy holes, each of approximately $m \times 67.8$ eV given by Eq. (276)

$$-m \times V_e = -m \times \frac{-2e^2}{8\pi\varepsilon_0\sqrt{a^2-b^2}} \ln\frac{a+\sqrt{a^2-b^2}}{a-\sqrt{a^2-b^2}}$$

$$= m \times 67.813 \text{ eV} \tag{291}$$

are provided by electron transfer reactions of reactants including electrochemical reactant(s) (electrocatalytic couple(s)) which cause heat to be released from hydrogen molecules as their electrons are stimulated to relax to quantized potential energy levels below that of the "ground state". The energy removed by an electron transfer reaction, energy hole, is resonant with the hydrogen energy released to stimulate this transition. The source of hydrogen molecules is the production on the surface of a cathode during electrolysis of water in the case of an electrolytic, energy reactor and hydrogen gas or a hydride In the case of a pressurized gas energy reactor or gas discharge energy reactor.

An energy hole is provided by the transfer of one or more electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately m x 67.8 eV where m and t are integers.

An efficient catalytic system that hinges on the coupling of three resonator cavities involves magnesium. For example, the third ionization energy of magnesium is 80.143 eV. This energy hole is obviously too high for resonant absorption. However, $Sr^{2+}$ releases 11.03 eV when it is reduced to $Sr^+$. The combination of $Mg^{2+}$ to $Mg^{3+}$ and $Sr^{2+}$ to $Sr^+$, then, has a net energy change of 69.1 eV.

$$69.1 \text{ eV} + Mg^{2+} + Sr^{2+} + H_2\left[2c'=\sqrt{2}\ a_0\right]$$

$$\rightarrow Mg^{3+} + Sr^+ + H^*_2\left[2c'=\frac{\sqrt{2}\ a_0}{2}\right] + 95.7 \text{ eV} \tag{292}$$

$$Mg^{3+} + Sr^+ \rightarrow Mg^{2+} + Sr^{2+} + 69.1 \text{ eV} \tag{293}$$

And, the overall reaction is

$$H_2\left[2c'=\sqrt{2}\ a_0\right] \rightarrow H^*_2\left[2c'=\frac{\sqrt{2}\ a_0}{2}\right] + 95.7 \text{ eV} \tag{294}$$

An efficient catalytic system that hinges on the coupling of three resonator cavities involves magnesium. For example, the third ionization energy of magnesium is 80.143 eV. This energy hole is obviously too high for resonant absorption. However, $Ca^{2+}$ releases 11.871 eV when it is reduced to $Ca^+$. The combination of $Mg^{2+}$ to $Mg^{3+}$ and $Ca^{2+}$ to $Ca^+$, then, has a net energy change of 68.2 eV.

$$68.2 \text{ eV} + Mg^{2+} + Ca^{2+} + H_2\left[2c'=\sqrt{2}\ a_0\right]$$

$$\rightarrow Mg^{3+} + Ca^+ + H^*_2\left[2c'=\frac{\sqrt{2}\ a_0}{2}\right] + 95.7 \text{ eV} \tag{295}$$

$$Mg^{3+} + Ca^+ \rightarrow Mg^{2+} + Ca^{2+} + 68.2 \text{ eV} \tag{296}$$

And, the overall reaction is

$$H_2\left[2c' = \sqrt{2}\ a_O\right] \rightarrow H^*_2\left[2c' = \frac{\sqrt{2}\ a_O}{2}\right] + 95.7\ eV \quad (297)$$

In four other embodiments, energy holes, each of approximately n x $E_T$ eV given by Eq. (275) with zero order vibration and/or approximately n x $E_T$ eV given by Eq. (281) with zero order vibration and/or approximately m x 31.94 eV given by Eq. (222) and/or approximately 95.7 eV (corresponding to m = 1 in Eq. (281) with zero order vibration which is given by the difference in $E_{T_{zero}}$ order of Eqs. (254) and (222)) are provided by electron transfer reactions of reactants including electrochemical reaetant(s) (electrocatalytic couple(s)) which cause heat to be released from hydrogen molecules as their electrons are stimulated to relax to quantized potential energy levels below that of the "ground state". The energy removed by an electron transfer reaction, energy hole, is resonant with the hydrogen energy released to stimulate this transition. The source of hydrogen molecules is the production on the surface of a cathode during electrolysis of water in the case of an electrolytic energy reactor and hydrogen gas or a hydride in the case of a pressurized gas energy reactor or gas discharge energy reactor.
An energy hole is provided by the transfer of one or more electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately m x 31.94 eV (Eq. (222)) where m and t are integers.

An energy hole is provided by the transfer of one or more electrons between participating species including atoms, ions, molecules, and ionic and molecular compounds. In one embodiment, the energy hole comprises the transfer of t electrons from one or more species to one or more species whereby the sum of the ionization energies and/or electron affinities of the electron donating species minus the sum of the ionization energies and/or electron affinities of the electron acceptor species equals approximately m X 95.7 eV where m and t are integers.

ENERGY REACTOR

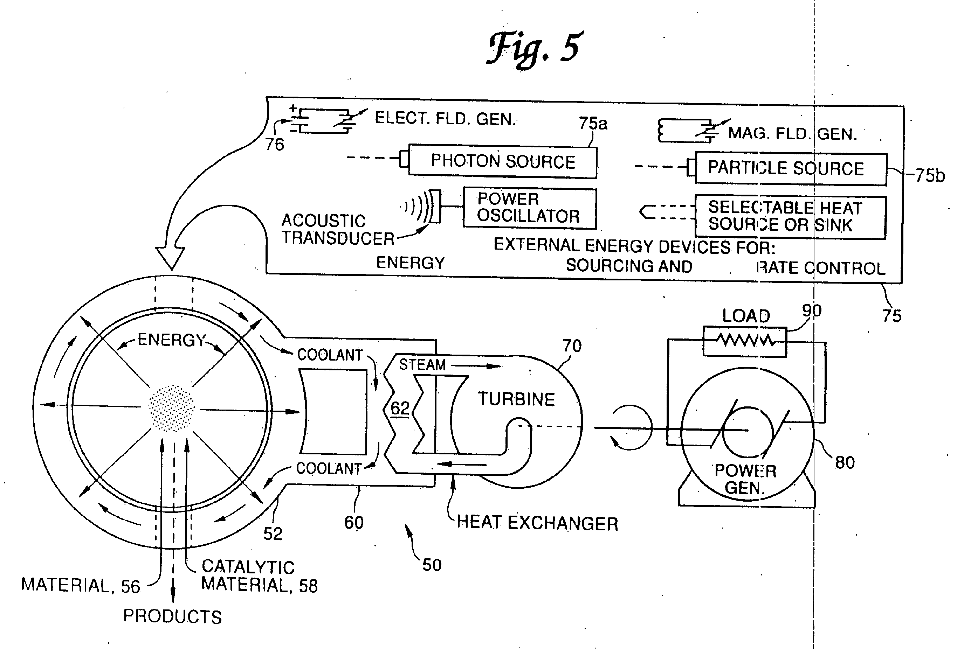

An energy reactor 50, in accordance with the invention, is shown in FIGURE 5 and comprises a vessel 52 which contains an energy reaction mixture 54, a heat exchanger 60, and a steam generator 62. The heat exchanger 60 absorbs heat' released by the shrinkage reaction, when the reaction mixture, comprised of shrinkable material, shrinks. The heat exchanger exchanges heat with the steam generator 62 which absorbs heat from the exchanger 60 and produces steam. The energy reactor 50 further comprises a turbine 70 which receives steam from the steam generator 62 and supplies mechanical power to a power generator 80 which converts the steam energy into electrical energy, which is received by a load 90 to produce work or for dissipation.

The energy reaction mixture 54 comprises an energy releasing material 56 including a source of hydrogen isotope atoms or a source of molecular hydrogen isotope, and a source of energy holes 58 which resonantly remove approximately m X 27.21 eV to cause atomic hydrogen "shrinkage" and approximately m X 48.6 eV to cause molecular hydrogen "shrinkage" where m is an integer. The shrinkage reaction releases heat and shrunken atoms and/or molecules.

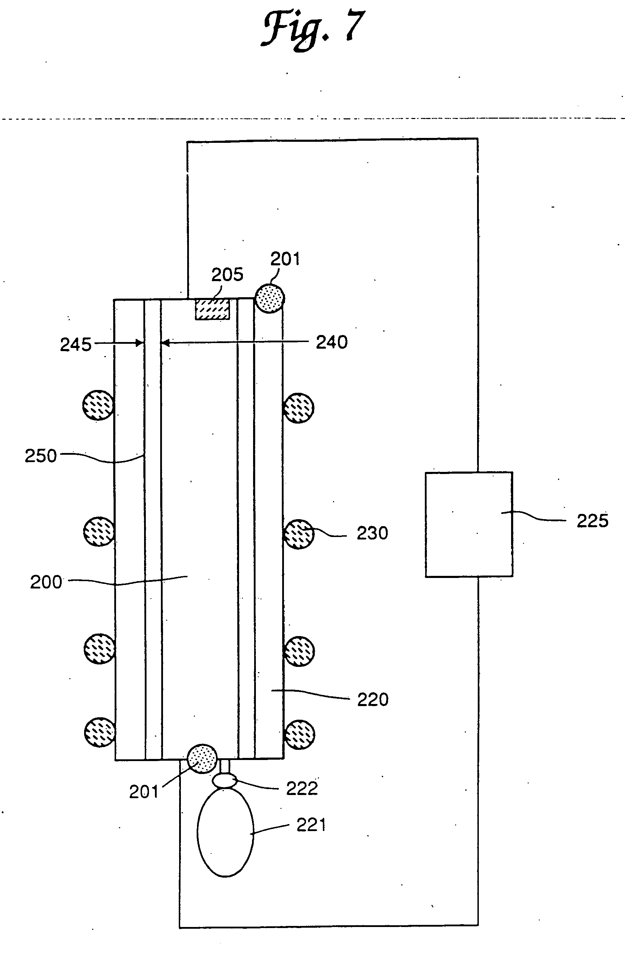

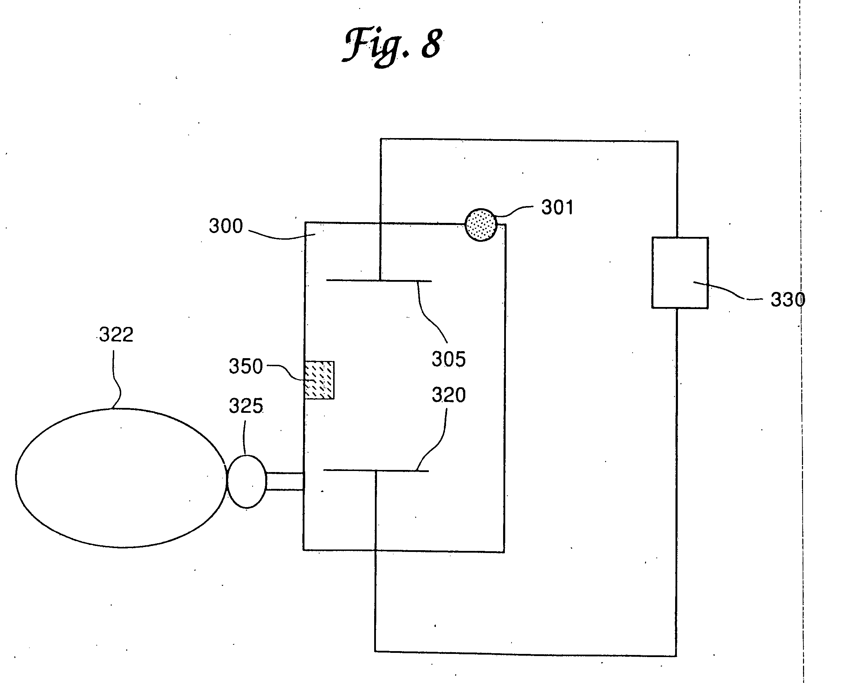

The source of hydrogen can be hydrogen gas, electrolysis of water, hydrogen from hydrides, or hydrogen from metal-hydrogen solutions. In all embodiments, the source of energy holes is one or more of an electrochemical, chemical, photochemical, thermal, free radical, sonic, or nuclear raction(s) or inelastic photon or particle scattering reaction(s). In the latter two cases, the present invention of an energy reactor comprises a particle source 75b and/or photon source 75a to supply the said energy holes. In these cases, the energy hole corresponds to stimulated emission by the photon or particle. In a preferred embodiments of the pressurized gas energy and gas discharge reactors shown in FIGURES 7 and 8, respectively, a photon source 75a dissociates hydrogen molecules to hydrogen atoms. The photon source producing photons of at least one energy of approximately n X 27.21 eV, n/2 X 27.21 eV, or 40.8 eV causes stimulated emission of energy as the hydrogen atoms undergo the shrinkage reaction. In another preferred embodiment, a photon source 75a producing photons of at least one energy of approximately n X 48.6 eV, 95.7 eV, or n x 31.94 eV causes stimulated emission of energy as the hydrogen molecules undergo the shrinkage reaction. In all reaction mixtures, a selected external energy device 75, such as an electrode may be used to supply an electrostatic potential or a current to decrease the activation energy of the resonant absorption of an energy hole. In another embodiment, the mixture 54, further comprises a surface or material to absorb atoms and/or molecules of the energy releasing material 56. Such surfaces or materials to absorb hydrogen, deuterium, or tritium comprise transition elements and inner transition elements including iron, platinum, palladium, zirconium, vanadium, nickel, titanium, Sc, Cr, Mn, Co, Cu, Zn, Y, Nb, Mo, Tc, Ru, Rh, Ag, Cd, La, Hf, Ta, W, Re, Os, Ir, Au, Hg, Ce, Pr, Nd, Pm, Sm, Eu, Gd, Tb, Oy, Ho, Er, Tm, Yb, Lu, Th, Pa, and U. In a preferred embodiment, a. source of energy holes to shrink hydrogen atoms comprises a catalytic energy hole material 58, typically comprising electrochemical couples including the catalytic couples described in my previous U.S.

patent application entitled "Energy/ Matter Conversion Methods and Structures," filed on April 28, 1989 which is incorporated by reference. In a preferred embodiment, a source of energy holes to shrink hydrogen molecules comprises a catalytic energy hole material 58, typically comprising electrochemical couples including the catalytic couples that provide an energy hole of approximately m x 48.6 plus or minus 5 eV. A further embodiment is the vessel 52 containing a molten, liquid, or solid solution of the catalytic couple(s) and a source of hydrogen including hydrides and gaseous hydrogen. In the case of a reactor which shrinks hydrogen atoms, the embodiment further comprises a means to dissociate the molecular hydrogen into atomic hydrogen including the transition or inner transition metals or electromagnetic radiation including UV light provided by photon source 75.

The present invention of an electrolytic cell energy reactor, pressurized gas energy reactor, and a gas discharge energy reactor, comprises: a means for containing a source of hydrogen; a means for bringing the hydrogen atoms (molecules) into contact with one of a solid, molten, liquid, or gaseous solution of energy holes; and a means for removing the lower-energy hydrogen atoms (molecules) so as to prevent an exothermic shrinkage reaction from coming to equilibrium. The present energy invention is further described in my previous U.S. Patent Applications entitled "Energy/ Matter Conversion Methods and Structures," filed on April 28, 1989, December 12, 1990, and June 11,1993 and my publication, Mills, R., Kneizys, S., Fusion Technology., 210, (1991), pp. 65-81 which are incorporated herein by reference.

Electrolytic Energy Reactor

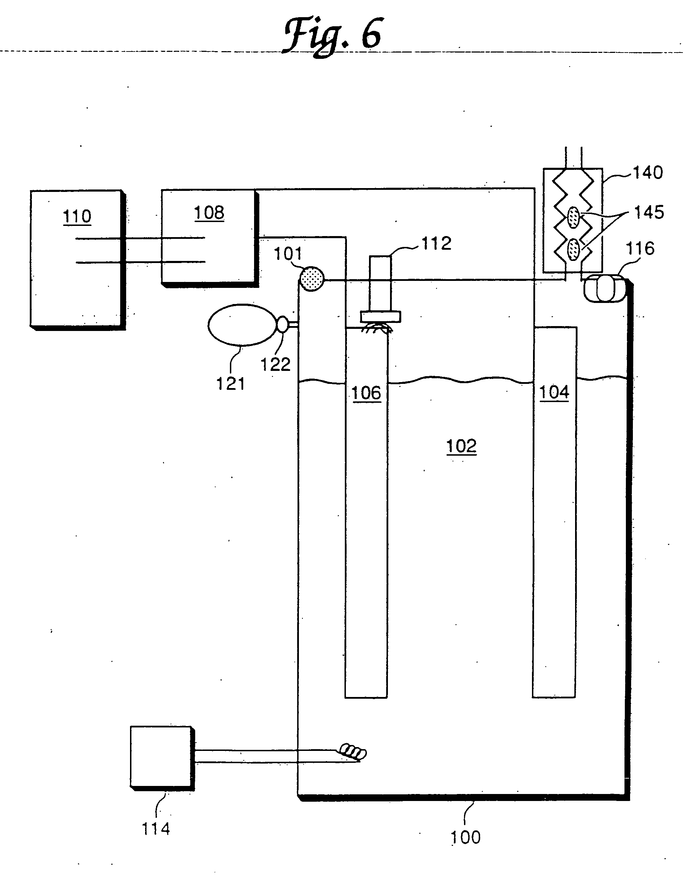

An electrolytic energy reactor is described in my previous U.S. Patent Applications entitled "Energy/ Matter Conversion Methods and Structures," filed on June 11, 1993, December 12, 1990, and April 28, 1989 which are incorporated herein by reference. A preferred embodiment of the energy reactor of the present invention comprises an electrolyic cell forming the reaction vessel 52 of FIGURE 5 including a molten electrolytic cell. The electrolytic cell 100 is shown generally in FIGURE 6. An electric current is passed through the electrolytic solution 102 having an electrocatalytic couple providing energy holes equal to the resonance shrinkage energy (including the catalytic couples described in my previous U.S. Patent Application entitled "Energy/Matter Conversion Methods and Structures," filed on April 28, 1989 which is incorporated by reference) by the application of a voltage to an anode 104 and cathode 106 by the power controller 108 powered by the power supply 110. Ultrasonic or mechanical energy may also be imparted to the cathode 106 and electrolytic solution 102 by vibrating means 112. Heat is supplied to the electrolytic solution 102 by heater 114. The pressure of the electrolytic cell 100 is controlled by pressure regulator means 116 where the cell is closed. The reactor further comprises a means 101 that removes the lower-energy hydrogen such as a selective venting valve to prevent the exothermic shrinkage reaction from coming to equilibrium.

In a preferred embodiment, the electrolytic cell is operated at zero voltage gap by applying an overpressure of hydrogen with hydrogen source 121 where the overpressure is controlled by pressure control means 122 and 116. Water is reduced to hydrogen and hydroxide at the cathode 106, and the hydrogen is oxidized to protons at the anode 104. An embodiment of the electrolytic cell energy reactor, comprises a reverse fuel cell geometry which removes the lower-energy hydrogen under vacuum. A preferred cathode 106 of this embodiment has a modified gas diffusion layer and comprises a gas route means including a first Teflon membrane filter and a second carbon paper/Teflon membrane filter composite layer. A further embodiment comprises a reaction vessel that is closed except for a connection to a condenser 140 on the top of the vessel 100. The cell is operated at a boil such that the steam evolving from the boiling electrolyte 102 is condensed in the condensor 140, and the condensed water is returned to the vessel 100. The lower-energy state hydrogen is vented though the top of the condensor 140. In one embodiment, the condensor contains a hydrogen/oxygen recombiner 145 that contacts the evolving electrolytic gases. The hydrogen and oxygen are recombined, and the resulting water is returned to the vessel 100. The heat released from the exothermic reaction whereby the electrons of the electrolytically produced hydrogen atoms (molecules) are induced to undergo transitions to energy levels below the "ground state" and the heat released due to the recombination of the electrolytically generated normal hydrogen and oxygen is removed by a heat exchanger 60 of -FIGURE 5 which is connected to the condenser 140.

In vacuum, in the absence of external fields, the energy hole to stimulate a hydrogen atom (molecule) to undergo a shrinkage transition is n X 27.21 eV (n X 48.6) where n is an integer. This resonance shrinkage energy is altered when the atom (molecule) is in a media different from vacuum. An example is a hydrogen atom (molecule) absorbed to the cathode 106 present in the aqueous electrolytic solution 102 having an applied electric field and an intrinsic or' applied magnetic field provided by external magnetic field generator 75. Under these conditions the energy hole required is slightly different from n X 27.21 eV (n X 48.6). Thus, a source of energy holes including electrocatalytic couple reactants is selected which has a redox energy resonant with the resonance shrinkage energy when operating under these conditions. In the case where a nickel cathode 106 is used to electrolyze an aqueous solution 102 where the cell is operating within a voltage range of 1.4 to 5 volts, the K+/K+ and Rb+ ($Fe^{3+}/Li^+$ and $Sc^{3+}/Sc^{3+}$) couples are preferred embodiments to shrink hydrogen atoms (molecules).

The cathode provides hydrogen atoms (molecules), and the shrinkage reaction occurs at the surface of the cathode where hydrogen atoms (molecules) and the electrocatalytic couple are in contact. Thus, the shrinkage reaction is dependent on the surface area of the cathode. For a constant current density, giving a constant concentration of hydrogen atoms (molecules) per unit area, an increase in surface area increases the reactants available to undergo the shrinkage reaction. Also, an increase in cathode surface area decreases the resistance of the electrolytic cell which improves the electrolysis efficiency. A preferred cathode of the electrolytic cell including a nickel cathode has the properties of a high surface area, a highly stressed and hardened surface such as a cold drawn or cold worked surface, and a large number of grain boundaries.

In a preferred embodiment of the electrolytic cell' energy reactor, the source of energy holes is incorporated into the cathode, mechanically by methods including cold working the source of energy holes into the surface of the cathode; thermally by methods including melting the source of energy holes into the surface of the cathode and evaporation of a solvent of a solution of the source of energy holes in contact with the surface of the cathode, and electrostatically by methods including electrolytic deposition, ion bombardment, and vacuum deposition.

The shrinkage reaction rate is dependent upon the composition of me cathode 106. Hydrogen atoms (molecules) are reactants to produce energy via the shrinkage reaction. Thus, the cathode must efficiently provide a high concentration of hydrogen atoms (molecules). The cathode 106 is comprised of any conductor or semiconductor including transition elements and compounds, actinide and lanthanide elements and compounds, and group IIIB and IVB elements and compounds. Transition metals dissociate hydrogen gas into atoms to a more or lesser extent' depending on the metal. Nickel and titanium readily dissociate hydrogen molecules and are preferred embodiments for shrinking hydrogen atoms. The cathode can alter the energy of the absorbed hydrogen atoms (molecules) and affect the energy of the shrinkage reaction. A cathode material is selected which provides resonance between the energy hole and the resonance shrinkage energy. In the case of the K+/K+ couple with carbonate as the counterion for catalyzing the shrinkage of hydrogen atoms, the relationship of the cathode material to the reaction rate is:

Pt < Pd << Ti, Fe < Ni

This is the opposite order of the energy released when these materials absorb hydrogen atoms. Thus, for this couple, the reaction rate is increased by using a cathode which weakly absorbs the hydrogen atoms with little perturbation of their electronic energies.

Also, coupling of resonator cavities and enhancement of the transfer of energy between them is increased when the media is a nonlinear media such as a magnetized ferromagnetic media. Thus, when a pararnagnetic or ferromagnetic cathode is used, the cathode increases the reaction rate (coupling of the hydrogen and electrocatalytic couple, energy hole, resonator cavities) by providing a nonlinear magnetized media. Alternatively, a magnetic field is applied with the magnetic field generator 75. Magnetic fields at the cathode alter the energy of absorbed hydrogen and concomitantly alter the energy which effects shrinkage. Magnetic fields also perturb the energy of the electrocatalytic reactions by altering the energy levels of the electrons involved in the reactions. The magnetic properties of the cathode are selected as well as the strength of the magnetic field which is applied by magnetic field generator 75 to optimize shrinkage reaction rate-the power output. A preferred ferromagnetic cathode is nickel.

A preferred method to clean the cathode of the electrolytic cell including a nickel cathode is to anodize the cathode in a basic electrolytic solution including approximately 0.57 M $X_2CO_3$ (X is the alkali cation of the electrolyte including K) and to immerse the cathode in a dilute solution of $H_2O_2$. In a further embodiment of the cleaning method, cyclic voltametry with a second electrode of the same material as the first cathode is performed. The cathode is' then thoroughly rinsed with distilled water. Organic material on the surface of the cathode inhibits the catalytic reaction whereby the electrons of the electrolytically produced hydrogen atoms (molecules) are induced to undergo transitions to energy levels below the "ground state". Cleaning by this method removes the organic material from the cathode surface and adds oxygen atoms onto the cathode surface. Doping the metal surface, including a nickel surface, with oxygen atoms by anodizing the cathode and cleaning the cathode in $H_2O_2$ greatly increases the power output by decreasing the bond energy between the metal and the hydrogen atoms (molecules) which conforms the resonance shrinkage energy of the absorbed hydrogen to the energy hole provided by the electrocatalytic couple including the $K^+/K^+$ ($Sc^{3+}/Sc^{3+}$) couple.

Different anode materials have different overpotentials for the oxidation of water, which can affect ohmic losses. An anode of low overpotential will increase the efficiency. Nickel, platinum, and dimensionally stable anodes including platinized titantium are preferred anodes. In the case of the K+/K+ electrocatalytic couple where carbonate is used as the counterion, nickel is a preferred anode. Nickel is also a preferred anode for use in basic solutions with a nickel cathode. Nickel is inexpensive relative to platinum and fresh nickel is electroplated onto the cathode during electrolysis.

A preferred method to clean a dimensionally stable anode including a platinized titanium anode is to place the anode in approximately 3 M HCl for approximately 5 minutes and then to rinse it with distilled water.

In the case of hydrogen shrinkage, hydrogen atoms at the surface of the cathode 106 form hydrogen gas which can form bubbles on the surface of the cathode. These bubbles act as an boundary layer between the hydrogen atoms and the electrocatalytic couple. The boundary can be ameliorated by vibrating the cathode and/or the electrolytic solution 102 or by applying ultrasound with vibrating means 112; and by adding wetting agents to the electrolytic solution 102 to reduce the surface tension of the water and prevent bubble formation. The use of a cathode having a smooth surface or a wire cathode prevents gas adherence. And an intermittent current, provided by an on-off circuit of power controller 108 provides periodic replenishing of hydrogen atoms which are dissipated by hydrogen gas formation followed by diffusion into the solution while preventing excessive hydrogen gas formation which could form a boundary layer.

The shrinkage reaction is temperature dependent. Most chemical reactions double their rates for each 10 °C rise in temperature. Increasing temperature increases the collision rate between the hydrogen atoms (molecules) and the electrocatalytic couple which will increase the shrinkage reaction rate. With large temperature excursions from room temperature, the kinetic energy distribution of the reactants can be sufficiently altered to cause the energy hgole and the resonance shrinkage energy to conform to a more or lesser extent. The rate is proportional to the extent of conformation or resonance of these energies. The temperature is adjusted to optimize the shrinkage reaction rate-energy production rate. In the case of the K+/K+ electrocatalytic couple, a preferred embodiment is to run the reaction at a temperature above room temperature by applying heat with heater 114.

The shrinkage reaction is dependent on the current density. An increase in current density is equivalent, in some aspects, to an increase in temperature. The collision rate increases and the energy of the reactants increases with current density. Thus, the rate can be increased by increasing the collision rate of the reactants; however, the rate may be increased or decreased depending on the effect of the increased reactant energies on the conformation of the energy hole and the resonance shrinkage energy. Also, increased current dissipates more energy by ohmic heating and may cause hydrogen bubble formation, in the case of the shrinkage of hydrogen atoms. But, a high flow of gas may dislodge bubbles which diminishes any hydrogen gas boundary layer. The current density is adjusted with power controller 108 to optimize the excess energy production. In a preferred embodiment, the current density is in the range 1 to 1000 milliamps per square centimeter.

The pH of the aqueous electrolytic solution 102 can affect the shrinkage reaction rate. In the case that the electrocatalytic couple is positively charged, an increase in the pH will reduce the concentration of hydronium at the negative cathode; thus, the concentration of the electrocatalytic couple cations will increase. An increase in reactant concentration increases the reaction rate. In the case of the K+/K+ or Rb+ ($Sc^{3+}/Sc^{3+}$), couple, a preferred pH is basic.

The counterion of the electrocatalytic couple of the electrolytic solution 102 can affect the shrinkage reaction rate by altering the energy of the transition state. For example, the transition state complex of the $K^+/K^+$ electrocatalytic couple with the hydrogen atom has a plus two charge and involves a three body collision which is unfavorable. A negative two charged oxyanion can bind the two potassiums; thus, it provides a neutral transition state complex of lower energy, whose formation depends on a binary collision which is greatly favored. The rate is dependent on the separation distance of the potassium ions as part of the complex with the oxyanion. The greater the separation distance, the less favorable is the transfer of an electron between them. A- close juxtaposition of the potassium ions will increase the rate. The relationship of the reaction rate to the counterion in the case where the K+/K+ couple is used is :

$OH\text{ -}< PO_4^{3-}, HPO_4^{2-}< SO_4^{2-} << CO_3^{2-}$.

Thus, a planar negative two charged oxyanion including carbonate with at least two binding sites for K+ which provides close juxtaposition of the K+ ions is preferred as the counterion of the K+/K+ electrocatalytic couple. The carbonate counterion is also a preferred counterion for the Rb+ couple.

A power controller 108 comprising an intermittent current, on-off, electrolysis circuit will increase the excess heat by providing optimization of the electric field as a function of time which provides maximum conformation of reactant energies, provides an optimal concentration of hydrogen atoms (molecules) while minimizing ohmic and electrolysis power losses and, in the case of the shrinkage of hydrogen atoms, minimizes the formation of a hydrogen gas boundary layer. The frequency, duty cycle, peak voltage, step waveform, peak current, and offset voltage are adjusted to achieve the optimal shrinkage reaction rate and shrinkage reaction power while minimizing ohmic and electrolysis power losses. In the case where the K+/K+ electrocatalytic couple is used with carbonate as the counterion; nickel as the cathode; and platinum as the anode, a preferred embodiment is to use an intermittent square-wave having an offset voltage of approximately 1.4 volts to 2.2 volts; a peak voltage of approximately 1.5 volts to 3.75 volts; a peak current of approximately 1 mA to 100 mA per square centimeter of cathode surface area; approximately a 5%-90% duty cycle; and a frequency in the range of 1 Hz to 1500 Hz.

Further energy can be released by repeating the shrinkage reaction. The atoms (molecules) which have undergone shrinkage diffuse into the cathode lattice. A cathode 106 is used which will facilitates multiple shrinkage reactions of hydrogen atoms (molecules). One embodiment is to use a cathode which is fissured and porous to the electrocatalytic couple such that it can contact shrunken atoms (molecules) which have diffused into a lattice, including a metal lattice. A further embodiment is to use a cathode of alternating layers of a material which provides hydrogen atoms (molecules) during electrolysis including a transition metal and an electrocatalytic couple such that shrunken hydrogen atoms (molecules) periodically or repetitively diffuse into contact with the electrocatalytic couple.

The shrinkage reaction is dependent on the dielectric constant of the media. The dielectric constant of the media alters the electric field at the cathode and concomitantly alters the energy of the reactants. Solvents of different dielectric constants have different solvation energies, and the dielectric constant of the solvent can also lower the overpotential for electrolysis and improve electrolysis efficiency. A solvent, including water, is selected for the electrolytic solution 102 which optimizes the conformation of the energy hole and resonance shrinkage energy and maximizes the efficiency of electrolysis.

The solubility of hydrogen in the reaction solution is directly proportional to the pressure of hydrogen above the solution. Increasing the pressure increases the concentration of reactant hydrogen atoms (molecules) at the cathode 106 and thereby increases the rate. But, in the case of the shrinkage of hydrogen atoms this also favors the development of a hydrogen gas boundary layer. The hydrogen pressure is controlled by pressure regulator means 116 to optimize the shrinkage reaction rate.

The heat output is monitored with thermocouples present in at least the vessel 100 and the condensor 140 of FIGURE 6 and the heat exchanger 60 of Figure 5. The output power is controlled by a computerized monitoring and control system which monitors the thermistors and controls the means to alter the power output.

Pressurized Gas Energy Reactor

A pressurized gas energy reactor comprises the first vessel 200 of FIGURE 7 containing a source of hydrogen including hydrogen from metal-hydrogen solutions, hydrogen from hydrides, hydrogen from the electrolysis of water, or hydrogen gas. In the case of a reactor which shrinks hydrogen atoms, the reactor further comprises a means to dissociate the molecular hydrogen into atomic hydrogen such as a dissociating material including transition elements and inner transition elements including iron, platinum, palladium, zirconium, vanadium, nickel, titanium, Sc, Cr, Mn, Co, Cu, Zn, Y, Nb, Mo, Tc, Ru, Rh, Ag, Cd, La, Hf, Ta, W, Re, Os, Ir, Au, Hg, Ce, Pr, Nd, Pm, Sm, Eu, Gd, Tb, Oy, Ho, Er, Tm, Yb, Lu, Th, Pa, and U or electromagnetic radiation including UV light provided by photon source 205 such that the dissociated hydrogen atoms (molecules) contact a molten, liquid, or solid solution of the energy holes (including the catalytic couples described in my previous U.S. Patent Application entitled "Energy/ Matter Conversion Methods and Structures," filed on April 28, 1989 which is incorporated by reference). The pressurized gas energy reactor further comprises a means 201 to remove the lower-energy hydrogen such as a selective venting valve to prevent the exothermic shrinkage reaction from coming to equilibrium. One embodiment comprises heat pipes as heat exchanger 60 of FIGURE 5 which have a lower-energy hydrogen venting valve at a cold spot.

A preferred embodiment of the pressurized gas energy reactor of the present invention comprises a first reaction vessel 200 with inner surface 240 comprised of a material to dissociate the molecular hydrogen into atomic hydrogen including the transition or inner transition metals. The first reaction vessel 200 is sealed in a second reaction vessel 220 and receives hydrogen from source 221 under pressure which is controlled by pressure control means 222. The wall 250 of the first vessel 200 is permeable to hydrogen. The outer wall 245 and/or outer vessel 220 has a source of energy holes equal to the resonance shrinkage energy. In one embodiment the source of energy holes is a solution containing energy holes in the molten, liquid, or solid state. In another embodiment an electric current is passed through the material having a source of energy holes. The reactor further comprises a means to control the reaction rate such as current source 225 and heating means 230 which heat the first reaction vessel 200 and the second reaction vessel 220. In a preferred embodiment the outer reaction vessel 220 contains oxygen, the inner surface 240 comprises one or more of a coat of nickel, platinum, or palladium. The outer surface 245 is coated with one- or more of copper, tellurium, arsenic, cesium, platinum, or palladium and an oxide such as $CuO_x$, $PtO_x$, $PdO_x$, $MnO_x$, $AlO_x$, $SiO_x$. The electrocatalytic couple is regenerated spontaneously or via a regeneration means including heating means 230 and current source 225.

In another embodiment, the pressurized gas energy reactor comprises only a single reaction vessel 200 with a hydrogen impermeable wall 250. In the case of a reactor- which shrinks hydrogen atoms, one or more of a hydrogen dissociating materials including the transition and inner transition elements are coated on the inner surface 240 with a source of energy holes including one or more of copper, tellurium, arsenic, cesium, platinum, or palladium and an oxide such as $CuO_x$, $PtO_x$, $PdO_x$, $MnO_x$, $AlO_x$, $SiO_x$. In another embodiment, the source of energy hole is one of a inelastic photon or particle scattering reaction(s). In a preferred embodiment the photon source 205 supplies the energy holes where the energy hole corresponds to stimulated emission by the photon. In the case of a reactor which shrinks hydrogen atoms the photon source 205 dissociates hydrogen molecules into hydrogen atoms. The photon source producing photons of at least one energy of approximately n X 27.21 eV, n/2 X 27.21 eV, or 40.8 eV causes stimulated emission of energy as the hydrogen atoms undergo the shrinkage reaction. In another preferred embodiment, a photon source 205 producing photons of at least one energy of approximately n X 48.6 eV, 95.7 eV, or n x 31.94 eV causes stimulated emission of energy as the hydrogen molecules undergo the shrinkage reaction.

A preferred inner surface, 240, and outer surface, 245, of the pressurized gas energy reactor including a nickel surface has the properties of a high surface area, a highly stressed and hardened surface such as a cold drawn or cold worked surface, and a large number of grain boundaries.

In a preferred embodiment of the pressurized gas energy reactor, the source of energy holes is incorporated into the inner surface, 240, and outer surface, 245, mechanically by methods including cold working the source of energy holes into the surface material; thermally by methods including melting the source of energy holes into the surface material and evaporation of a solution of the source of energy holes in contact with the surface material, and electrostatically by methods including electrolytic deposition, ion bombardment, and vacuum deposition. A preferred method to clean the inner surface 240 and the outer surface 245 including a nickel surface is to fill the inner vessel and the outer vessel with a basic electrolytic solution including approximately 0.57 M $X_2CO_3$ (X is the alkali cation of the electrolyte including K) and to fill the inner vessel and the outer vessel with a dilute solution of $H_2O_2$. Each of the inner vessel and the outer vessel is then thoroughly rinsed with distilled water, In one embodiment, at least one of the vessel 200 or the vessel 220 is then filled with a solution of the energy' hole including an approximately 0.57 M $K_2CO_3$ solution.

In one embodiment of the method of operation of the pressurized gas energy reactor, hydrogen is introduced inside of the first vessel from source 221 under pressure which is controlled by pressure control means 222. In the case of a reactor which shrinks hydrogen atoms, the molecular hydrogen is dissociated into atomic hydrogen by a dissociating material or electromagnetic radiation including UV light provided by photon source 205 such that the dissociated hydrogen atoms contact a molten, liquid, or solid solution of the energy holes. The atomic (molecular) hydrogen releases energy as its electrons are stimulated to undergo transitions to lower energy levels by the energy holes. Alternatively, the hydrogen dissociates on the inner surface 240, diffuses though the wall 250 of the first vessel 200 and contacts a source of energy holes on the outer surface 245 or a solution of energy holes in the molten, liquid, or solid state as hydrogen atoms or recombined hydrogen molecules. The atomic (molecular) hydrogen releases energy as its electrons are stimulated to undergo transitions to lower energy levels by the energy holes. The electrocatalytic couple is regenerated spontaneously or via a regeneration means including heating means 230 and current source 225. The lower-energy hydrogen is removed from vessel 200 and/or vessel 220 by a means to remove the lower-energy hydrogen such as a selective venting valve means 201 which prevents the exothermic shrinkage reaction from coming to equilibrium. To control reaction rate (the power output), an electric current is passed through the material having a source of energy holes equal to the resonance shrinkage energy with current source 225, and/or the first reaction vessel 200 and the second reaction vessel 220 are heated by heating means 230. The heat output is monitored with thermocouples present in at least the first vessel 200, the second vessel 220, and the heat exchanger 60 of Figure 5. The output power is controlled by a computerized monitoring and control system which monitors the thermistors and controls the means to alter the power output. The lower-energy hydrogen is removed by a means 201 to prevent the exothermic shrinkage reaction from coming to equilibrium.

Gas Discharge Energy Reactor

A gas discharge energy reactor comprises a hydrogen isotope gas filled glow discharge vacuum chamber 300 of FIGURE 8, a hydrogen source 322 which supplies hydrogen to the chamber 300, through control valve 325 and a current source 330 to cause current to pass between a cathode 305 and an anode 320. The cathode further comprises a source of energy holes of approximately m X 27.21 eV to cause atomic hydrogen "shrinkage" (including the catalytic couples described in my previous U.S. Patent Application entitled "Energy/ Matter Conversion Methods and Structures," filed on April 28, 1989 which is incorporated by reference) and/or approximately m X 48.6 eV to cause molecular hydrogen "shrinkage" where m is an integer. A preferred cathode 305 for shrinking hydrogen atoms is a palladium cathode whereby a resonant energy hole is provided by the ionization of electrons from palladium to the discharge current. A second preferred cathode 305 for shrinking hydrogen atoms comprises a source of energy holes via electron transfer to the discharge current including at least one of beryllium, copper, platinum, zinc, and tellurium and a hydrogen dissociating means such as a source of electromagnetic radiation including UV light provided by photon source 350 or a hydrogen dissociating material including the transition elements and inner transition elements including iron, platinum, palladium, zirconium, vanadium, nickel, titanium, Sc, Cr, Mn, Co, Cu, Zn, Y, Nb, Mo, Tc, Ru, Rh, Ag, Cd, La, Hf, Ta, W, Re, Os, Ir, Au, Hg, Ce, Pr, Nd, Pm, Sm, Eu, Gd, Tb, Oy, Ho, Er, Tm, Yb, Lu, Th, Pa, and U. The reactor further comprises a means to control the energy dissipated in the discharge current when electrons are transferred from an electron donating species to provide an energy hole for hydrogen atoms (molecules) including pressure controller means 325 and current (voltage) source 330. The gas discharge energy reactor further comprises a means 301 to remove the lower-energy hydrogen such as a selective venting valve to prevent the exothermic shrinkage reaction from coming to equilibrium.

In another embodiment of the gas discharge energy reactor, the source of energy hole is one of a inelastic photon or particle scattering reaction(s). In a preferred embodiment the photon source 350 supplies the energy holes where the energy hole corresponds to stimulated emission by the photon. In the case of a reactor which shrinks hydrogen atoms, the photon source 350 dissociates hydrogen molecules into hydrogen atoms. The photon source producing photons of at least one energy of approximately n X 27.21 eV, n/2 X 27.21 eV, or 40.8 eV causes stimulated emission of energy as the hydrogen atoms undergo the shrinkage reaction. In another preferred embodiment, a photon source 350 producing photons of at least one energy of approximately n X 48.6 eV, 95.7 eV, or n x 31.94 eV causes stimulated emission of energy as the hydrogen molecules undergo the shrinkage reaction.

In another embodiment, a magnetic field is applied by magnetic field generator 75 of Figure 5 to produce a magnetized plasma of the gaseous ions which is a nonlinear media. Coupling of resonator cavities and enhancement of the transfer of energy between them is increased when the media is nonlinear. Thus, the reaction rate (coupling of the hydrogen and energy hole resonator cavities) is increased and controlled by providing and adjusting the applied magnetic field strength.

In one embodiment of the method of operation of the gas discharge energy reactor, hydrogen from source 322 is introduced inside of the chamber 300 through control valve 325. A current source 330 causes current to pass between a cathode 305 and an anode 320. The hydrogen contacts the cathode which comprises a source of energy holes of approximately m X 27.21 eV to cause atomic hydrogen "shrinkage" and approximately m X 48.6 eV to cause molecular hydrogen "shrinkage" where m is an integer. In a preferred embodiment, electrons are transferred from an electron donating species present on the cathode 305 to the discharge current to provide energy holes for hydrogen atoms (molecules). In the case of a reactor which shrinks hydrogen atoms, the molecular hydrogen is dissociated into atomic hydrogen by a dissociating material on the cathode 305 or by a source of electromagnetic radiation including UV light provided by photon source 350 such that the dissociated hydrogen atoms contact a molten, liquid, or solid solution of the energy holes. The atomic (molecular) hydrogen releases energy as its electrons are stimulated to undergo transitions to lower energy levels by the energy holes. The energy dissipated in the discharge current when electrons are transferred from an electron donating species is controlled to provide an energy hole equal to the resonance shrinkage energy for hydrogen atoms (molecules) by controlling the gas pressure from source 322 with pressure controller means 325 and the voltage with the current (voltage) source 330. The heat output is monitored with thermocouples present in at least the cathode 305, the anode 320, and the heat exchanger 60 of Figure 5. The output power is controlled by a computerized monitoring and control system which monitors the thermistors and controls the means to alter the power output. The lower-energy hydrogen is removed by a means 301 to prevent the exothermic shrinkage reaction from coming to equilibrium.

### Refrigeration Means

A further embodiment of the present invention comprises a refrigeration means which comprises the electrolytic cell of FIGURE 6, the pressurized hydrogen gas cell of FIGURE 7, and the hydrogen gas discharge cell of FIGURE 8 of the present invention wherein a source of lower-energy atomic (molecular) hydrogen is supplied rather than a source of normal hydrogen. The lower-energy hydrogen atoms are reacted to a higher energy state with the absorption of heat energy according to the reverse of the catalytic shrinkage reaction such as that given by Eqs. (43-45); (47-49); (50-52); (53-55); (56-58); (59-61); (62-64); (65-67); (68-70); (71-73), and (74-76). The lower-energy hydrogen molecules are reacted to a higher energy state with the absorption of heat energy according to the reverse of the catalytic shrinkage reaction such as that given by Eqs. (282-284); (285-287); (288-290); (292-294), and (295-297). In this embodiment, means 101, 201 and 301 of FIGURES 6, 7, and 8, respectively, serve to remove the normal hydrogen such as a selective venting valves to prevent the endothermic reaction from coming to equilibrium.

### EXPERIMENTAL VERFICATION OF THE PRESENT THEORY

### Light Water Calorimetry Experiments

We report that excess heat was observed during the electrolysis of aqueous potassium carbonate ($K^+/K^+$ electrocatalytic couple); whereas, no excess heat was observed during the electrolysis of aqueous sodium carbonate. The present experimental results are consistent with the release of heat energy from hydrogen atoms where pairs of potassium ions ($K^+/K^+$ electrocatalytic couple) induce the electrons of hydrogen atoms to relax to quantized energy levels below that of the "ground state" by providing energy holes each of 27.28 eV which stimulate these transitions. The balanced reaction is given by Eqs. (43-45). No excess heat was observed when $K_2CO_3$ was replaced by $Na_2CO_3$. For sodium or sodium ions no electrocatalytic reaction of approximately 27.21 eV is possible, Eq.(46).

### Methods

A search for excess heat during the electrolysis of aqueous potassium carbonate ($K^+/K^+$ electrocatalytic couple) was investigated using single cell silvered vacuum jacketed dewars. To simplify the calibration of these cells, they were constiwcted to have primarily conductive heat losses. Thus, a linear calibration curve was obtained. Two methods of differential calorimetry were used to determine the cell constant which was used to calculate the excess enthalpy. First, the cell constant was calculated during the experiment (on-the-fly-calibration) by turning an internal resistance heater off and on, and inferring the cell constant from the difference between the losses with and without the heater. Second, the cell constant was determined with no electrolysis processes occurring by turning an internal resistance heater off and on for a well stirred dewar cell, and inferring the cell constant from the difference between the losses with and without the heater. This method over-estimates the cell constant because there is no gas flow (which adds to the heat losses).

The general form of the energy balance equation for the cell in steady state is:

$$0 = P_{appl} + Q_{htr} + Q_{xs} - P_{gas} - Q_{loss} \qquad (298)$$

where $P_{appl}$ is the electrolysis power; $Q_{htr}$ is the power input to the heater; $Q_{xs}$ is the excess heat power generated by the hydrogen shrinkage process; $P_{gas}$ is the power removed as a result of evolution of $H_2$ and $O_2$ gases; and $Q_{loss}$ is the thermal power loss. from the cell. When an aqueous solution is electrolyzed to liberate hydrogen and oxygen gasses, the electrolysis power $P_{appl}$ ( $= B_{appl}I$) can be partitioned into two terms:

$$P_{appl} = E_{appl}I = P_{cell} + P_{gas} \qquad (299)$$

An expression for $P_{gas}( = E_{gas}I)$ is readily obtained from the known enthalpy of formation of water from its elements:

$$E_{gas} = \frac{-\Delta H_{form}}{\alpha F} \qquad (300)$$

(F is Faraday's constant), which yields $E_{gas} = 1.48$ V for the reaction

$$H_2O \rightarrow H_2 + \frac{1}{2} O_2 \qquad (301)$$

The net faradaic efficiency of gas evolution is assumed to be unity (which was confirmed experimentally); thus, Eq. (299) becomes

$$P_{cell} = (E_{appl} - 1.48V)I \qquad (302)$$

The cell was calibrated for heat losses by turning an internal resistance heater off and on while maintaining constant electrolysis and by inferring the cell conductive constant from the difference between the losses with and without the heater where heat losses were primarily conductive losses through the top of the dewar. When the heater was off, the losses were given by

$$c(T_c - T_b) = P_{appl} + 0 + Q_{xs} - P_{gas} \qquad (303)$$

where c is the conductive heat loss coefficient; $T_b$ is ambient temperature and $T_c$ is the cell temperature. When a new steady state is established with the heater on, the losses change to:

$$c(T_c' - T_b) = P'_{appl} + Q_{htr} + Q'_{xs} - P'_{gas} \qquad (304)$$

where a prime superscript indicates a changed value when the heater was on. When the following assumptions apply

$$Q_{xs} = Q'_{xs}; P_{appl} = P'_{appl}; P_{gas} = P'_{gas} \qquad (305)$$

the cell constant or heating coefficient a, the reciprocal of the conductive loss coefficient(c), is given by the result

$$a = \frac{T_c' - T_c}{Q_{htr}} \qquad (306)$$

In all heater power calculations, the following equation was used

$$Q_{htr} = E_{htr} I_{htr} \qquad (307)$$

In the case of intermittent square wave electrolysis with current only during the high voltage interval of the cycle, $P_{appl}$ of Eq. (299) is calculated as the product of the peak voltage and the peak current and the duty cycle, Dc, which is the pulse length divided by the period.

$$P_{appl} = (E_{appl}I)Dc = (P_{cell} + P_{gas})Dc \qquad (308)$$

In the case of intermittent square wave electrolysis with current only during the high voltage interval of the cycle and where the net faradaic efficiency of gas evolution is assumed to be unity, $P_{cell}$ of Eq. (302) becomes

$$P_{cell} = ((E_{appl} - 1.48V)I)Dc \qquad (309)$$

Experiments #1, #2, and #3

The present experiments were carried out by observing and comparing the temperature difference, $\Delta T_1 = T$ (electrolysis only) - T(blank) and $\Delta T_2 = T$(resistor heating only) -T(blank) referred to unit input power, between two identical 350 ml silver-coated vacuum-jacketed dewars. One of the calorimeter dewars having the same configuration and containing the same amount of electrolyte, same electrodes (nickel cathode and Pt anode), resistor-heater, thermistor, stirred at the same speed, was used as the blank. In this dewar neither electrolysis nor heating by the resistor was carried out. Experiments were also carried out by using the blank dewar from a previous experiment as the working dewar and vice versa. This exchange was done to ensure that the effect is not due to any difference in the thermal properties of the two specific dewars used. Each cell was assembled comprising a 350 ml silvered vacuum jacketed dewar (Cole Palmer Model #8600) with a 7 cm opening covered with a 0.75 inch thick Styrofoam stopper lined with Parafilm.

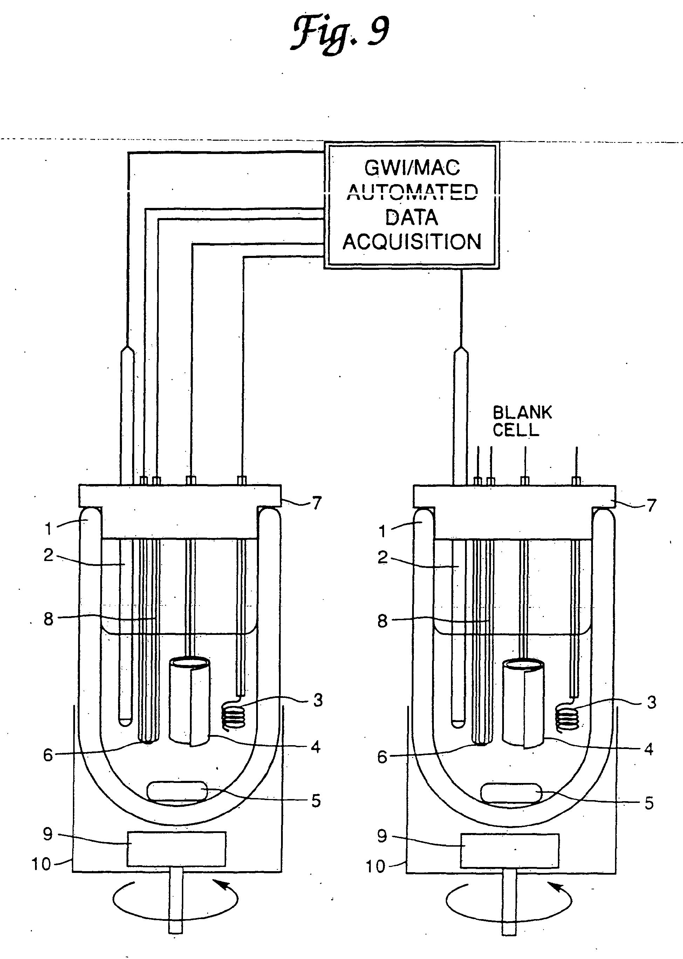

The experimental apparatus for the differential calorimetry used for these studies is shown in FIGURE 9. The heating coefficients were calculated from

$$a = \frac{\Delta T_1}{P_{cell}} \qquad (310)$$

$$a = \frac{\Delta T_2}{Q_{htr}} \qquad (311)$$

The outside of the cells were maintained at ambient air temperature which was monitored. Ambient temperature fluctuations per 24 hours were typically less than 0.5 °C.

The cathode comprised 24 meters of 0.127 mm diameter nickel wire (99 % Alfa # 10249, cold drawn, clean Ni wire) that was coiled about the central Pt anode. The cathode was cleaned by placing it in a beaker of 0.57 M $K_2CO_3$ /3% $H_2O_2$ for 30 minutes and then rinsing it with distilled water. The leads were inserted into Teflon tubes to insure that no recombination of the evolving gases occurred.

The anode was a 10 cm by 1 mm diameter spiraled platinum wire (Johnson Matthey) with a 0.127 mm Pt lead wire. The leads were inserted into Teflon tubes to prevent recombination, if any, of the evolving gases.

The cathode-anode separation distance was 1 cm.

As usual in electrochemistry, measures were taken to avoid impurities in the system, especially organic substances. We note here the known problems with the reproducibility of the hydrogen overpotential which can be overcome only by ensuring the lowest possible level of impurities. The following procedures were applied in order to reproduce the' excess heat effect. Before starting the experiment, the electrolysis dewar was cleaned with Alconox and 0.1 M nitric acid and rinsed thoroughly with distilled water to remove all organic contaminants. The Pt anode was mechanically scoured with steel wool, soaked overnight in concentrated $HNO_3$, and rinsed with distilled water. The nickel cathode was removed from its container with rubber gloves, and cut and folded in such a way that no organic substances were transferred to the nickel surface. The nickel cathode was dipped into the working solution under electrolysis current and never left in the working solution without electrolysis current.

In Experiments #1 and #2, the electrolyte solution was 200 ml of 0.57 M' aqueous $K_2CO_3$ (Aldrich

$$\underline{K_2CO_3 * \frac{3}{2} H_2O}$$ 99+%); in Experiment #3, the electrolyte solution was 200 ml of 0.57 M aqueous $Na_2CO_3$

(Aldrich $Na_2CO_3$ A.C.S. primary standard 99.95 +%). The resistance heater, used during calibration and operation was a 10 ohm 1% precision metal oxide resistor in a 2 mm outer diameter Teflon tube The heater was powered by a variable DC voltage power source ($\pm$ 0.5%). The heating power was calculated using Eq. (307).

The electrolyte solution was stirred with by a 7 mm by 2 cm prolate spheroid magnetic stirring bar which was spun by a 6 cm long open magnet mounted on an open shaft revolving at 750 RPM under the dewar. The shaft was that of an open mixing motor (Flexa-Mix Model 76, Fisher).

Elimination of erroneous attribution of the effect to temperature gradients was carried out by testing for minute spatial variations of the temperature over time. Three thermistors were positioned at about 2.5 cm apart from each other at the bottom, middle, and upper part of the electrolyte. No difference was observed (within the limit of detection, $\pm$ 0.01 °C).

Voltage ($\pm$ 0.5%), Current ($\pm$ 1%), and temperature ($\pm$ 0.1 °C) data were acquired by a data acquisition system comprising an Apple Mac II SI 5/80 with a NU bus adapter and the following G W Instruments, Inc. hardware: GWI - 625 Data Acquisition Board, GWI - J2E Multiplexer, GWI - ABO Analog Breakout System, GWI - 34W Ribbon cable. $P_{appl}$ was given by Eq. (299) as the product of the voltage and the constant current, and $P_{cell}$ was given by Eq. (302).

The current voltage parameters for Experiment #2 were an periodic square-wave having an offset voltage of 1.60 volts; a peak voltage of 1.90 volts; a peak constant current of 47.3 mA; a 36.0% duty cycle; and a frequency of 600 Hz. Peak' voltage measurements were made with an oscilloscope (BK model #2120), and the time average current was determined from a multimeter voltage measurement ($\pm$ 0.5%) across a calibrated resistor (1 ohm) in series with the lead to the cathode. The waveform of the pulsed cell was a square wave. Since there was current only during the peak voltage interval of the cycle, $P_{appl}$ was given by Eq. (308) and $P_{cell}$ was given by Eq. (309).

The faradaic efficiency of gas production by the working potassium cells was studied. Comparing this result with the sodium systems allows the accuracy of the analysis to be seen. A closed cell was fashioned from a 150 ml round bottom flask, 2 cm X 2 mm prolate spheroid stir bar, a glass "Y" adapter, glass tubing bent into the shape of one cycle of a square wave, a 150 ml beaker and a 0.01 ml graduated buret. The cell was set up to mimic as closely as possible the calorimetry tests. A constant current ($\pm$ 0.1%) supply was used to supply the power for the electrolysis. Current measurement was done with a Heathly multimeter ($\pm$ 0.1%). Gas was collected and measured in the buret. Several experiments were run to ensure the cell was sealed tightly.

Light Water Calorimetry Results

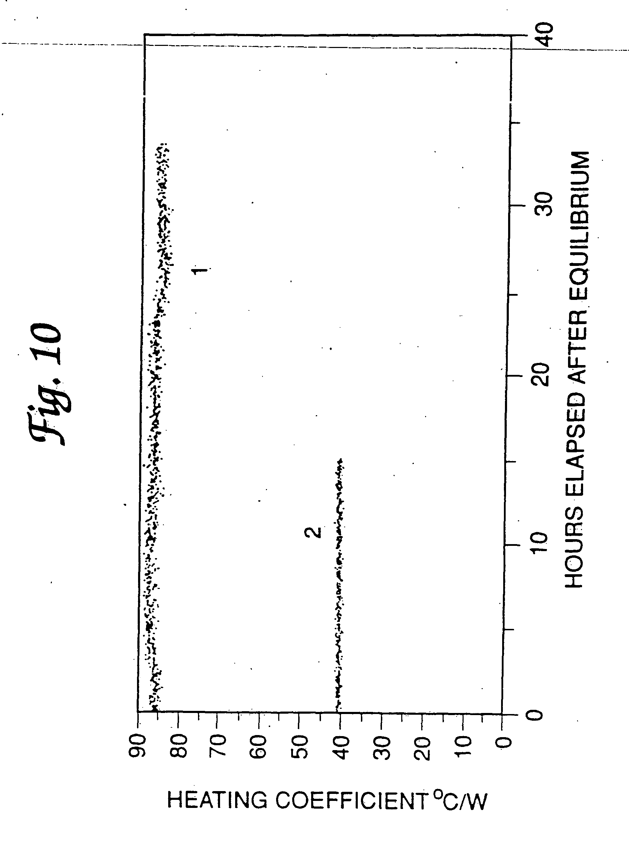

Mills' theory [Mills, R., Unification of Spacetime, the Forces, Matter, and Energy. Technomics Publishing Company, Lancaster, PA, (1992)] predicts that the exothermic catalytic reaction whereby the electrons of hydrogen atoms are stimulated to relax to lower energy levels corresponding to fractional quantum states by providing energy holes which stimulate these transitions will occur during the electrolysis of $K_2CO_3$ light-water solutions but will not occur during the electrolysis of $Na_2CO_3$ light-water solutions. The results of the electrolysis with a nickel wire cathode at 83 mA constant current and heater run of $K_2CO_3$ appear in FIGURE 10 and TABLE 1. The heating coefficient of the heater run (calibration) was 41°C/W.; whereas, the heating coefficient of the electrolysis run was 87 °C/W. The production of excess enthalpy was observed. The higher the heating coefficient, the more heat released in the process.

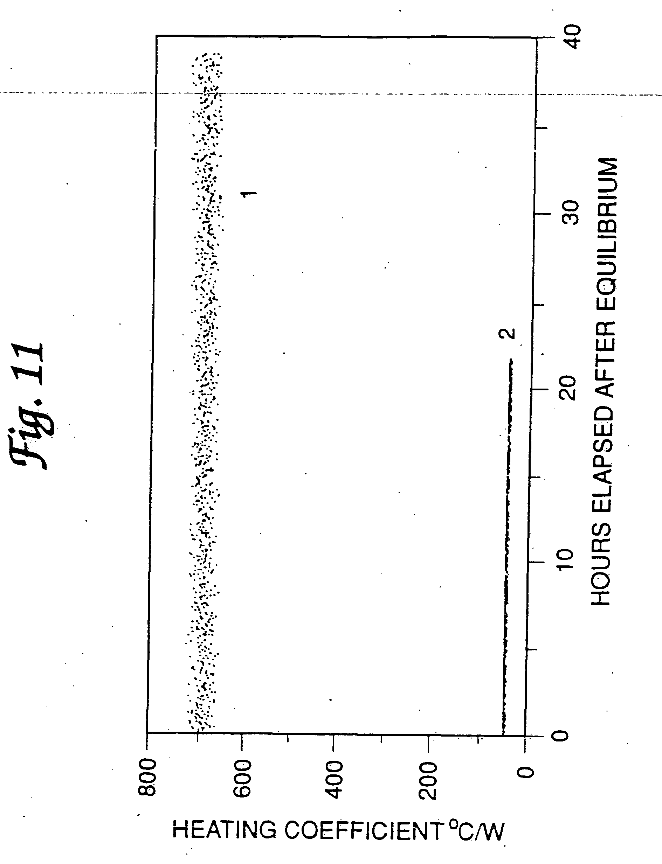

The results of the electrolysis of a $K_2CO_3$ electrolyte with a nickel cathode and a periodic square-wave having an offset voltage of 1.60 volts; a peak voltage of 1.90 volts; a peak constant current of 47.3 mA; a 36.0% duty cycle; and a frequency of 600 Hz appears in FIGURE 11 and TABLE 1. The output power was 16 times the ohmic input power.

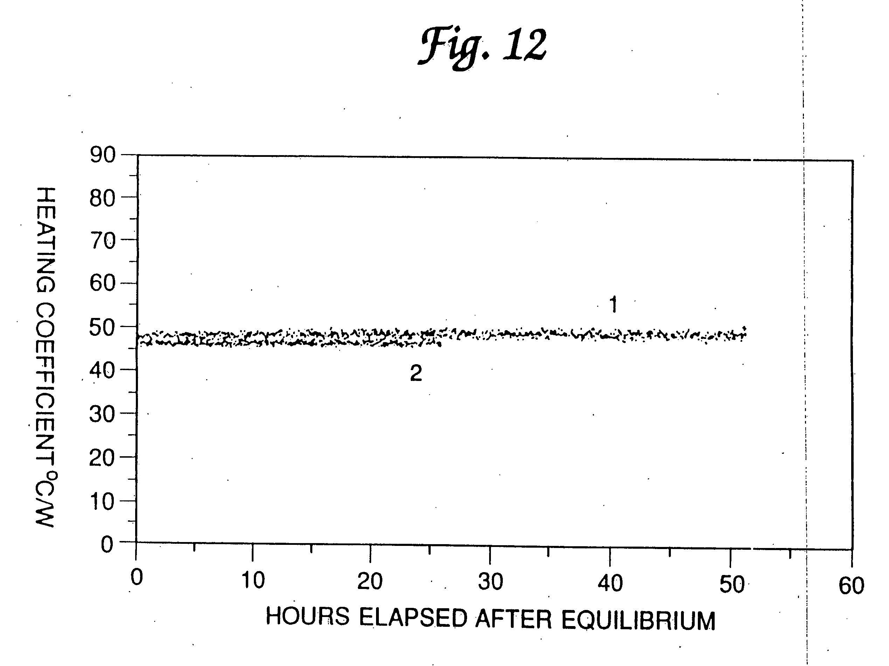

The results of the electrolysis at 81 mA constant current and the heater run of $Na_2CO_3$ appear in FIGURE 12 and TABLE 1. The heating coefficient of the electrolysis run was 47 °C/W; whereas, the heating coefficient of the heater run (calibration) was 46 °C/W. The production of excess heat was not observed.

The data of the faradaic efficiency of the production of gas by a working potassium cell and a control sodium cell appear in TABLE 2. For both $K_2CO_3$ and $Na_2CO_3$, the production of electrolysis gases was 100% faradaic efficient.

Discussion

Almost all electrolysis experiments will be similar to the case of $Na_2CO_3$, above which does not provide an energy hole of approximately 27.21 eV (Eq. (46)). Only a few combinations of electrolytes/electrodes such as the $K_2CO_3$ case above which provide an energy hole of approximately 27.21 eV (Eqs. (43-45)), will yield excess heat.

NEW HYDROGEN ATOM

Extreme Ultraviolet Spectrum of Hydrino Atoms

Hydrogen Transitions to Electronic Energy Levels Below the "Ground State" Corresponding to Fractional Quantum Numbers (**Eq. (6)**) Exactly Match the Spectral Lines of the Extreme Ultraviolet Background of Interstellar Space.

Hydrogen transitions to electronic energy levels below the n = 1 state have been found in the spectral lines of the extreme ultraviolet background of interstellar space. This assignment resolves the paradox of the identity of dark matter. It also accounts for other celestial observations such as: diffuse H$\alpha$ emission is ubiquitous throughout the Galaxy, and widespread sources of flux shortward of 912 Å are required to account for this emission [Mills, R., Good, W., Unification of Spacetime, the Forces, Matter, and Energy, Technomics Publishing Company, Lancaster, PA, (1992), pp. 169-172; Farrell, J., Good, W., Mills, R., J of Astrophysics, (1993) in progress].

The Universe is predominantly comprised of hydrogen and a proportionally small amount of helium. These elements are expected to exist in interstellar regions of space at low temperature and comprise the majority of interstellar matter. However, to be consistent with gravitational observations, the universe is comprised of nonluminous weakly interacting matter, dark matter, which may account for the majority of the universal mass. Dark matter exists at the cold fringes of galaxies and in cold interstellar space. The gravitational influence of its mass accounts for the observed constant angular velocity of many galaxies as the distance from the luminous galactic center increases. The identity of dark matter is a cosmological mystery. Postulated assignments include $\tau$ neutrinos [Davidsen, A., et al., "Test of the decaying dark matter hypothesis using the Hopkins ultraviolet telescope", Nature, 351, (1991), pp. 128-130]; but a detailed search for signature emissions has yielded nil [Davidsen, A., et al., "Test of the decaying dark matter hypothesis using the Hopkins ultraviolet telescope", Nature, 351, (1991), pp. 128-130]. It is anticipated that the emission spectrum of the extreme ultraviolet background of interstellar matter possesses the spectral signature of dark matter. Labov and Bowyer have observed an intense 635 Å emission associated with dark matter [Labov, S., Bowyer, S., "Spectral observations of the extreme ultraviolet background", The Astrophysical Journal, 371, (1991), pp. 810-819].

"Regardless of the origin, the 635 Å emission observed could be a major source of ionization. Reynolds (1983, 1984, 1985) has shown that diffuse Ha emission is ubiquitous throughout the Galaxy, and widespread sources of flux shortward of 912 Å are required. Pulsar dispersion measures (Reynolds 1989) indicate a high scale height for the associated ionized material, Since the path length for radiation shortward of 912 Å is low, this implies that the ionizing source must also have a large scale height and be widespread. Transient heating appears unlikely, and the steady state ionization rate is more than can be provided by cosmic rays, the soft X-ray background, B stars, or hot white dwarfs (Reynolds 1986; Brushweiler & Cheng 1988). Sciama (1990) and Salucci & Sciama (1990) have argued that a variety of observations can be explained by the presence of dark matter in the galaxy which decays with the emission of radiation below 912 Å.

The flux of 635 Å radiation required to produce hydrogen ionization is given by $F = \zeta_H / \sigma_\lambda = 4.3 \times 10^4 \zeta_{-13}$ photons cm$^{-2}$ s$^{-1}$, where $\zeta_{-13}$ is the ionizing rate in units of $10^{-13}$ s$^{-1}$ per H atom. Reynolds (1986) estimates that in the immediate vicinity of the Sun, a steady state ionizing rate of $\zeta_{-13}$ between 0.4 and 3.0 is required. To produce this range of ionization, the 635 Å intensity we observe would have to be distributed over 7% - 54% of the sky."

Labov and Bowyer further report [Labov, S., Bowyer, S., "Spectral observations of the extreme ultraviolet background", The Astrophysical Journal, 371, (1991), pp. 810-819] in their raw data the high resolution raw spectral data of the extreme ultraviolet background emitted from dark interstellar space covering the range 80 Å - 650 Å. Peaks are present at 85 Å, 101 Å, 117 Å, 130 Å, 140 Å, 163 Å 182 Å, 200 Å, 234 Å, 261 Å, 303 Å, 460 Å, 584 Å, 608 Å, and 633 Å. In TABLE 3, we assign these peaks to the hydrogen electronic transitions to energy levels below the "ground state" corresponding to fractional quantum numbers.

Conspicuously absent is the 256 Å (48.3 eV) line of He II which eliminates the assignment of the 303 Å and the 234 Å lines to the He II transitions.

The 304 Å (40.8 eV) transition of hydrogen is scattered by interstellar neutral helium giving rise to a broad He I emission centered at 584 Å (21.21 eV) and a broad scattered hydrogen emission at about 634 Å (19.6 eV). Similarly, the 114 Å (108.8 eV) transition of hydrogen is scattered by interstellar neutral helium giving rise to a broad He I emission centered at 584 Å (21.21 eV) and a broad scattered hydrogen emission' at about 141 Å (87.6 eV). Also, the 182.3 Å (68 eV) transition of hydrogen is scattered by interstellar neutral helium giving rise to a broad He I emission centered at 584 Å (21.21 eV) and a broad scattered hydrogen emission at about 265 Å (46.8 eV).

Another two-decade-old cosmological mystery is the discrepancy between solar neutrino flux observed with the Homestake detector , 2.1 $\pm$ 0.03 SNU , and that predicted based on the Standard Solar Model , 7.9 $\pm$ 2.6 SNU. According to the Standard Solar Model, the pp chain is the predominant energy source of main-sequence stars which commences with proton proton fusion according to the following reaction [Bahcall, T , et al., "Solar neutrinos: a field in transition", Nature, 334, 11, (1988), pp. 487-493];

$$^1H \quad + \quad ^1H \quad \rightarrow \quad ^2H \quad + \quad e^+ \quad + \quad \upsilon \qquad (312)$$

And, according to this model, strong coupling exists between luminosity and neutrino flux because they are both based on nuclear reactions. In resolution of this problem, we propose that a major portion, of the energy emitted by the sun derives from hydrogen electronic transitions to energy levels below the "ground state" which can yield energies per atom comparable to nuclear energies. Data strongly supporting this tenant is the observation by Labov and Bowyer of an intense 304 Å (40.8 eV) solar emission line corresponding to the 1 → 1/2 transition of hydrogen in the absence of the 256 Å (48.3 eV) line of He II which eliminates the assignment of the 304 Å line to the He II transition.

Identification of Hydrino Atoms by ESCA

We report the product atom of an exothermic reaction wherein energy holes, each of approximately 27.21 eV, are provided by electrochemical reactants ($K^+/K^+$ electrocatalytic couple) which cause heat to be released from hydrogen atoms as their electrons are stimulated to relax to quantized potential energy levels below that of the "ground state". The energy removed by an energy hole, is resonant with the hydrogen energy released to stimulate this transition. Excess heat was observed during the electrolysis of aqueous potassium carbonate ($K^+/K^+$ electrocatalytic couple); whereas, no excess heat was observed during the electrolysis of aqueous sodium carbonate. Samples of the cathodes of the potassium carbonate cell and the sodium carbonate electrolytic cell were analyzed by ESCA (Electron Spectroscopy for Chemical Analysis). A broad 54.4 eV peak was present only in the case of the potassium carbonate cell. The binding energy of H*(1/2), the predicted lower-energy hydrogen atom having its electron in the 1/2 quantum state, is 54.4 eV. The data was consistent with the assignment of the broad 54.4 eV peak to H*(1/2) as the product of an exothermic reaction wherein the electrons of hydrogen atoms are stimulated to relax to quantized potential energy levels below that of the "ground state" via electrochemical reactants $K^+$ and $K^+$ which provide energy holes which stimulate these transitions.

Methods

The hydrino atom was identified by ESCA (Electron Spectroscopy for Chemical Analysis). We report H*(1/2) production as identified by ESCA of the cathode of an electrolysis cell comprising a nickel cathode and a light water $K_2CO_3$ electrolyte.

ESCA (Electron Spectroscopy for Chemical Analysis) is capable of 0.1 eV resolution of $E_b$, the binding energy of each electron, of an atom. In general, ESCA requires a photon source with energy $E_{hn}$. These photons ionize electrons from the sample being analyzed. These ionized electrons are emitted with energy $E_{kinetic}$ :

$$E_{kinetic} = E_{hn} - E_b - E_r \qquad (313)$$

where $E_b$ is the binding energy of the electron, and $E_r$ is a negligible recoil energy. The kinetic energies of the emitted electrons are measured by measuring the magnetic field strengths necessary to have them hit a detector. Since $E_{kinetic}$ and $E_{hn}$ are experimentally known, $E_b$ can be calculated. The binding energies of all atoms and materials of an experiment are known or can be measured using controls; thus, an ESCA analysis can provide an incontrovertible identification of an atom. The binding energy of the various hydrino states are known, and an expected ESCA hydrino spectrum can be predicted. The binding energies are

$$E_b = \frac{1}{n^2} \, 13.6 \text{ eV} \qquad n = \frac{1}{2} , \frac{1}{3} , \frac{1}{4} , \cdots \qquad (314)$$

The binding energies of the various hydrino quantum states are given in TABLE 4.

Experimental

A search for the hydrino atom, lower-energy atomic form of hydrogen, in the nickel cathode immediately following the electrolysis of aqueous potassium carbonate ($K^+/K^+$ electrocatalytic couple) was conducted using ESCA where the cathode of a sodium carbonate electrolytic cell was the control.

In each case, the cathode was a 7.5 cm wide by 5 cm long by 0.125 mm thick nickel foil (Aldrich 99.9+%, cold rolled, clean Ni) spiral of 9 mm diameter and 2 mm pitch with a nickel lead strip . The nickel cathode was prepared by tightly rolling the nickel foil about a 9 mm rod. The rod was removed. The spiral was formed by partially uncoiling the foil. The cathode was soaked in 3% $H_2O_2$/0.57 M $X_2CO_3$ (X = K where the electrolyte of the cell was $K_2CO3$; X = Na where the electrolyte of the cell was $Na_2CO_3$) solution for 30 minutes. The cathode was thoroughly rinsed with distilled water. The leads were inserted into Teflon tubes to insure that no recombination of the evolving gases occurred.

In each case, the anode was a 10 cm by 1 mm diameter spiraled platinum wire (Johnson Matthey) with a 0.127 mm Pt lead wire. The leads were inserted into Teflon tubes to prevent recombination, if any, of the evolving gases.

The cathode-anode separation distance was 1 cm.

As usual in electrochemistry, measures were taken to avoid impurities in the system, especially organic substances. We note here the known problems with the reproducibility of the hydrogen overpotential which can be overcome only by ensuring the lowest possible level of impurities. The following procedures were applied in order to reproduce the excess heat effect. Before starting the experiment, the electrolysis dewar was cleaned first with Alconox and rinsed with distilled water and then 0.1 M nitric acid and rinsed thoroughly with distilled water to remove all organic contaminants. The Pt anode was mechanically scoured with steel wool, soaked overnight in concentrated $HNO_3$, and rinsed with distilled water. The nickel cathode was removed from its container with rubber gloves, and cut and folded in such a way that no organic substances were transferred to the nickel surface. The nickel cathode was dipped into the working solution under electrolysis current and never left in the working solution without electrolysis current.

The electrolyte solution of the potassium cell was 200 ml of 0.57 M aqueous $K_2CO_3$ (Alpha

$$K_2CO_3 * \frac{3}{2} H_2O \text{ 99+\%).}$$

The electrolyte solution of the sodium cell was 200 ml of 0.57 M aqueous $Na_2CO_3$ (Aldrich Primary Standard $Na_2CO_3$ 99.9+%).

A constant current of approximately 80 mAmps was applied for 30 hours at which time each cathode was removed. In each case, a cathode sample on the outer surface closest to the anode was cut off, rinsed with distilled water, and examined by ESCA.

[The methods, experimental, and results of the light water calorimetry during the electrolysis of potassium carbonate and sodium carbonate electrolytic solutions are given in the Light Water Calorimetry Section.]

Results of the Identification of the Hydrino Atom by ESCA

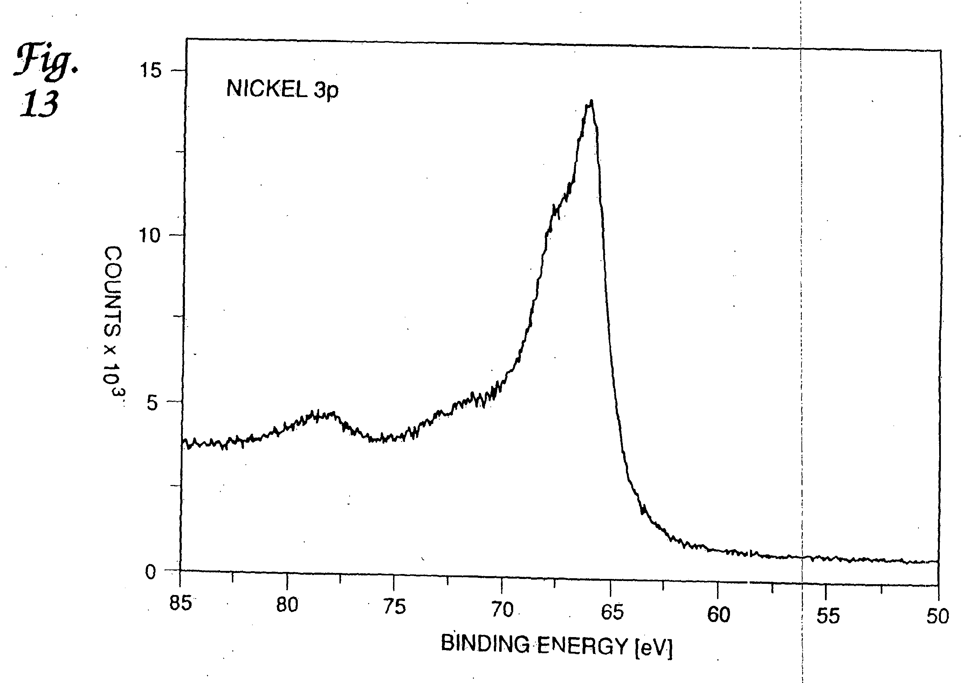

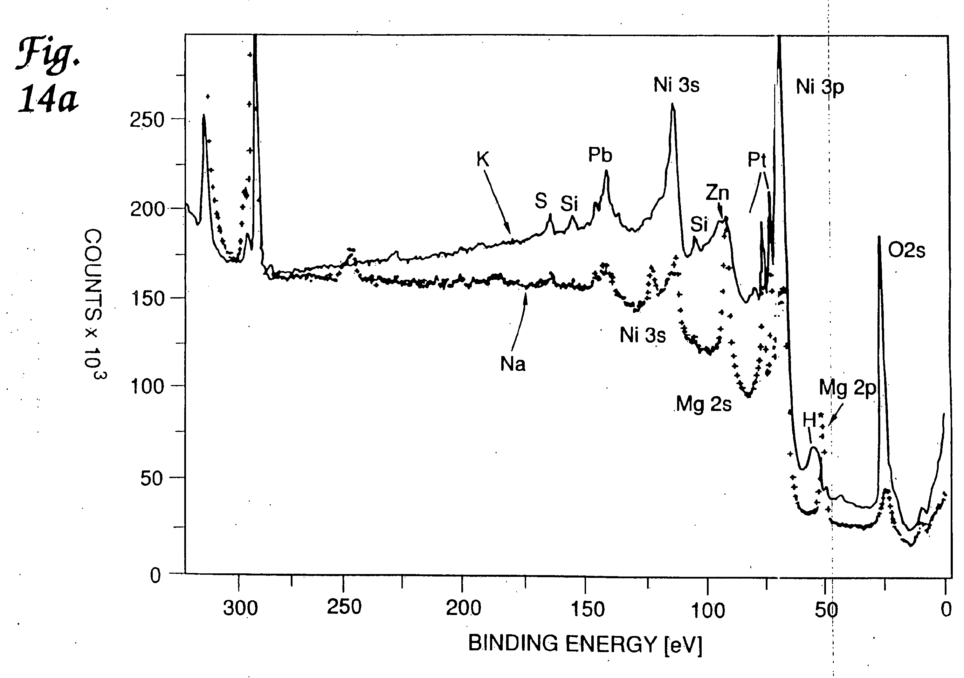

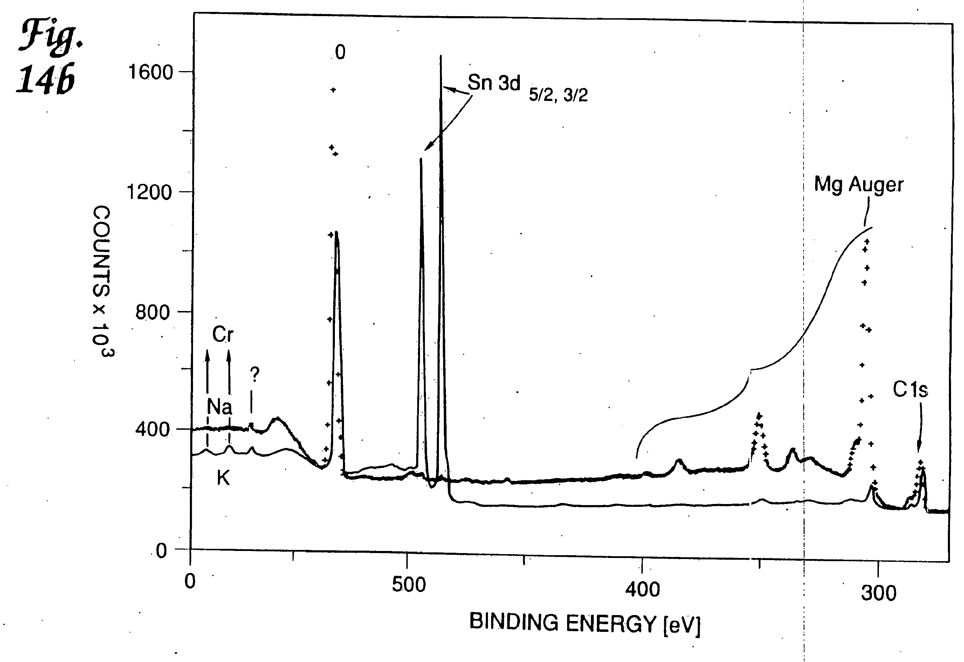

The results of the ESCA analysis of a control nickel sheet appears in FIGURE 13.

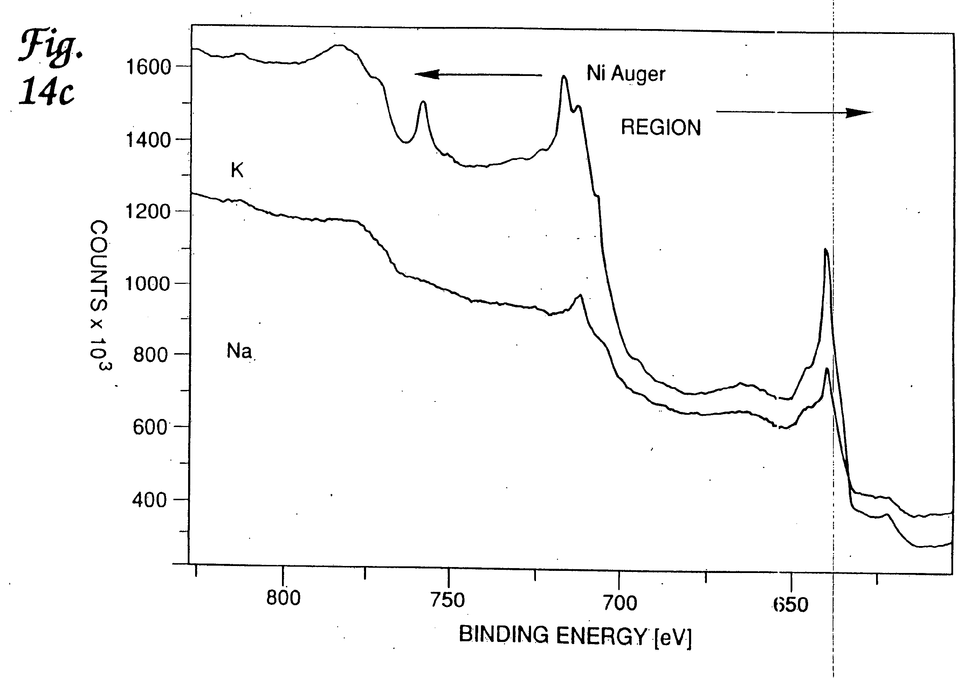

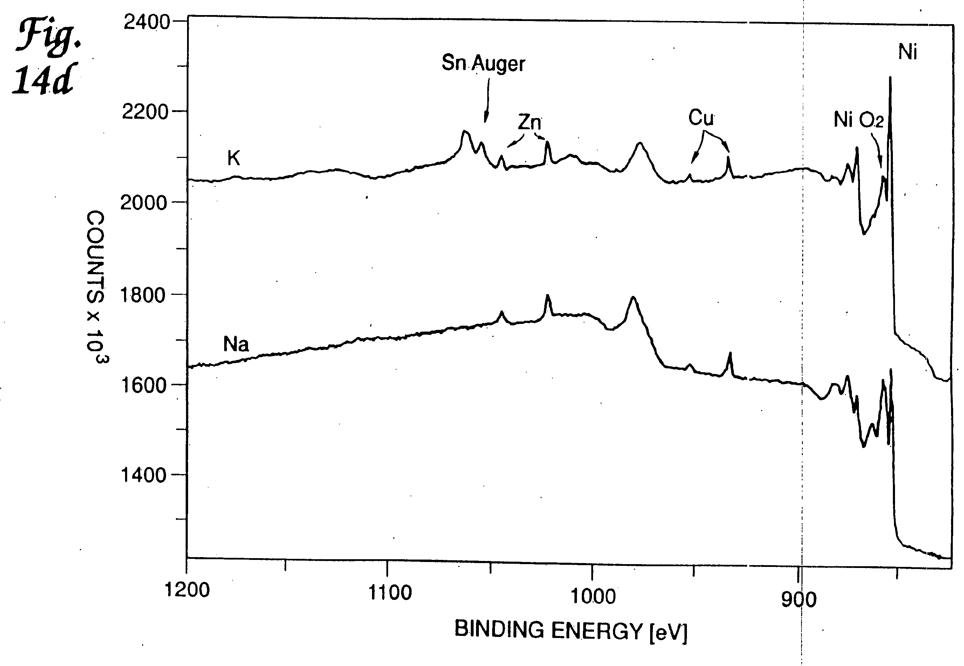

The results of the ESCA analysis of a sample of the nickel cathode from each of an aqueous potassium carbonate electrolytic cell and a control aqueous sodium carbonate electrolytic cell are shown juxtaposed in FIGURES 14A-14D.

Discussion

The ESCA analysis of FIGURE 14A shows a broad peak at the binding energy of 54.4 eV for the cathode from the potassium carbonate cell and the absence of this peak for the cathode from the sodium carbonate cell. There is no known atom which has an electron with a binding energy in this region that was present in the electrolytic cell. As shown in TABLE 4, the binding energy of H*(1/2), the hydrino atom having its electron in the 1/2 quantum state, is 54.4 eV. The data is consistent with the assignment of the broad 54.4 eV peak to H*(1/2) as the product of an exothermic reaction wherein the electrons of hydrogen atoms are stimulated to relax to quantized potential energy levels below that of the "ground state" via electrochemical reactants $K^+$ and $K^+$ which provide energy holes which stimulate these transitions according to Eqs. (43-45).

NEW HYDROGEN MOLECULE

Mass Spectroscopic Identification of the Dihydrino. Molecule

We report the product molecule of an exothermic reaction wherein energy holes, each of approximately 27.21 eV, are provided by electrochemical reactants ($K^+/K^+$ electrocatalytic couple) which cause heat to be released from hydrogen atoms as their electrons are stimulated to relax to quantized potential energy levels below that of the "ground state". The energy removed by an energy hole, is resonant with the hydrogen energy released to stimulate this transition. Electrolysis gases were collected from pulsed and cdntinuous current electrolysis of aqueous potassium carbonate ($K^+/K^+$ electrocatalytic couple) with a nickel cathode as well as those of an identical control sodium carbonate electrolytic cell. For the pulsed potassium electrolytic cell, the previously reported [Mills, R., Good, W., Shaubach, R., "Dihydrino Molecule Identification", Fusion Technology, in progress.] excess power of 41 watts exceeded the total input power given by the product of the electrolysis voltage and current by a factor greater than 8. No excess power was produced by the sodium carbonate electrolytic cell. The product of the exothermic reaction is hydrogen atoms having electrons of energy below the "ground state" which are predicted to form molecules. The predicted molecules were purified from electrolytic gases by cryofiltration. Mass spectroscopic analysis showed a species with a mass to charge ratio of 2 having a higher ionization potential than that of the hydrogen molecule.

Method

A hydrino atom, hydrogen atom with its electron in a lower than "ground state" energy level corresponding to a fractional quantum number, has an unpaired electron and would bind to the nickel cathode. Bound hydrogen atoms demonstrate a high degree of mobility as shown by EELS (Electron Energy Loss Spectroscopy) [Nieminen, R., Nature, Vol. 365, March, (1992),pp. 289-290].
Hydrino atoms are predicted to possess high mobility which permits the possibility of subsequent shrinkage reactions as well as dihydrino molecule forming reactions. Dihydrino molecule forming reactions can occur between hydrinos in comparable quantum states as well as between hydrinos and protons and electrons and between hydrinos and hydrogen atoms. A preferred method to identify the dihydrino molecule is via cryofiltration followed by the search for mass spectroscopic anomalies.

Experimental

The dihydrino molecule was identified by mass spectroscopy. We report $H^*_2\left[2c' = \dfrac{a_0}{\sqrt{2}}\right]$ production

as identified by mass spectroscopy of the cryofiltered gasses evolved from an electrolysis cell comprising a nickel cathode and a light water $K_2CO_3$ electrolyte.

The dihydrino molecule was predicted to be spin paired, to be smaller than the hydrogen molecule, to have a higher ionization energy than $H_2$, and to have a lower liquefaction temperature than $H_2$. Dihydrino molecules present in the gases evolved from an electrolytic cell having an electrolyte of the electrocatalytic couple, $K^+/K^+$ , were separated from normal hydrogen by cryofiltration. Following cryofiltration, the dihydrino molecule was distinguished from normal molecular hydrogen using mass spectroscopy. Mass spectroscopy distinguished a sample containing dihydrino molecules verses a sample containing $H_2$ by the showing a different ion production efficiency as a function of ionization potential and a different ion production efficiency at a given ionization potential for the two samples.

Data from Experiment 14 [Mills, R., Good, W., Shaubach, R., "Dihydrino Molecule Identification", Fusion Technology, in progress] were recorded over a 240 day period at an operating condition of 1 Hz, 10 amperes, and 20% duty cycle. Data for day 120 are recorded in TABLE 1 of [Mills, R., Good, W., Shaubach; R., "Dihydrino Molecule Identification", Fusion Technology, in progress] and show 41 watts of output with an output to input ratio of about 22 assuming 100% Faradaic efficiency. An identical electrolytic cell with a sodium carbonate electrolyte showed no excess heat.

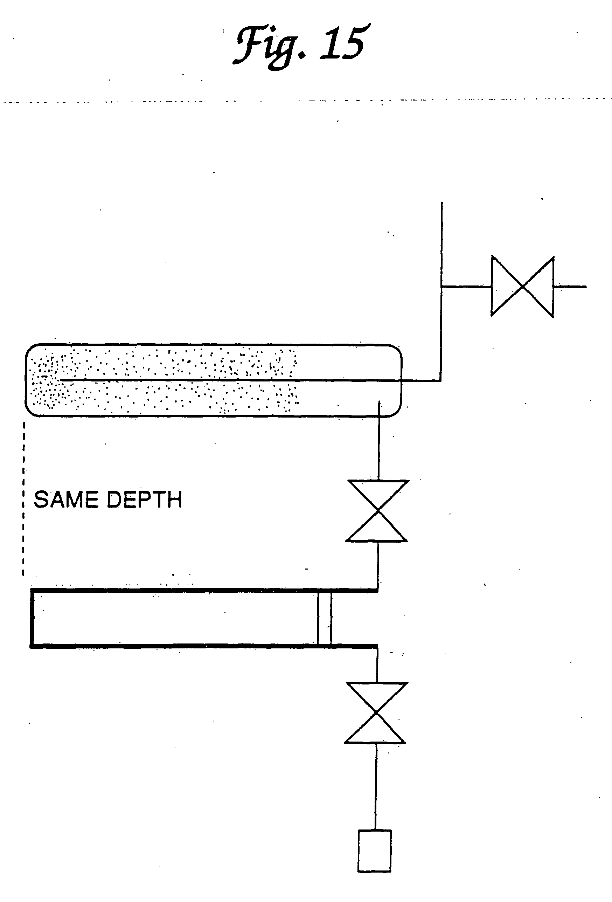

We collected 1000 ml of the electrolysis gases from Experiment #14 [Mills, R., Good, W., Shaubach, R., "Dihydrino Molecule Identification", Fusion Technology, in progress] which produced 39.1 watts of excess power according to the exothermic reaction given by Eqs. (43-45) in a high vacuum gas collection bulb as well as electrolysis gases from an identical electrolytic cell with a sodium carbonate electrolyte that showed no excess heat. The electrolysis gases and a standard hydrogen sample were cryofiltered and collected in two port 250 ml high vacuum sample bulbs. A schematic of the cryofiltration apparatus appears in FIGURE 15. A sample bulb was also filled with standard hydrogen, and gases were collected from the cryofilter alone. Mass spectroscopy of cryofiltered electrolysis gas samples from a sodium carbonate and the potassium carbonate electrolytic cell as well as standard hydrogen, cryofiltered standard hydrogen, and gases from the cryofilter alone were performed whereby the intensity of the m/e = 1 and m/e = 2 peaks was recorded while varying the ionization potential (IP) of the mass spectrometer. The entire range of masses through m/e = 50 was measured following the determinations at m/e = 1 and m/e = 2. In all cryofiltered samples, the only peaks detected in this mass range were those consistent with trace air contamination (argon, nitrogen, oxygen, water vapor) and trace $CO_2$. The mass spectroscopy was performed by Schrader Analytical and Consulting Laboratories, Inc. using a AEI MS 30 with a VG 7070 source set at a sensitivity of 700. The ionization energy was calibrated to within $\pm$ 1 eV. The volume of sample gas injected into the mass spectrometer at each ionization potential setting was made identical by evacuating the connection between the sample and a stopcock of the spectrometer then opening the evacuated volume to the sample vessel.

Results of the Mass Spectroscopic Identification of the Dihydrino Molecule

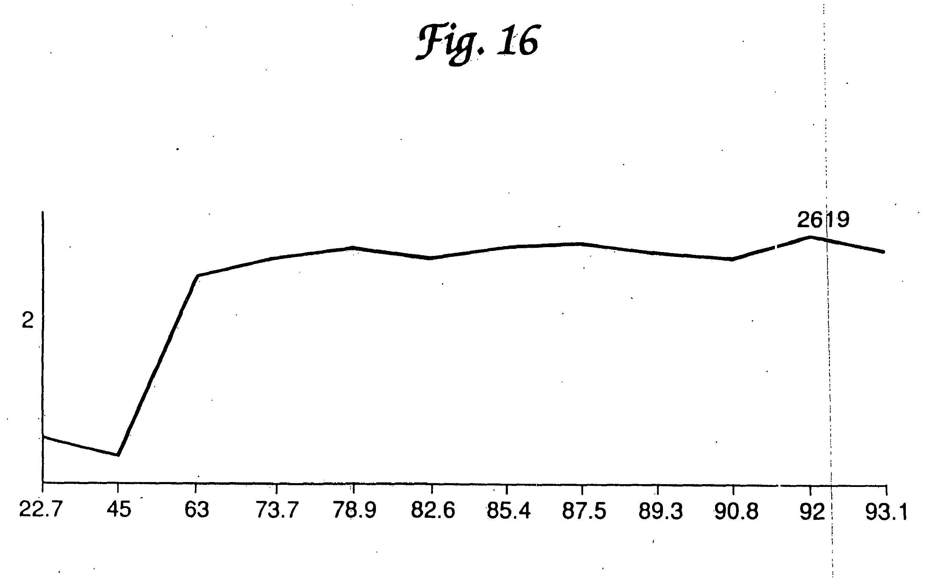

The results of the mass spectroscopic analysis with varying ionization potential of standard hydrogen are given in TABLE 5. In independent experiments, it was determined that the results of the mass spectroscopic analysis with varying ionization potential of standard hydrogen was independent of mass spectrometer sensitivity and sample pressure.
The results of the mass spectroscopic analysis with varying ionization potential of cryofiltered standard hydrogen are given in TABLE 6.
The results of the mass spectroscopic analysis with varying ionization potential of gases from the cryofilter alone are given in TABLE 7.
The results of the mass spectroscopic analysis with varying ionization potential of cryofiltered electrolysis gases evolved from the sodium electrolytic cell are given in TABLE 8.
The results of mass spectroscopic analysis with varying ionization potential of cryofiltered electrolysis gases evolved from the potassium electrolytic cell are given in TABLE 9 and FIGURE 16.

Discussion

The dihydrino molecule, $H^*_2\left[2c' = \dfrac{a_o}{\sqrt{2}}\right]$, has a higher ionization energy than $H_2$. This was observed by measuring the intensity of the m/e = 1 and m/e = 2 peaks while varying the ionization potential (IP) of the mass spectrometer. The ionization reaction of $H_2$ is

$$H_2(g) \rightarrow H_2(g)^+ + e^- \qquad IE = 15.46\ e \quad (315)$$

The ionization energies of water are 12.61, 14.8, 18.8, and 32 eV. The data of TABLE 9 and FIGURE 16 demonstrate that no m/e = 2 is present at an ionization potential above the threshold for the ionization of molecular hydrogen as shown in TABLE 5, but a m/e = 2 peak is present at a significantly higher ionization potential, 63 eV. The cryofilter removes essentially all of the standard hydrogen as shown by the data of TABLE 6. The cryofilter does not release any unusual species with a mass to charge ratio of 2 as shown by the data of TABLE 7. The cryofiltered electrolytic gases from the sodium carbonate cell does not contain any unusual species with a mass to charge ratio of 2 as shown by the data of TABLE 8.
The data are consistent with the assignment of the m/e = 2 of the cryofiltered electrolytic gases from the potassium carbonate cell to $H^*_2\left[2c' = \dfrac{a_o}{\sqrt{2}}\right]$, the dihydrino molecule, as the product of an exothermic reaction wherein the electrons of hydrogen atoms are stimulated to relax to quantized potential energy levels below that of the "ground state" via electrochemical reactants $K^+$ and $K^+$ which provide energy holes which stimulate these transitions. The observed experimentally measured ionization energy of $63 \pm 1$ eV is consistent with the theoretical ionization energy of 62.27 eV given by Eq. (258).

TABLE 1

| Experiment | V | Dyty Cycle | I | VI Power | (V - 1.48) I | Output | Excess Heat | Output/Input |
|---|---|---|---|---|---|---|---|---|
| Number | (volts) | (%) | (A) | (W) | Power (W) | (W) | (W) | (W) |
| | | | | | | | | |
| 1 | 3.05 | 100 | 0.083 | 0.253 | 0.13 | 0.275 | 0.145 | 212 |
| 2 | 1.90 | 36 | 0.0437 | 0.032 | 0.007 | 0.114 | 0.107 | 1630 |
| 3 | 3.51 | 100 | 0.081 | 0.284 | 0.164 | 0.167 | 0.003 | 102 |
| | | | | | | | | |

TABLE 2.

| Electrolyte | Faraday's gas (mmol) | Calculated Volume (mL) | Measured Volume (mL) | Efficiency (%) |
|---|---|---|---|---|
| 0.57M $K_2CO_3$ | 1.961 | 49.91 | 51.30 | 102.8 |
| 0.57M $Na_2CO_3$ | 1.955 | 49.69 | 49.86 | 100.3 |

TABLE 3

| | Observed | | | Predicted | |
|---|---|---|---|---|---|
| Peak # | Wavelength (A) | Energy (eV) | Peak Assignment | Energy[a] (eV) | Wavelength (A) |
| 1 | 84.8 | 146.2 | $1/5 \rightarrow 1/6$ H transition | 149.6 | 82.9 |
| 2 | 101.5 | 122.2 | $\infty \rightarrow 1/3$ and $1/4 \rightarrow 1/5$ H transition | 122.4 | 101. |
| 3 | 116.8 | 106.2 | $1 \rightarrow 1/3$ H transition | 108.8 | 114. |
| 4 | 129.6 | 95.6 | $1/3 \rightarrow 1/4$ H transition | 95.2 | 130. |
| 5 | 139.6 | 88.8 | He scattered peak #3 | 87.6 | 139. |
| 6 | 163.2 | 75.9 | Second order of peak #1 | 74.8 | 163. |
| 7 | 181.7 | 68.3 | $1/2 \rightarrow 1.3$ H transition | 68.0 | 182. |
| 8 | 200.6 | 61.8 | Second order of peak #2 | 61.2 | 202. |
| 9* | 233.8 | 53.0 | $\infty \sim 1/2$ H transition | 54.4 | 227. |
| 10 | 261.2 | 47.5 | He scattered peak #7 | 46.8 | 265. |
| 11 | 302.5 | 41.0 | $1 \rightarrow 1/2$ H transition | 40.8 | 303. |
| 12 | 459.1 | 27.0 | Second order of peak #9 | 27.2 | 455. |
| 13 | 584 | 21.2 | He resonance scattered emission | 21.2 | 584 |
| 14 | 607.5 | 20.4 | Second order of peak #11 | 20.4 | 607. |
| 15 | 633.0 | 19.7 | He scattered peak #11 | 19.6 | 633 |

[a]For hydrogen transitions, the energy is given by Eq. (6);

[a]For helium Compton scattered peaks of hydrogen transitions,

EP 1 684 311 A2

$$E = 13.6 \ eV \left[\frac{1}{n_f^2} - \frac{1}{n_i^2}\right] - 21.21 \quad n = \frac{1}{2}, \ \frac{1}{3}, \ , \frac{1}{4}, \ldots$$

$$n_f < n_i$$

Bowyer and Labov used three monochrometera for maximal sensitivity in each energy range: 80-230Å, 230-430Å, and 430-650Å. The monochrometer change at 230Å resulted in the 6Å discrepancy between the calculated and observed lines.

## TABLE 4.

| Principle Quantum Number n | Energy (eV) |
|---|---|
| 1 | 13.6 |
| 1 / 2 | 54.4 |
| 1 / 3 | 122.4 |
| 1 / 4 | 217.6 |

## TABLE 5.

| Ionization Potential (eV) | Intensity of Signal (volts) @ Mass to Charge Ratio (m/e) | |
|---|---|---|
| | 1 | 2 |
| 12.8 | 0 | 0 |
| 22.7 | 0 | 2.5 |
| 45.1 | 0.005 | 5.4 |
| 78.9 | 0.012 | 6.8 |

## TABLE 6.

| Ionization Potential (eV) | Intensity of Signal (volts) @ Mass to Charge Ratio (m/e) | |
|---|---|---|
| | 1 | 2 |
| 22.7 | 0 | 0 |
| 45.1 | 0.008 | 0.005 |
| 78.9 | 0.0025 | 0.005 |

## TABLE 7.

| Ionization Potential (eV) | Intensity of Signal (volts) @ Mass to Charge Ratio (m/e) | |
|---|---|---|
| | 1 | 2 |
| 22.7 | 0 | 0 |
| 45.1 | 0 | 0 |
| 78.9 | 0.005 | 0 |

## TABLE 8.

| Ionization Potential (eV) | Intensity of Signal (volts) @ Mass to Charge Ratio (m/e) | |
|---|---|---|
| | 1 | 2 |
| 22.7 | 0.014 | 0.004 |
| 45.1 | 0.040 | 0 |
| 78.9 | 0.150 | 0.025 |

## TABLE 9.

| Ionization Potential (eV) | Intensity of Signal (volts) @ Mass to Charge Ratio (m/e) | |
|---|---|---|
| | 1 | 2 |
| 22.7 | 0.010 | 0.025 |
| 45.1 | 0.024 | 0.020 |
| 78.9 | 0.060 | 0.240 |

**Claims**

1. A hydrogen atom having the property that its electron is in a lower than "ground state" energy level which corresponds to a fractional quantum number.

2. A method of isolating the hydrogen atom of claim 1, compromising the steps of:

   isolating the hydrogen atom via cryofiltration; and
   identifying the hydrogen atom by searching for mass spectroscopic anomalies.

3. A method of releasing energy, comprising the steps of:

selecting an element of matter having a nucleus and at least
one electron disposed in a first electron orbital;
determining the resonance shrinkage energy of the electron orbital and an energy hole that will stimulate the
at least one electron to undergo a resonance shrinkage transition to relax to a quantized potential energy level
below that of a "ground state" of said element of matter, thus defining a second electron orbital of smaller
dimensions than said first electron orbital;
providing said energy hole substantially equal to the resonance shrinkage energy of the element of matter;
juxtaposing said element of matter and said energy hole;

whereby the at least one electron of the element of matter is stimulated by said energy hole to undergo at least one
shrinkage, thus releasing energy.

4. The method of claim 3, wherein the step of providing the energy hole comprises providing a catalytic system where
at least one electron is transferred from one of a first atom, ion, and molecule to one of a second atom, ion, and
molecule.

5. The method of claim 4, wherein a sum of two ionization energies of said first atom, ion, or molecule less a sum of
two ionization energies of said second atom, ion, or molecule is approximately 27.21 eV.

6. The method of claim 3, wherein the step of providing the energy hole comprises a catalytic system, wherein the
overall reaction is:

$$H\left[\frac{a_o}{p}\right] \rightarrow H\left[\frac{a_o}{(p+1)}\right] + [(p+1)^2 - p^2] \times 13.6 \text{ eV}$$

where $a_o$ is the orbitsphere radius and p represents the number of cycles.

7. A pressurized gas energy reactor, comprising:

means for containing a source of hydrogen;
means to dissociate the hydrogen into atomic hydrogen;
means for bringing the dissociated hydrogen atoms into contact with one of a molten, liquid, or solid solution of
energy holes; and
means for removing lower-energy hydrogen so as to prevent an exothermic shrinkage reaction from coming to
equilibrium.

8. A hydrogen molecule having the property that its electrons are in a lower than "ground state" energy level which
corresponds to a fractional quantum number.

9. A method of isolating the hydrogen molecule of claim 8, compromising the steps of:

isolating the hydrogen atom via cryofiltration; and
identifying the hydrogen molecule by searching for mass spectroscopic anomalies.

10. A method of releasing energy, comprising the steps of:

selecting an element of matter having at least two nuclei and two electrons disposed in a first electron orbital;
determining the resonance shrinkage energy of the electron orbital and an energy hole that will stimulate the
at least two electrons to undergo a resonance shrinkage transition to relax to a quantized potential energy level
below that of a "ground state" of said element of matter, thus defining a second electron orbital of smaller
dimensions than said first electron orbital;
providing said energy hole substantially equal to the resonance shrinkage energy of the element of matter;
juxtaposing said element of matter and said energy hole;

whereby the at least two electrons of the element of matter are stimulated by said energy hole to undergo at least one shrinkage, thus releasing energy.

11. The method of claim 10, wherein the step of providing the energy hole comprises providing a catalytic system where at least one electron is transferred from one of a first atom, ion, and molecule to one of a second atom, ion, and molecule.

12. The method of claim 11, wherein the ionization energy of said first atom, ion, or molecule less a the ionization energy of said second atom, ion, or molecule is approximately m x 48.6 eV.

13. The method of claim 10, wherein the step of providing the energy hole comprises a catalytic system, wherein the overall reaction is:

$$H^*_2\left[2c' = \frac{\sqrt{2}\ a_0}{p}\right] \rightarrow H^*_2\left[2c' = \frac{\sqrt{2}\ a_0}{p+m}\right]$$

where 2c' is the internuclear distance of the hydrogen-type molecule;
the energy hole is $mp^2 \times 48.6$ eV where m and p are integers;
during the transition, the elliptic field is increased from magnitude p to magnitude p + m;
the total energy, $E_T$, released during the transition is

$$E_T = -13.6\ eV\left[\left(2(m+p)^2\sqrt{2} - (m+p)^2\sqrt{2} + \frac{(m+p)^2\sqrt{2}}{2}\right)\ln\frac{\sqrt{2}+1}{\sqrt{2}-1} - (m+p)^2\sqrt{2}\right]$$

$$+13.6\ eV\left[\left(2p^2\sqrt{2} - p^2\sqrt{2} + \frac{p^2\sqrt{2}}{2}\right)\ln\frac{\sqrt{2}+1}{\sqrt{2}-1} - p^2\sqrt{2}\right].$$

14. An electrolytic cell energy reactor, pressurized gas energy reactor, and a gas discharge energy reactor, comprising:

means for containing a source of hydrogen;
means for bringing the hydrogen molecules into contact with one of a solid, molten, liquid, or gaseous solution of energy holes; and
means for removing the lower-energy hydrogen so as to prevent an exothermic shrinkage reaction from coming to equilibrium.

15. A method of releasing energy, comprising the steps of:

selecting an element of matter having a nucleus and at least one electron disposed in a first electron orbital;
determining the resonance shrinkage energy of the electron orbital and the energy hole which will stimulate the electron to undergo a resonance shrinkage transition to relax to a quantized potential energy level below that of a ground state of said element of matter, defining second electron orbital of smaller dimensions than said first electron orbital forming a shrunken orbital of the element of matter;
providing said energy hole substantially equal to the resonance shrinkage energy of the element of matter;
juxtaposing said element of matter and said energy hole, whereby the electron of the element of matter is stimulated by said energy hole to undergo at least one shrinkage transition and energy is released thereby.

16. The method of claim 15, wherein the step of providing an energy hole comprises providing a catalytic system including an electrochemical reactant comprising at least one of a cation and an anion.

17. The method of claim 15, wherein said step of providing an energy hole comprises selecting a second element of matter having an ionization energy substantially equal to the resonance shrinkage energy of said first element of matter.

18. Apparatus for providing the release of energy, comprising:

means for providing an element of matter in a selected volume, said element having a nucleus and at least one electron disposed in a first electron orbital having a resonance shrinkage energy; and
means introduced into said selected volume for providing an energy hole in juxtaposition with said element of matter, said energy hole having a magnitude substantially equal to said resonance shrinkage energy, wherein:

the electron of the element of matter is catalyzed by the energy hole to undergo at least one shrinkage transition thereby to release of energy.

19. The apparatus of claim 18, wherein said means providing an energy hole is a substance comprising at least a second element of matter having an ionization energy substantially equal to the resonance shrinkage energy of said first element of matter.

20. The apparatus of claim 18, wherein said means providing an energy hole comprises a catalytic system including an electrochemical reactant comprising at least one of a cation and an anion.

21. The apparatus of claim 19, wherein said first element of matter comprises $^1$H; $^2$H and $^3$H; and said second and comprises $K^+$ and $K^+$.

22. The apparatus of claim 19, further including an electrolytic cell comprising at least a cathode; an anode; an electrolytic solution; a vessel; a power supply providing a current; a means to control said current; an external energy source; computerized monitoring and control system; and a means to control the pressure of the vessel.

23. The apparatus of claim 22, wherein the cathode is nickel.

24. The apparatus of claim 22, wherein the anode is platinum or nickel.

25. The apparatus of claim 22, wherein the electrolytic solution is aqueous potassium carbonate.

26. The apparatus of claim 22, wherein the aqueous electrolytic solution is basic.

27. The apparatus of claim 22, wherein the current control means provides an intermittent current of an intermittent square-wave having an offset voltage of approximately 2.5 volts to 2.2 volts; a peak voltage of approximately 3 volts to 2.75 volts; a peak current of approximately 175 mA approximately a 40% duty cycle; and a frequency of approximately300 Hz to 1500 Hz.

28. The' apparatus of claim 22, wherein the electrolysis cell is operated at a temperature above room temperature.

29. An apparatus of claim 19, wherein the source of an energy hole is a single cation, neutral atom, or anion or a single molecule which is a cation, neutral molecule or anion, or is a combination of said species wherein the said energy hole is substantially equivalent to n/2 27.21 eV where n is an integer.

30. The apparatus of claim 18, wherein said means providing an energy hole comprises at least an additional element of matter having an ionization energy, which in combination with the ionization energy of said second element produces said energy hole substantially equal to the resonance shrinkage energy of said first element of matter.

31. The apparatus of claim 19, wherein said first element of matter comprises an isotope of hydrogen and said second element comprises:

a single-ion capable of producing energy holes for shrinking hydrogen atoms selected from the group consisting of:

| Catalytic Ion | n | nth ionization energy |
|---|---|---|
| $Al^{2+}$ | 3 | 28.45 |
| $Ar^{1+}$ | 2 | 27.63 |
| $Ti^{2+}$ | 3 | 27.49 |
| $As^{2+}$ | 3 | 28.35 |

(continued)

| Catalytic Ion | n | nth ionization energy |
|---|---|---|
| $Rb^{1+}$ | 2 | 27.28 |
| $Mo^{2+}$ | 3 | 27.16 |
| $Ru^{2+}$ | 3 | 28.47 |
| $In^{2+}$ | 3 | 28.03 |
| $Te^{2+}$ | 3 | 27.96 |

where the number following the atomic symbol (n) is the nth ionization energy of the atom, for example, $Ti^{2+}$ + 27.49 eV = $Ti^{3+}$ + $e^-$.

32. The apparatus of claim 30, wherein said first element of matter comprises an isotope of hydrogen and said second and said additional elements of matter comprise one of:

(1) two-ion couples capable of producing energy holes for shrinking hydrogen atoms, selected from the group consisting of:

| Atom Oxidized | n | nth Ionization Energy (ev) | Atom Reduced | n | nthIonization Energy (ev) | Energy Hole (ev) |
|---|---|---|---|---|---|---|
| Ne 1 + | 2 | 40.96 | H 1 + | 1 | 13.60 | 27.36 |
| Ar 2 + | 3 | 40.74 | H 1 + | 1 | 13.60 | 27.14 |
| Sn 3 + | 4 | 40.73 | H 1 + | 1 | 13.60 | 27.14 |
| Pm 3 + | 4 | 41.10 | H 1 + | 1 | 13.60 | 27.50 |
| Sm 3 + | 4 | 41.40 | H 1 + | 1 | 13.60 | 27.80 |
| Dy 3 + | 4 | 41.50 | H 1 + | 1 | 13.60 | 27.90 |
| Kr 3 + | 4 | 52.50 | He 1 + | 1 | 24.59 | 27.91 |
| Rb 3 + | 4 | 52.60 | He 1 + | 1 | 24.59 | 28.01 |
| K 4+ | 5 | 82.66 | He 2 + | 2 | 54.42 | 28.24 |
| Zn 4 + | 5 | 82.60 | He 2 + | 2 | 54.42 | 28.18 |
| Se 5 + | 6 | 81.70 | He 2 + | 2 | 54.42 | 27.28 |
| He 1 + | 2 | 54.42 | Rb 2 + | 2 | 27.28 | 27.14 |
| Zr 4 + | 5 | 81.50 | He 2 + | 2 | 54.42 | 27.08 |
| He 1 + | 2 | 54.42 | Mo 3 + | 3 | 27.16 | 27.26 |
| Si 2 + | 3 | 33.49 | Li 1 + | 1 | 5.39 | 28.10 |
| Mn 2 + | 3 | 33.67 | Li 1 + | 1 | 5.39 | 28.27 |
| Co 2 + | 3 | 33.50 | Li 1 + | 1 | 5.39 | 28.11 |
| Fd 2 + | 3 | 32.93 | Li 1 + | 1 | 5.39 | 27.54 |
| I 2 + | 3 | 33.00 | Li 1 + | 1 | 5.39 | 27.61 |
| Hf 3 + | 4 | 33.33 | Li 1 + | 1 | 5.39 | 27.94 |
| Li 1 + | 2 | 75.64 | C 3 + | 3 | 47.89 | 27.75 |
| Li 1 + | 2 | 75.64 | N 3 + | 3 | 47.45 | 28.19 |
| Li 1 + | 2 | 75.64 | Na 2 + | 2 | 47.29 | 28.35 |
| Cu 5 + | 6 | 103.00 | Li 2 + | 2 | 75.64 | 27.36 |
| Li 1 + | 2 | 75.64 | S 4 + | 4 | 47.30 | 28.34 |
| Li 1 + | 2 | 75.64 | Br 4 + | 4 | 47.30 | 28.34 |
| Br 6 + | 7 | 103.00 | Li 2 + | 2 | 75.64 | 27.36 |
| V 6 + | 7 | 150.17 | Li 3 + | 3 | 122.45 | 27.72 |
| Li 2 + | 3 | 122.45 | Mn 6 + | 6 | 95.00 | 27.45 |
| Cu 2 + | 3 | 36.83 | Be 1 + | 1 | 9.32 | 27.51 |
| Kr 2 + | 3 | 36.95 | Be 1 + | 1 | 9.32 | 27.63 |
| Cd 2 + | 3 | 37.48 | Be 1 + | 1 | 9.32 | 28.16 |
| Te 3 + | 4 | 37.41 | Be 1 + | 1 | 9.32 | 8.09 |
| Ce 3 + | 4 | 36.76 | Be 1 + | 1 | 9.32 | 27.44 |

| Atom Oxidized | n | nth Ionization Energy (ev) | Atom Reduced | n | nthIonization Energy (ev) | Energy Hole (ev) |
|---|---|---|---|---|---|---|
| K 2 + | 3 | 45.72 | Be 2 + | 2 | 18.21 | 27.51 |
| V 3 + | 4 | 46.71 | Be 2 + | 2 | 18.21 | 28.50 |
| Ge 3 + | 4 | 45.71 | Be 2 + | 2 | 18.21 | 27.50 |
| Mo 3 + | 4 | 46.40 | Be 2 + | 2 | 18.21 | 28.19 |
| Bi 3 + | 4 | 45.30 | Be 2 + | 2 | 18.21 | 27.09 |
| Be 2 + | 3 | 153.89 | Ne 5 + | 5 | 126.21 | 27.68 |
| Be 2 + | 3 | 153.89 | Kr 8 + | 8 | 126.00 | 27.89 |
| Be 2 + | 3 | 153.89 | Mo 7 + | 7 | 126.80 | 27.09 |
| Be 3+ | 4 | 217.71 | Al 6 + | 6 | 190.47 | 27.24 |
| Br 2 + | 3 | 36.00 | B 1 + | 1 | 8.30 | 27.70 |
| Ce 3 + | 4 | 36.76 | B 1 + | 1 | 8.30 | 28.46 |
| Cl 3 + | 4 | 53.46 | B 2+ | 2 | 25.15 | 28.31 |
| Kr 3 + | 4 | 52.50 | B 2+ | 2 | 25.15 | 27.35 |
| Rb 3 + | 4 | 52.60 | B 2 + | 2 | 25.15 | 27.45 |
| B 2 + | 3 | 37.93 | . P 1 + | 1 | 10.49 | 27.44 |
| P 4 + | 5 | 65.02 | B 3 + | 3 | 37.93 | 27.09 |
| B 2 + | 3 | 37.93 | S 1 + | 1 | 10.36 | 27.57 |
| V 4 + | 5 | 65.23 | B 3 + | 3 | 37.93 | 27.30 |
| B 2 + | 3 | 37.93 | As 1 + | 1 | 9.81 | 28.12 |
| B 2+ | 3 | 37.93 | Se 1 + | 1 | 9.75 | 28.18 |
| B 2+ | 3 | 37.93 | I 1 + | 1 | 10.45 | 27.48 |
| B 2 + | 3 | 37.93 | Ba 2 + | 2 | 10.00 | 27.93 |
| B 2 + | 3 | 37.93 | Ce 2 + | 2 | 10.85 | 27.08 |
| B 2 + | 3 | 37.93 | Pr 2 + | 2 | 10.55 | 27.38 |
| B 2 + | 3 | 37.93 | Nd 2 + | 2 | 10.73 | 27.20 |
| B 2 + | 3 | 37.93 | Pm 2 + | 2 | 10.90 | 27.03 |
| B 2 + | 3 . | 37.93 | - Hg 1 + | 1 | 10.44 | 27.49 |
| B 2 + | 3 | 37.93 | Rn 1 + | 1 | 10.75 | 27.18 |
| B 2+ | 3 | 37.93 | Ra2+ | 2 | 10.15 | 27.78 |
| Cl 2 + | 3 | 39.61 | C 1 + | 1 | 11.26 | 28.35 |
| Zn 2 + | 3 | 39.72 | C 1 + | 1 | 11.26 | 28.46 |
| Nb 3 + | 4 | 38.30 | C 1 + | 1 | 11.26 | 27.04 |
| Se 3 + | 4 | 42.94 | N 1 + | 1 | 14.53 | 28.41 |

EP 1 684 311 A2

(continued)

| Atom Oxidized | n | nth Ionization Energy (ev) | Atom Reduced | n | nthIonization Energy (ev) | Energy Hole (ev) |
|---|---|---|---|---|---|---|
| Eu 3 + | 4 | 42.60 | N 1 + | 1 | 14.53 | 28.07 |
| Ho 3 + | 4 | 42.50 | N 1 + | 1 | 14.53 | 27.97 |
| Er 3 + | 4 | 42.60 | N 1 + | 1 | 14.53 | 28.07 |
| Tm 3 + | 4 | 42.70 | N 1 + | 1 | 14.53 | 28.17 |
| Pb 3 + | 4 | 42.32 | N 1 + | 1 | 14.53 | 27.79 |
| N 4 + | 5 | 97.89 | Te 6 + | 6 | 70.70 | 27.19 |
| Ne 1 + | 2 | 40.96 | O 1 + | 1 | 13.62 | 27.34 |
| Ar 2 + | 3 | 40.74 | O 1 + | 1 | 13.62 | 27.12 |
| Sn 3 + | 4 | 40.73 | O 1 + | 1 | 13.62 | 27.12 |
| Pm 3 + | 4 | 41.10 | O 1 + | 1 | 13.62 | 27.48 |
| Sm 3 + | 4 | 41.40 . | O 1 + | 1 | 13.62 | 27.78 |
| Dy 3 + | 4 | 41.50 | O 1 + | 1 | 13.62 | 27.88 |
| F 2 + | 3 | 62.71 | O 2+ | 2 | 35.12 | 27.59 |
| Ne 2 + | 3 | 63.45 | O 2 + | 2 | 35.12 | 28.33 |
| O 1+ | 2 | 35.12 | Mg 1 + | 1 | 7.65 | 27.47 |
| O 1 + | 2 | 35.12 | Ti 1 + | 1 | 6.82 | 28.30 |
| O 1 + | 2 | 35.12 | V 1 + | 1 | 6.74 | 28.38 |
| O 1 + | 2 | 35.12 | Cr 1 + | 1 | 6.77 | 28.35 |
| O 1 + | 2 | 35.12 | Mn 1 + | 1 | 7.43 | 27.68 |
| O 1 + | 2 | 35.12 | Fe 1 + | 1 | 7.87 | 27.25 |
| O 1 + | 2 | 35.12 | Co 1 + | 1 | 7.86 | 27.26 |
| O 1 + | 2 | 35.12 | Ni 1 + | 1 | 7.64 | 27.48 |
| O 1 + | 2 | 35.12 | Cu 1 + | 1 | 7.73 | 27.39 |
| O 1 + | 2 | 35.12 | Ge 1 + | 1 | 7.90 | 27.22 |
| O 1 + | 2 | 35.12 | Zr 1 + | 1 | 6.84 | 28.28 |
| O 1 + | 2 | 35.12 | Nb 1 + | 1 | 6.88 | 28.24 |
| O 1 + | 2 | 35.12 | Mo 1 + | 1 | 7.10 | 28.02 |
| O 1 + | 2 | 35.12 | Tc 1 + | 1 | 7.28 | 27.84 |
| O 1 + | 2 | 35.12 | Ru 1 + | 1 | 7.37 | 27.75 |
| O 1 + | 2 | 35.12 | Rh 1 + | 1 | 7.46 | 27.66 |
| O 1 + | 2 | 35.12 | Ag 1 + | 1 | 7.58 | 27.54 |
| O 1 + | 2 | 35.12 | Sn 1 + | 1 | 7.34 | 27.77 |
| O 1 + | 2 | 35.12 | Ta 1 + | 1 | 7.89 | 27.23 |

(continued)

| Atom Oxidized | n | nth Ionization Energy (ev) | Atom Reduced | n | nthIonization Energy (ev) | Energy Hole (ev) |
|---|---|---|---|---|---|---|
| O 1 + | 2 | 35.12 | W 1 + | 1 | 17.98 | 27.14 |
| O 1 + | 2 | 35.12 | Re 1 + | 1 | 7.88 | 27.24 |
| O 1 + | 2 | 35.12 | Pb 1 + | 1 | 7.42 | 27.70 |
| O 1 + | 2 | 35.12 | Bi 1 + | 1 | 7.29 | 27.83 |
| Si 3 + | 4 | 45.14 | F 1 + | 1 | 17.42 | 27.72 |
| K 2+ | 3 | 45.72 | F 1 + | 1 | 17.42 | 28.30 |
| Ge 3 + | 4 | 45.71 | F 1 + | 1 | 17.42 | 28.29 |
| Lu 3 + | 4 | 45.19 | F 1 + | 1 | 17.42 | 27.77 |
| Bi 3 + | 4 | 45.30 | F 1 + | 1 | 17.42 | 27.88 |
| F 2 + | 3 | 62.71 | F 2 + | 2 | 34.97 | 27.74 |
| Ne 2 + | 3 | 63.45 | F 2 + | 2 | 34.97 | 28.48 |
| F 1 + | 2 | 34.97 | Mg 1 + | 1 | 7.65 | 27.32 |
| F 1 + | 2 | 34.97 | Sc 1 + | 1 | 6.54 | 28.43 |
| F 1 + | 2 | 34.97 | Ti 1 + | 1 | 6.82 | 28.15 |
| F 1 + | 2 | 34.97 | V 1 + | 1 | 6.74 | 28.23 |
| F 1 + | 2 | 34.97 | Cr 1 + | 1 | 6.77 | 28.20 |
| F 1 + | 2 | 34.97 | Mn 1 + | 1 | 7.43 | 27.54 |
| F 1 + | 2 | 34.97 | Fe 1 + | 1 | 7.87 | 27.10 |
| F 1 + | 2 | 34.97 | Co 1 + | 1 | 7.86 | 27.11 |
| F 1 + | 2 | 34.97 | Ni 1 + | 1 | 7.64 | 27.34 |
| F 1 + | 2 | 34.97 | Cu 1 + | 1 | 7.73 | 27.24 |
| F 1 + | 2 | 34.97 | Ge 1 + | 1 | 7.90 | 27.07 |
| F 1+ | 2 | 34.97 | Zr 1 + | 1 | 6.84 | 28.13 |
| F 1 + | 2 | 34.97 | Nb 1 + | 1 | 6.88 | 28.09 |
| F 1 + | 2 | 34.97 | Mo 1 + | 1 | 7.10 | 27.87 |
| F 1 + | 2 | 34.97 | Tc 1 + | 1 | 7.28 | 27.69 |
| F 1 + | 2 | 34.97 | Ru 1 + | 1 | 7.37 | 27.60 |
| F 1 + | 2 | 34.97 | Rh 1 + | 1 | 7.46 | 27.51 |
| F 1 + | 2 | 34.97 | Ag 1 + | 1 | 7.58 | 27.39 |
| F 1 + | 2 | 34.97 | Sn 1 | 1 | 7.34 | 27.63 |
| F 1 + | 2 | 34.97 | Hf 1 + | 1 | 6.60 | 28.37 |
| F 1 + | 2 | 34.97 | Ta 1 + | 1 | 7.89 | 27.08 |
| F 1 + | 2 | 34.97 | Re 1 + | 1 | 7.88 | 27.09 |

| Atom Oxidized | n | nth Ionization Energy (ev) | Atom Reduced | n | nthIonization Energy (ev) | Energy Hole (ev) |
|---|---|---|---|---|---|---|
| F 1 + | 2 | 34.97 | Pb 1 + | 1 | 7.42 | 27.55 |
| F 1 + | 2 | 34.97 | Bi 1 + | 1 | 7.29 | 27.68 |
| Cr 3 + | 4 | 49.10 | Ne 1 + | 1 | 21.56 | 27.54 |
| La 3 + | 4 | 49.95 | Ne 1 + | 1 | 21.56 | 28.39 |
| Ne 1 + | 2 | 40.96 | Cl 1 + | 1 | 12.97 | 28.00 |
| Ne 1 + | 2 | 40.96 | Sc 2 + | 2 | 12.80 | 28.16 |
| Ne 1 + | 2 | 40.96 | Ti 2 + | 2 | 13.58 | 27.38 |
| Cr 4 + | 5 | 69.30 | Ne 2 + | 2 | 40.96 | 28.34 |
| Se 4 + | 5 | 68.30 | Ne 2 + | 2 | 40.96 | 27.34 |
| Ne 1 + | 2 | 40.96 | Zr 2 + | 2 | 13.13 | 27.83 |
| Mo. 5 + | 6 | 68.00 | Ne 2 + | 2 | 40.96 | 27.04 |
| Ne 1 + | 2 | 40.96 | Lu 2 + | 2 | 13.90 | 27.06 |
| Pb 4 + | 5 | 68.80 | Ne 2 + | 2 | 40.96 | 27.84 |
| Ar 5 + | 6 | 91.01 | Ne 3 + | 3 | 63.45 | 27.56 |
| Sc 4 + | 5 | 91.66 | Ne 3 + | 3 | 63.45 | 28.21 |
| Cr 5 + | 6 | 90.56 | Ne 3 + | 3 | 63.45 | 27.11 |
| Ne 2 + | 3 | 63.45 | Ni 3 + | 3 | 35.17 | 28.28 |
| Ne 2 + | 3 | 63.45 | Br 3 + | 3 | 36.00 | 27.45 |
| Sr 5 + | 6 | 90.80 | Ne 3 + | 3 | 63.45 | 27.35 |
| Ar 6 + | 7 | 124.32 | Ne 4 + | 4 | 97.11 | 27.21 |
| Ne 3 + | 4 | 97.11 | Cr 5 + | 5 | 69.30 | 27.81 |
| Fe 6 + | 7 | 125.00 | Ne 4 + | 4 | 97.11 | 27.89 |
| Nb 6 + | 7 | 125.00 | Ne 4 + | 4 | 97.11 | 27.89 |
| Ne 3 + | 4 | 97.11 | Pb 5 + | 5 | 68.80 | 28.31 |
| Ne 4 + | 5 | 126.21 | Na 4 + | 4 | 98.91 | 27.30 |
| Al 4 + | 5 | 153.71 | Ne 5 + | 5 | 126.21 | 27.50 |
| Ne 4 + | 5 | 126.21 | Fe 6 + | 6 | 99.00 | 27.21 |
| Ne 4 + | 5 | 126.21 | Rb 7 + | 7 | 99.20 | 27.01 |
| Si 2 + | 3 | 33.49 | Na 1 + | 1 | 5.14 | 28.35 |
| Co 2 + | 3 | 33.50 | Na 1 + | 1 | 5.14 | 2836 |
| Pd 2 + | 3 | 32.93 | Na 1 + | 1 | 5.14 | 27.79 |
| I 2 + | 3 | 33.00 | Na 1 + | 1 | 5.14 | 27.86 |
| Hf 3 + | 4 | 33.33 | Na 1 + | 1 | 5.14 | 28.19 |

(continued)

| Atom Oxidized | n | nth Ionization Energy (ev) | Atom Reduced | n | nthIonization Energy (ev) | Energy Hole (ev) |
|---|---|---|---|---|---|---|
| Na 1 + | 2 | 47.29 | Al 2 + | 2 | 18.83 | 28.46 |
| Na 1 + | 2 | 47.29 | P 2 + | 2 | 19.73 | 27.56 |
| Fe 4 + | 5 | 75.00 | Na 2 + | 2 | 47.29 | 27.71 |
| Ni 4 + | 5 | 75.50 | Na 2 + | 2 | 47.29 | 28.21 |
| Na 1 + | 2 | 47.29 | Pd 2 + | 2 | 19.43 | 27.86 |
| Na 1 + | 2 | 47.29 | In 2 + | 2 | 18.87 | 28.42 |
| Na 1 + | 2 | 47.29 | I 2 + | 2 | 19.13 | 28.15 |
| Na 1 + | 2 | 47.29 | La 3 + | 3 | 19.18 | 28.11 |
| Na 1 + | 2 | 47.29 | Ce 3 + | 3 | 20.20 | 27.09 |
| Na 3 + | 4 | 98.91 | Na 3 + | 3 | 71.64 | 27.27 |
| K 5 + | 6 | 100.00 | Na 3 + | 3 | 71.64 | 28.36 |
| Na 2 + | 3 | 71.64 | Ti 4 + | 4 | 43.27 | 28.37 |
| Ti 4 + | 5 | 99.22 | Na 3 + | 3 | 71.64 | 27.58 |
| Fe 5 + | 6 | 99.00 | Na 3 + | 3 | 71.64 | 27.36 |
| Na 2 + | 3 | 71.64 | Sr 3 + | 3 | 43.60 | 28.04 |
| Na 2 + | 3 | 71.64 | Sb 4 + | 4 | 44.20 | 27.44 |
| Na 2 + | 3 | 71.64 | Gd 4 + | 4 | 44.00 | 27.64 |
| Na 2 + | 3 | 71.64 | Yb 4 + | 4 | 43.70 | 27.94 |
| Na 3 + | 4 | 98.91 | Na 3 + | 3 | 71.64 | 27.27 |
| Kr 7 + | 8 | 126.00 | Na 4 + | 4 | 98.91 | 27.09 |
| Na 3 + | 4 | 98.91 | Rb 5 + | 5 | 71.00 | 27.91 |
| Na3+ | 4 | 98.91 | Sr 5 + | 5 | 71.60 | 27.31 |
| Mo 6 + | 7 | 126.80 | Na 4 + | 4 | 98.91 | 27.89 |
| Na 3 + | 4 | 98.91 | Te 6 + | 6 | 70.70 | 28.21 |
| Si 4 + | 5 | 166.77 | Na 5 + | 5 | 138.39 | 28.38 |
| Na 4 + | 5 | 138.39 | Sc 6 + | 6 | 111.10 | 27.29 |
| Na 4 + | 5 | 138.39 | Kr 7 + | 7 | 111.00 | 27.39 |
| S 2 + | 3 | 34.83 | Mg 1 + | 1 | 7.65 | 27.18 |
| Ni 2 + | 3 | 35.17 | Mg 1 + | 1 | 7.65 | 27.52 |
| Ag 2 + | 3 | 34.83 | Mg 1 + | 1 | 7.65 | 27.18 |
| Ti 3 + | 4 | 43.27 | Mg 2 + | 2 | 15.03 | 28.23 |
| Se 3 + | 4 | 42.94 | Mg 2 + | 2 | 15.03 | 27.91 |
| Eu 3 + | 4 | 42.60 | Mg 2 + | 2 | 15.03 | 27.56 |

(continued)

| Atom Oxidized | n | nth Ionization Energy (ev) | Atom Reduced | n | nthIonization Energy (ev) | Energy Hole (ev) |
|---|---|---|---|---|---|---|
| Ho 3 + | 4 | 42.50 | Mg 2 + | 2 | 15.03 | 27.47 |
| Er 3 + | 4 | 42.60 | Mg 2 + | 2 | 15.03 | 27.56 |
| Tm 3 + | 4 | 42.70 | Mg 2 + | 2 | 15.03 | 27.67 |
| Pb 3 + | 4 | 42.32 | Mg 2 + | 2 | 15.03 | 27.28 |
| Ni 5 + | 6 | 108.00 | Mg 3 + | 3 | 80.14 | 27.86 |
| Zn 5 + | 6 | 108.00 | Mg 3 + | 3 | 80.14 | 27.86 |
| Mg 2 + | 3 | 80.14 | Kr 4 + | 4 | 52.50 | 27.64 |
| Mg 2 + | 3 | 80.14 | Rb 4 + | 4 | 52.60 | 27.54 |
| Sb 5 + | 6 | 108.00 | Mg 3 + | 3 | 80.14 | 27.86 |
| Mg 3 + | 4 | 109.24 | Se 6 + | 6 | 81.70 | 27.54 |
| Mg 3 + | 4 | 109.24 | Zr 5 + | 5 | 81.50 | 27.74 |
| Te 6 + | 7 | 137.00 | Mg 4 + | 4 | 109.24 | 27.76 |
| Mg 4 + | 5 | 141.26 | Cl 7 + | 7 | 114.19 | 27.07 |
| Si 2 + | 3 | 33.49 | Al 1 + | 1 | 5.99 | 27.51 |
| Mn 2 + | 3 | 33.67 | Al 1 + | 1 | 5.99 | 27.68 |
| Co 2 + | 3 | 33.50 | Al 1 + | 1 | 5.99 | 27.51 |
| Ge 2 + | 3 | 34.22 | Al 1 + | 1 | 5.99 | 28.23 |
| Zr 3 + | 4 | 34.34 | Al 1 + | 1 | 5.99 | 28.35 |
| I 2 + | 3 | 33.00 | Al 1 + | 1 | 5.99 | 27.01 |
| Hf 3 + | 4 | 33.33 | Al 1 + | 1 | 5.99 | 27.34 |
| Hg 2 + | 3 | 34.20 | Al 1 + | 1 | 5.99 | 28.21 |
| S 3 + | 4 | 47.30 | Al 2 + | 2 | 18.83 | 28.47 |
| V 3+ | 4 | 46.71 | Al 2 + | 2 | 18.83 | 27.88 |
| Br 3 + | 4 | 47.30 | Al 2 + | 2 | 18.83 | 28.47 |
| Mo 3 + | 4 | 46.40 | Al 2 + | 2 | 18.83 | 27.57 |
| Sb 4 + | 5 | 56.00 | Al 3 + | 3 | 28.45 | 27.55 |
| Bi 4 + | 5 | 56.00 | Al 3 + | 3 | 28.45 | 27.55 |
| Ca 7 + | 8 | 147.24 | Al 4 + | 4 | 119.99 | 27.25 |
| Al 3 + | 4 | 119.99 | Sc 5 + | 5 | 91.66 | 28.33 |
| Al 4 + | 5 | 153.71 | Kr 8 + | 8 | 126.00 | 27.71 |
| Al 5 + | 6 | 190.47 | Ni 8 + | 8 | 162.00 | 28.47 |
| Ni 2 + | 3 | 35.17 | Si 1 + | 1 | 8.15 | 27.02 |
| Br 2 + | 3 | 36.00 | Si 1 + | 1 | 8.15 | 27.85 |

| Atom Oxidized | n | nth Ionization Energy (ev) | Atom Reduced | n | nthIonization Energy (ev) | Energy Hole (ev) |
|---|---|---|---|---|---|---|
| Sr 2 + | 3 | 43.60 | Si 2 + | 2 | 16.34 | 27.25 |
| Sb 3 + | 4 | 44.20 | Si 2 + | 2 | 16.34 | 27.86 |
| Gd 3 + | 4 | 44.00 | Si 2 + | 2 | 16.34 | 27.66 |
| Yb 3 + | 4 | 43.70 | Si 2 + | 2 | 16.34 | 27.36 |
| K 3 + | 4 | 60.91 | Si 3 + | 3 | 33.49 | 27.42 |
| Si 2 + | 3 | 33.49 | Ca 1 + | 1 | 6.11 | 27.38 |
| Si 2 + | 3 | 33.49 | Ga 1 + | 1 | 6.00 | 27.49 |
| Si 2 + | 3 | 33.49 | Sr 1 + | 1 | 5.70 | 27.80 |
| Si 2 + | 3 | 33.49 | Y 1 + | 1 | 6.38 | 27.11 |
| Y 3 + | 3 | 61.80 | Si 3 + | 3 | 33.49 | 28.31 |
| Mo 4 + | 5 | 61.20 | Si 3 + | 3 | 33.49 | 27.71 |
| Si 2 + | 3 | 33.49 | In 1 + | 1 | 5.79 | 27.71 |
| Si 2 + | 3 | 33.49 | Ba 1 + | 1 | 5.21 | 28.28 |
| Si 2 + | 3 | 33.49 | La 1 + | 1 | 5.58 | 27.92 |
| Si 2 + | 3 | 33.49 | Ce 1 + | 1 | 5.47 | 28.02 |
| Si 2 + | 3 | 33.49 | Pr 1 + | 1 | 5.42 | 28.07 |
| Si 2 + | 3 | 33.49 | Nd 1 + | 1 | 5.49 | 28.00 |
| Si 2 + | 3 | 33.49 | Pm 1 + | 1 | 5.55 | 27.94 |
| Si 2 + | 3 | 33.49 | Sm 1 + | 1 | 5.63 | 27.86 |
| Si 2 + | 3 | 33.49 | Eu 1 + | 1 | 5.67 | 27.83 |
| Si 2 + | 3 | 33.49 | Gd 1 + | 1 | 6.14 | 27.35 |
| Si 2 + | 3 | 33.49 | Tb 1 + | 1 | 5.85 | 27.64 |
| Si 2 + | 3 | 33.49 | Dy 1 + | 1 | 5.93 | 27.57 |
| Si 2 + | 3 | 33.49 | Ho 1 + | 1 | 6.02 | 27.47 |
| Si 2 + | 3 | 33.49 | Er 1 + | 1 | 6.10 | 27.39 |
| Si 2 + | 3 | 33.49 | Tm 1 + | 1 | 6.18 | 27.31 |
| Si 2 + | 3 | 33.49 | Yb 1 + | 1 | 6.25 | 27.24 |
| Si 2 + | 3 | 33.49 | Lu 1 + | 1 | 5.43 | 28.07 |
| Si 2 + | 3 | 33.49 | Tl 1 + | 1 | 6.11 | 27.38 |
| Si 2 + | 3 | 33.49 | Ra 1 + | 1 | 5.28 | 28.21 |
| Si 2 + | 3 | 33.49 | Ac 1 + | 1 | 5.20 | 28.29 |
| Si 2 + | 3 | 33.49 | Th 1 + | 1 | 6.10 | 27.39 |
| Si 2 + | 3 | 33.49 | Pa 1 + | 1 | 5.90 | 27.59 |

(continued)

| Atom Oxidized | n | nth Ionization Energy (ev) | Atom Reduced | n | nthIonization Energy (ev) | Energy Hole (ev) |
|---|---|---|---|---|---|---|
| Si 2 + | 3 | 33.49 | U 1 + | 1 | 6.05 | 27.44 |
| Si 2 + | 3 | 33.49 | Np 1 + | 1 | 6.20 | 27.29 |
| Si 2 + | 3 | 33.49 | Pu 1 + | 1 | 6.06 | 27.43 |
| Si 2 + | 3 | 33.49 | Am 1 + | 1 | 5.99 | 27.50 |
| Si 2 + | 3 | 33.49 | Cm 1 + | 1 | 6.02 | 27.47 |
| Si 2 + | 3 | 33.49 | Bk 1 + | 1 | 6.23 | 27.26 |
| Si 2 + | 3 | 33.49 | Cf 1 + | 1 | 6.30 | 27.19 |
| Si 2 + | 3 | 33.49 | Es 1 + | 1 | 6.42 | 27.07 |
| S 4+ | 5 | 72.68 | Si 4 + | 4 | 45.14 | 27.54 |
| Sc 3 + | 4 | 73.47 | Si 4 + | 4 | 45.14 | 28.33 |
| Mn 4 + | 5 | 72.40 | Si 4 + | 4 | 45.14 | 27.26 |
| Si 3 + | 4 | 45.14 | Co 2 + | 2 | 17.06 | 28.08 |
| Si 3 + | 4 | 45.14 | Zn 2 + | 2 | 17.96 | 27.18 |
| Si 3 + | 4 | 45.14 | Ru 2 + | 2 | 16.76 | 28.38 |
| Si 3 + | 4 | 45.14 | Rh 2 + | 2 | 18.08 | 27.06 |
| Si 3 + | 4 | 45.14 | Cd 2 + | 2 | 16.91 | 28.23 |
| Sn 4 + | 5 | 72.28 | Si 4 + | 4 | 45.14 | 27.14 |
| Si 3 + | 4 | 45.14 | Bi 2 + | 2 | 16.69 | 28.45 |
| Si 4 + | 5 | 166.77 | Cu 7 + | 7 | 139.00 | 27.77 |
| Nb 3 + | 4 | 38.30 | P 1 + | 1 | 10.49 | 27.81 |
| Pr 3 + | 4 | 38.98 | P 1 + | 1 | 10.49 | 28.49 |
| S 3 + | 4 | 47.30 | P 2+ | 2 | 19.73 | 27.57 |
| Br 3 + | 4 | 47.30 | P 2 + | 2 | 19.73 | 27.57 |
| P 3 + | 4 | 51.37 | S 2 + | 2 | 23.33 | 28.04 |
| P 3 + | 4 | 51.37 | Cl 2 + | 2 | 23.81 | 27.56 |
| Co 4 + | 5 | 79.50 | P 4 + | 4 | 51.37 | 28.13 |
| P 3+ | 4 | 51.37 | Kr2+, | 2 | 24.36 | 27.01 |
| Kr5+ | 6 | 78.50 | P 4 + | 4 | 51.37 | 27.13 |
| P 3 + | 4 | 51.37 | Zr 3 + | 3 | 22.99 | 28.38 |
| P 3 + | 4 | 51.37 | Sm 3 + | 3 | 23.40 | 27.97 |
| P 3 + | 4 | 51.37 | Tm 3 + | 3 | 23.68 | 27.69 |
| P 3 + | 4 | 51.37 | Hf 3 + | 3 | 23.30 | 28.07 |
| P 4 + | 5 | 65.02 | Cu 3 + | 3' | 36.83 | 28.19 |

139

(continued)

| Atom Oxidized | n | nth Ionization Energy (ev) | Atom Reduced | n | nthIonization Energy (ev) | Energy Hole (ev) |
|---|---|---|---|---|---|---|
| Ge 4 + | 5 | 93.50 | P 5 + | 5 | 65.02 | 28.48 |
| P 4 + | 5 | 65.02 | Kr 3 + | 3 | 36.95 | 28.07 |
| Y 5 + | 6 | 93.00 | P 5 + | 5 | 65.02 | 27.98 |
| P 4 + | 5 | 65.02 | Cd 3 + | 3 | 37.48 | 27.54 |
| P 4 + | 5 | 65.02 | Te 4 + | 4 | 37.41 | 27.61 |
| P 4 + | 5 | 65.02 | Ce 4 + | 4 | 36.76 | 28.27 |
| P 5 + | 6 | 220.43 | Br 8 + | 8 | 192.80 | 27.63 |
| P 7 + | 8 | 309.41 | S 7 + | 7 | 280.93 | 28.48 |
| Nb 3 + | 4 | 38.30 | S 1 + | 1 | 10.36 | 27.94 |
| Cd 2 + | 3 | 37.48 | S 1 + | 1 | 10.36 | 27.12 |
| Te 3 + | 4 | 37.41 | S 1 + | 1 | 10.36 | 27.05 |
| Ca 2 + | 3 | 50.91 | S 2 + | 2 | 23.33 | 27.58 |
| Mn 3 + | 4 | 51.20 | S 2 + | 2 | 23.33 | 27.87 |
| Co 3 + | 4 | 51.30 | S 2 + | 2 | 23.33 | 27.97 |
| Nb 4 + | 5 | 50.55 | S 2 + | 2 | 23.33 | 27.22 |
| S 2 + | 3 | 34.83 | Sc 1 + | 1 | 6.54 | 28.29 |
| S 2 + | 3 | 34.83 | Ti 1 + | 1 | 6.82 | 28.01 |
| S 2 + | 3 | 34.83 | V 1 + | 1 | 6.74 | 28.09 |
| S 2 + | 3 | 34.83 | Cr 1 + | 1 | 6.77 | 28.06 |
| S 2 + | 3 | 34.83 | Mn 1 + | 1 | 7.43 | 27.40 |
| S 2 + | 3 | 34.83 | Ni 1 + | 1 | 7.64 | 27.20 |
| S 2 + | 3 | 34.83 | Cu 1 + | 1 | 7.73 | 27.10 |
| S 2 + | 3 | 34.83 | Y 1 + | 1 | 6.38 | 28.45 |
| S 2 + | 3 | 34.83 | Zr 1 + | 1 | 6.84 | 27.99 |
| S 2 + | 3 | 34.83 | Nb 1 + | 1 | 6.88 | 27.95 |
| S 2 + | 3 | 34.83 | Mo 1 + | 1 | 7.10 | 27.73 |
| S 2 + | 3 | 34.83 | Tc 1 + | 1 | 7.28 | 27.55 |
| S 2+ | 3 | 34.83 | Ru 1 + | 1 | 7.37 | 27.46 |
| S 2 + | 3 | 34.83 | Rh 1 + | 1 | 7.46 | 27.37 |
| S 2 + | 3 | 34.83 | Ag 1 + | 1 | 7.58 | 27.25 |
| S 2 + | 3 | 34.83 | Sn 1 + | 1 | 7.34 | 27.49 |
| S 2 + | 3 | 34.83 | Hf 1 + | 1 | 6.60 | 28.23 |
| S 2 + | 3 | 34.83 | Pb 1 + | 1 | 7.42 | 27.41 |

140

(continued)

| Atom Oxidized | n | nth Ionization Energy (ev) | Atom Reduced | n | nthIonization Energy (ev) | Energy Hole (ev) |
|---|---|---|---|---|---|---|
| S 2 + | 3 | 34.83 | Bi 1 + | 1 | 7.29 | 27.54 |
| S 2+ | 3 | 34.83 | Es 1 + | 1 | 6.42 | 28.41 |
| Ar 4 + | 5 | 75.02 | S 4 + | 4 | 47.30 | 27.72 |
| Fe 4 + | 5 | 75.00 | S 4 + | 4 | 47.30 | 27.70 |
| Ni 4 + | 5 | 75.50 | S 4 + | 4 | 47.30 | 28.20 |
| S 3 + | 4 | 47.30 | Cu 2 + | 2 | 20.29 | 27.01 |
| S 3 + | 4 | 47.30 | Pd 2 + | 2 | 19.43 | 27.87 |
| S 3 + | 4 | 47.30 | In 2 + | 2 | 18.87 | 28.43 |
| S 3+ | 4 | 47.30 | I 2 + | 2 | 19.13 | 28.17 |
| S 3 + | 4 | 47.30 | La 3 + | 3 | 19.18 | 28.12 |
| S 3 + | 4 | 47.30 | Ce 3 + | 3 | 20.20 | 27.10 |
| S 4 + | 5 | 72.68 | Sb 4 + | 4 | 44.20 | 28.48 |
| S 4 + | 5 | 72.68 | Lu 4 + | 4 | 45.19 | 27.49 |
| S 4 + | 5 | 72.68 | Bi 4 + | 4 | 45.30 | 27.38 |
| S 5 + | 6 | 88.05 | Ar 4 + | 4 | 59.81 | 28.24 |
| S 5 + | 6 | 88.05 | K 4 + | 4 | 60.91 | 27.14 |
| S 5 + | 6 | 88.05 | Br 5 + | 5 | 59.70 | 28.35 |
| Y 6 + | 7 | 116.00 | S 6 + | 6 | 88.05 | 27.95 |
| Ar 2 + | 3 | 40.74 | Cl 1 + | 1 | 12.97 | 27.77 |
| Rb 2 + | 3 | 40.00 | Cl 1 + | 1 | 12.97 | 27.03 |
| Sn 3 + | 4 | 40.73 | Cl 1 + | 1 | 12.97 | 27.77 |
| Nd 3 + | 4 | 40.41 | Cl 1 + | 1 | 12.97 | 27.44 |
| Pm 3 + | 4 | 41.10 | Cl 1 + | 1 | 12.97 | 28.13 |
| Sin 3 + | 4 | 41.40 | Cl 1 + | 1 | 12.97 | 28.43 |
| Ca 2 + | 3 | 50.91 | Cl 2 + | 2 | 23.81 | 27.10 |
| Mn 3 + | 4 | 51.20 | Cl 2 + | 2 | 23.81 | 27.39 |
| Co 3 + | 4 | 51.30 | Cl 2 + | 2 | 23.81 | 27.49 |
| Ca3 + | 4 | 67.10 | Cl 3 + | 3 | 39.61 | 27.49 |
| Ti 3 + | 4 | 43.27 | Ar 1 + | 1 | 15.76 | 27.51 |
| Se 3 + | 4 | 42.94 | Ar 1 + | 1 | 15.76 | 27.19 |
| Sr 2 + | 3 | 43.60 | Ar.1 + | 1 | 15.76 | 27.84 |
| Sb 3 + | 4 | 44.20 | Ar 1 + | 1 | 15.76 | 28.44 |
| Gd 3 + | 4 | 44.00 | Ar 1 + | 1 | 15.76 | 28.24 |

(continued)

| Atom Oxidized | n | nth Ionization Energy (ev) | Atom Reduced | n | nthIonization Energy (ev) | Energy Hole (ev) |
|---|---|---|---|---|---|---|
| Yb 3 + | 4 | 43.70 | Ar 1 + | 1 | 15.76 | 27.94 |
| Fe 3 + | 4 | 54.80 | Ar 2 + | 2 | 27.63 | 27.17 |
| Ni 3 + | 4 | 54.90 | Ar 2 + | 2 | 27.63 | 27.27 |
| Cu 3 + | 4 | 55.20 | Ar 2 + | 2 | 27.63 | 27.57 |
| Sb 4 + | 5 | 56.00 | Ar 2 + | 2 | 27.63 | 28.37 |
| Bi 4 + | 5 | 56.00 | Ar 2 + | 2 | 27.63 | 28.37 |
| K 1 + | 2 | 31. 6 3 | K 1 + | 1 | 4.34 | 27.28 |
| Xe 2 + | 3 | 32.10 | K 1 + | 1 | 4.34 | 27.76 |
| Pb 2 + | 3 | 31.94 | K 1 + | 1 | 4.34 | 27.60 |
| K 1 + | 2 | 31.63 | K 1 + | 1 | 4.34 | 27.28 |
| Zn 3 + | 4 | 59.40 | K 2+ | 2 | 31.63 | 27.78 |
| Br 4 + | 5 | 59.70 | K 2 + | 2 | 31.63 | 28.08 |
| K 1 + | 2 | 31.63 | Rb 1 + | 1 | 4.18 | 27.45 |
| Te 4 + | 5 | 58.75 | K 2 + | 2 | 31.63 | 27.13 |
| K 1 + | 2 | 31.63 | Cs 1 + | 1 | 3.89 | 27.73 |
| Sc 3 + | 4 | 73.47 | K 3 + | 3 | 45.72 | 27.75 |
| K 2 + | 3 | 45.72 | Ni 2 + | 2 | 18.17 | 27.55 |
| K 2 + | 3 | 45.72 | Zn 2 + | 2 | 17.96 | 27.76 |
| K 2 + | 3 | 45.72 | As 2 + | 2 | 18.63 | 27.09 |
| K 2 + | 3 | 45.72 | Rh 2 + | 2 | 18.08 | 27.64 |
| K 2 + | 3 | 45.72 | Te 2 + | 2 | 18.60 | 27.12 |
| K 2 + | 3 | 45.72 | Pt 2 + | 2 | 18.56 | 27.16 |
| K 3 + | 4 | 60.91 | Mn 3 + | 3 | 33.67 | 27.24 |
| K 3 + | 4 | 60.91 | Co 3 + | 3 | 33.50 | 27.41 |
| Br 5 + | 6 | 88.60 | K 4 + | 4 | 60.91 | 27.69 |
| K 3 + | 4 | 60.91 | Pd 3 + | 3 | 32.93 | 27.98 |
| K 3 + | 4 | 60.91 | I 3 + | 3 | 33.00 | 27.91 |
| K 3 + | 4 | 60.91 | Hf 4 + | 4 | 33.33 | 27.58 |
| Bi 5 + | 6 | 88.30 | K 4 + | 4 | 60.91 | 27.39 |
| Sc 5 + | 6 | 111.10 | K 5 + | 5 | 82.66 | 28.44 |
| K 4 + | 5 | 82.66 | Fe 4 + | 4 | 54.80 | 27.86 |
| K 4 + | 5 | 82.66 | Ni 4 + | 4 | 54.90 | 27.76 |
| K 4 + | 5 | 82.66 | Cu 4 + | 4 | 55.20 | 27.46 |

(continued)

| Atom Oxidized | n | nth Ionization Energy (ev) | Atom Reduced | n | nthIonization Energy (ev) | Energy Hole (ev) |
|---|---|---|---|---|---|---|
| Kr 6 + | 7 | 111.00 | K 5 + | 5 | 82.66 | 28.34 |
| Ca 6 + | 7 | 127.70 | K 6 + | 6 | 100.00 | 27.70 |
| V 5 + | 6 | 128.12 | K 6+ | 6 | 100.00 | 28.12 |
| K 5 + | 6 | 100.00 | Mn 5 + | 5 | 72.40 | 27.60 |
| As 5 + | 6 | 127.60 | K 6 + | 6 | 100.00 | 27.60 |
| K 5 + | 6 | 100.00 | Sr 5 + | 5 | 71.60 | 28.40 |
| K 5 + | 6 | 100.00 | Sn 5 + | 5 | 72.28 | 27.72 |
| K 7 + | 8 | 154.86 | Ca 7 + | 7 | 127.70 | 27.16 |
| K 7 + | 8 | 154.86 | As 6 + | 6 | 127.60 | 27.26 |
| K 7 + | 8 | 154.86 | Mo 7 + | 7 | 126.80 | 28.06 |
| Mn 2 + | 3 | 33.67 | Ca 1 + | 1 | 6.11 | 27.55 |
| Co 2 | 3 | 33.50 | Ca 1 + | 1 | 6.11 | 27.39 |
| Ge 2 + | 3 | 34.22 | Ca 1 + | 1 | 6.11 | 28.11 |
| Zr 3 + | 4 | 34.34 | Ca 1 + | 1 | 6.11 | 28.23 |
| Hf3+ | 4 | 33.33 | Ca 1 + | 1 | 6.11 | 27.22 |
| Hg 2 + | 3 | 34.20 | Ca 1 + | 1 | 6.11 | 28.09 |
| Zn 2 + | 3 | 39.72 | Ca 2 + | 2 | 11.87 | 27.85 |
| Rb 2 + | 3 | 40.00 | Ca 2 + | 2 | 11.87 | 28.13 |
| Pr 3 + | 4 | 38.98 | Ca 2 + | 2 | 11.87 | 27.11 |
| Tb 3 + | 4 | 39.80 | Ca 2 + | 2 | 11.87 | 27.93 |
| Kr 5 + | 6 | 78.50 | Ca 3 + | 3 | 50.91 | 27.59 |
| Ca 2 + | 3 | 50.91 | Zr 3 + | 3 | 22.99 | 27.92 |
| Ca 2 + | 3 | 50.91 | Sm 3 + | 3 | 23.40 | 27.51 |
| Ca 2 + | 3 | 50.91 | Dy 3 + | 3 | 22.80 | 28.11 |
| Ca 2 + | 3 | 50.91 | Ho 3 + | 3 | 22.84 | 28.07 |
| Ca 2 + | 3 | 50.91 | Er3+ | 3 | 22.74 | 28.17 |
| Ca 2 + | 3 | 50.91 | Tm 3 + | 3 | 23.68 | 27.23 |
| Ca 2 + | 3 | 50.91 | Hf 3 + | 3 | 23.30 | 27.61 |
| Mn 5 + | 6 | 95.00 | Ca 4 + | 4 | 67.10 | 27.90 |
| Ca 3 + | 4 | 67.10 | Zn 3 + | 3 | 39.72 | 27.38 |
| Ca 3 + | 4 | 67.10 | Rb 3 + | 3 | 40.00 | 27.10 |
| Ca 3 + | 4 | 67.10 | Pr 4 + | 4 | 38.98 | 28.12 |
| Ca 3 + | 4 | 67.10 | Tb 4 + | 4 | 39.80 | 27.30 |

| Atom Oxidized | n | nth Ionization Energy (ev) | Atom Reduced | n | nthIonization Energy (ev) | Energy Hole (ev) |
|---|---|---|---|---|---|---|
| Ca 4 + | 5 | 84.41 | Sr 4 + | 4 | 57.00 | 27.41 |
| Ca 4 + | 5 | 84.41 | Sb 5 + | 5 | 56.00 | 28.41 |
| Ca 4 + | 5 | 84.41 | Bi 5 + | 5 | 56.00 | 28.41 |
| Ca 5 + | 6 | 108.78 | Se 6 + | 6 | 81.70 | 27.08 |
| Rb 7 + | 8 | 136.00 | Ca 6 + | 6 | 108.78 | 27.22 |
| Ca 5 + | 6 | 108.78 | Zr 5 + | 5 | 81.50 | 27.28 |
| Te 6 + | 7 | 137.00 | Ca 6 + | 6 | 108.78 | 28.22 |
| Ca 6 + | 7 | 127.70 | Ti 5 + | 5 | 99.22 | 28.48 |
| Se 6 + | 7 | 155.40 | Ca 7 + | 7 | 127.70 | 27.70 |
| Ca 7 + | 8 | 147.24 | Ti 6 + | 6 | 119.36 | 27.88 |
| Ca 7 + | 8 | 147.24 | Mn 7 + | 7 | 119.27 | 27.97 |
| Mn 2 + | 3 | 33.67 | Sc 1 + | 1 | 6.54 | 27.13 |
| Ge 2 + | 3 | 34.22 | Sc 1 + | 1 | 6.54 | 27.68 |
| Zr 3 + | 4 | 34.34 | Sc 1 + | 1 | 6.54 | 27.80 |
| Ag 2 + | 3 | 34.83 | Sc 1 + | 1 | 6.54 | 28.29 |
| Hg 2 + | 3 | 34.20 | Sc 1 + | 1 | 6.54 | 27.66 |
| Rb 2 + | 3 | 40.00 | Sc 2 + | 2 | 12.80 | 27.20 |
| Sn 3 + | 4 | 40.73 | Sc 2 + | 2 | 12.80 | 27.93 |
| Nd 3 + | 4 | 40.41 1 | Sc 2 + | 2 | 12.80 | 27.61 |
| Pm 3 + | 4 | 41.10 | Sc 2 + | 2 | 12.80 | 28.30 |
| Kr 3 + | 4 | 52.50 | Sc 3 + | 3 | 24.76 | 27.74 |
| Rb 3 + | 4 | 52.60 | Sc 3 + | 3 | 24.76 | 27.84 |
| Sc 3 + | 4 | 73.47 | Ge 4 + | 4 | 45.71 | 27.76 |
| Sc 3 + | 4 | 73.47 | Mo 4 + | 4 | 46.40 | 27.07 |
| Sc 3 + | 4 | 73.47 | Lu 4 + | 4 | 45.19 | 28.28 |
| Sc 3 + | 4 | 73.47 | Bi 4 + | 4 | 45.30 | 28.17 |
| Ti 5 + | 6 | 119.36 | Sc 5 + | 5 | 91.66 | 27.70 |
| Mn 6 + | 7 | 119.27 | Sc 5 + | 5 | 91.66 | 27.61 |
| Sc 4 + | 5 | 91.66 | Ga 4 + | 4 | 64.00 | 27.66 |
| Sc 4 + | 5 | 91.66 | As 5 +5 | 6 | 3.63 | 28.03 |
| Cu 6 + | 7 | 139.00 | Sc 6 + | 6 | 111.10 | 27.90 |
| Cu 7 + | 8 | 166.00 | Sc 7 + | 7 | 138.00 | 28.00 |
| Ni 2 + | 3 | 35.17 | Ti 1 + | 1 | 6.82 | 28.35 |

(continued)

| Atom Oxidized | n | nth Ionization Energy (ev) | Atom Reduced | n | nthIonization Energy (ev) | Energy Hole (ev) |
|---|---|---|---|---|---|---|
| Ge 2 + | 3 | 34.22 | Ti 1 + | 1 | 6.82 | 27.40 |
| Zr 3 + | 4 | 34.34 | Ti 1 + | 1 | 6.82 | 27.52 |
| Ag 2 + | 3 | 34.83 | Ti 1 + | 1 | 6.82 | 28.01 |
| Hg 2 + | 3 | 34.20 | Ti 1 + | 1 | 6.82 | 27.38 |
| Sn 3 + | 4 | 40.73 | Ti 2 + | 2 | 13.58 | 27.15 |
| Pm 3 + | 4 | 41.10 | Ti 2 + | 2 | 13.58 | 27.52 |
| Sm 3 + | 4 | 41.40 | Ti 2 + | 2 | 13.58 | 27.82 |
| Dy 3 + | 4 | 41.50 | Ti 2 + | 2 | 13.58 | 27.92 |
| Fe 3 + | 4 | 54.80 | Ti 3 + | 3 | 27.49 | 27.31 |
| Ni 3 + | 4 | 54.90 | Ti 3 + | 3 | 27.49 | 27.41 |
| Cu 3 + | 4 | 55.20 | Ti 3 + | 3 | 27.49 | 27.71 |
| Ti 3 + | 4 | 43.27 | Mn 2 + | 2 | 15.64 | 27.63 |
| Ti 3 + | 4 | 43.27 | Fe 2 + | 2 | 16.18 | 27.09 |
| Ti 3 + | 4 | 43.27 | Ge 2 + | 2 | 15.93 | 27.33 |
| Rb 4 + | 5 | 71.00 | Ti 4 + | 4 | 43.27 | 27.73 |
| Sr 4 + | 5 | 71.60 | Ti 4 + | 4 | 43.27 | 28.33 |
| Ti 3 + | 4 | 43.27 | Mo 2 + | 2 | 16.15 | 27.12 |
| Ti 3 + | 4 | 43.27 | Tc 2 + | 2 | 15.26 | 28.01 |
| Te 5 + | 6 | 70.70 | Ti 4 + | 4 | 43.27 | 27.43 |
| Ti 3 + | 4 | 43.27 | Hf 2 + | 2 | 14.90 | 28.37 |
| Ti 3 + | 4 | 43.27 | Pb 2 + | 2 | 15.03 | 28.23 |
| As 5 + | 6 | 127.60 | Ti 5 + | 5 | 99.22 | 28.38 |
| Ti 4 + | 5 | 99.22 | Rb 5 + | 5 | 71.00 | 28.22 |
| Ti 4 + | 5 | 99.22 | Sr 5 + | 5 | 71.60 | 27.62 |
| Mo 6 + | 7 | 126.80 | Ti 5 + | 5 | 99.22 | 27.58 |
| Ti 7 + | 8 | 168.50 | Ti 7 + | 7 | 140.80 | 27.70 |
| Ti 7 + | 8 | 168.50 | Ti 7 + | 7 | 140.80 | 27.70 |
| Mn 7 + | 8 | 196.46 | Ti 8 + | 8 | 168.50 | 27.96 |
| Ni 2 + | 3 | 35.17 | V 1 + | 1 | 6.74 | 28.43 |
| Ge 2 + | 3 | 34.22 | V 1 + | 1 | 6.74 | 27.48 |
| Zr 3 + | 4 | 34.34 | V 1 + | 1 | 6.74 | 27.60 |
| Ag 2 + | 3 | 34.83 | V 1 + | 1 | 6.74 | 28.09 |
| Hg 2 + | 3 | 34.20 | V 1 + | 1 | 6.74 | 27.46 |

| Atom Oxidized | n | nth Ionization Energy (ev) | Atom Reduced | n | nthIonization Energy (ev) | Energy Hole (ev) |
|---|---|---|---|---|---|---|
| Se 3 + | 4 | 42.94 | V 2 + | 2 | 14.65 | 28.29 |
| Eu 3 + | 4 | 42.60 | V 2 + | 2 | 14.65 | 27.95 |
| Ho 3 + | 4 | 42.50 | V 2 + | 2 | 14.65 | 27.85 |
| Er 3 + | 4 | 42.60 | V 2 + | 2 | 14.65 | 27.95 |
| Tm 3 + | 4 | 42.70 | V 2 + | 2 | 14.65 | 28.05 |
| Pb 3 + | 4 | 42.32 | V 2 + | 2 | 14.65 | 27.67 |
| Sr 3 + | 4 | 57.00 | V 3 + | 3 | 29.31 | 27.69 |
| Fe 4 + | 5 | 75.00 | V 4 + | 4 | 46.71 | 28.29 |
| V 3 + | 4 | 46.71 | As 2 + | 2 | 18.63 | 28.07 |
| V 3 + | 4 | 46.71 | Pd 2 + | 2 | 19.43 | 27.28 |
| V 3 + | 4 | 46.71 | In 2 + | 2 | 18.87 | 27.84 |
| V 3 + | 4 | 46.71 | Te2+ | 2 | 18.60 | 28.11 |
| V 3 + | 4 | 46.71 | I 2 + | 2 | 19.13 | 27.58 |
| V 3+ | 4 | 46.71 | La 3 + | 3 | 19.18 | 27.53 |
| V 3 + | 4 | 46.71 | Pt 2 + | 2 | 18.56 | 28.14 |
| V 3 + | 4 | 46.71 | Hg 2 + | 2 | 18.76 | 27.95 |
| V 4 + | 5 | 65.23 | Cu 3 + | 3 | 36.83 | 28.40 |
| Ge 4 + | 5 | 93.50 | V 5 + | 5 | 65.23 | 28.27 |
| V 4 + | 5 | 65.23 | Kr 3 +3 | 3 | 6.95 | 28.28 |
| Y 5 + | 6 | 93.00 | V 5+ | 5 | 65.23 | 27.77 |
| V 4 + | 5 | 65.23 | Cd 3 + | 3 | 37.48 | 27.75 |
| V 4 + | 5 | 65.23 | Te 4 + | 4 | 37.41 | 27.82 |
| V 4 + | 5 | 65.23 | Ce 4 + | 4 | 36.76 | 28.47 |
| Se 6 + | 7 | 155.40 | V 6 + | 6 | 128.12 | 27.28 |
| V 6 + | 7 | 150.17 | Sr 8 + | 8 | 122.30 | 27.87 |
| Ni 2 + | 3 | 35.17 | Cr 1 + | 1 | 6.77 | 28.40 |
| Ge 2 + | 3 | 34.22 | Cr 1 + | 1 | 6.77 | 27.45 |
| Zr 3 + | 4 | 34.34 | Cr 1 + | 1 | 6.77 | 27.57 |
| Ag 2 + | 3 | 34.83 | Cr 1 + | 1 | 6.77 | 28.06 |
| Hg 2 + | 3 | 34.20 | Cr 1 + | 1 | 6.77 | 27.43 |
| Sr 2 + | 3 | 43.60 | Cr 2 + | 2 | 16.50 | 27.10 |
| Sb 3 + | 4 | 44.20 | Cr 2 + | 2 | 16.50 | 27.70 |
| Gd 3 + | 4 | 44.00 | Cr 2 + | 2 | 16.50 | 27.50 |

| Atom Oxidized | n | nth Ionization Energy (ev) | Atom Reduced | n | nthIonization Energy (ev) | Energy Hole (ev) |
|---|---|---|---|---|---|---|
| Yb 3 + | 4 | 43.70 | Cr 2 + | 2 | 16.50 | 27.20 |
| Zn 3 + | 4 | 59.40 | Cr 3 + | 3 | 30.96 | 28.44 |
| Te 4 + | 5 | 58.75 | Cr 3 + | 3 | 30.96 | 27.79 |
| Cr 2 + | 3 | 30.96 | Cs 1 + | 1 | 3.89 | 27.07 |
| Cr 3 + | 4 | 49.10 | Se 2 + | 2 | 21.19 | 27.91 |
| Cr 3 + | 4 | 49.10 | Br 2 + | 2 | 21.80 | 27.30 |
| Y 4 + | 5 | 77.00 | Cr 4 + | 4 | 49.10 | 27.90 |
| Cr 3 + | 4 | 49.10 | Ag 2 + | 2 | 21.49 | 27.61 |
| Cr 3 + | 4 | 49.10 | Xe 2 + | 2 | 21.21 | 27.89 |
| Cr 3 + | 4 | 49.10 | Pr 3 + | 3 | 21.62 | 27.48 |
| Cr 3 + | 4 | 49.10 | Gd 3 + | 3 | 20.63 | 28.47 |
| Cr 3 + | 4 | 49.10 | Tb 3 + | 3 | 21.91 | 27.19 |
| Cr 3 + | 4 | 49.10 | Lu 3 + | 3 | 20.96 | 28.14 |
| Cr 4 + | 5 | 69.30 | Pm 4 + | 4 | 41.10 | 28.20 |
| Cr 4 + | 5 | 69.30 | Sm 4 + | 4 | 41.40 | 27.90 |
| Cr 4 + | 5 | 69.30 | Dy 4 + | 4 | 41.50 | 27.80 |
| Cr 6 + | 7 | 161.10 | Ni 7 + | 7 | 133.00 | 28.10 |
| Cr 6 + | 7 | 161.10 | Zn 7 + | 7 | 134.00 | 27.10 |
| Cr 7 + | 8 | 184.70 | Co 8 + | 8 | 157.00 | 27.70 |
| Ni 2 + | 3 | 35.17 | Mn 1 + | 1 | 7.43 | 27.73 |
| Ag 2 + | 3 | 34.83 | Mn 1 + | 1 | 7.43 | 27.40 |
| Se 3 + | 4 | 42.94 | Mn 2 + | 2 | 15.64 | 27.30 |
| Sr 2 + | 3 | 43.60 | Mn 2 + | 2 | 15.64 | 27.96 |
| Gd 3 + | 4 | 44.00 | Mn 2 + | 2 | 15.64 | 28.36 |
| Tm 3 + | 4 | 42.70 | Mn 2 + | 2 | 15.64 | 27.06 |
| Yb 3 + | 4 | 43.70 | Mn 2 + | 2 | 15.64 | 28.06 |
| Mn 2 + | 3 | 33.67 | Ga 1 + | 1 | 6.00 | 27.67 |
| Mn 2 + | 3 | 33.67 | Sr 1+ | 1 | 5.70 | 27.97 |
| Mn 2 + | 3 | 33.67 | Y 1 + | 1 | 6.38 | 27.29 |
| Y 3+ | 4 | 61.80 | Mn 3 + | 3 | 33.67 | 28.13 |
| Mo 4 + | 5 | 61.20 | Mn 3 + | 3 | 33.67 | 27.53 |
| Mn 2 + | 3 | 33.67 | In 1 + | 1 | 5.79 | 27.88 |
| Mn 2 + | 3 | 33.67 | Ba 1 + | 1 | 5.21 | 28.45 |

| Atom Oxidized | n | nth Ionization Energy (ev) | Atom Reduced | n | nthIonization Energy (ev) | Energy Hole (ev) |
|---|---|---|---|---|---|---|
| Mn 2 + | 3 | 33.67 | La 1 + | 1 | 5.58 | 28.09 |
| Mn 2 + | 3 | 33.67 | Ce 1 + | 1 | 5.47 | 28.20 |
| Mn 2 + | 3 | 33.67 | Pr 1 + | 1 | 5.42 | 28.24 |
| Mn 2 + | 3 | 33.67 | Nd 1 + | 1 | 5.49 | 28.18 |
| Mn 2 + | 3 | 33.67 | Pm 1 + | 1 | 5.55 | 28.11 |
| Mn 2 + | 3 | 33.67 | Sm 1 + | 1 | 5.63 | 28.04 |
| Mn 2 + | 3 | 33.67 | Eu 1 + | 1 | 5.67 | 28.00 |
| Mn 2 + | 3 | 33.67 | Gd 1 + | 1 | 6.14 | 27.53 |
| Mn 2 + | 3 | 33.67 | Tb 1 + | 1 | 5.85 | 27.82 |
| Mn 2 + | 3 | 33.67 | Dy 1 + | 1 | 5.93 | 27.74 |
| Mn 2 + | 3 | 33.67 | Ho 1 + | 1 | 6.02 | 27.65 |
| Mn 2 + | 3 | 33.67 | Er 1 + | 1 | 6.10 | 27.57 |
| Mn 2 + | 3 | 33.67 | Tm 1 + | 1 | 6.18 | 27.48 |
| Mn 2 + | 3 | 33.67 | Yb 1 + | 1 | 6.25 | 27.41 |
| Mn 2 + | 3 | 33.67 | Lu 1 + | 1 | 5.43 | 28.24 |
| Mn 2 + | 3 | 33.67 | Hf 1 + | 1 | 6.60 | 27.07 |
| Mn 2 + | 3 | 33.67 | Tl 1 + | 1 | 6.11 | 27.56 |
| Mn 2 + | 3 | 33.67 | Ra 1 + | 1 | 5.28 | 28.39 |
| Mn 2 + | 3 | 33.67 | Ac 1 + | 1 | 5.20 | 28.47 |
| Mn 2 + | 3 | 33.67 | Th 1 + | 1 | 6.10 | 27.57 |
| Mn 2 + | 3 | 33.67 | Pa 1 + | 1 | 5.90 | 27.77 |
| Mn 2 + | 3 | 33.67 | U 1 + | 1 | 6.05 | 27.62 |
| Mn 2 + | 3 | 33.67 | Np 1 + | 1 | 6.20 | 27.47 |
| Mn 2 + | 3 | 33.67 | Pu 1 + | 1 | 6.06 | 27.61 |
| Mn 2 + | 3 | 33.67 | Am 1 + | 1 | 5.99 | 27.68 |
| Mn 2 + | 3 | 33.67 | Cm 1 + | 1 | 6.02 | 27.65 |
| Mn 2 + | 3 | 33.67 | Bk 1 + | 1 | 6.23 | 27.44 |
| Mn 2 + | 3 | 33.67 | Cf 1 + | 1 | 6.30 | 27.37 |
| Mn 2 + | 3 | 33.67 | Es 1 + | 1 | 6.42 | 27.25 |
| Co 4 + | 5 | 79.50 | Mn 4 + | 4 | 51.20 | 28.30 |
| Kr 5 + | 6 | 78.50 | Mn 4 + | 4 | 51.20 | 27.30 |
| Mn 3 + | 4 | 51.20 | Zr 3 + | 3 | 22.99 | 28.21 |
| Mn3+ | 4 | 51.20 | Sm 3 + | 3 | 23.40 | 27.80 |

| Atom Oxidized | n | nth Ionization Energy (ev) | Atom Reduced | n | nthIonization Energy (ev) | Energy Hole (ev) |
|---|---|---|---|---|---|---|
| Mn 3 + | 4 | 51.20 | Dy 3 + | 3 | 22.80 | 28.40 |
| Mn 3 + | 4 | 51.20 | Ho 3 + | 3 | 22.84 | 28.36 |
| Mn 3 + | 4 | 51.20 | Er 3 + | 3 | 22.74 | 28.46 |
| Mn 3 + | 4 | 51.20 | Tm 3 + | 3 | 23.68 | 27.52 |
| Mn 3 + | 4 | 51.20 | Hf 3 + | 3 | 23.30 | 27.90 |
| Mn 4 + | 5 | 72.40 | Sb 4 + | 4 | 44.20 | 28.20 |
| Mn 4 + | 5 | 72.40 | Gd 4 + | 4 | 44.00 | 28.40 |
| Mn 4 + | 5 | 72.40 | Lu 4 + | 4 | 45.19 | 27.21 |
| Mn 4 + | 5 | 72.40 | Bi 4 + | 4 | 45.30 | 27.10 |
| Sr 7 + | 8 | 122.30 | Mn 6 + | 6 | 95.00 | 27.30 |
| Mn 6 + | 7 | 119.27 | Sr 6 + | 6 | 90.80 | 28.47 |
| Ni 2 + | 3 | 35.17 | Fe 1 + | 1 | 7.87 | 27.30 |
| Br 2 + | 3 | 36.00 | Fe 1 + | 1 | 7.87 | 28.13 |
| Sr 2 + | 3 | 43.60 | Fe 2 + | 2 | 16.18 | 27.42 |
| Sb 3 + | 4 | 44.20 | Fe 2 + | 2 | 16.18 | 28.02 |
| Gd 3 + | 4 | 44.00 | Fe 2 + | 2 | 16.18 | 27.82 |
| Yb 3 + | 4 | 43.70 | Fe 2 + | 2 | 16.18 | 27.52 |
| Te 4 + | 5 | 58.75 | Fe 3 + | 3 | 30.65 | 28.10 |
| Zn 4 + | 5 | 82.60 | Fe 4 + | 4 | 54.80 | 27.80 |
| Fe 3 + | 4 | 54.80 | Rb 2 + | 2 | 27.28 | 27.52 |
| Fe 3 + | 4 | 54.80 | Mo 3 + | 3 | 27.16 | 27.64 |
| Cu 5 + | 6 | 103.00 | Fe 5 + | 5 | 75.00 | 28.00 |
| Fe 4 + | 5 | 75.00 | Br 4 + | 4 | 47.30 | 27.70 |
| Br 6 + | 7 | 103.00 | Fe 5 + | 5 | 75.00 | 28.00 |
| Nb 5 + | 6 | 102.60 | Fe 5 + | 5 | 75.00 | 27.60 |
| Fe 5 + | 6 | 99.00 | Rb 5 + | 5 | 71.00 | 28.00 |
| Fe 5 + | 6 | 99.00 | Sr 5 + | 5 | 71.60 | 27.40 |
| Mo 6 + | 7 | 126.80 | Fe 6 + | 6 | 99.00 | 27.80 |
| Fe 5 + | 6 | 99.00 | Te 6 + | 6 | 70.70 | 28.30 |
| Mo 7 + | 8 | 153.00 | Fe 7 + | 7 | 125.00 | 28.00 |
| Ni 2 + | 3 | 35.17 | Co 1 + | 1 | 7.86 | 27.31 |
| Br 2 + | 3 | 36.00 | Co 1 + | 1 | 7.86 | 28.14 |
| Sb 3 + | 4 | 44.20 | Co 2 + | 2 | 17.06 | 27.14 |

(continued)

| Atom Oxidized | n | nth Ionization Energy (ev) | Atom Reduced | n | nthIonization Energy (ev) | Energy Hole (ev) |
|---|---|---|---|---|---|---|
| Lu 3 + | 4 | 45.19 | Co 2 + | 2 | 17.06 | 28.13 |
| Bi 3 + | 4 | 45.30 | Co 2 + | 2 | 17.06 | 28.24 |
| Co 2 + | 3 | 33.50 | Ga 1 + | 1 | 6.00 | 27.50 |
| Co 2 + | 3 | 33.50 | Sr 1 + | 1 | 5.70 | 27.81 |
| Co 2 + | 3 | 33.50 | Y 1 + | 1 | 6.38 | 27.12 |
| Y 3+ | 4 | 61.80 | Co 3 + | 3 | 33.50 | 28.30 |
| Mo 4 + | 5 | 61.20 | Co 3 + | 3 | 33.50 | 27.70 |
| Co 2 + | 3 | 33.50 | In 1 + | 1 | 5.79 | 27.71 |
| Co 2 + | 3 | 33.50 | Ba 1 + | 1 | 5.21 | 28.29 |
| Co 2 + | 3 | 33.50 | La 1+ | 1 | 5.58 | 27.92 |
| Co 2 + | 3 | 33.50 | Ce 1 + | 1 | 5.47 | 28.03 |
| Co 2 + | 3 | 33.50 | Pr 1 + | 1 | 5.42 | 28.08 |
| Co 2 + | 3 | 33.50 | Nd 1 + | 1 | 5.49 | 28.01 |
| Co 2 + | 3 | 33.50 | Pm 1 + | 1 | 5.55 | 27.95 |
| Co 2 + | 3 | 33.50 | Sm 1 + | 1 | 5.63 | 27.87 |
| Co 2 + | 3 | 33.50 | Eu 1 + | 1 | 5.67 | 27.83 |
| Co 2 + | 3 | 33.50 | Gd 1 + | 1 | 6.14 | 27.36 |
| Co 2 + | 3 | 33.50 | Tb 1 + | 1 | 5.85 | 27.65 |
| Co 2 + | 3 | 33.50 | Dy 1 + | 1 | 5.93 | 27.57 |
| Co 2 + | 3 | 33.50 | Ho 1 + | 1 | 6.02 | 27.48 |
| Co 2 + | 3 | 33.50 | Er 1 + | 1 | 6.10 | 27.40 |
| Co 2 + | 3 | 33.50 | Tm 1 + | 1 | 6.18 | 27.32 |
| Co 2 + | 3 | 33.50 | Yb 1 + | 1 | 6.25 | 27.25 |
| Co 2 + | 3 | 33.50 | Lu 1 + | 1 | 5.43 | 28.07 |
| Co 2 + | 3 | 33.50 | Tl 1 + | 1 | 6.11 | 27.39 |
| Co 2 + | 3 | 33.50 | Ra 1 + | 1 | 5.28 | 28.22 |
| Co 2 + | 3 | 33.50 | Ac 1 + | 1 | 5.20 | 28.30 |
| Co 2 + | 3 | 33.50 | Th 1 + | 1 | 6.10 | 27.40 |
| Co 2 + | 3 | 33.50 | Pa 1 + | 1 | 5.90 | 27.60 |
| Co 2 + | 3 | 33.50 | U 1 + | 1 | 6.05 | 27.45 |
| Co 2 + | 3 | 33.50 | Np 1 + | 1 | 6.20 | 27.30 |
| Co 2 + | 3 | 33.50 | Pu 1 + | 1 | 6.06 | 27.44 |
| Co 2 + | 3 | 33.50 | Am 1 + | 1 | 5.99 | 27.51 |

150

EP 1 684 311 A2

(continued)

| Atom Oxidized | n | nth Ionization Energy (ev) | Atom Reduced | n | nthIonization Energy (ev) | Energy Hole (ev) |
|---|---|---|---|---|---|---|
| Co 2 ± | 3 | 33.50 | Cm 1 + | 1 | 6.02 | 27.48 |
| Co 2 + | 3 | 33.50 | Bk 1 + | 1 | 6.23 | 27.27 |
| Co 2 + | 3 | 33.50 | Cf 1 + | 1 | 6.30 | 27.20 |
| Co 2 + | 3 | 33.50 | Es 1 + | 1 | 6.42 | 27.08 |
| Co 4 + | 5 | 79.50 | Co 4 + | 4 | 51.30 | 28.20 |
| Kr 5 + | 6 | 78.50 | Co 4 + | 4 | 51.30 | 27.20 |
| Co 3 + | 4 | 51.30 | Zr 3 + | 3 | 22.99 | 28.31 |
| Co 3 + | 4 | 51.30 | Sm 3 + | 3 | 23.40 | 27.90 |
| Co 3 + | 4 | 51.30 | Ho 3 + | 3 | 22.84 | 28.46 |
| Co 3 + | 4 | 51.30 | Tm 3 + | 3 | 23.68 | 27.62 |
| Co 3 + | 4 | 51.30 | Hf 3 + | 3 | 23.30 | 28.00 |
| Co 4 + | 5 | 79.50 | Co 4 + | 4 | 51.30 | 28.20 |
| Co 7 + | 8 | 157.00 | Co 7 + | 7 | 129.00 | 28.00 |
| Co 7 + | 8 | 157.00 | Co 7 + | 7 | 129.00 | 28.00 |
| Co 7 + | 8 | 157.00 | Y 8 + | 8 | 129.00 | 28.00 |
| Ni 2 + | 3 | 35.17 | Ni 1 + | 1 | 7.64 | 27.53 |
| Br 2 + | 3 | 36.00 | Ni 1 + | 1 | 7.64 | 28.36 |
| Ag 2 + | 3 | 34.83 | Ni 1 + | 1 | 7.64 | 27.20 |
| Ge 3 + | 4 | 45.71 | Ni 2 + | 2 | 18.17 | 27.54 |
| Mo 3 + | 4 | 46.40 | Ni 2 + | 2 | 18.17 | 28.23 |
| Lu 3 + | 4 | 45.19 | Ni 2+ | 2 | 18.17 | 27.02 |
| Bi 3 + | 4 | 45.30 | Ni 2 + | 2 | 18.17 | 27.13 |
| Ni 2 + | 3 | 35.17 | Ni 1 + | 1 | 7.64 | 27.53 |
| Ni 2 + | 3 | 35.17 | Cu 1 + | 1 | 7.73 | 27.44 |
| Ni 2 + | 3 | 35.17 | Ge 1 + | 1 | 7.90 | 27.27 |
| As 4 + | 5 | 63.63 | Ni 3 + | 3 | 35.17 | 28.46 |
| Ni 2 + | 3 | 35.17 | Zr 1 + | 1 | 6.84 | 28.33 |
| Ni 2 + | 3 | 35.17 | Nb 1 + | 1 | 6.88 | 28.29 |
| Ni 2 + | 3 | 35.17 | Mo 1 + | 1 | 7.10 | 28.07 |
| Ni 2 + | 3 | 35.17 | Tc 1 + | 1 | 7.28 | 27.89 |
| Ni 2 + | 3 | 35.17 | Ru 1 + | 1 | 7.37 | 27.80 |
| Ni 2 + | 3 | 35.17 | Rh 1 + | 1 | 7.46 | 27.71 |
| Ni 2 + | 3 | 35.17 | Ag 1 + | 1 | 7.58 | 27.59 |

| Atom Oxidized | n | nth Ionization Energy (ev) | Atom Reduced | n | nthIonization Energy (ev) | Energy Hole (ev) |
|---|---|---|---|---|---|---|
| Ni 2 + | 3 | 35.17 | Sn 1 + | 1 | 7.34 | 27.83 |
| Ni 2 + | 3 | 35.17 | Ta 1 + | 1 | 7.89 | 27.28 |
| Ni 2 + | 3 | 35.17 | W 1 + | 1 | 7.98 | 27.19 |
| Ni 2 + | 3 | 35.17 | Re 1 + | 1 | 7.88 | 27.29 |
| Ni 2 + | 3 | 35.17 | Pb 1 + | 1 | 7.42 | 27.75 |
| Ni 2 + | 3 | 35.17 | Bi 1 + | 1 | 7.29 | 27.88 |
| Zn 4 + | 5 | 82.60 | Ni 4 + | 4 | 54.90 | 27.70 |
| Ni 3 + | 4 | 54.90 | Rb 2 + | 2 | 27.28 | 27.62 |
| Ni 3 | 4 | 54.90 | Mo 3 + | 3 | 27.16 | 27.74 |
| Cu 5 + | 6 | 103.00 | Ni 5 + | 5 | 75.50 | 27.50 |
| Ni 4 + | 5 | 75.50 | Br 4 + | 4 | 47.30 | 28.20 |
| Br 6 + | 7 | 103.00 | Ni 5 + | 5 | 75.50 | 27.50 |
| Nb 5 + | 6 | 102.60 | Ni 5 + | 5 | 75.50 | 27.10 |
| Ni 5 + | 6 | 108.00 | Cu 5 + | 5 | 79.90 | 28.10 |
| Rb 7 + | 8 | 136.00 | Ni 6 + | 6 | 108.00 | 28.00 |
| Ni 7 + | 8 | 162.00 | Zn 7 + | 7 | 134.00 | 28.00 |
| Br 2 + | 3 | 36.00 | Cu 1 + | 1 | 7.73 | 28.27 |
| Ag 2 + | 3 | 34.83 | Cu 1 + | 1 | 7.73 | 27.10 |
| Br 3 + | 4 | 47.30 | Cu 2 + | 2 | 20.29 | 27.01 |
| Cu 2 + | 3 | 36.83 | Zn 1 + | 1 | 9.39 | 27.44 |
| Ga 3 + | 4 | 64.00 | Cu 3 + | 3 | 36.83 | 27.17 |
| Cu 2 + | 3 | 36.83 | As 1 + | 1 | 9.81 | 27.02 |
| Cu 2 + | 3 | 36.83 | Se 1 + | 1 | 9.75 | 27.08 |
| Kr 4 + | 5 | 64.70 | Cu 3 + | 3 | 36.83 | 27.87 |
| Cu 2 + | 3 | 36.83 | Pd 1 + | 1 | 8.34 | 28.49 |
| Cu 2 + | 3 | 36.83 | Cd 1 + | 1 | 8.99 | 27.84 |
| Cu 2 + | 3 | 36.83 | Sb I + | 1 | 8.64 | 28.19 |
| Cu 2 + | 3 | 36.83 | Te 1 + | 1 | 9.01 | 27.82 |
| Cu 2 + | 3 | 36.83 | Os 1 + | 1 | 8.70 | 28.13 |
| Cu 2 + | 3 | 36.83 | Ir 1 + | 1 | 9.10 | 27.73 |
| Cu 2 + | 3 | 36.83 | Pt 1 + | 1 | 9.00 | 27.83 |
| Cu 2 + | 3 | 36.83 | Au 1 + | 1 | 9.23 | 27.61 |
| Cu 2 + | 3 | 36.83 | Po 1 + | 1 | 8.42 | 28.41 |

| Atom Oxidized | n | nth Ionization Energy (ev) | Atom Reduced | n | nthIonization Energy (ev) | Energy Hole (ev) |
|---|---|---|---|---|---|---|
| Zn 4 + | 5 | 82.60 | Cu 4 + | 4 | 55.20 | 27.40 |
| Cu 3 + | 4 | 55.20 | Rb 2 + | 2 | 27.28 | 27.92 |
| Cu 3 + | 4 | 55.20 | Mo 3 + | 3 | 27.16 | 28.04 |
| Cu 3 + | 4 | 55.20 | In 3 + | 3 | 28.03 | 27.17 |
| Cu 3 + | 4 | 55.20 | Te 3 + | 3 | 27.96 | 27.24 |
| Zn 5 + | 6 | 108.00 | Cu 5 + | 5 | 79.90 | 28.10 |
| Cu 4 + | 5 | 79.90 | Kr 4 + | 4 | 52.50 | 27.40 |
| Cu 4 + | 5 | 79.90 | Rb 4 + | 4 | 52.60 | 27.30 |
| Sb 5 + | 6 | 108.00 | Cu 5 + | 5 | 79.90 | 28.10 |
| Cu 6 + | 7 | 139.00 | Kr 7 + | 7 | 111.00 | 28.00 |
| Kr 2 + | 3 | 36.95 | Zn 1 + | 1 | 9.39 | 27.56 |
| Cd 2 + | 3 | 37.48 | Zn I + | 1 | 9.39 | 28.09 |
| Te 3 + | 4 | 37.41 | Zn 1 + | 1 | 9.39 | 28.02 |
| Ce3+ | 4 | 36.76 | Zn 1 + | 1 | 9.39 | 27.36 |
| Ge 3 + | 4 | 45.71 | Zn 2 + | 2 | 17.96 | 27.75 |
| Mo 3 + | 4 | 46.40 | Zn 2 + | 2 | 17.96 | 28.44 |
| Lu 3 + | 4 | 45.19 | Zn 2 + | 2 | 17.96 | 27.23 |
| Bi 3 + | 4 | 45.30 | Zn 2 + | 2 | 17.96 | 27.34 |
| Zn 2 + | 3 | 39.72 | Br 1 + | 1 | 11.81 | 27.91 |
| Zn 2 + | 3 | 39.72 | Y 2 + | 2 | 12.24 | 27.48 |
| Mo 5 + | 6 | 68.00 | Zn 3 + | 3 | 39.72 | 28.28 |
| Zn 2 + | 3 | 39.72 | Xe 1 + | 1 | 12.13 | 27.59 |
| Zn 2 + | 3 | 39.72 | Eu 2 + | 2 | 11.24 | 28.48 |
| Zn 2 + | 3 | 39.72 | Gd 2 + | 2 | 12.09 | 27.63 |
| Zn 2 + | 3 | 39.72 | Tb 2 + | 2 | 11.52 | 28.20 |
| Zn 2 + | 3 | 39.72 | Dy 2 + | 2 | 11.67 | 28.05 |
| Zn 2 + | 3 | 39.72 | Ho 2 + | 2 | 11.80 | 27.92 |
| Zn 2 + | 3 | 39.72 | Er 2 + | 2 | 11.93 | 27.79 |
| Zn 2 + | 3 | 39.72 | Tm 2 + | 2 | 12.05 | 27.67 |
| Zn 2 + | 3 | 39.72 | Yb 2 + | 2 | 12.18 | 27.54 |
| Zn 3 + | 4 | 59.40 | Rh 3 + | 3 | 31.06 | 28.34 |
| Zn 3 + | 4 | 59.40 | Xe 3 + | 3 | 32.10 | 27.30 |
| Zn 3 + | 4 | 59.40 | Pb 3 + | 3 | 31.94 | 27.46 |

EP 1 684 311 A2

(continued)

| Atom Oxidized | n | nth Ionization Energy (ev) | Atom Reduced | n | nthIonization Energy (ev) | Energy Hole (ev) |
|---|---|---|---|---|---|---|
| Kr 6 + | 7 | 111.00 | Zn 5 + | 5 | 82.60 | 28.40 |
| Rb 7 + | 8 | 136.00 | Zn 6 + | 6 | 108.00 | 28.00 |
| Zn 6 + | 7 | 134.00 | Sr 7 + | 7 | 106.00 | 28.00 |
| Ge 2 + | 3 | 34.22 | Ga 1 + | 1 | 6.00 | 28.00 |
| Zr 3 + | 4 | 34.34 | Ga 1 + | 1 | 6.00 | 28.34 |
| I 2 + | 3 | 33.00 | Ga 1 + | 1 | 6.00 | 27.00 |
| Hf 3 + | 4 | 33.33 | Ga 1 + | 1 | 6.00 | 27.33 |
| Hg 2 + | 3 | 34.20 | Ga 1 + | 1 | 6.00 | 28.20 |
| Te 4 + | 5 | 58.75 | Ga 3 + | 3 | 30.71 | 28.04 |
| Ga 3 + | 4 | 64.00 | Br 3 + | 3 | 36.00 | 28.00 |
| Ga 3 + | 4 | 64.00 | Kr 3 + | 3 | 36.95 | 27.05 |
| Ga 3 + | 4 | 64.00 | Ce 4 + | 4 | 36.76 | 27.24 |
| Br 2 + | 3 | 36.00 | Ge 1 + | 1 | 7.90 | 28.10 |
| Se 3 + | 4 | 42.94 | Ge 2 + | 2 | 15.93 | 27.01 |
| Sr 2 + | 3 | 43.60 | Ge 2 + | 2 | 15.93 | 27.67 |
| Sb 3 + | 4 | 44.20 | Ge 2 + | 2 | 15.93 | 28.27 |
| Gd 3 + | 4 | 44.00 | Ge 2 + | 2 | 15.93 | 28.07 |
| Yb 3 + | 4 | 43.70 | Ge 2 + | 2 | 15.93 | 27.77 |
| Ge 2 + | 3 | 34.22 | Y 1 + | 1 | 6.38 | 27.84 |
| Y 3 + | 4 | 61.80 | Ge 3 + | 3 | 34.22 | 27.58 |
| Ge 2 + | 3 | 34.22 | Zr 1 + | 1 | 6.84 | 27.38 |
| Ge 2 + | 3 | 34.22 | Nb 1 + | 1 | 6.88 | 27.34 |
| Ge 2 + | 3 | 34.22 | Mo 1 + | 1 | 7.10 | 27.12 |
| Ge 2 + | 3 | 34.22 | In 1 + | 1 | 5.79 | 28.43 |
| Ge 2 + | 3 | 34.22 | Gd1 : + | 1 | 6.14 | 28.08 |
| Ge 2 + | 3 | 34.22. | Tb 1 + | 1 | 5.85 | 28.37 |
| Ge 2 + | 3 | 34.22 | Dy 1 + | 1 | 5.93 | 28.29 |
| Ge 2 + | 3 | 34.22 | Ho 1 + | 1 | 6.02 | 28.20 |
| Ge 2 + | 3 | 34.22 | Er 1 + | 1 | 6.10 | 28.12 |
| Ge 2 + | 3 | 34.22 | Tm 1 + | 1 | 6.18 | 28.04 |
| Ge 2 + | 3 | 34.22 | Yb 1 + | 1 | 6.25 | 27.97 |
| Ge 2 + | 3 | 34.22 | Hf 1 + | 1 | 6.60 | 27.62 |
| Ge 2 + | 3 | 34.22 | Tl 1 + | 1 | 6.11 | 28.11 |

(continued)

| Atom Oxidized | n | nth Ionization Energy (ev) | Atom Reduced | n | nthIonization Energy (ev) | Energy Hole (ev) |
|---|---|---|---|---|---|---|
| Ge 2 + | 3 | 34.22 | Th 1 + | 1 | 6.10 | 28.12 |
| Ge 2 + | 3 | 34.22 | Pa 1 + | 1 | 5.90 | 28.32 |
| Ge 2 + | 3 | 34.22 | U 1 + | 1 | 6.05 | 28.17 |
| Ge 2 + | 3 | 34.22 | Np 1 + | 1 | 6.20 | 28.02 |
| Ge 2 + | 3 | 34.22 | Pu 1 + | 1 | 6.06 | 28.16 |
| Ge 2 + | 3 | 34.22 | Am 1 + | 1 | 5.99 | 28.23 |
| Ge 2 + | 3 | 34.22 | Cm 1 + | 1 | 6.02 | 28.20 |
| Ge 2 + | 3 | 34.22 | Bk 1 + | 1 | 6.23 | 27.99 |
| Ge 2 + | 3 | 34.22 | Cf 1 + | 1 | 6.30 | 27.92 |
| Ge 2 + | 3 | 34.22 | Es 1 + | 1 | 6.42 | 27.80 |
| Ge 3 + | 4 | 45.71 | As 2 + | 2 | 18.63 | 27.08 |
| Ge 3 + | 4 | 45.71 | Rh 2 + | 2 | 18.08 | 27.63 |
| Ge 3 + | 4 | 45.71 | Te 2 + | 2 | 18.60 | 27.11 |
| Ge 3 + | 4 | 45.71 | Pt 2 + | 2 | 18.56 | 27.15 |
| Kr 2 + | 3 | 36.95 | As 1 + | 1 | 9.81 | 27.14 |
| Nb 3 + | 4 | 38.30 | As 1 + | 1 | 9.81 | 28.49 |
| Cd 2 + | 3 | 37.48 | As 1 + | 1 | 9.81 | 27.67 |
| Te 3 + | 4 | 37.41 | As 1 + | 1 | 9.81 | 27.60 |
| Mo 3 + | 4 | 46.40 | As 2 + | 2 | 18.63 | 27.77 |
| Sb 4 + | 5 | 56.00 | As 3 + | 3 | 28.35 | 27.65 |
| Bi 4 + | 5 | 56.00 | As 3 + | 3 | 28.35 | 27.65 |
| As 3 + | 4 | 50.13 | Br 2 + | 2 | 21.80 | 28.33 |
| Kr 5 + | 6 | 78.50 | As 4 + | 4 | 50.13 | 28.37 |
| As 3 + | 4 | 50.13 | Zr 3 + | 3 | 22.99 | 27.14 |
| As 3 + | 4 | 50.13 | Nd 3 + | 3 | 22.10 | 28.03 |
| As 3 + | 4 | 50.13 | Pm 3 + | 3 | 22.30 | 27.83 |
| As 3 + | 4 | 50.13 | Tb 3+ | 3 | 21.91 | 28.22 |
| As 3 + | 4 | 50.13 | Dy 3 + | 3 | 22.80 | 27.33 |
| As 3 + | 4 | 50.13 | Ho 3 + | 3 | 22.84 | 27.29 |
| As 3 + | 4 | 50.13 | Er 3 + | 3 | 22.74 | 27.39 |
| As 4 + | 5 | 63.63 | Br 3 + | 3 | 36.00 | 27.63 |
| Sr 5 + | 6 | 90.80 | As 5 + | 5 | 63.63 | 27.17 |
| Se 6 + | 7 | 155.40 | As 6 + | 6 | 127.60 | 27.80 |

(continued)

| Atom Oxidized | n | nth Ionization Energy (ev) | Atom Reduced | n | nthIonization Energy (ev) | Energy Hole (ev) |
|---|---|---|---|---|---|---|
| As 5 + | 6 | 127.60 | Rb 7 + | 7 | 99.20 | 28.40 |
| Kr 2 + | 3 | 36.95 | Se 1 + | 1 | 9.75 | 27.20 |
| Cd 2 + | 3 | 37.48 | Se 1 + | 1 | 9.75 | 27.73 |
| Te 3 + | 4 | 37.41 | Se 1 + | 1 | 9.75 | 27.66 |
| Ce 3 + | 4 | 36.76 | Se 1 + | 1 | 9.75 | 27.01 |
| Te 4 + | 5 | 58.75 | Se 3 + | 3 | 30.82 | 27.93 |
| Rb 4 + | 5 | 71.00 | Se 4 + | 4 | 42.94 | 28.06 |
| Se 3 + | 4 | 42.94 | Tc 2 + | 2 | 15.26 | 27.68 |
| Se 3 + | 4 | 42.94 | Sn 2 + | 2 | 14.63 | 28.31 |
| Te 5 + | 6 | 70.70 | Se 4 + | 4 | 42.94 | 27.76 |
| Se 3 + | 4 | 42.94 | Hf 2 + | 2 | 14.90 | 28.04 |
| Se 3 + | 4. | 42.94 | Pb 2 + | 2 | 15.03 | 27.91 |
| Se 4 + | 5 | 68.30 | Rb 3 + | 3 | 40.00 | 28.30 |
| Se 4 + | 5 | 68.30 | Sn 4 + | 4 | 40.73 | 27.57 |
| Se 4 + | 5 | 68.30 | Nd 4 + | 4 | 40.41 | 27.89 |
| Se 4 + | 5 | 68.30 | Pm 4 + | 4 | 41.10 | 27.20 |
| Se 5 + | 6 | 81.70 | In 4 + | 4 | 54.00 | 27.70 |
| Rb 2 + | 3 | 40.00 | Br 1 + | 1 | 11.81 | 28.19 |
| Pr 3 + | 4 | 38.98 | Br 1 + | 1 | 11.81 | 27.17 |
| Tb 3 + | 4 | 39.80 | Br 1 + | 1 | 11.81 | 27.99 |
| La 3 + | 4 | 49.95 | Br 2 + | 2 | 21.80 | 28.15 |
| Br 2 + | 3 | 36.00 | Pd 1 + | 1 | 8.34 | 27.66 |
| Br 2 + | 3 | 36.00 | Ag 1 + | 1 | 7.58 | 28.42 |
| Br 2 + | 3 | 36.00 | Cd 1 + | 1 | 8.99 | 27.01 |
| Br 2 + | 3 | 36.00 | Sb 1 + | 1 | 8.64 | 27.36 |
| Br 2 + | 3 | 36.00 | Ta 1 + | 1 | 7.89 | 28.11 |
| Br 2 + | 3 | 36.00 | W 1 + | 1 | 7.98 | 28.02 |
| Br 2 + | 3 | 36.00 | Re 1 + | 1 | 7.88 | 28.12 |
| Br 2 + | 3 | 36.00 | Os 1 + | 1 | 8.70 | 27.30 |
| Br 2 + | 3 | 36.00 | Po 1 + | 1 | 8.42 | 27.58 |
| Br 3 + | 4 | 47.30 | Rd 2 + | 2 | 19.43 | 27.87 |
| Br 3 + | 4 | 47.30 | In 2 + | 2 | 18.87 | 28.43 |
| Br 3 + | 4 | 47.30 | I 2 + | 2 | 19.13 | 28.17 |

| Atom Oxidized | n | nth Ionization Energy (ev) | Atom Reduced | n | nthIonization Energy (ev) | Energy Hole (ev) |
|---|---|---|---|---|---|---|
| Br 3 + | 4 | 47.30 | La 3 + | 3 | 19.18 | 28.12 |
| Br 3 + | 4 | 47.30 | Ce 3 + | 3 | 20.20 | 27.10 |
| Br 4 + | 5 | 59.70 | Xe 3 + | 3 | 32.10 | 27.60 |
| Br 4 + | 5 | 59.70 | Pb 3 + | 3 | 31.94 | 27.76 |
| Y 6 + | 7 | 116.00 | Br 6 + | 6 | 88.60 | 27.40 |
| Br 5 + | 6 | 88.60 | Mo 5 + | 5 | 61.20 | 27.40 |
| Pm 3 + | 4 | 41.10 | Kr 1 + | 1 | 14.00 | 27.10 |
| Sm 3 + | 4 | 41.40 | Kr 1 + | 1 | 14.00 | 27.40 |
| Dy 3 + | 4 | 41.50 | Kr 1 + | 1 | 14.00 | 27.50 |
| Pb 3 + | 4 | 42.32 | Kr 1 + | 1 | 14.00 | 28.32 |
| Kr 3 + | 4 | 52.50 | Kr 2 + | 2 | 24.36 | 28.14 |
| Rb 3 + | 4 | 52.60 | Kr 2 + | 2 | 24.36 | 28.24 |
| Kr 4 + | 5 | 64.70 | Kr 3 + | 3 | 36.95 | 27.75 |
| Kr 2 + | 3 | 36.95 | Cd 1 + | 1 | 8.99 | 27.96 |
| Kr 2 + | 3 | 36.95 | Sb 1 + | 1 | 8.64 | 28.31 |
| Kr 2 + | 3 | 36.95 | Te 1 + | 1 | 9.01 | 27.94 |
| Kr 2 + | 3 | 36.95 | Os 1 + | 1 | 8.70 | 28.25 |
| Kr 2 + | 3 | 36.95 | Ir 1 + | 1 | 9.10 | 27.85 |
| Kr 2 + | 3 | 36.95 | Pt 1 + | 1 | 9.00 | 27.95 |
| Kr 2 + | 3 | 36.95 | Au 1 + | 1 | 9.23 | 27.73 |
| Kr 3 + | 4 | 52.50 | Kr 2 + | 2 | 24.36 | 28.14 |
| Kr 3 + | 4 | 52.50 | Nb 3 + | 3 | 25.04 | 27.46 |
| Kr 3 + | 4 | 52.50 | Sb 3 + | 3 | 25.30 | 27.20 |
| Kr 3 + | 4 | 52.50 | Cs 2 + | 2 | 25.10 | 27.40 |
| Kr 3 + | 4 | 52.50 | Eu 3 + | 3 | 24.90 | 27.60 |
| Kr 3 + | 4 | 52.50 | Yb 3 + | 3 | 25.03 | 27.47 |
| Kr 4 + | 5 | 64.70 | Kr 3 + | 3 | 36.95 | 27.75 |
| Y 5 + | 6 | 93.00 | Kr 5 + | 5 | 64.70 | 28.30 |
| Kr 4 + | 5 | 64.70 | Cd 3 + | 3 | 37.48 | 27.22 |
| Kr 4 + | 5 | 64.70 | Te 4 + | 4 | 37.41 | 27.29 |
| Kr 4 + | 5 | 64.70 | Ce 4 + | 4 | 36.76 | 27.94 |
| Sr 6 + | 7 | 106.00 | Kr 6 + | 6 | 78.50 | 27.50 |
| Kr 5 + | 6 | 78.50 | Nb 5 + | 5 | 50.55 | 27.95 |

| Atom Oxidized | n | nth Ionization Energy (ev) | Atom Reduced | n | nthIonization Energy (ev) | Energy Hole (ev) |
|---|---|---|---|---|---|---|
| Xe 2 + | 3 | 32.10 | Rb 1 + | 1 | 4.18 | 27.92 |
| Pb2 + | 3 | 31.94 | Rb 1 + | 1 | 4.18 | 27.76 |
| Rb 2 + | 3 | 40.00 | Y 2 + | 2 | 12.24 | 27.76 |
| Mo 5 + | 6 | 68.00 | Rb 3 + | 3 | 40.00 | 28.00 |
| Rb 2 + | 3 | 40.00 | Xe 1 + | 1 | 12.13 | 27.87 |
| Rb 2 + | 3 | 40.00 | Gd 2 + | 2 | 12.09 | 27.91 |
| Rb 2 + | 3 | 40.00 | Tb 2 + | 2 | 11.52 | 28.48 |
| Rb 2 + | 3 | 40.00 | Dy 2 + | 2 | 11.67 | 28.33 |
| Rb 2 + | 3 | 40.00 | Ho 2 + | 2 | 11.80 | 28.20 |
| Rb 2 + | 3 | 40.00 | Er 2 + | 2 | 11.93 | 28.07 |
| Rb 2 + | 3 | 40.00 | Tm 2 + | 2 | 12.05 | 27.95 |
| Rb 2 + | 3 | 40.00 | Yb 2 + | 2 | 12.18 | 27.82 |
| Rb 3 + | 4 | 52.60 | Nb 3 + | 3 | 25.04 | 27.56 |
| Rb 3 + | 4 | 52.60 | Sb 3 + | 3 | 25.30 | 27.30 |
| Rb 3 + | 4 | 52.60 | Cs 2 + | 2 | 25.10 | 27.50 |
| Rb 3 + | 4 | 52.60 | Eu 3 + | 3 | 24.90 | 27.70 |
| Rb 3 + | 4 | 52.60 | Yb 3 + | 3 | 25.03 | 27.57 |
| Rb 3 + | 4 | 52.60 | Bi 3 + | 3 | 25.56 | 27.04 |
| Rb 6 + | 7 | 99.20 | Rb 5 + | 5 | 71.00 | 28.20 |
| Rb 4 + | 5 | 71.00 | Sr 3 + | 3 | 43.60 | 27.40 |
| Rb 4 + | 5 | 71.00 | Eu 4 + | 4 | 42.60 | 28.40 |
| Rb 4 + | 5 | 71.00 | Er 4 + | 4 | 42.60 | 28.40 |
| Rb 4 + | 5 | 71.00 | Tm 4 + | 4 | 42.70 | 28.30 |
| Rb 4 + | 5 | 71.00 | Yb 4 + | 4 | 43.70 | 27.30 |
| Rb 5 + | 6 | 84.40 | Sr 4 + | 4 | 57.00 | 27.40 |
| Rb 5 + | 6 | 84.40 | Sb 5 + | 5 | 56.00 | 28.40 |
| Rb 5 + | 6 | 84.40 | Bi 5 + | 5 | 56.00 | 28.40 |
| Rb 6 + | 7 | 99.20 | Rb 5 + | 5 | 71.00 | 28.20 |
| Rb 6 + | 7 | 99.20 | Sr 5 + | 5 | 71.60 | 27.60 |
| Mo 6 + | 7 | 126.80 | Rb 7 + | 7 | 99.20 | 27.60 |
| Rb 7 + | 8 | 136.00 | Sb 6 + | 6 | 108.00 | 28.00 |
| Pd 2 + | 3 | 32.93 | Sr 1 + | 1 | 5.70 | 27.24 |
| I 2 + | 3 | 33.00 | Sr 1 + | 1 | 5.70 | 27.31 |

(continued)

| Atom Oxidized | n | nth Ionization Energy (ev) | Atom Reduced | n | nthIonization Energy (ev) | Energy Hole (ev) |
|---|---|---|---|---|---|---|
| Hf 3 + | 4 | 33.33 | Sr 1 + | 1 | 5.70 | 27.64 |
| Nb 3 + | 4 | 38.30 | Sr 2 + | 2 | 11.03 | 27.27 |
| Pr 3 + | 4 | 38.98 | Sr 2 + | 2 | 11.03 | 27.95 |
| Sr 4 + | 5 | 71.60 | Sr 3 + | 3 | 43.60 | 28.00 |
| Sr 2 + | 3 | 43.60 | Mo 2 + | 2 | 16.15 | 27.45 |
| Sr 2 + | 3 | 43.60 | Tc 2 + | 2 | 15.26 | 28.34 |
| Sr 2 + | 3 | 43.60 | Sb 2 + | 2 | 16.53 | 27.07 |
| Te 5 + | 6 | 70.70 | Sr 3 + | 3 | 43.60 | 27.10 |
| Sr 3 + | 4 | 57.00 | Tc 3 + | 3 | 29.54 | 27.46 |
| Sr 3 + | 4 | 57.00 | Tl 3 + | 3 | 29.83 | 27.17 |
| Sr 4 + | 5 | 71.60 | Sr 3 + | 3 | 43.60 | 28.00 |
| Sr 4 + | 5 | 71.60 | Sb 4 + | 4 | 44.20 | 27.40 |
| Sr 4 + | 5 | 71.60 | Gd 4 + | 4 | 44.00 | 27.60 |
| Sr 4 + | 5 | 71.60 | Yb 4 + | 4 | 43.70 | 27.90 |
| Zr 3 + | 4 | 34.34 | Y 1 + | 1 | 6.38 | 27.96 |
| Ag2+ | 3 | 34.83 | Y 1 + | 1 | 6.38 | 28.45 |
| Hg 2 + | 3 | 34.20 | Y 1 + | 1 | 6.38 | 27.82 |
| Sn 3 + | 4 | 40.73 | Y 2 + | 2 | 12.24 | 28.49 |
| Nd 3 + | 4 | 40.41 | Y 2 + | 2 | 12.24 | 28.17 |
| Tb 3 + | 4 | 39.80 | Y 2 + | 2 | 12.24 | 27.56 |
| Y 3 + | 4 | 61.80 | Zr 4 + | 4 | 34.34 | 27.46 |
| Y 3 + | 4 | 61.80 | Hf 4 + | 4 | 33.33 | 28.47 |
| Y 3 + | 4 | 61.80 | Hg 3 + | 3 | 34.20 | 27.60 |
| Y 4 + | 5 | 77.00 | La 4 + | 4 | 49.95 | 27.05 |
| Y 6 + | 7 | 116.00 | Bi 6 + | 6 | 88.30 | 27.70 |
| Zr 3 + | 4 | 34.34 | Zr 1 + | 1 | 6.84 | 27.50 |
| Ag 2 + | 3 | 34.83 | Zr 1 + | 1 | 6.84 | 27.99 |
| Hg 2 + | 3 | 34.20 | Zr 1 + | 1 | 6.84 | 27.36 |
| Sn 3 + | 4 | 40.73 | Zr 2 + | 2 | 13.13 | 27.60 |
| Nd 3 + | 4 | 40.41 | Zr 2 + | 2 | 13.13 | 27.28 |
| Pm 3 + | 4 | 41.10 | Zr 2 + | 2 | 13.13 | 27.97 |
| Sm 3 + | 4 | 41.40 | Zr 2 + | 2 | 13.13 | 28.27 |
| Dy 3 + | 4 | 41.50 | Zr 2 + | 2 | 13.13 | 28.37 |

| Atom Oxidized | n | nth Ionization Energy (ev) | Atom Reduced | n | nthIonization Energy (ev) | Energy Hole (ev) |
|---|---|---|---|---|---|---|
| Nb 4 + | 5 | 50.55 | Zr 3 + | 3 | 22.99 | 27.56 |
| Zr 3 + | 4 | 34.34 | Zr 1 + | 1 | 6.84 | 27.50 |
| Zr 3 + | 4 | 34.34 | Nb 1 + | 1 | 6.88 | 27.46 |
| Zr 3 + | 4 | 34.34 | Mo 1 + | 1 | 7.10 | 27.24 |
| Zr 3 + | 4 | 34.34. | Tc 1 + | 1 | 7.28 | 27.06 |
| Zr 3 + | 4 | 34.34 | Gd 1 + | 1 | 6.14 | 28.20 |
| Zr 3 + | 4 | 34.34 | Tb 1 + | 1 | 5.85 | 28.49 |
| Zr 3 + | 4 | 34.34 | Dy 1 + | 1 | 5.93 | 28.41 |
| Zr 3 + | 4 | 34.34 | Ho 1 + | 1 | 6.02 | 28.32 |
| Zr 3 + | 4 | 34.34 | Er 1 + | 1 | 6.10 | 28.24 |
| Zr 3 + | 4 | 34.34 | Tm 1 + | 1 | 6.18 | 28.16 |
| Zr 3 + | 4 | 34.34 | Yb 1 + | 1 | 6.25 | 28.09 |
| Zr 3 + | 4 | 34.34 | Hf 1 + | 1 | 6.60 | 27.74 |
| Zr 3 + | 4 | 34.34 | Tl 1 + | 1 | 6.11 | 28.23 |
| Zr 3 + | 4 | 34.34 | Bi 1 + | 1 | 7.29 | 27.05 |
| Zr 3 + | 4 | 34.34 | Th 1 + | 1 | 6.10 | 28.24 |
| Zr 3 + | 4 | 34.34 | Pa 1 + | 1 | 5.90 | 28.44 |
| Zr 3 + | 4 | 34.34 | U 1 + | 1 | 6.05 | 28.29 |
| Zr 3 + | 4 | 34.34 | Np 1 + | 1 | 6.20 | 28.14 |
| Zr 3 + | 4 | 34.34 | Pu 1 + | 1 | 6.06 | 28.28 |
| Zr 3 + | 4 | 34.34 | Am 1 + | 1 | 5.99 | 28.35 |
| Zr3 + | 4 | 34.34 | Cm 1 + | 1 | 6.02 | 28.32 |
| Zr 3 + | 4 | 34.34 | Bk 1 + | 1 | 6.23 | 28.11 |
| Zr 3 + | 4 | 34.34 | Cf 1 + + | 1 | 6.30 | 28.04 |
| Zr 3 + | 4 | 34.34 | Es 1 + | 1 | 6.42 | 27.92 |
| Zr 4 + | 5 | 81.50 | In 4 + | 4 | 54.00 | 27.50 |
| Ag 2 + | 3 | 34.83 | Nb 1 + | 1 | 6.88 | 27.95 |
| Hg 2 + | 3 | 34.20 | Nb 1 + | 1 | 6.88 | 27.32 |
| Sm 3 + | 4 | 41.40 | Nb 2 + | 2 | 14.32 | 27.08 |
| Eu 3 + | 4 | 42.60 | Nb 2 + | 2 | 14.32 | 28.28 |
| Dy 3 + | 4 | 41.50 | Nb 2 + | 2 | 14.32 | 27.18 |
| Ho 3 + | 4 | 42.50 | Nb 2 + | 2 | 14.32 | 28.18 |
| Er 3 + | 4 | 42.60 | Nb 2 + | 2 | 14.32 | 28.28 |

(continued)

| Atom Oxidized | n | nth Ionization Energy (ev) | Atom Reduced | n | nthIonization Energy (ev) | Energy Hole (ev) |
|---|---|---|---|---|---|---|
| Tm 3 + | 4 | 42.70 | Nb 2 + | 2 | 14.32 | 28.38 |
| Pb 3 + | 4 | 42.32 | Nb 2 + | 2 | 14.32 | 28.00 |
| Nb 3 + | 4 | 38.30 | I 1 + | 1 | 10.45 | 27.85 |
| Nb 3 + | 4 | 38.30 | Ba 2 + | 2 | 10.00 | 28.30 |
| Nb 3 + | 4 | 38.30 | La 2 + | 2 | 11.06 | 27.24 |
| Nb 3 + | 4 | 38.30 | Ce 2 + | 2 | 10.85 | 27.45 |
| Nb 3 + | 4 | 38.30 | Pr 2 + | 2 | 10.55 | 27.75 |
| Nb 3 + | 4 | 38.30 | Nd 2 + | 2 | 10.73 | 27.57 |
| Nb 3 + | 4 | 38.30 | Pm 2 + | 2 | 10.90 | 27.40 |
| Nb 3 + | 4 | 38.30 | Sm 2 + | 2 | 11.07 | 27.23 |
| Nb 3 + | 4 | 38.30 | Eu 2 + | 2 | 11.24 | 27.06 |
| Nb 3 + | 4 | 38.30 | Hg 1 + | 1 | 10.44 | 27.86 |
| Nb 3 + | 4 | 38.30 | Rn 1 + | 1 | 10.75 | 27.55 |
| Nb 3 + | 4 | 38.30 | Ra 2 + | 2 | 10.15 | 28.15 |
| Nb 4 + | 5 | 50.55 | Nd 3 + | 3 | 22.10 | 28.45 |
| Nb 4 + | 5 | 50.55 | Pm 3 + | 3 | 22.30 | 28.25 |
| Nb 4 + | 5 | 50.55 | Sm 3 + | 3 | 23.40 | 27.15 |
| Nb 4 + | 5 | 50.55 | Dy 3 + | 3 | 22.80 | 27.75 |
| Nb 4 + | 5 | 50.55 | Ho 3 + | 3 | 22.84 | 27.71 |
| Nb 4 + | 5 | 50.55 | Er 3 + | 3 | 22.74 | 27.81 |
| Nb 4 + | 5 | 50.55 | Hf 3 + | 3 | 23.30 | 27.25 |
| Mo 7 + | 8 | 153.00 | Nb 7 + | 7 | 125.00 | 28.00 |
| Ag 2 + | 3 | 34.83 | Mo 1 + | 1 | 7.10 | 27.73 |
| Hg 2 + | 3 | 34.20 | Mo 1 + | 1 | 7.10 | 27.10 |
| Sb 3 + | 4 | 44.20 | Mo 2 + | 2 | 16.15 | 28.05 |
| Gd 3 + | 4 | 44.00 | Mo 2 + | 2 | 16.15 | 27.85 |
| Yb 3 + | 4 | 43.70 | Mo 2 + | 2 | 16.15 | 27.55 |
| Mo 3 + | 4 | 46.40 | Rh 2 + | 2 | 18.08 | 28.32 |
| Mo 3 + | 4 | 46.40 | In 2 + | 2 | 18.87 | 27.53 |
| Mo 3 + | 4 | 46.40 | Te 2 + | 2 | 18.60 | 27.80 |
| Mo 3 + | 4 | 46.40 | I 2 + | 2 | 19.13 | 27.27 |
| Mo 3 + | 4 | 46.40 | La 3 + | 3 | 19.18 | 27.22 |
| Mo 3 + | 4 | 46.40 | Pt 2 + | 2 | 18.56 | 27.84 |

| Atom Oxidized | n | nth Ionization Energy (ev) | Atom Reduced | n | nthIonization Energy (ev) | Energy Hole (ev) |
|---|---|---|---|---|---|---|
| Mo 3 + | 4 | 46.40 | Hg 2 + | 2 | 18.76 | 27.64 |
| Mo 4 + | 5 | 61.20 | Pd 3 + | 3 | 32.93 | 28.27 |
| Mo 4 + | 5 | 61.20 | I 3 + | 3 | 33.00 | 28.20 |
| Mo 4 + | 5 | 61.20 | Hf 4 + | 4 | 33.33 | 27.87 |
| Bi 5 + | 6 | 88.30 | Mo 5 + | 5 | 61.20 | 27.10 |
| Mo 5 + | 6 | 68.00 | Sn 4 + | 4 | 40.73 | 27.27 |
| Mo 5 + | 6 | 68.00 | Nd 4 + | 4 | 40.41 | 27.59 |
| Mo 5 + | 6 | 68.00 | Tb 4 + | 4 | 39.80 | 28.20 |
| Ag 2 + | 3 | 34.83 | Tc 1 + | 1 | 7.28 | 27.55 |
| Eu 3 + | 4 | 42.60 | Tc 2 + | 2 | 15.26 | 27.34 |
| Ho 3 + | 4 | 42.50 | Tc 2 + | 2 | 15.26 | 27.24 |
| Er 3 + | 4 | 42.60 | Tc 2 + | 2 | 15.26 | 27.34 |
| Tm 3 + | 4 | 42.70 | Tc 2 + | 2 | 15.26 | 27.44 |
| Yb 3 + | 4 | 43.70 | Tc 2 + | 2 | 15.26 | 28.44 |
| Pb 3 + | 4 | 42.32 | Tc 2 + | 2 | 15.26 | 27.06 |
| Ag 2 + | 3 | 34.83 | Ru 1 + | 1 | 7.37 | 27.46 |
| Sb 3 + | 4 | 44.20 | Ru 2 + | 2 | 16.76 | 27.44 |
| Gd 3 + | 4 | 44.00 | Ru 2 + | 2 | 16.76 | 27.24 |
| Lu 3 + | 4 | 45.19 | Ru 2 + | 2 | 16.76 | 28.43 |
| Sb 4 + | 5 | 56.00 | Ru 3 + | 3 | 28.47 | 27.53 |
| Bi 4 + | 5 | 56.00 | Ru 3 + | 3 | 28.47 | 27.53 |
| Ag 2 + | 3 | 34.83 | Rh 1 + | 1 | 7.46 | 27.37 |
| Lu 3 + | 4 | 45.19 | Rh 2 + | 2 | 18.08 | 27.11 |
| Bi 3 + | 4 | 45.30 | Rh 2 + | 2 | 18.08 | 27.22 |
| Te 4 + | 5 | 58.75 | Rh 3 + | 3 | 31.06 | 27.69 |
| Rh 2 + | 3 | 31.06 | Cs 1 + | 1 | 3.89 | 27.17 |
| Ce 3 + | 4 | 36.76 | Pd 1 + | 1 | 8.34 | 28.42 |
| Pd 2 + | 3 | 32.93 | In 1 + | 1 | 5.79 | 27.14 |
| Pd 2 + | 3 | 32.93 | Ba 1 + | 1 | 5.21 | 27.72 |
| Pd 2 + | 3 | 32.93 | La 1 + | 1 | 5.58 | 27.35 |
| Pd 2 + | 3 | 32.93 | Ce 1 + | 1 | 5.47 | 27.46 |
| Pd 2 + | 3 | 32.93 | Pr 1 + | 1 | 5.42 | 27.51 |
| Pd 2 + | 3 | 32.93 | Nd 1 + | 1 | 5.49 | 27.44 |

(continued)

| Atom Oxidized | n | nth Ionization Energy (ev) | Atom Reduced | n | nthIonization Energy (ev) | Energy Hole (ev) |
|---|---|---|---|---|---|---|
| Pd 2 + | 3 | 32.93 | Pm 1 + | 1 | 5.55 | 27.38 |
| Pd 2 + | 3 | 32.93 | Sm 1 + | 1 | 5.63 | 27.30 |
| Pd 2 + | 3 | 32.93 | Eu 1 + | 1 | 5.67 | 27.26 |
| Pd 2 + | 3 | 32.93 | Tb 1 + | 1 | 5.85 | 27.08 |
| Pd 2 + | 3 | 32.93 | Dy 1 + | 1 | 5.93 | 27.00 |
| Pd 2 + | 3 | 32.93 | Lu 1 + | 1 | 5.43 | 27.50 |
| Pd 2 + | 3 | 32.93 | Ra 1 + | 1 | 5.28 | 27.65 |
| Pd 2 + | 3 | 32.93 | Ac 1 + | 1 | 5.20 | 27.73 |
| Pd 2 + | 3 | 32.93 | Pa 1 + | 1 | 5.90 | 27.03 |
| Ag 2 + | 3 | 34.83 | Ag 1 + | 1 | 7.58 | 27.25 |
| La 3 + | 4 | 49.95 | Ag 2 + | 2 | 21.49 | 28.46 |
| Ag 2 + | 3 | 34.83 | Ag 1 + | 1 | 7.58 | 27.25 |
| Ag 2 + | 3 | 34.83 | Sn 1 + | 1 | 7.34 | 27.49 |
| Ag 2 + | 3 | 34.83 | Hf 1 + | 1 | 6.60 | 28.23 |
| Ag 2 + | 3 | 34.83 | Pb 1 + | 1 | 7.42 | 27.41 |
| Ag 2 + | 3 | 34.83 | Bi 1 + | 1 | 7.29 | 27.54 |
| Ag 2 + | 3 | 34.83 | Es 1 + | 1 | 6.42 | 28.41 |
| Cd 2 + | 3 | 37.48 | Cd 1 + | 1 | 8.99 | 28.49 |
| Te 3 + | 4 | 37.41 | Cd 1 + | 1 | 8.99 | 28.42 |
| Ce 3 + | 4 | 36.76 | Cd 1 + | 1 | 8.99 | 27.76 |
| Sb 3 + | 4 | 44.20 | Cd 2 + | 2 | 16.91 | 27.29 |
| Gd 3 + | 4 | 44.00 | Cd 2 + | 2 | 16.91 | 27.09 |
| Lu 3 + | 4 | 45.19 | Cd 2 + | 2 | 16.91 | 28.28 |
| Bi 3 + | 4 | 45.30 | Cd 2 + | 2 | 16.91 | 28.39 |
| Cd 2 + | 3 | 37.48 | Cd 1 + | 1 | 8.99 | 28.49 |
| Cd 2 + | 3 | 37.48 | Te 1 + | 1 | 9.01 | 28.47 |
| Cd 2 + | 3 | 37.48 | I 1 + | 1 | 10.45 | 27.03 |
| Cd 2 + | 3 | 37.48 | Ba 2 + | 2 | 10.00 | 27.48 |
| Cd 2 + | 3 | 37.48 | Ir 1 + | 1 | 9.10 | 28.38 |
| Cd 2 + | 3 | 37.48 | Pt 1 + | 1 | 9.00 | 28.48 |
| Cd 2 + | 3 | 37.48 | Au 1 + | 1 | 9.23 | 28.25 |
| Cd 2 + | 3 | 37.48 | Hg 1 + | 1 | 10.44 | 27.04 |
| Cd 2 + | 3 | 37.48 | Ra2+ | 2 | 10.15 | 27.33 |

(continued)

| Atom Oxidized | n | nth Ionization Energy (ev) | Atom Reduced | n | nthIonization Energy (ev) | Energy Hole (ev) |
|---|---|---|---|---|---|---|
| I 2 + | 3 | 33.00 | In 1 + | 1 | 5.79 | 27.21 |
| Hf 3 + | 4 | 33.33 | In 1 + | 1 | 5.79 | 27.54 |
| Hg 2 + | 3 | 34.20 | In 1 + | 1 | 5.79 | 28.41 |
| Sb 4 + | 5 | 55.00 | In 3 + | 3 | 28.03 | 27.97 |
| Bi 4 + | 5 | 56.00 | In 3 + | 3 | 28.03 | 27.97 |
| In 3 + | 4 | 54.00 | Bi 3 + | 3 | 25.56 | 28.44 |
| Eu 3 + | 4 | 42.60 | Sn 2 + | 2 | 14.63 | 27.97 |
| Ho 3 + | 4 | 42.50 | Sn 2 + | 2 | 14.63 | 27.87 |
| Er 3 + | 4 | 42.60 | Sn 2 + | 2 | 14.63 | 27.97 |
| Tm 3 + | 4 | 42.70 | Sn 2 + | 2 | 14.63 | 28.07 |
| Pb 3 + | 4 | 42.32 | Sn 2 + | 2 | 14.63 | 27.69 |
| Te 4 + | 5 | 58.75 | Sn 3 + | 3 | 30.50 | 28.25 |
| Pb 4 + | 5 | 68.80 | Sn 4 + | 4 | 40.73 | 28.07 |
| Sn 4 + | 5 | 72.28 | Sb 4 + | 4 | 44.20 | 28.08 |
| Sn 4 + | 5 | 72.28 | Gd 4 + | 4 | 44.00 | 28.28 |
| Sn 4 + | 5 | 72.28 | Lu 4 + | 4 | 45.19 | 27.09 |
| Ce 3 + | 4 | 36.76 | Sb 1 + | 1 | 8.64 | 28.12 |
| Sb 3 + | 4 | 44.20 | Sb 2 + | 2 | 16.53 | 27.67 |
| Gd 3 + | 4 | 44.00 | Sb 2 + | 2 | 16.53 | 27.47 |
| Yb 3 + | 4 | 43.70 | Sb 2 + | 2 | 16.53 | 27.17 |
| Sb 3 + | 4 | 44.20 | Sb 2 + | 2 | 16.53 | 27.67 |
| Sb 3 + | 4 | 44.20 | Bi 2 + | 2 | 16.69 | 27.51 |
| Sb 4 + | 5 | 56.00 | Te 3 + | 3 | 27.96 | 28.04 |
| Te 3 + | 4 | 37.41 | Te 1 + | 1 | 9.01 | 28.40 |
| Ce 3 + | 4 | 36.76 | Te 1 + | 1 | 9.01 | 27.75 |
| Bi 4 + | 5 | 56.00 | Te 3 + | 3 | 27.96 | 28.04 |
| Te 3 + | 4 | 37.41 | Te 1 + | 1 | 9.01 | 28.40 |
| Te 3 + | 4 | 37.41 | Ba 2 + | 2 | 10.00 | 27.41 |
| Te 3 + | 4 | 37.41 | Ir 1 + | 1 | 9.10 | 28.31 |
| Te 3 + | 4 | 37.41 | Pt 1 + | 1 | 9.00 | 28.41 |
| Te 3 + | 4 | 37.41 | Au 1 + | 1 | 9.23 | 28.18 |
| Te 3 + | 4 | 37.41 | Ra 2 + | 2 | 10.15 | 27.26 |
| Te5+ | 6 | 70.70 | Eu 4 + | 4 | 42.60 | 28.10 |

164

(continued)

| Atom Oxidized | n | nth Ionization Energy (ev) | Atom Reduced | n | nthIonization Energy (ev) | Energy Hole (ev) |
|---|---|---|---|---|---|---|
| Te 5 + | 6 | 70.70 | Ho 4 + | 4 | 42.50 | 28.20 |
| Te 5 + | 6 | 70.70 | Er 4 + | 4 | 42.60 | 28.10 |
| Te 5 + | 6 | 70.70 | Tm 4 + | 4 | 42.70 | 28.00 |
| Te 5 + | 6 | 70.70 | Pb 4 + | 4 | 42.32 | 28.38 |
| Nd 3 + | 4 | 40.41 | Xe 1 + | 1 | 12.13 | 28.28 |
| Tb 3 + | 4 | 39.80 | Xe 1 + | 1 | 12.13 | 27.67 |
| Xe 2 + | 3 | 32.10 | Cs 1 + | 1 | 3.89 | 28.21 |
| Pb 2 + | 3 | 31.94 | Cs 1 + | 1 | 3.89 | 28.04 |
| Hf 3 + | 4 | 33.33 | Ba 1 + | 1 | 5.21 | 28.12 |
| Hf 3 + | 4 | 33.33 | La 1 + | 1 | 5.58 | 27.75 |
| Pr 3 + | 4 | 38.98 | La 2 + | 2 | 11.06 | 27.92 |
| La 3 + | 4 | 49.95 | Pr 3+ | 3 | 21.62 | 28.33 |
| La 3 + | 4 | 49.95 | Nd 3 + | 3 | 22.10 | 27.85 |
| La 3 + | 4 | 49.95 | Pm 3 + | 3 | 22.30 | 27.65 |
| La 3 + | 4 | 49.95 | Tb 3 + | 3 | 21.91 | 28.04 |
| La 3 + | 4 | 49.95 | Dy 3 + | 3 | 22.80 | 27.15 |
| La 3 + | 4 | 49.95 | Ho 3 + | 3 | 22.84 | 27.11 |
| La 3 + | 4 | 49.95 | Er 3 + - | 3 | 22.74 | 27.21 |
| Hf 3 + | 4 | 33.33 | Ce 1 + | 1 | 5.47 | 27.86 |
| Pr 3 + | 4 | 38.98 | Ce 2 + | 2 | 10.85 | 28.13 |
| Ce 3 + | 4 | 36.76 | Os 1 + | 1 | 8.70 | 28.06 |
| Ce 3 + | 4 | 36.76 | Ir 1 + | 1 | 9.10 | 27.66 |
| Ce 3 + | 4 | 36.76 | Pt 1 + | 1 | 9.00 | 27.76 |
| Ce 3 + | 4 | 36.76 | Au 1 + | 1 | 9.23 | 27.53 |
| Ce 3 + | 4 | 36.76 | Po 1 + | 1 | 8.42 | 28.34 |
| Hf 3 + | 4 | 33.33 | Pr 1 + | 1 | 5.42 | 27.91 |
| Pr 3 + | 4 | 38.98 | Pr 2 + | 2 | 10.55 | 28.43 |
| Pr 3 + | 4 | 38.98 | Pr 2 + | 2 | 10.55 | 28.43 |
| Pr 3 + | 4 | 38.98 | Nd 2 + | 2 | 10.73 | 28.25 |
| Pr 3 + | 4 | 38.98 | Pm 2 + | 2 | 10.90 | 28.08 |
| Pr 3 + | 4 | 38.98 | Sm 2 + | 2 | 11.07 | 27.91 |
| Pr 3 + | 4 | 38.98 | Eu 2 + | 2 | 11.24 | 27.74 |
| Pr 3 + | 4 | 38.98 | Tb 2 + | 2 | 11.52 | 27.46 |

165

| Atom Oxidized | n | nth Ionization Energy (ev) | Atom Reduced | n | nthIonization Energy (ev) | Energy Hole (ev) |
|---|---|---|---|---|---|---|
| Pr 3 + | 4 | 38.98 | Dy 2 + | 2 | 11.67 | 27.31 |
| Pr 3 + | 4 | 38.98 | Ho 2 + | 2 | 11.80 | 27.18 |
| Pr 3 + | 4 | 38.98 | Er 2 + | 2 | 11.93 | 27.05 |
| Pr 3 + | 4 | 38.98 | Rn 1 + | 1 | 10.75 | 28.23 |
| Hf 3 + | 4 | 33.33 | Nd 1 + | 1 | 5.49 | 27.84 |
| Nd 3 + | 4 | 40.41 | Gd 2 + | 2 | 12.09 | 28.32 |
| Nd 3 + | 4 | 40.41 | Er 2 + | 2 | 11.93 | 28.48 |
| Nd 3 + | 4 | 40.41 | Tm 2 + | 2 | 12.05 | 28.36 |
| Nd 3 + | 4 | 40.41 | Yb 2 + | 2 | 12.18 | 28.23 |
| Pb 4 + | 5 | 68.80 | Nd 4 + | 4 | 40.41 | 28.39 |
| Hf 3 + | 4 | 33.33 | Pm 1 + | 1 | 5.55 | 27.78 |
| Pm 3 + | 4 | 41.10 | Lu 2 + | 2 | 13.90 | 27.20 |
| Pb 4 + | 5 | 68.80 | Pm 4 + | 4 | 41.10 | 27.70 |
| Hf 3 + | 4 | 33.33 | Sm 1 + | 1 | 5.63 | 27.70 |
| Sm 3 + | 4 | 41.40 | Lu 2 + | 2 | 13.90 | 27.50 |
| Pb 4 + | 5 | 68.80 | Sm 4 + | 4 | 41.40 | 27.40 |
| Hf 3 + | 4 | 33.33 | Eu 1 + | 1 | 5.67 | 27.66 |
| Eu 3 + | 4 | 42.60 | Hf 2 + | 2 | 14.90 | 27.70 |
| Eu 3 + | 4 | 42.60 | Pb 2 + | 2 | 15.03 | 27.57 |
| Hf 3 + | 4 | 33.33 | Gd 1 + | 1 | 6.14 | 27.19 |
| Hg 2 + | 3 | 34.20 | Gd 1 + | 1 | 6.14 | 28.06 |
| Tb 3 + | 4 | 39.80 | Gd 2 + | 2 | 12.09 | 27.71 |
| Gd 3 + | 4 | 44.00 | Bi 2 + | 2 | 16.69 | 27.31 |
| Hf 3 + | 4 | 33.33 | Tb 1 + | 1 | 5.85 | 27.48 |
| Hg 2 + | 3 | 34.20 | Tb 1 + | 1 | 5.85 | 28.35 |
| Tb 3 + | 4 | 39.80 | Tb 2 + | 2 | 11.52 | 28.28 |
| Tb 3 + | 4 | 39.80 | Tb 2 + | 2 | 11.52 | 28.28 |
| Tb 3 + | 4 | 39.80 | Dy 2 + | 2 | 11.67 | 28.13 |
| Tb 3 + | 4 | 39.80 | Ho 2 + | 2 | 11.80 | 28.00 |
| Tb 3 + | 4 | 39.80 | Er 2 + | 2 | 11.93 | 27.87 |
| Tb 3 + | 4 | 39.80 | Tm 2 + | 2 | 12.05 | 27.75 |
| Tb 3 + | 4 | 39.80 | Yb 2 + | 2 | 12.18 | 27.62 |
| Hf 3 + | 4 | 33.33 | Dy 1 + | 1 | 5.93 | 27.40 |

| Atom Oxidized | n | nth Ionization Energy (ev) | Atom Reduced | n | nthIonization Energy (ev) | Energy Hole (ev) |
|---|---|---|---|---|---|---|
| Hg 2 + | 3 | 34.20 | Dy 1 + | 1 | 5.93 | 28.27 |
| Dy 3 + | 4 | 41.50 | Lu 2 + | 2 | 13.90 | 27.60 |
| Pb 4 + | 5 | 68.80 | Dy 4 + | 4 | 41.50 | 27.30 |
| Hf 3 + | 4 | 33.33 | Ho 1 + | 1 | 6.02 | 27.31 |
| Hg 2 + | 3 | 34.20 | Ho 1 + | 1 | 6.02 | 28.18 |
| Ho 3 + | 4 | 42.50 | Hf 2 + | 2 | 14.90 | 27.60 |
| Ho 3 + | 4 | 42.50 | Pb 2 + | 2 | 15.03 | 27.47 |
| Hf 3 + | 4 | 33.33 | Er 1 + | 1 | 6.10 | 27.23 |
| Hg 2 + | 3 | 34.20 | Er 1 + | 1 | 6.10 | 28.10 |
| Er 3 + | 4 | 42.60 | Hf 2 + | 2 | 14.90 | 27.70 |
| Er 3 + | 4 | 42.60 | Pb 2 + | 2 | 15.03 | 27.57 |
| Hf 3 + | 4 | 33.33 | Tm 1 + | 1 | 6.18 | 27.15 |
| Hg 2 + | 3 | 34.20 | Tm 1 + | 1 | 6.18 | 28.02 |
| Tm 3 + | 4 | 42.70 | Hf 2 + | 2 | 14.90 | 27.80 |
| Tm 3 + | 4 | 42.70 | Pb 2 + | 2 | 15.03 | 27.67 |
| Hf 3 + | 4 | 33.33 | Yb 1 + | 1 | 6.25 | 27.08 |
| Hg 2 + | 3 | 34.20 | Yb 1 + | 1 | 6.25 | 27.95 |
| Yb 3 + | 4 | 43.70 | Bi 2 + | 2 | 16.69 | 27.01 |
| Hf 3 + | 4 | 33.33 | Lu 1 + | 1 | 5.43 | 27.90 |
| Pb 3 + | 4 | 42.32 | Lu 2 + | 2 | 13.90 | 28.42 |
| Lu 3 + | 4 | 45.19 | Bi 2 + | 2 | 16.69 | 28.50 |
| Hg 2 + | 3 | 34.20 | Hf 1 + | 1 | 6.60 | 27.60 |
| Pb 3 + | 4 | 42.32 | Hf 2 + | 2 | 14.90 | 27.42 |
| Hf 3 + | 4 | 33.33 | Tl 1 + | 1 | 6.11 | 27.22 |
| Hf 3 + | 4 | 33.33 | Ra 1 + | 1 | 5.28 | 28.05 |
| Hf 3 + | 4 | 33.33 | Ac 1 + | 1 | 5.20 | 28.13 |
| Hf 3 + | 4 | 33.33 | Th 1 + | 1 | 6.10 | 27.23 |
| Hf 3 + | 4 | 33.33 | Pa 1 + | 1 | 5.90 | 27.43 |
| Hf 3 + | 4 | 33.33 | U 1 + | 1 | 6.05 | 27.28 |
| Hf 3 + | 4 | 33.33 | Np 1 + | 1 | 6.20 | 27.13 |
| Hf 3 + | 4 | 33.33 | Pu 1 + | 1 | 6.06 | 27.27 |
| Hf 3 + | 4 | 33.33 | Am 1 + | 1 | 5.99 | 27.34 |
| Hf 3 + | 4 | 33.33 | Cm 1 + | 1 | 6.02 | 27.31 |

(continued)

| Atom Oxidized | n | nth Ionization Energy (ev) | Atom Reduced | n | nthIonization Energy (ev) | Energy Hole (ev) |
|---|---|---|---|---|---|---|
| Hf 3 + | 4 | 33.33 | Bk 1 + | 1 | 6.23 | 27.10 |
| Hf 3 + | 4 | 33.33 | Cf 1 + | 1 | 6.30 | 27.03 |
| Hg 2 + | 3 | 34.20 | Tl 1 + | 1 | 6.11 | 28.09 |
| Hg 2 + | 3 | 34.20 | Th 1 + | 1 | 6.10 | 28.10 |
| Hg 2 + | 3 | 34.20 | Pa 1 + | 1 | 5.90 | 28.30 |
| Hg 2 + | 3 | 34.20 | U 1 + | 1 | 6.05 | 28.15 |
| Hg 2 + | 3 | 34.20 | Np 1 + | 1 | 6.20 | 28.00 |
| Hg 2 + | 3 | 34.20 | Pu 1 + | 1 | 6.06 | 28.14 |
| Hg 2 + | 3 | 34.20 | Am 1 + | 1 | 5.99 | 28.21 |
| Hg 2 + | 3 | 34.20 | Cm 1 + | 1 | 6.02 | 28.18 |
| Hg 2 + | 3 | 34.20 | Bk 1 + | 1 | 6.23 | 27.97 |
| Hg 2 + | 3 | 34.20 | Cf 1 + | 1 | 6.30 | 27.90 |
| Hg 2 + | 3 | 34.20 | Es 1 + | 1 | 6.42 | 27.78 |
| Pb 3 + | 4 | 42.32 | Pb 2 + | 2 | 15.03 | 27.29 |
| Pb 3 + | 4 | 42.32 | Pb 2 + | 2 | 15.03 | 27.29 |

wherein the number in the column following the ion (n) is the nth ionization energy of the atom, for example, $Pd^{2+} + 32.93 \text{ eV} = Pd^{3+} + e^-$ and $Li^+ + e^- = Li + 5.39 \text{ eV}$;

(2) two-ion couples capable of producing energy holes for shrinking hydrogen atoms involving cations and anions, selected from the group consisting of:

| Atom Oxidized | n | nth Ionization Energy (ev) | Atom Reduced | n | nthIonization Energy (ev) | Energy Hole (ev) |
|---|---|---|---|---|---|---|
| As 2 + | 3 | 28.35 | H | - 1 | 0.80 | 27.55 |
| Ru 2 + | 3 | 28.47 | H | - 1 | 0.80 | 27.67 |
| In 2 + | 3 | 28.03 | H | - 1 | 0.80 | 27.23 |
| Te 2 + | 3 | 27.96 | H | - 1 | 0.80 | 27.16 |
| Al 2 + | 3 | 28.45 | H | - 1 | 0.80 | 2.65 |
| Ar 1 + | 2 | 27.63 | H | - 1 | 0.80 | 26.83 |
| As 2 + | 3 | 28.35 | Li | - 1 | 0.61 | 27.74 |
| Ru 2 + | 3 | 28.47 | Li | - 1 | 0.61 | 27.86 |
| In 2 + | 3 | 28.03 | Li | - 1 | 0.61 | 27.42 |
| Te2+ | 3 | 27.96 | Li | - 1 | 0.61 | 27.35 |
| Al 2 + | 3 | 28.45 | Li | - 1 | 0.61 | 27.84 |
| Ar 1 + | 2 | 27.63 | Li | - 1 | 0.61 | 27.02 |
| Ti 2 + | 3 | 27.49 | Li | - 1 | 0.61 | 26.88 |
| As 2 + | 3 | 28.35 | B | - 1 | 0.30 | 28.05 |
| Rb 1 + | 2 | 27.28 | B | - 1 | 0.30 | 26.98 |
| Mo 2 + | 3 | 27.16 | B | - 1 | 0.30 | 26.86 |
| Ru 2 + | 3 | 28.47 | B | - 1 | 0.30 | 28.17 |
| In 2 + | 3 | 28.03 | B | - 1 | 0.30 | 27.73 |
| Te 2 + | 3 | 27.96 | B | - 1 | 0.30 | 27.66 |
| Al 2 + | 3 | 28.45 | B | - 1 | 0.30 | 28.15 |
| Ar 1 + | 2 | 27.63 | B | - 1 | 0.30 | 27.33 |
| Ti 2 + | 3 | 27.49 | B | - 1 | 0.30 | 27.19 |
| As 2 + | 3 | 28.35 | C | - 1 | 1.12 | 27.23 |
| Tc 2 + | 3 | 29.54 | C | - 1 | 1.12 | 28.42 |
| Ru 2 + | 3 | 28.47 | C | - 1 | 1.12 | 27.35 |
| In 2 + | 3 | 28.03 | C | - 1 | 1.12 | 26.91 |
| Te 2 + | 3 | 27.96 | C | - 1 | 1.12 | 26.84 |
| N 1 + | 2 | 29.60 | C | - 1 | 1.12 | 28.48 |
| Al 2 + | 3 | 28.45 | C | - 1 | 1.12 | 27.33 |
| V 2+ | 3 | 29.31 | C | - 1 | 1.12 | 28.19 |
| As 2 + | 3 | 28.35 | O | - 1 | 1.47 | 26.89 |
| Tc 2 + | 3 | 29.54 | O | - 1 | 1.47 | 28.07 |
| Ru 2 + | 3 | 28.47 | O | - 1 | 1.47 | 27.00 |
| T12 + | 3 | 29.83 | O | - 1 | 1.47 | 28.36 |

(continued)

| Atom Oxidized | n | nth Ionization Energy (ev) | Atom Reduced | n | nthIonization Energy (ev) | Energy Hole (ev) |
|---|---|---|---|---|---|---|
| N 1 + | 2 | 29.60 | O | - 1 | 1.47 | 28.14 |
| Al 2 + | 3 | 28.45 | O | - 1 | 1.47 | 26.98 |
| V 2 + | 3 | 29.31 | O | - 1 | 1.47 | 27.84 |
| Ga 2 + | 3 | 30.71 | F | - 1 | 3.45 | 27.26 |
| Se 2 + | 3 | 30.82 | F | - 1 | 3.45 | 27.37 |
| Rh 2 + | 3 | 31.06 | F | - 1 | 3.45 | 27.61 |
| Sn 2 + | 3 | 30.50 | F | - 1 | 3.45 | 27.05 |
| Pb 2 + | 3 | 31.94 | F | - 1 | 3.45 | 28.49 |
| K 1+ | 2 | 31.63 | F | - 1 | 3.45 | 28.18 |
| Cr 2 + | 3 | 30.96 | F | - 1 | 3.45 | 27.51 |
| Fe 2 | 3 | 30.65 | F | - 1 | 3.45 | 27.20 |
| As 2 + | 3 | 28.35 | Na | - 1 | 0.52 | 27.83 |
| Ru 2 + | 3 | 28.47 | Na | - 1 | 0.52 | 27.95 |
| In 2 + | 3 | 28.03 | Na | - 1 | 0.52 | 27.51 |
| Te 2 + | 3 | 27.96 | Na | - 1 | 0.52 | 27.44 |
| Al 2 + | 3 | 28.45 | Na | - 1 | 0.52 | 27.93 |
| Ar 1 + | 2 | 27.63 | Na | - 1 | 0.52 | 27.11 |
| Ti 2 + | 3 | 27.49 | Na | - 1 | 0.52 | 26.97 |
| As 2 + | 3 | 28.35 | Al | - 1 | 0.52 | 27.83 |
| Ru 2 + | 3 | 28.47 | Al | - 1 | 0.52 | 27.95 |
| In 2 + | 3 | 28.03 | Al | - 1 | 0.52 | 27.51 |
| Te 2 + | 3 | 27.96 | Al | - 1 | 0.52 | 27.44 |
| Al 2 + | 3 | 28.45 | Al | - 1 | 0.52 | 27.93 |
| Ar 1 + | 2 | 27.63 | Al | - 1 | 0.52 | 27.11 |
| Ti 2 + | 3 | 27.49 | Al | - 1 | 0.52 | 26.97 |
| As 2 + | 3 | 28.35 | Si | - 1 | 1.39 | 26.96 |
| Tc 2 + | 3 | 29.54 | Si | - 1 | 1.39 | 28.15 |
| Ru 2 + | 3 | 28.47 | Si | - 1 | 1.39 | 27.08 |
| Tl 2 + | 3 | 29.83 | Si | - 1 | 1.39 | 28.44 |
| N 1 + | 2 | 29.60 | Si | - 1 | 1.39 | 28.21 |
| Al 2 + | 3 | 28.45 | Si | - 1 | 1.39 | 27.06 |
| V 2 + | 3 | 29.31 | Si | - 1 | 1.39 | 27.92 |
| As 2 + | 3 | 28.35 | P | - 1 | 0.78 | 27.57 |

| Atom Oxidized | n | nth Ionization Energy (ev) | Atom Reduced | n | nthIonization Energy (ev) | Energy Hole (ev) |
|---|---|---|---|---|---|---|
| Ru 2 + | 3 | 28.47 | P | - 1 | 0.78 | 27.69 |
| In 2 + | 3 | 28.03 | P | - 1 | 0.78 | 27.25 |
| Te 2 + | 3 | 27.96 | P | - 1 | 0.78 | 27.18 |
| Al 2 + | 3 | 28.45 | P | - 1 | 0.78 | 27.67 |
| Ar 1 + | 2 | 27.63 | P | - 1 | 0.78 | 26.85 |
| Tc 2 + | 3 | 29.54 | S | - 1 | 2.07 | 27.47 |
| Sn 2 + | 3 | 30.50 | S | - 1 | 2.07 | 28.43 |
| Tl 2 + | 3 | 29.83 | S | - 1 | 2.07 | 27.76 |
| N 1 + | 2 | 29.60 | S | - 1 | 2.07 | 27.53 |
| P 2+ | 3 | 30.18 | S | - 1 | 2.07 | 28.11 |
| V 2+ | 3 | 29.31 | S | - 1 | 2.07 | 27.24 |
| Ga2+ | 3 | 30.71 | Cl | - 1 | 3.61 | 27.10 |
| Se 2 + | 3 | 30.82 | Cl | - 1 | 3.61 | 27.21 |
| Rh 2 + | 3 | 31.06 | Cl | - 1 | 3.61 | 27.45 |
| $S_n$ 2 + | 3 | 30.50 | Cl | - 1 | 3.61 | 26.89 |
| Xe 2 + | 3 | 32.10 | Cl | - 1 | 3.61 | 28.49 |
| Pb 2 + | 3 | 31.94 | Q | - 1 | 3.61 | 28.32 |
| K 1 + | 2 | 31.63 | Cl | - 1 | 3.61 | 28.01 |
| Cr 2 + | 3 | 30.96 | Cl | - 1 | 3.61 | 27.35 |
| Fe 2 + | 3 | 30.65 | Cl | - 1 | 3.61 | 27.04 |
| As 2 + | 3 | 28.35 | K | - 1 | 0.69 | 27.66 |
| Ru 2 + | 3 | 28.47 | K | - 1 | 0.69 | 27.78 |
| In 2 + | 3 | 28.03 | K | - 1 | 0.69 | 27.34 |
| Te 2 + | 3 | 27.96 | K | - 1 | 0.69 | 27.27 |
| Al 2 + | 3 | 28.45 | K | - 1 | 0.69 | 27.75 |
| Ar 1 + | 2 | 27.63 | K | - 1 | 0.69 | 26.93 |
| As 2 + | 3 | 28.35 | Fe | - 1 | 0.56 | 27.79 |
| Ru 2 + | 3 | 28.47 | Fe | - 1 | 0.56 | 27.91 |
| In 2 + | 3 | 28.03 | Fe | - 1 | 0.56 | 27.47 |
| Te 2 + | 3 | 27.96 | Fe | - 1 | 0.56 | 27.40 |
| Al 2+ | 3 | 28.45 | Fe | - 1 | 0.56 | 27.89 |
| Ar 1 + | 2 | 27.63 | Fe | - 1 | 0.56 | 27.07 |
| Ti 2 + | 3 | 27.49 | Fe | - 1 | 0.56 | 26.93 |

(continued)

| Atom Oxidized | n | nth Ionization Energy (ev) | Atom Reduced | n | nthIonization Energy (ev) | Energy Hole (ev) |
|---|---|---|---|---|---|---|
| As 2 + | 3 | 28.35 | Co | - 1 | 0.95 | 27.40 |
| Ru 2 + | 3 | 28.47 | Co | - 1 | 0.95 | 27.52 |
| In 2 + | 3 | 28.03 | Co | - 1 | 0.95 | 27.08 |
| Te 2 + | 3 | 27.96 | Co | - 1 | 0.95 | 27.01 |
| Al 2 + | 3 | 28.45 | Co | - 1 | 0.95 | 27.49 |
| V 2+ | 3 | 29.31 1 | Co | - 1 | 0.95 | 28.36 |
| Tc 2 + | 3 | 29.54 | Cu | - 1 | 1.82 | 27.72 |
| Tl 2 + | 3 | 29.83 | Cu | - 1 | 1.82 | 28.01 |
| N 1 + | 2 | 29.60 | Cu | - 1 | 1.82 | 27.78 |
| P 2 + | 3 | 30.18 | Cu | - 1 | 1.82 | 28.36 |
| V 2 + | 3 | 29.31 | Cu | - 1 | 1.82 | 27.49 |
| Ga 2 + | 3 | 30.71 | Br | - 1 | 3.36 | 27.35 |
| Se 2 + | 3 | 30.82 | Br | - 1 | 3.36 | 27.46 |
| Rh 2 + | 3 | 31.06 | Br | - 1 | 3.36 | 27.70 |
| Sn 2 + | 3 | 30.50 | Br | - 1 | 3.36 | 27.14 |
| P 2 + | 3 | ' 30.18 | Br | - 1 | 3.36 | 26.82 |
| K 1 + | 2 | 31.63 | Br | - 1 | 3.36 | 28.26 |
| Cr 2 + | 3 | 30.96 | Br | - 1 | 3.36 | 27.60 |
| Fe 2 + | 3 | 30.65 | Br | - 1 | 3.36 | 27.29 |
| As 2 + | 3 | 28.35 | Rb | - 1 | 0.30 | 28.05 |
| Rb 1 + | 2 | 27.28 | Rb | - 1 | 0.30 | 26.98 |
| Mo 2 + | 3 | 27.16 | Rb | - 1 | 0.30 | 26.86 |
| Ru 2 + | 3 | 28.47 | Rb | - 1 | 0.30 | 28.17 |
| In 2 + | 3 | 28.03 | Rb | - 1 | 0.30 | 27.73 |
| Te 2 + | 3 | 27.96 | Rb | - 1 | 0.30 | 27.66 |
| Al 2 + | 3 | 28.45 | Rb | - 1 | 0.30 | 28.15 |
| Ar 1 + | 2 | 27.63 | Rb | - 1 | 0.30 | 27.33 |
| Ti 2 + | 3 | 27.49 | Rb | - 1 | 0.30 | 27.19 |
| Ga 2 + | 3 | 30.71 | I | - 1 | 3.06 | 27.65 |
| Se 2 + | 3 | 30.82 | I | - 1 | 3.06 | 27.76 |
| Rh 2 + | 3 | 31.06 | I | - 1 | 3.06 | 28.00 |
| Sn 2 + | 3 | 30.50 | I | - 1 | 3.06 | 27.44 |
| P 2 + | 3 | 30.18 | I | - 1 | 3.06 | 27.12 |

173

(continued)

| Atom Oxidized | n | nth Ionization Energy (ev) | Atom Reduced | n | nthIonization Energy (ev) | Energy Hole (ev) |
|---|---|---|---|---|---|---|
| Cr 2 + | 3 | 30.96 | I | - 1 | 3.06 | 27.90 |
| Fe 2 + | 3 | 30.65 | I | - 1 | 3.06 | 27.59 |
| As 2 + | 3 | 28.35 | Cs | - 1 | 0.30 | 28.05 |
| Rb 1 + | 2 | 27.28 | Cs | - 1 | 0.30 | 26.98 |
| Mo 2 + | 3 | 27.16 | Cs | - 1 | 0.30 | 26.86 |
| Ru 2 + | 3 | 28.47 | Cs | - 1 | 0.30 | 28.17 |
| In 2 + | 3 | 28.03 | Cs | - 1 | 0.30 | 27.73 |
| Te 2 + | 3 | 27.96 | Cs | - 1 | 0.30 | 27.66 |
| Al 2 + | 3 | 28.45 | Cs | - 1 | 0.30 | 28.15 |
| Ar 1 + | 2 | 27.63 | Cs | - 1 | 0.30 | 27.33 |
| Ti 2 + | 3 | 27.49 | Cs | - 1 | 0.30 | 27.19 |
| Tc 2 + | 3 | 29.54 | Se | - 1 | 1.70 | 27.84 |
| Tl 2 + | 3 | 29.83 | Se | - 1 | 1.70 | 28.13 |
| N 1+ | 2 | 29.60 | Se | - 1 | 1.70 | 27.90 |
| P 2 + | 3 | 30.18 | Se | - 1 | 1.70 | 28.48 |
| V 2+ | 3 | 29.31 | Se | - 1 | 1.70 | 27.61 |
| Tc 2 + | 3 | 29.54 | Te | - 1 | 2.20 | 27.34 |
| Sn 2 + | 3 | 30.50 | Te | - 1 | 2.20 | 28.30 |
| Tl 2 + | 3 | 29.83 | Te | - 1 | 2.20 | 27.63 |
| N 1 + | 2 | 29.60 | Te | - 1 | 2.20 | 27.40 |
| P 2 + | 3 | 30.18 | Te | - 1 | 2.20 | 27.98 |
| V 2+ | 3 | 29.31 | Te | - 1 | 2.20 | 27.11 |
| Fe 2 + | 3 | 30.65 | Te | - 1 | 2.20 | 28.45 |
| As 2 + | 3 | 28.35 | As | - 1 | 0.60 | 27.75 |
| Ru 2 + | 3 | 28.47 | As | - 1 | 0.60 | 27.87 |
| In 2 + | 3 | 28.03 | As | - 1 | 0.60 | 27.43 |
| Te2+ | 3 | 27.96 | As | - 1 | 0.60 | 27.36 |
| Al 2 + | 3 | 28.45 | As | - 1 | 0.60 | 27.85 |
| Ar 1 + | 2 | 27.63 | As | - 1 | 0.60 | 27.03 |
| Ti 2 + | 3 | 27.49 | As | - 1 | 0.60 | 26.89 |
| Tc 2 + | 3 | 29.54 | Sb | - 1 | 2.00 | 27.54 |
| Tl 2 + | 3 | 29.83 | Sb | - 1 | 2.00 | 27.83 |
| N 1 + | 2 | 29.60 | Sb | - 1 | 2.00 | 27.60 |

(continued)

| Atom Oxidized | n | nth Ionization Energy (ev) | Atom Reduced | n | nthIonization Energy (ev) | Energy Hole (ev) |
|---|---|---|---|---|---|---|
| P 2+ | 3 | 30.18 | Sb | - 1 | 2.00 | 28.18 |
| V 2+ | 3 | 29.31 | Sb | - 1 | 2.00 | 27.31 |
| As 2 + | 3 | 28.35 | Bi | - 1 | 0.70 | 27.65 |
| Ru 2 + | 3 | 28.47 | Bi | - 1 | 0.70 | 27.77 |
| In 2 + | 3 | 28.03 | Bi | - 1 | 0.70 | 27.33 |
| Te 2 + | 3 | 27.96 | Bi | - 1 | 0.70 | 27.26 |
| Al 2 + | 3 | 28.45 | Bi | - 1 | 0.70 | 27.75 |
| Ar 1 + | 2 | 27.63 | Bi | - 1 | 0.70 | 26.93 |
| Tc 2 + | 3 | 29.54 | Tl | - 1 | 2.10 | 27.44 |
| Sn 2 + | 3 | 30.50 | Tl | - 1 | 2.10 | 28.40 |
| Tl 2 + | 3 | 29.83 | Tl | - 1 | 2.10 | 27.73 |
| N 1 + | 2 | 29.60 | Tl | - 1 | 2.10 | 27.50 |
| P 2 + | 3 | 30.18 | Tl | - 1 | 2.10 | 28.08 |
| V 2 + | 3 | 29.31 | Tl | - 1 | 2.10 | 27.21 |
| Tc 2 + | 3 | 29.54 | Au | - 1 | 2.10 | 27.44 |
| Sn 2 + | 3 | 30.50 | Au | - 1 | 2.10 | 28.40 |
| Tl 2 + | 3 | 29.83 | Au | - 1 | 2.10 | 27.73 |
| N 1 + | 2 | 29.60 | Au | - 1 | 2.10 | 27.50 |
| P 2 + | 3 | 30.18 | Au | - 1 | 2.10 | 28.08 |
| V 2 + | 3 | 29.31 | Au | - 1 | 2.10 | 27.21 |
| As 2 + | 3 | 28.35 | Hg | - 1 | 1.54 | 26.81 |
| Tc 2 + | 3 | 29.54 | Hg | - 1 | 1.54 | 28.00 |
| Ru2+ | 3 | 28.47 | Hg | - 1 | 1.54 | 26.93 |
| Tl 2 + | 3 | 29.83 | Fig | - 1 | 1.54 | 28.29 |
| N 1 + | 2 | 29.60 | Hg | - 1 | 1.54 | 28.06 |
| Al 2 + | 3 | 28.45 | Hg | - 1 | 1.54 | 26.91 |
| V 2 + | 3 | 29.31 | Hg | - 1 | 1.54 | 27.77 |
| As 2 + | 3 | 28.35 | As | - 1 | 0.60 | 27.75 |
| Ru 2 + | 3 | 28.47 | As | - 1 | 0.60 | 27.87 |
| In 2 + | 3 | 28.03 | As | - 1 | 0.60 | 27.43 |
| Te 2 + | 3 | 27.96 | As | - 1 | 0.60 | 27.36 |
| Al 2 + | 3 | 28.45 | As | - 1 | 0.60 | 27.85 |
| Ar 1 + | 2 | 27.63 | As | - 1 | 0.60 | 27.03 |

| Atom Oxidized | n | nth Ionization Energy (ev) | Atom Reduced | n | nthIonization Energy (ev) | Energy Hole (ev) |
|---|---|---|---|---|---|---|
| Ti 2 + | 3 | 27.49 | As | - 1 | 0.60 | 26.89 |
| As 2 + | 3 | 28.35 | Ce | - 1 | 1.20 | 27.15 |
| Tc 2 + | 3 | 29.54 | Ce | - 1 | 1.20 | 28.34 |
| Ru 2 + | 3 | 28.47 | Ce | - 1 | 1.20 | 27.27 |
| In 2 + | 3 | 28.03 | Ce | - 1 | 1.20 | 26.83 |
| N 1 + | 2 | 29.60 | Ce | - 1 | 1.20 | 28.40 |
| Al 2 + | 3 | 28.45 | Ce | - 1 | 1.20 | 27.25 |
| V 2 + | 3 | 29.31 | Ce | - 1 | 1.20 | 28.11 |
| As 2 + | 3 | 28.35 | Fr | - 1 | 0.46 | 27.89 |
| Rb 1 + | 2 | 27.28 | Fr | - 1 | 0.46 | 26.82 |
| Ru 2 + | 3 | 28.47 | Fr | - 1 | 0.46 | 28.01 |
| In 2 + | 3 | 28.03 | Fr | - 1 | 0.46 | 27.57 |
| Te 2 + | 3 | 27.96 | Fr | - 1 | 0.46 | 27.50 |
| Al 2 + | 3 | 28.45 | Fr | - 1 | 0.46 | 27.99 |
| Ar 1 + | 2 | 27.63 | Fr | - 1 | 0.46 | 27.17 |
| Ti 2 + | 3 | 27.49 | Fr | - 1 | 0.46 | 27.03 |
| As 2 + | 3 | 28.35 | Ge | - 1 | 1.20 | 27.15 |
| Tc 2 + | 3 | 29.54 | Ge | - 1 | 1.20 | 28.34 |
| Ru 2 + | 3 | 28.47 | Ge | - 1 | 1.20 | 27.27 |
| In 2 + | 3 | 28.03 | Ge | - 1 | 1.20 | 26.83 |
| N 1 + | 2 | 29.60 | Ge | - 1 | 1.20 | 28.40 |
| Al 2 + | 3 | 28.45 | Ge | - 1 | 1.20 | 27.25 |
| V 2 + | 3 | 29.31 | Ge | - 1 | 1.20 | 28.11 |
| As 2 + | 3 | 28.35 | Sn | - 1 | 1.25 | 27.10 |
| Tc 2 + | 3 | 29.54 | Sn | - 1 | 1.25 | 28.29 |
| Ru 2 + | 3 | 28.47 | Sn | - 1 | 1.25 | 27.22 |
| N 1 + | 2 | 29.60 | Sn | - 1 | 1.25 | 28.35 |
| Al 2 + | 3 | 28.45 | Sn | - 1 | 1.25 | 27.20 |
| V 2+ | 3 | 29.31 | Sn | - 1 | 1.25 | 28.06 |
| As 2 + | 3 | 28.35 | Pb | - 1 | 1.05 | 27.30 |
| Tc 2 + | 3 | 29.54 | Pb | - 1 | 1.05 | 28.49 |
| Ru 2 + | 3 | 28.47 | Pb | - 1 | 1.05 | 27.42 |
| In 2 + | 3 | 28.03 | Pb | - 1 | 1.05 | 26.98 |

(continued)

| Atom Oxidized | n | nth Ionization Energy (ev) | Atom Reduced | n | nthIonization Energy (ev) | Energy Hole (ev) |
|---|---|---|---|---|---|---|
| Te 2 + | 3 | 27.96 | Pb | - 1 | 1.05 | 26.91 |
| Al 2 + | 3 | 28.45 | Pb | - 1 | 1.05 | 27.40 |
| V 2 + | 3 | 29.31 | Pb | - 1 | 1.05 | 28.26 |
| Tc 2 + | 3 | 29.54 | Po | - 1 | 1.80 | 27.74 |
| Tl 2 + | 3 | 29.83 | Po | - 1 | 1.80 | 28.03 |
| N 1 + | 2 | 29.60 | Po | - 1 | 1.80 | 27.80 |
| P 2 + | 3 | 30.18 | Po | - 1 | 1.80 | 28.38 |
| V 2 + | 3 | 29.31 | Po | - 1 | 1.80 | 27.51 |
| Ga 2 + | 3 | 30.71 | At | 1 | 2.80 | 27.91 |
| Se 2 + | 3 | 30.82 | At | - 1 | 2.80 | 28.02 |
| Rh 2 + | 3 | 31.06 | At | - 1 | 2.80 | 28.26 |
| Sn 2 + | 3 | 30.50 | At | - 1 | 2.80 | 27.70 |
| Tl 2 + | 3 | 29.83 | At | - 1 | 2.80 | 27.03 |
| N 1 + | 2 | 29.60 | At | - 1 | 2.80 | 26.80 |
| P 2 + | 3 | 30.18 | At | - 1 | 2.80 | 27.38 |
| Cr 2 + | 3 | 30.96 | At | - 1 | 2.80 | 28.16 |
| Fe 2 + | 3 | 30.65 | At | - 1 | 2.80 | 27.85 |
| As 2 + | 3 | 28.35 | Ge | - 1 | 1.20 | 27.15 |
| Tc 2 + | 3 | 29.54 | Ge | - 1 | 1.20 | 28.34 |
| Ru 2 + | 3 | 28.47 | Ge | - 1 | 1.20 | 27.27 |
| In 2 + | 3 | 28.03 | Ge | - 1 | 1.20 | 26.83 |
| N 1 + | 2 | 29.60 | Ge | - 1 | 1.20 | 28.40 |
| Al 2 + | 3 | 28.45 | Ge | - 1 | 1.20 | 27.25 |
| V 2 + | 3 | 29.31 | Ge | - 1 | 1.20 | 28.11 |
| As 2 + | 3 | 28.35 | Ga | - 1 | 0.37 | 27.98 |
| Rb 1 + | 2 | 27.28 | Ga | - 1 | 0.37 | 26.91 |
| Ru 2 + | 3 | 28.47 | Ga | - 1 | 0.37 | 28.10 |
| In 2 + | 3 | 28.03 | Ga | - 1 | 0.37 | 27.66 |
| Te 2 + | 3 | 27.96 | Ga | - 1 | 0.37 | 27.59 |
| Al 2 + | 3 | 28.45 | Ga | - 1 | 0.37 | 28.08 |
| Ar 1 + | 2 | 27.63 | Ga | - 1 | 0.37 | 27.26 |
| Ti 2 + | 3 | 27.49 | Ga | - 1 | 0.37 | 27.12 |
| As 2 + | 3 | 28.35 | In | - 1 | 0.35 | 28.00 |

177

(continued)

| Atom Oxidized | n | nth Ionization Energy (ev) | Atom Reduced | n | nthIonization Energy (ev) | Energy Hole (ev) |
|---|---|---|---|---|---|---|
| Rb 1 + | 2 | 27.28 | In | - 1 | 0.35 | 26.93 |
| Mo 2 + | 3 | 27.16 | In | - 1 | 0.35 | 26.81 |
| Ru2+ | 3 | 28.47 | In | - 1 | 0.35 | 28.12 |
| In 2 + | 3 | 28.03 | In | - 1 | 0.35 | 27.68 |
| Te 2 + | 3 | 27.96 | In | - 1 | 0.35 | 27.61 |
| Al 2 + | 3 | 28.45 | In | - 1 | 0.35 | 28.10 |
| Ar 1 + | 2 | 27.63 | In | - 1 | 0.35 | 27.28 |
| Ti 2 + | 3 | 27.49 | In | 1 | 0.35 | 27.14 |
| As 2 + | 3 | 28.35 | Ag | - 1 | 1.30 | 27.05 |
| Tc 2 + | 3 | 29.54 | Ag | - 1 | 1.30 | 28.24 |
| Ru 2 + | 3 | 28.47 | Ag | - 1 | 1.30 | 27.17 |
| N 1 + | 2 | 29.60 | Ag | - 1 | 1.30 | 28.30 |
| Al 2 + | 3 | 28.45 | Ag | - 1 | 1.30 | 27.15 |
| V 2 + | 3 | 29.31 | Ag | - 1 | 1.30 | 28.01 |

wherein the number in the column following the ion (n) is the nth ionization energy of the atom, for example, $Ga^{2+} + 30.71$ eV $= Ga^{3+} + e^-$ and $H + e^- = H^- + 3.08$ eV; and

(3) a cation and a molecule capable of producing energy holes for shrinking hydrogen atoms where the molecule is reduced, selected from the group consisting of:

| Atom Oxidized | n | nth Ionization Energy (ev) | Atom Reduced | n | nthIon ization Energy (ev) | Energy Hole (ev) |
|---|---|---|---|---|---|---|
| Ga 2 + | 3 | 30.71 | $BF_3$ | - 1 | 2.65 | 28.06 |
| Se 2 + | 3 | 30.82 | $BF_3$ | - 1 | 2.65 | 28.17 |
| Te 2 + | 3 | 29.54 | $BF_3$ | - 1 | 2.65 | 26.89 |
| Rh 2 + | 3 | 31.06 | $BF_3$ | - 1 | 2.65 | 28.41 |
| Sn 2 + | 3 | 30.50 | $BF_3$ | - 1 | 2.65 | 27.85 |
| Tl 2 + | 3 | 29.83 | $BF_3$ | - 1 | 2.65 | 27.18 |
| N 1 + | 2 | 29.60 | $BF_3$ | - 1 | 2.65 | 26.95 |
| P 2 + | 3 | 30.18 | $BF_3$ | - 1 | 2.65 | 27.53 |
| Cr 2 + | 3 | 30.96 | $BF_3$ | - 1 | 2.65 | 28.31 |
| Fe 2 + | 3 | 30.65 | $BF_3$ | - 1 | 2.65 | 28.00 |
| Se 2 + | 3 | 30.82 | $NO_2$ | - 1 | 3.91 | 26.91 |
| Rh 2 + | 3 | 31.06 | $NO_2$ | - 1 | 3.91 | 27.15 |
| Xe 2 + | 3 | 32.10 | $NO_2$ | - 1 | 3.91 | 28.19 |
| Pb 2 + | 3 | 31.94 | $NO_2$ | - 1 | 3.91 | 28.03 |
| K 1 + | 2 | 31.63 | $NO_2$ | - 1 | 3.91 | 27.72 |
| Cr 2 + | 3 | 30.96 | $NO_2$ | - 1 | 3.91 | 27.05 |
| As 2 + | 3 | 28.35 | $O_2$ | - 1 | 0.45 | 27.90 |
| Rb 1 + | 2 | 27.28 | $O_2$ | - 1 | 0.45 | 26.83 |
| Ru 2 + | 3 | 28.47 | $O_2$ | - 1 | 0.45 | 28.02 |
| In 2 + | 3 | 28.03 | $O_2$ | - 1 | 0.45 | 27.58 |
| Te 2 + | 3 | 27.96 | $O_2$ | - 1 | 0.45 | 27.51 |
| Al 2 + | 3 | 28.45 | $O_2$ | - 1 | 0.45 | 28.00 |
| Ar 1 + | 2 | 27.63 | $O_2$ | - 1 | 0.45 | 27.18 |
| Ti 2 + | 3 | 27.49 | $O_2$ | - 1 | 0.45 | 27.04 |
| As 2 + | 3 | 28.35 | $SF_6$ | - 1 | 1.43 | 26.92 |
| Tc 2 + | 3 | 29.54 | $SF_6$ | - 1 | 1.43 | 28.11 |
| Ru 2 + | 3 | 28.47 | $SF_6$ | - 1 | 1.43 | 27.04 |
| Tl 2 + | 3 | 29.83 | $SF_6$ | - 1 | 1.43 | 28.40 |
| N 1 + | 2 | 29.60 | $SF_6$ | - 1 | 1.43 | 28.17 |
| Al 2 + | 3 | 28.45 | $SF_6$ | - 1 | 1.43 | 27.02 |
| V 2 + | 3 | 29.31 | $SF_6$ | - 1 | 1.43 | 27.88 |
| Ga 2 + | 3 | 30.71 | $WF_6$ | - 1 | 2.74 | 27.97 |
| Se 2 + | 3 | 30.82 | $WF_6$ | - 1 | 2.74 | 28.08 |

(continued)

| Atom Oxidized | n | nth Ionization Energy (ev) | Atom Reduced | n | nthIonization Energy (ev) | Energy Hole (ev) |
|---|---|---|---|---|---|---|
| Tc 2 + | 3 | 29.54 | $WF_6$ | - 1 | 2.74 | 26.80 |
| Rh 2 + | 3 | 31.06 | $WF_6$ | - 1 | 2.74 | 28.32 |
| Sn 2 + | 3 | 30.50 | $WF_6$ | - 1 | 2.74 | 27.76 |
| Tl 2 + | 3 | 29.83 | $WF_6$ | - 1 | 2.74 | 27.09 |
| N 1 + | 2 | 29.60 | $WF_6$ | -1 | 2.74 | 26.86 |
| P 2 + | 3 | 30.18 | $WF_6$ | - 1 | 2.74 | 27.44 |
| Cr 2 + | 3 | 30.96 | $WF_6$ | - 1 | 2.74 | 28.22 |
| Fe 2 + | 3 | 30.65 | $WF_6$ | - 1 | 2.74 | 27.91 |
| Ga 2 + | 3 | 30.71 | $UF_6$ | - 1 | 2.91 | 27.80 |
| Se 2 + | 3 | 30.82 | $UF_6$ | - 1 | 2.91 | 27.91 |
| Rh 2 + | 3 | 31.06 | $UF_6$ | - 1 | 2.91 | 28.15 |
| Sn 2 + | 3 | 30.50 | $UF_6$ | - 1 | 2.91 | 27.59 |
| Tl 2 + | 3 | 29.83 | $UF_6$ | - 1 | 2.91 | 26.92 |
| P 2 + | 3 | 30.18 | $UF_6$ | - 1 | 2.91 | 27.27 |
| Cr 2 + | 3 | 30.96 | $UF_6$ | - 1 | 2.91 | 28.05 |
| Fe 2 + | 3 | 30.65 | $UF_6$ | - 1 | 2.91 | 27.74 |
| Tc 2 + | 3 | 29.54 | $CF_3$ | - 1 | 1.85 | 27.69 |
| Tl 2 + | 3 | 29.83 | $CF_3$ | - 1 | 1.85 | 27.98 |
| N 1 + | 2 | 29.60 | $CF_3$ | - 1 | 1.85 | 27.75 |
| P 2 + | 3 | 30.18 | $CF_3$ | - 1 | 1.85 | 28.33 |
| V 2 + | 3 | 29.31 | $CF_3$ | - 1 | 1.85 | 27.46 |
| As 2 + | 3 | 28.35 | $CCl_3$ | - 1 | 1.22 | 27.13 |
| Tc 2 + | 3 | 29.54 | $CCl_3$ | - 1 | 1.22 | 28.32 |
| Ru 2 + | 3 | 28.47 | $CCl_3$ | - 1 | 1.22 | 27.25 |
| In 2 + | 3 | 28.03 | $CCl_3$ | - 1 | 1.22 | 26.81 |
| N 1+ | 2 | 29.60 | $CCl_3$ | - 1 | 1.22 | 28.38 |
| Al 2 + | 3 | 28.45 | $CCl_3$ | - 1 | 1.22 | 27.23 |
| V 2 + | 3 | 29.31 | $CCl_3$ | - 1 | 1.22 | 28.09 |
| Ga 2 + | 3 | 30.71 | $SiF_3$ | - 1 | 3.35 | 27.36 |
| Se 2 1 | 3 | 30.82 | $SiF_3$ | - 1 | 3.35 | 27.47 |
| Rh 2 + | 3 | 31.06 | $SiF_3$ | - 1 | 3.35 | 27.71 |
| Sn 2 + | 3 | 30.50 | $SiF_3$ | - 1 | 3.35 | 27.15 |
| P 2 + | 3 | 30.18 | $SiF_3$ | - 1 | 3.35 | 26.83 |

(continued)

| Atom Oxidized | n | nth Ionization Energy (ev) | Atom Reduced | n | nthIon ization Energy (ev) | Energy Hole (ev) |
|---|---|---|---|---|---|---|
| K 1 + | 2 | 31.63 | $SiF_3$ | - 1 | 3.35 | 28.27 |
| Cr 2 + | 3 | 30.96 | $SiF_3$ | - 1 | 3.35 | 27.61 |
| Fe 2 + | 3 | 30.65 | $SiF_3$ | - 1 | 3.35 | 27.30 |
| As 2 + | 3 | 28.35 | $NH_2$ | - 1 | 1.12 | 27.23 |
| Tc 2 + | 3 | 29.54 | $NH_2$ | - 1 | 1.12 | 28.42 |
| Ru 2 + | 3 | 28.47 | $NH_2$ | - 1 | 1.12 | 27.35 |
| In 2 + | 3 | 28.03 | $NH_2$ | - 1 | 1.12 | 26.91 |
| Te 2 + | 3 | 27.96 | $NH_2$ | - 1 | 1.12 | 26.84 |
| N 1 + | 2 | 29.60 | $NH_2$ | - 1 | 1.12 | 28.48 |
| Al 2 + | 3 | 28.45 | $NH_2$ | - 1 | 1.12 | 27.33 |
| V 2+ | 3 | 29.31 | $NH_2$ | - 1 | 1.12 | 28.19 |
| Tc 2 + | 3 | 29.54 | $PH_2$ | - 1 | 1.60 | 27.94 |
| Ru 2 + | 3 | 28.47 | $PH_2$ | - 1 | 1.60 | 26.87 |
| Tl 2 + | 3 | 29.83 | $PH_2$ | - 1 | 1.60 | 28.23 |
| N 1 + | 2 | 29.60 | $PH_2$ | - 1 | 1.60 | 28.00 |
| Al 2 + | 3 | 28.45 | $PH_2$ | - 1 | 1.60 | 26.85 |
| V 2+ | 3 | 29.31 | $PH_2$ | - 1 | 1.60 | 27.71 |
| Tc 2 + | 3 | 29.54 | OH | - 1 | 1.83 | 27.71 |
| Tl 2 + | 3 | 29.83 | OH | - 1 | 1.83 | 28.00 |
| N 1 + | 2 | 29.60 | OH | - 1 | 1.83 | 27.77 |
| P 2 + | 3 | 30.18 | OH | - 1 | 1.83 | 28.35 |
| V 2 + | 3 | 29.31 | OH | - 1 | 1.83 | 27.48 |
| Tc 2 + | 3 | 29.54 | SH | - 1 | 2.19 | 27.35 |
| Sn 2 + | 3 | 30.50 | SH | - 1 | 2.19 | 28.31 |
| Tl 2 + | 3 | 29.83 | SH | - 1 | 2.19 | 27.64 |
| N 1 + | 2 | 29.60 | SH | - 1 | 2.19 | 27.41 |
| P 2 + | 3 | 30.18 | SH | - 1 | 2.19 | 27.99 |
| V 2 + | 3 | 29.31 | SH | - 1 | 2.19 | 27.12 |
| Fe 2 + | 3 | 30.65 | SH | - 1 | 2.19 | 28.46 |
| Ga 2 + | 3 | 30.71 | CN | - 1 | 3.17 | 27.54 |
| Se2+ | 3 | 30.82 | CN | - 1 | 3.17 | 27.65 |
| Rh 2 + | 3 | 31.06 | CN | - 1 | 3.17 | 27.89 |
| Sn 2 + | 3 | 30.50 | CN | - 1 | 3.17 | 27.33 |

| Atom Oxidized | n | nth Ionization Energy (ev) | Atom Reduced | n | nthIon ization Energy (ev) | Energy Hole (ev) |
|---|---|---|---|---|---|---|
| P 2 + | 3 | 30.18 | CN | - 1 | 3.17 | 27.01 |
| K 1 + | 2 | 31.63 | CN | - 1 | 3.17 | 28.45 |
| Cr 2 + | 3 | 30.96 | CN | - 1 | 3.17 | 27.79 |
| Fe 2 + | 3 | 30.65 | CN | - 1 | 3.17 | 27.48 |
| Tc 2 + | 3 | 29.54 | SCN | - 1 | 2.17 | 27.37 |
| Sn 2 + | 3 | 30.50 | SCN | - 1 | 2.17 | 28.33 |
| Tl 2 + | 3 | 29.83 | SCN | - 1 | 2.17 | 27.66 |
| N 1 + | 2 | 29.60 | SCN | - 1 | 2.17 | 27.43 |
| P 2+ | 3 | 30.18 | SCN | -1 | 2.17 | 28.01 |
| V 2 + | 3 | 29.31 | SCN | - 1 | 2.17 | 27.14 |
| Fe 2 + | 3 | 30.65 | SCN | -1 | 2.17 | 28.48 |
| Ga 2 + | 3 | 30.71 | SeCN | 1 | 2.64 | 28.07 |
| Se2+ | 3 | 30.82 | SeCN | - 1 | 2.64 | 28.18 |
| Tc 2 + | 3 | 29.54 | SeCN | - 1 | 2.64 | 26.90 |
| Rh 2 + | 3 | 31.06 | SeCN | - 1 | 2.64 | 28.42 |
| Sn 2 + | 3 | 30.50 | SeCN | - 1 | 2.64 | 27.86 |
| Tl 2 + | 3 | 29.83 | SeCN | - 1 | 2.64 | 27.19 |
| N 1 + | 2 | 29.60 | SeCN | - 1 | 2.64 | 26.96 |
| P 2 + | 3 | 30.18 | SeCN | - 1 | 2.64 | 27.54 |
| Cr 2 + | 3 | 30.96 | SeCN | - 1 | 2.64 | 28.32 |
| Fe 2 + | 3 | 30.65 | SeCN | - 1 | 2.64 | 28.01 |

wherein the number in the column following the ion or molecule (n) is the nth ionization energy of the atom or molecule, for example, $Ga^{2+} + 30.71\ eV = Ga^{3+} + e^-$ and $BF_3 + e^- = BF_3 + 2.65\ eV$.

**33.** The apparatus of claim 18, wherein said means providing an energy hole is a substance comprising a plurality of elements of matter, each having an ionization energy, wherein each of said plurality of elements of matter are selected to produce a difference in ionization energies substantially equal to the resonance shrinkage energy of said first element of matter.

**34.** The apparatus of claim 33, wherein said energy hole is provided by one of the following three-ion couples:

| Atom Oxidized | (eV) | Atom(s) Reduced | (eV) | Energy Hole (eV) |
|---|---|---|---|---|
| B 3 | 37.48 | Li 1 | 5.392 | 27.40 |
|  |  | Na 1 | 5.139 |  |
| Cd 3 | 37.48 | Na 1 | 5.139 | 27.20 |
|  |  | Na 1 | 5.139 |  |

**35.** The apparatus of claim 18, further including:

a pressurized gas energy reactor comprising at least a first vessel containing a source of hydrogen; a means to control the pressure of the vessel; a means to dissociate the molecular hydrogen into atomic hydrogen; a molten, liquid, or solid solution of the energy holes; a photon source; a second vessel; a power supply providing a current; a means to control said current; an external energy source; a heating means; computerized monitoring and control system; and a means that removes the lower-energy hydrogen such as a selective venting valve to prevent the exothermic shrinkage reaction from coming to equilibrium.

**36.** The apparatus of claim 35, wherein:

the inner surface of the first vessel comprises one or more of a coat of nickel, platinum, or palladium; and the outer surface of the first vessel is coated with one or more of copper, tellurium, arsenic, cesium, platinum, or palladium and an oxide such as $CuO_x$, $PtO_x$, $PdO_x$, $MnO_x$, $AlO_x$, $SiO_x$.

**37.** The apparatus of claim 35, wherein:

the inner surface of the first vessel is coated with one or more of copper, tellurium, arsenic, cesium, platinum, or palladium and an oxide such as $CuO_x$, $PtO_x$, $PdO_x$, $MnO_x$, $AlO_x$, $SiO_x$.

**38.** The apparatus of claim 35, wherein the source of energy holes is potassium carbonate.

**39.** The apparatus of claim 18, further including:

a gas discharge energy reactor comprising at least a hydrogen gas filled glow discharge vacuum chamber; a hydrogen source; a control valve to control the flow of hydrogen from the hydrogen source to the gas discharge chamber; a molten, liquid, or solid solution of the energy holes; a photon source; a cathode; an anode: a Dower supply providing a current; a means to control said current; an external energy source; a heating means; computerized monitoring and control system; and a means that removes the lower-energy hydrogen such as a selective venting valve to prevent the exothermic shrinkage reaction from coming to equilibrium.

**40.** The apparatus of claim 39, wherein the cathode is palladium and the energy hole is provided by the transfer of two electrons from palladium to the discharge current.

**41.** Apparatus for providing the absorption of energy, comprising:

means for providing an element of matter in a selected volume, said element having a nucleus and at least one electron comprising an orbital in a lower energy level than the "ground state" having a resonance shrinkage energy; and
a means introduced into said selected volume for providing an energy hole in juxtaposition with said element of matter, said energy hole having a magnitude substantially equal to said resonance shrinkage energy, wherein:

energy is released to said element of matter when the orbital of said element of matter is increased due to absorption of orbital energy by said energy hole permitting the electron of the element of matter to be stimulated to undergo the reverse of at least one shrinkage transition providing the absorption of energy.

**42.** The apparatus of claim 41, further including:

an electrolytic energy reactor; a pressurized gas energy reactor;
and a gas discharge energy reactor; comprising:

a source of lower-energy hydrogen; a source of energy holes; a heat source; and a means to remove the normal hydrogen such as a selective venting valves to prevent the endothermic reaction from coming to equilibrium.

# Fig. 1

# *Fig. 2*

EFFECTIVE
NUCLEAR
CHARGE

$$V = \frac{-Z_{eff}e^2}{4\pi\epsilon_0 r_0} = \frac{-Z^2e^2}{4\pi\epsilon_0 j^2 a_0} = \frac{-Z^2}{j^2} \times 27.178 \text{ eV}.$$

ABSORPTION
OF
PHOTON

$$V = \frac{-Ze^2}{4\pi\epsilon_0 r_0} = \frac{-n^2 Z^2 e^2}{4\pi\epsilon_0 a_0} = -n^2 \times Z^2 \times 27.178 \text{ eV}.$$

ABSORPTION
OF
ENERGY HOLE

NORMAL
GROUND
STATE

+1/3

+1/n

+1/2

+1

+2

+3

+4     +n

+5

+6

# *Fig. 3*

# *Fig. 4*

*Fig. 5*

ELECT. FLD. GEN.

MAG. FLD. GEN.

76

75a

75b

PHOTON SOURCE

PARTICLE SOURCE

POWER OSCILLATOR

SELECTABLE HEAT SOURCE OR SINK

ACOUSTIC TRANSDUCER

EXTERNAL ENERGY DEVICES FOR: ENERGY SOURCING AND RATE CONTROL

75

ENERGY

MATERIAL, 56

CATALYTIC MATERIAL, 58

PRODUCTS

52

COOLANT

COOLANT

60

62

STEAM

TURBINE

70

HEAT EXCHANGER

50

LOAD

POWER GEN.

90

80

## *Fig. 6*

# Fig. 7

Fig. 8

# Fig. 9

*Fig. 10*

HEATING COEFFICIENT °C/W

90 80 70 60 50 40 30 20 10 0

1

2

0 10 20 30 40

HOURS ELAPSED AFTER EQUILIBRIUM

Fig. 11

Fig. 12

Fig. 13

NICKEL 3p

COUNTS x 10³

BINDING ENERGY [eV]

Fig. 14a

COUNTS x 10³

BINDING ENERGY [eV]

EP 1 684 311 A2

Fig. 14b

Fig. 14c

Fig. 14d

# *Fig. 15*

SAME DEPTH

Fig. 16